(19) Europäisches Patentamt / European Patent Office / Office européen des brevets

(11) **EP 4 485 653 A1**

(12) **EUROPEAN PATENT APPLICATION**
published in accordance with Art. 153(4) EPC

(43) Date of publication:
**01.01.2025 Bulletin 2025/01**

(21) Application number: **23758879.3**

(22) Date of filing: **03.01.2023**

(51) International Patent Classification (IPC):
**H01M 50/244** (2021.01)    **H01M 50/342** (2021.01)
**H01M 50/249** (2021.01)    **H01M 50/242** (2021.01)
**H01M 50/209** (2021.01)    **H01M 50/258** (2021.01)

(52) Cooperative Patent Classification (CPC):
**H01M 50/213; H01M 50/244; H01M 50/296;**
**H01M 50/342; H01M 50/55;** H01M 50/209;
H01M 50/242; H01M 50/249; H01M 50/258;
Y02E 60/10

(86) International application number:
**PCT/CN2023/070129**

(87) International publication number:
**WO 2023/160252 (31.08.2023 Gazette 2023/35)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: 25.02.2022  PCT/CN2022/077998
25.02.2022  PCT/CN2022/077993
13.06.2022  PCT/CN2022/098355
13.06.2022  PCT/CN2022/098380
13.06.2022  PCT/CN2022/098343
13.06.2022  PCT/CN2022/098348
13.06.2022  PCT/CN2022/098373
13.06.2022  PCT/CN2022/098370
27.06.2022  PCT/CN2022/101440
27.06.2022  PCT/CN2022/101406

27.06.2022  PCT/CN2022/101414
27.06.2022  PCT/CN2022/101517
27.06.2022  PCT/CN2022/101393

(71) Applicant: **Contemporary Amperex Technology**
**Co., Limited**
**Ningde, Fujian 352100 (CN)**

(72) Inventors:
• **YAO, Pengcheng**
**Ningde, Fujian 352100 (CN)**
• **ZHANG, Wenhui**
**Ningde, Fujian 352100 (CN)**
• **CHEN, Xingdi**
**Ningde, Fujian 352100 (CN)**

(74) Representative: **Gong, Jinping**
**CocreateIP**
**Neumarkterstr. 21**
**81673 München (DE)**

(54) **BATTERY AND ELECTRICAL DEVICE**

(57)    A battery and an electrical apparatus are provided. The battery comprises a box and a battery cell, wherein an accommodating cavity is provided within the box, the accommodating cavity comprises a top wall and a bottom wall which are oppositely arranged in a vertical direction, the battery cell is provided within the accommodating cavity, and comprises an electrode assembly and an electrode terminal, wherein the electrode assembly is electrically connected to the electrode terminal, the battery cell is fixed within the accommodating cavity, and the electrode terminal is arranged towards the bottom wall of the accommodating cavity.

FIG. 16

**Description**

**Cross-Reference to Related Applications**

The present application is filed based on and claims priority to International Patent Application No. PCT/CN2022/098355 filed on June 13, 2022, International Patent Application No. PCT/CN2022/077998 filed on February 25, 2022, International Patent Application No. PCT/CN2022/098380 filed on June 13, 2022, International Patent Application No. PCT/CN2022/098343 filed on June 13, 2022, International Patent Application No. PCT/CN2022/098348 filed on June 13, 2022, International Patent Application No. PCT/CN2022/098373 filed on June 13, 2022, International Patent Application No. PCT/CN2022/098370 filed on June 13, 2022, International Patent Application No. PCT/CN2022/077993 filed on February 25, 2022, International Patent Application No. PCT/CN2022/101440 filed on June 27, 2022, International Patent Application No. PCT/CN2022/101406 filed on June 27, 2022, International Patent Application No. PCT/CN2022/101414 filed on June 27, 2022, International Patent Application No. PCT/CN2022/101517 filed on June 27, 2022, and International Patent Application No. PCT/CN2022/101393 filed on June 27, 2022, the content of which is incorporated herein by reference in their entireties.

**Technical Field**

The present application relates to the technical field of batteries, and particularly to a battery and an electrical apparatus.

**Background**

In recent years, the emergence of new energy vehicles has played a huge role in promoting social development and environmental protection. Power batteries, which are rechargeable batteries, are the power source of new energy vehicles and are widely used in the field of new energy vehicles.
In some cases, the energy density of a battery is not high, resulting in a waste of space, thereby affecting the performance of an electrical apparatus; and moreover, the existing battery has poor rigidity, cannot directly bear the load brought by other parts of the electrical apparatus, and is likely to cause safety accidents and affects the safety of the electrical apparatus.

**Summary of the Invention**

The present application is intended to solve at least one of the technical problems existing in the related art. To this end, the present application proposes a battery, which can improve the energy density and the safety of the battery.
The present application further proposes an electrical apparatus having the battery described above.
According to an embodiment of a first aspect of the present application, a battery includes: a box, wherein an accommodating cavity is provided within the box, and the accommodating cavity includes a top wall and a bottom wall in the vertical direction; and a battery cell, wherein the battery cell is provided within the accommodating cavity, and includes an electrode assembly and an electrode terminal, wherein the electrode assembly is electrically connected to the electrode terminal, the battery cell is fixed within the accommodating cavity, and the electrode terminal is provided towards the bottom wall of the accommodating cavity.
In the above technical solution, the battery cell is provided within the box, and the electrode terminal is provided towards the bottom wall, so that the safety of the battery can be improved.
In some embodiments, the battery cell has a first wall and a second wall which are connected, wherein the first wall is the wall with the largest area in the battery cell, and the second wall and the first wall are provided to intersect.
In some embodiments, the electrode terminal is provided on the first wall.
In some embodiments, there are a plurality of battery cells, which are arranged in a first direction, each battery cell is provided with a first surface arranged opposite to the first wall in the first direction, the first surface is provided with an avoidance groove, and the avoidance groove of one of two adjacent battery cells is configured to accommodate the electrode terminal of the other battery cell, the first direction being perpendicular to the first wall.
In some embodiments, the electrode terminal is provided on the second wall.
In some embodiments, the battery cell includes two first walls provided oppositely and two second walls provided oppositely, and at least two electrode terminals are provided; alternatively, each of the second walls is provided with at least one of the electrode terminals.
In some embodiments, the first wall is formed in a cylindrical shape.
In some embodiments, the second walls are provided at two axial ends of the first wall, and at least one of the second walls is provided with the electrode terminal.

In some embodiments, one of the second walls is provided with an electrode terminal that is exposed, the electrode assembly includes a positive electrode plate and a negative electrode plate, one of the positive electrode plate and the negative electrode plate is electrically connected to the electrode terminal, and the other of the positive electrode plate and the negative electrode plate is electrically connected to the first wall or the other second wall.

In some embodiments, at least one of the battery cells is a pouch battery cell.

In some embodiments, the battery cell further includes a pressure relief mechanism, and the pressure relief mechanism and the electrode terminal are arranged on the same wall of the battery cell.

In some embodiments, the battery cell further includes a pressure relief mechanism, and the pressure relief mechanism and the electrode terminal are respectively arranged on two walls of the battery cell.

In some embodiments, the box includes a main body and a bottom cover arranged at the bottom of the main body, and the bottom cover and the main body are sealingly connected to each other and together form the closed accommodating cavity.

In some embodiments, the wall of the bottom cover facing the battery cell constitutes the bottom wall of the accommodating cavity.

In some embodiments, the bottom cover is detachably connected to the bottom of the main body.

In some embodiments, the bottom cover has a feature surface facing the accommodating cavity, the feature surface being configured as a plane.

In some embodiments, the top of the box is provided with a carrying member, and the battery cell is arranged on a surface of the carrying member.

In some embodiments, the wall of the carrying member facing the battery cell constitutes the top wall of the accommodating cavity.

In some embodiments, the minimum thickness H of the carrying member and the weight M1 of the battery satisfy: $0.0002 \text{ mm/kg} < H/M1 \le 0.2 \text{ mm/kg}$.

In some embodiments, the carrying member is configured to define the accommodating cavity, and the battery cell is suspended from the carrying member.

In some embodiments, the battery cell is bonded to the carrying member.

In some embodiments, the outer surface of the battery cell facing the carrying member is a first outer surface, and the electrode terminal is arranged on an outer surface of the battery cell other than the first outer surface.

In some embodiments, the battery cell has a second outer surface arranged opposite to the first outer surface, and the electrode terminal is arranged on the second outer surface.

In some embodiments, there are a plurality of battery cells, which are arranged in a second direction, the second direction being perpendicular to the vertical direction; and the carrying member is connected to top walls of the plurality of battery cells, the battery cells are located below the carrying member, and the relationship between a dimension N of the carrying member in the vertical direction and the weight M2 of the battery cell satisfies: $0.04 \text{ mm/kg} \le N/M2 \le 100 \text{ mm/kg}$.

In some embodiments, the carrying member is internally provided with a hollow cavity.

In some embodiments, the hollow cavity is configured to accommodate a heat exchange medium to adjust the temperature of the battery cell.

In some embodiments, in the vertical direction, a surface of the carrying member away from the battery cell is provided with a reinforcing rib.

In some embodiments, the carrying member has a carrying surface facing the accommodating cavity, the carrying surface being configured as a plane.

In some embodiments, the carrying member has a carrying portion and a connecting portion, the connecting portion encloses and is connected to an edge of the carrying portion, the carrying portion is configured to define the accommodating cavity, and the connecting portion is connected to the part of the box other than the carrying member; wherein an inner surface of the carrying portion facing the accommodating cavity is configured to form the carrying surface.

In some embodiments, the carrying portion protrudes relative to the connecting portion in a direction facing away from the accommodating cavity.

In some embodiments, the box includes a bottom cover and a frame, the frame encloses an enclosed space configured to be open at two ends in the vertical direction, the bottom cover and the carrying member respectively cover the two ends of the enclosed space that are opposite to each other in the vertical direction, and the bottom cover, the frame and the carrying member together enclose the accommodating cavity.

In some embodiments, the battery cell is placed upside down in the box with an end cover facing the bottom wall, and the end cover is provided with a pressure relief mechanism and the electrode terminal, and the pressure relief mechanism and the electrode terminal are both arranged to face the bottom wall.

In some embodiments, the battery further includes a connecting plate and a connector, wherein the connecting plate is arranged to protrude in a horizontal direction on one side of the box, the connecting plate and the bottom wall form an accommodating portion in the vertical direction, the connector is arranged within the accommodating portion and is connected to the connecting plate, and the connector is electrically connected to the battery cell.

In some embodiments, the battery further includes a protective assembly arranged between the battery cell and the bottom wall to support and carry the battery cell.

In some embodiments, the battery further includes a bus component configured to be electrically connected to the electrode terminals of at least two battery cells, wherein the protective assembly is arranged between the bottom wall and the bus component, and the protective assembly is configured to insulate the battery cells from the bottom wall.

In some embodiments, the protective assembly includes a protective strip abutting against the battery cells.

In some embodiments, the protective strip is fixedly connected to the battery cells and/or the box.

In some embodiments, the protective strip is bonded to the battery cells and/or the box.

In some embodiments, a plurality of protective strips are provided, which are arranged spaced apart from each other in a second direction and extend in a first direction, and the first direction, the second direction and the vertical direction are perpendicular to one another.

In some embodiments, the protective assembly further includes a main plate, the protective strip is connected to the main plate, and the main plate is located between the protective strip and the bottom wall.

In some embodiments, the main plate abuts the bottom wall.

In some embodiments, the main plate is fixedly connected to the bottom wall.

In some embodiments, the main plate is integrally formed with or detachably connected to the protective strip.

In some embodiments, an end cover of the battery cell includes a functional region and shoulders, the functional region is provided with the electrode terminal, the shoulders are located on two sides of the functional region in a second direction, and the battery cell abuts against the protective strip by means of the shoulders, the second direction being perpendicular to the vertical direction.

In some embodiments, in the vertical direction, the thickness of the protective strip is greater than an extension height of a part of the electrode terminal that is exposed to the battery cell.

In some embodiments, the protective strip abuts against the electrode terminal, or the protective strip is arranged spaced apart from the electrode terminal.

In some embodiments, an orthographic projection of the electrode terminal on the bottom wall is located between orthographic projections of adjacent protective strips on the bottom wall.

In some embodiments, the electrode terminals of two adjacent battery cells are electrically connected to each other via a bus component, and an extension length of one of two adjacent protective strips is less than that of the other in the first direction, to form an avoidance notch, the avoidance notch being configured to avoid the bus component.

In some embodiments, the battery cell further includes a pressure relief mechanism arranged on the same side as the electrode terminal, and an orthographic projection of the pressure relief mechanism on the bottom wall is located between orthographic projections of adjacent protective strips on the bottom wall.

In some embodiments, there is a first distance H1 between the end cover of the battery cell and the bottom wall in the vertical direction, and the first distance H1 satisfies 2 mm < H1 < 30 mm.

In some embodiments, a ratio H1/M2 of the first distance H1 to the weight M2 of a single battery cell satisfies 0.2 mm/Kg < H1/M2 < 50 mm/Kg.

In some embodiments, the battery cell further includes a battery casing in which the electrode assembly is accommodated, the battery casing is provided with a pressure relief mechanism, and the pressure relief mechanism is integrally formed with the battery casing.

In some embodiments, the battery casing includes an integrally formed non-weak region and weak region, the battery casing is provided with a grooved portion, the non-weak region is formed around the grooved portion, the weak region is formed at the bottom of the grooved portion, the weak region is configured to be damaged when an internal pressure of the battery cell is released, and the pressure relief mechanism includes the weak region.

In some embodiments, an average grain size of the weak region is defined as Si, and an average grain size of the non-weak region is defined as $S_2$, satisfying: $0.05 \leq S_1/S_2 \leq 0.9$.

In some embodiments, the minimum thickness of the weak region is defined as $A_1$ and satisfies: $1 \leq A_1/S_1 \leq 100$.

In some embodiments, the minimum thickness of the weak region is defined as Ai, and the hardness of the weak region is defined as Bi, satisfying: 5 HBW/mm $\leq B_1/A_1 \leq$ 10000 HBW/mm.

In some embodiments, the hardness of the weak region is defined as Bi, and the hardness of the non-weak region is defined as $B_2$, satisfying: $1 < B_1/B_2 \leq 5$.

In some embodiments, the minimum thickness of the weak region is defined as $A_1$, and the minimum thickness of the non-weak region is defined as $A_2$, satisfying: $0.05 \leq A_1/A_2 \leq 0.95$.

In some embodiments, the electrode assembly includes a positive electrode plate and a negative electrode plate, the positive electrode plate and/or the negative electrode plate includes a current collector and an active material layer, and the current collector includes a supporting layer and a conductive layer, the supporting layer is configured to carry the conductive layer, and the conductive layer is configured to carry the active material layer.

In some embodiments, the conductive layer is arranged on at least one side of the supporting layer in a thickness direction of the supporting layer.

In some embodiments, a room temperature film resistance Rs of the conductive layer satisfies: $0.016\,\Omega/\square \le Rs \le 420\,\Omega/\square$.

In some embodiments, the conductive layer is made of at least one material selected from aluminum, copper, titanium, silver, a nickel-copper alloy, and an aluminum-zirconium alloy.

In some embodiments, the material of the supporting layer includes one or more of a polymer material and a polymer-based composite material.

In some embodiments, the thickness d1 of the supporting layer and the light transmittance k of the supporting layer satisfy: when $12\,\mu m \le d1 < 30\,\mu m$, $30\% \le k \le 80\%$; or when $8\,\mu m \le dl < 12\,\mu m$, $40\% \le k \le 90\%$; or when $1\,\mu m < d1 < 8\,\mu m$, $50\% \le k \le 98\%$.

In some embodiments, the electrode assembly includes a positive electrode plate, the positive electrode plate includes a positive electrode current collector and a positive electrode active material layer coated on a surface of the positive electrode current collector, the positive electrode active material layer includes a positive electrode active material, and the positive electrode active material has an inner core and a shell coating the inner core, wherein the inner core includes at least one of a ternary material, $dLi_2MnO_3\cdot(1\text{-}d)LiMO_2$ and $LiMPO_4$, where $0 < d < 1$, and the M includes one or more selected from Fe, Ni, Co, and Mn; and the shell contains an crystalline inorganic substance, the full width at half maximum of a main peak measured by X-ray diffraction of the crystalline inorganic substance is 0-3°, and the crystalline inorganic substance includes one or more selected from a metal oxide and an inorganic salt.

In some embodiments, the shell includes at least one of the metal oxide and the inorganic salt, and carbon.

In some embodiments, the electrode assembly includes a positive electrode plate, the positive electrode plate includes a positive electrode current collector and a positive electrode active material layer coated on a surface of the positive electrode current collector, the positive electrode active material layer includes a positive electrode active material, and the positive electrode active material has $LiMPO_4$, where the M includes Mn, and a non-Mn element, and the non-Mn element satisfies at least one of the following conditions: an ionic radius of the non-Mn element is defined as a, an ionic radius of the manganese element is defined as b, and $|a\text{-}b|/b$ is not greater than 10%; a valence change voltage of the non-Mn element is defined as U, where $2\,V < U < 5.5\,V$; the chemical activity of a chemical bond formed by the non-Mn element and O is not less than the chemical activity of a P-O bond; and the highest valence of the non-Mn element is not greater than 6.

In some embodiments, the non-Mn element includes one or both of a first doping element and a second doping element, the first doping element is doped at manganese site, and the second doping element is doped at a phosphorus site.

In some embodiments, the first doping element satisfies at least one of the following conditions: an ionic radius of the first doping element is defined as a, an ionic radius of the manganese element is defined as b, and $|a\text{-}b|/b$ is not greater than 10%; and a valence change voltage of the first doping element is defined as U, where $2\,V < U < 5.5\,V$.

In some embodiments, the second doping element satisfies at least one of the following conditions: the chemical activity of a chemical bond formed by the second doping element and O is not less than the chemical activity of a P-O bond; and the highest valence of the second doping element is not greater than 6.

In some embodiments, the positive electrode active material further has a coating layer.

In some embodiments, the coating layer includes carbon.

In some embodiments, the carbon in the coating layer is a mixture of SP2-form carbon and SP3-form carbon.

In some embodiments, a molar ratio of the SP2-form carbon to the SP3-form carbon is any value within a range of 0.1-10.

According to an embodiment in a second aspect of the present application, an electrical apparatus includes a battery according to the embodiments in the first aspect of the present application, the battery being configured to supply electric energy.

Additional aspects and advantages of the present application will be set forth in part in the following description, and in part will be apparent from the following description, or may be learned by practice of the present application.

**Description of Drawings**

The above and/or additional aspects and advantages of the present application will become apparent and easily comprehensible from the following description of embodiments in conjunction with the accompanying drawings, in which:

Fig. 1 is a schematic view of an electrical apparatus according to an embodiment of the present application;

Fig. 2 is an exploded view of a battery according to an embodiment of the present application;

Fig. 3 is an exploded view of a battery according to another embodiment of the present application;

Fig. 4 is an exploded view of a battery cell according to an embodiment of the present application;

Fig. 5 is a schematic view of the battery cell shown in Fig. 4;

Fig. 6 is a schematic view of the arrangement of battery cells according to another embodiment of the present application;

Fig. 7 is an exploded view of a battery according to an embodiment of the present application;

Fig. 8 is a schematic view of the arrangement of battery cells shown in Fig. 7;

Fig. 9 is a schematic view of a battery cell according to an embodiment of the present application;

Fig. 10 is a schematic structural view of a battery according to an embodiment of the present application;

Fig. 11 is an exploded view of the battery shown in Fig. 10;

Fig. 12 is a schematic structural view of a bottom cover provided in some embodiments of the present application;

Fig. 13 is a top view of the bottom cover shown in Fig. 12;

Fig. 14 is a front view of the bottom cover shown in Fig. 12;

Fig. 15 is a schematic structural view of a bottom cover provided in some other embodiments of the present application;

Fig. 16 is a cross-sectional view of the battery shown in Fig. 10;

Fig. 17 is a schematic view of an orthographic projection of the bottom cover shown in Fig. 14 in a vertical direction;

Fig. 18 is a schematic view of the outline of a battery cell according to some embodiments of the present application;

Fig. 19 is a front view of the battery cell shown in Fig. 18;

Fig. 20 is a schematic structural view of a carrying member according to some embodiments of the present application;

Fig. 21 is a schematic structural view of a carrying member according to some other embodiments of the present application;

Fig. 22 is a view of an orthographic projection of the carrying member shown in Fig. 21 in a vertical direction;

Fig. 23 is a front view of the battery shown in Fig. 10;

Fig. 24 is a schematic view of a battery applied to a vehicle body according to some embodiments of the present application

Fig. 25 is a schematic view of the battery shown in Fig. 24;

Fig. 26 is a first exploded view of the structure shown in Fig. 24;

Fig. 27 is a second exploded view of the structure shown in Fig. 24;

Fig. 28 is a schematic view of the installation relationship between a battery and a vehicle body according to some embodiments of the present application;

Fig. 29 is a schematic view of a battery provided in some embodiments of the present application;

Fig. 30 is a schematic structural view of a carrying member according to some embodiments of the present application;

Fig. 31 is a schematic structural view of a carrying member according to some embodiments of the present application;

Fig. 32 is a schematic structural view of a carrying member according to some embodiments of the present application;

Fig. 33 is a schematic structural view of a carrying member according to some embodiments of the present application;

Fig. 34 is a schematic structural view of a carrying member according to some embodiments of the present application;

Fig. 35 is a schematic structural view of a battery according to some embodiments of the present application;

Fig. 36 is a schematic structural view of a battery in an embodiment of the present application;

Fig. 37 is a schematic view of a battery module shown in Fig. 36;

Fig. 38 is a schematic view of a battery cell cooperating with a reinforcing member according to some embodiments of the present application;

Fig. 39 is a schematic view of a battery cell cooperating with a reinforcing member according to some embodiments of the present application;

Fig. 40 is a schematic view of a battery cell cooperating with a reinforcing member according to some embodiments of the present application;

Fig. 41 is an exploded view of a battery according to some embodiments of the present application;

Fig. 42 is a schematic structural view of a protective assembly of the battery shown in Fig. 41;

Fig. 43 is a schematic cross-sectional view of the battery shown in Fig. 41;

Fig. 44 is a schematic enlarged view of circle B in Fig. 43;

Fig. 45 is a schematic structural view of a collision test apparatus A for performing a collision test on a battery according to some embodiments of the present application;

Fig. 46 is a schematic view of the arrangement of electrode terminals according to some embodiments of the present application;

Fig. 47 is a schematic view of a battery cell cooperating with a reinforcing member according to some embodiments of the present application;

Fig. 48 is a schematic structural view of a shell provided in some embodiments of the present application;

Fig. 49 is a cross-sectional view taken along line C-C of the shell shown in Fig. 48;

Fig. 50 is a grain view (schematic view) of the shell shown in Fig. 49;

Fig. 51 is a partial enlarged view of portion E of the shell shown in Fig. 49;

Fig. 52 is a partial enlarged view of a shell according to some other embodiments of the present application;

Fig. 53 is a schematic structural view of a shell provided in still some other embodiments of the present application (showing one stage of scored groove);

Fig. 54 is a cross-sectional view taken along line E-E of the shell shown in Fig. 53;

Fig. 55 is a schematic structural view of a shell provided in yet some embodiments of the present application (showing one stage of scored groove);

Fig. 56 is a cross-sectional view taken along line F-F of the shell shown in Fig. 55;

Fig. 57 is a schematic structural view of a shell provided in some other embodiments of the present application (showing one stage of scored groove);

Fig. 58 is a cross-sectional view taken along line G-G of the shell shown in Fig. 57;

Fig. 59 is a schematic structural view of a shell provided in still some other embodiments of the present application (showing two stages of scored grooves);

Fig. 60 is a cross-sectional view taken along line K-K of the shell shown in Fig. 59;

Fig. 61 is a schematic structural view of a shell provided in yet some embodiments of the present application (showing two stages of scored grooves);

Fig. 62 is a cross-sectional view taken along line M-M of the shell shown in Fig. 61;

Fig. 63 is a schematic structural view of a shell provided in some other embodiments of the present application (showing two stages of scored grooves);

Fig. 64 is a cross-sectional view taken along line N-N of the shell shown in Fig. 63;

Fig. 65 is an axonometric view of a shell provided in some embodiments of the present application;

Fig. 66 is a schematic structural view of the shell shown in Fig. 65 (showing one stage of scored groove and one stage of sunk groove);

Fig. 67 is a cross-sectional view taken along line O-O of the shell shown in Fig. 66;

Fig. 68 is a schematic structural view of a shell provided in yet some embodiments of the present application (showing one stage of scored groove and one stage of sunk groove);

Fig. 69 is a cross-sectional view taken along line P-P of the shell shown in Fig. 68;

Fig. 70 is a schematic structural view of a shell provided in some other embodiments of the present application (showing one stage of scored groove and one stage of sunk groove);

Fig. 71 is a cross-sectional view taken along line Q-Q of the shell component shown in Fig. 70;

Fig. 72 is a schematic structural view of a shell provided in some embodiments of the present application (showing one stage of scored groove and two stage of sunk grooves);

Fig. 73 is a cross-sectional view taken along line R-R of the shell component shown in Fig. 72;

Fig. 74 is a schematic structural view of a shell provided in yet some embodiments of the present application (showing one stage of scored groove and two stages of sunk grooves);

Fig. 75 is a cross-sectional view taken along line S-S of the shell shown in Fig. 74;

Fig. 76 is a schematic structural view of a shell component provided in some other embodiments of the present application (showing one stage of scored groove and two stage of sunk grooves);

Fig. 77 is a cross-sectional view taken along line T-T of the shell shown in Fig. 76;

Fig. 78 is a schematic structural view of a shell provided in other embodiments of the present application;

Fig. 79 is a grain view (schematic view) of a shell provided in some other embodiments of the present application;

Fig. 80 is a schematic structural view of an end cover provided in some embodiments of the present application;

Fig. 81 is a schematic structural view of a case provided in some embodiments of the present application;

Fig. 82 is a schematic structural view of a case provided in some other embodiments of the present application;

Fig. 83 is a schematic structural view of a battery cell provided in some embodiments of the present application;

Fig. 84 is a schematic structural view of a positive electrode current collector according to a specific embodiment of the present application;

Fig. 85 is a schematic structural view of a positive electrode current collector according to a further specific embodiment of the present application;

Fig. 86 is a schematic structural view of a negative electrode current collector according to a specific embodiment of the present application;

Fig. 87 is a schematic structural view of a negative electrode current collector according to a further specific embodiment of the present application;

Fig. 88 is a schematic structural view of a positive electrode plate according to a specific embodiment of the present application;

Fig. 89 is a schematic structural view of a positive electrode plate according to a further specific embodiment of the present application;

Fig. 90 is a schematic structural view of a negative electrode plate according to a specific embodiment of the present application;

Fig. 91 is a schematic structural view of a negative electrode plate according to a further specific embodiment of the present application;

Fig. 92 is a schematic view of a nail penetration test of the present application;

Fig. 93 shows temperature change curves of a lithium-ion battery 1# and a lithium-ion battery 4# after a nail penetration test;

Fig. 94 shows voltage change curves of a lithium-ion battery 1# and a lithium-ion battery 4# after a nail penetration test;

Fig. 95 is an X-ray diffraction (XRD) pattern of undoped $LiMnPO_4$ and a positive electrode active material prepared in Embodiment 2;

Fig. 96 is an X-ray energy dispersive spectrum (EDS) of the positive electrode active material prepared in Embodiment 2;

Fig. 97 is a schematic view of a positive electrode active material having a core-shell structure described in the present application; and

Fig. 98 is a schematic view of a positive electrode active material having a core-shell structure according to an embodiment of the present application;

## Detailed Description

Embodiments of the present application are described in further detail below in conjunction with the drawings and embodiments. The following detailed description of the embodiments and the drawings are used to illustrate the principles of the present application by way of example, but should not be used to limit the scope of the present application, that is, the present application is not limited to the described embodiments.

In the description of the present application, it should be noted that unless otherwise stated, all technical and scientific terms used herein have the same meanings as commonly understood by those skilled in the art of the present application. The terms used herein are intended only for the purpose of describing specific embodiments and are not intended to limit the present application. The terms "comprise" and "have" and any variations thereof in the specification and claims of the present application as well as in the above description of drawings are intended to cover a non-exclusive inclusion; the term "a plurality of" means two or more; and the orientation or position relationships indicated by the terms "upper", "lower", "left", "right", "inner", "outer" and the like are only for facilitating the description of the present application and simplifying the description, rather than indicating or implying that the apparatus or element referred to must have a specific orientation or be constructed and operated in a specific orientation, and therefore will not be interpreted as limiting the present application. In addition, the terms "first", "second", "third", and the like are used for descriptive purposes only, and cannot be construed as indicating or implying relative importance. "Perpendicular" is not strictly perpendicular, but within the allowable range of errors. "Parallel" is not strictly parallel, but within an allowable range of an error.

The reference to "embodiments" in the present application means that specific features, structures or characteristics described with reference to embodiments may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described in the present application may be combined with other embodiments.

Orientation words appearing in the following description are all directions shown in the drawings, and do not limit the specific structure of the present application. In the description of the present application, it should also be noted that unless otherwise expressly specified and defined, the terms "install", "connected" and "connect" should be understood in a broad sense. For example, the connection may be fixed connection, detachable connection or integrated connection, or may be direct connection, indirect connection through an intermediate, or internal communication of two elements. Those of ordinary skill in the art can understand the specific meanings of the above terms in the present application according to specific situations.

In the present application, the term "and/or" is only an association relation describing associated objects, which means that there may be three relations, for example, A and/or B may represent three situations: A exists alone, both A and B exist, and B exists alone. Unless otherwise specifically stated, the term "or" is inclusive in the present application. For example, the phrase "A or B" means "A, B, or both A and B"; more specifically, the condition "A or B" is satisfied by any of the following: A is true (or present) and B is false (or absent); A is false (or absent) and B is true (or present); or both A and B are true (or present).

Unless otherwise specifically stated, the terms "including" and "comprising" mentioned in the present application may be open-ended, or may be closed-ended. For example, the "including" and "comprising" may indicate that it is also possible to include or comprise other components not listed, and it is also possible to include or comprise only the listed components.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. Any lower limit can be combined with any upper limit to form a range not explicitly recited; and any lower limit can be combined with another lower limit to form a range not explicitly recited, and likewise, any upper limit can be combined with any another upper limit to form a range not explicitly recited. Furthermore, although not expressly recited, every point or single numerical value between the endpoints of a range is included within the range. Thus, each point or single numerical value may serve as its own lower or upper limit to form an unspecified range in combination with any other point or single numerical value or with other lower or upper limits.

For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2-3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like. In the present application, "about" before a numerical value indicates a range, indicating a range of $\pm 10\%$ of the numerical value.

Unless otherwise specifically stated, all the embodiments and optional embodiments of the present application can be combined with one another to form new technical solutions. Unless otherwise specified, all technical features and optional technical features of the present application may be combined with each other to form new technical solutions. Unless otherwise specified, all steps of the present application may be performed sequentially or randomly, and preferably sequentially. For example, the method comprises steps (a) and (b), meaning that the method may comprise steps (a) and (b) performed sequentially, or may comprise steps (b) and (a) performed sequentially. For example, the reference to the method that may further include step (c) means that step (c) may be added to the method in any order. For example, the method may include steps (a), (b) and (c), or may further include steps (a), (c) and (b), or may further include steps (c), (a) and (b), and the like.

It should be noted that the terms "coating layer" and " coating" herein refer to a material layer that coats the inner core material such as lithium manganese phosphate. The material layer may completely or partially coat the inner core, and the "coating layer" is used merely for the convenience of description, and not intended to limit the present application. Furthermore, each coating layer may completely or partially coat the interior. Likewise, the term "thickness of the coating layer" refers to the thickness of the material layer that coats the inner core along the radial direction of the inner core.

In the present application, the battery cell may include a lithium-ion secondary battery, a lithium-ion primary battery, a lithium sulfur battery, a sodium lithium-ion battery, a sodium-ion battery, a magnesium-ion battery, and so on, which will not be limited in the embodiments of the present application. The battery cell may be in a cylindrical shape, a flat shape, a cuboid shape or another shape, which is also not limited in the embodiments of the present application. Battery cells are generally divided into three types according to encapsulating manners: cylindrical battery cells, square battery cells, and pouch battery cells, which are also not limited in the embodiments of the present application.

The battery mentioned in the embodiments of the present application refers to a single physical module including one or more battery cells to provide a higher voltage and capacity. For example, the battery mentioned in the present application may include a battery pack and the like. The battery generally includes a box for packaging one or more battery cells. The box can prevent liquid or other foreign matters from affecting charging or discharging of the battery cells.

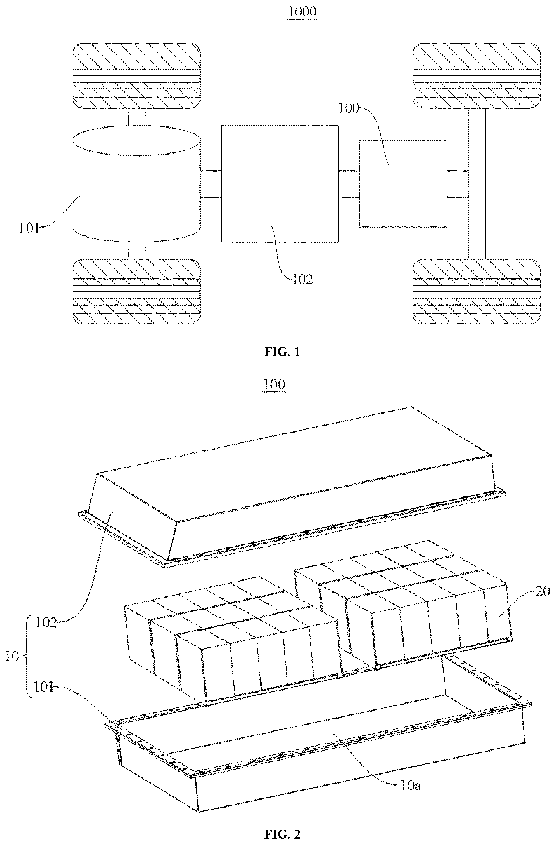

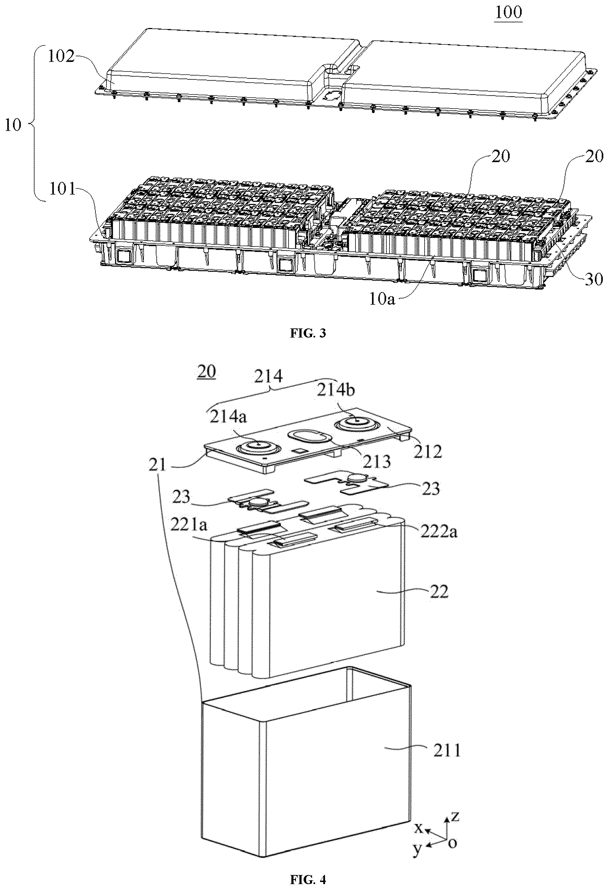

A box 10 may include a first part 101 and a second part 102 (as shown in Fig. 2 and Fig. 3). The first part 101 and the second part 102 are covered by each other, and the first part 101 and the second part 102 together define an accommodating cavity 10a for accommodating a battery cell 20. The second part 102 can be of a hollow structure with one end open, the first part 101 is of a plate-like structure, and the first part 101 covers the open side of the second part 102 to form the box having the accommodating cavity 10a; and both the first part 101 and the second part 102 can also be of a hollow structure with one side open, and the open side of the first part 101 covers the open side of the second part 102 to form the box having the accommodating cavity 10a. Of course, the box 10 may be in a variety of shapes, such as a cylinder, a cuboid, etc.

To improve the sealing performance of the first part 101 and the second part 102 after they are connected, a sealing member, such as a sealant, a sealing ring, etc. may also be provided between the first part 101 and the second part 102.

The material of the box 10 may be alloy materials such as aluminum alloy and iron alloy, or may be polymer materials such as polycarbonate and polyisocyanurate foam, or may be composite materials such as glass fiber and epoxy resin.

The battery cell includes an electrode assembly and an electrolyte solution, the electrode assembly being composed of a positive electrode plate, a negative electrode plate and a separator. The operation of the battery cell mainly relies on the movement of metal ions between the positive electrode plate and the negative electrode plate. The positive electrode plate includes a positive electrode current collector and a positive electrode active material layer. The positive electrode active material layer is coated on a surface of the positive electrode current collector, and the current collector not coated with the positive electrode active material layer protrudes from the current collector coated with the positive electrode active material layer and is used as a positive tab. Taking a lithium-ion battery as an example, the positive electrode current collector may be of a material of aluminum, and the positive electrode active material may be lithium cobalt oxide, lithium iron phosphate, ternary lithium or lithium manganate, etc. The negative electrode plate includes a negative electrode current collector and a negative electrode active material layer. The negative electrode active material layer is coated on a surface of the negative electrode current collector, and the current collector not coated with the negative electrode active material layer protrudes from the current collector coated with the negative electrode active material layer and is used as a negative tab. The material of the negative electrode current collector may be copper, and the negative electrode active material may be carbon or silicon, etc. In order to ensure that no fusing occurs when a large current passes, there are a plurality of positive tabs which are stacked together, and there are a plurality of negative tabs which are stacked together.

There is no particular restriction on the above-mentioned separator. Any well-known separator of a porous structure with electrochemical stability and chemical stability can be used. For example, it can be a single-layer or multi-layer film of one or more of glass fiber, non-woven fabric, polyethylene, polypropylene and polyvinylidene fluoride. The material of the separator may be polypropylene (PP) or polyethylene (PE), etc. In addition, the electrode assembly may have a wound structure or a stacked structure, and the embodiments of the present application are not limited thereto.

The above-mentioned electrolyte solution includes an organic solvent and an electrolyte salt, wherein the electrolyte salt plays a role in transporting ions between the positive and negative electrodes, and the organic solvent serves as a medium for transporting ions. The electrolyte salt may be an electrolyte salt known in the art for the electrolyte of a battery cell, such as one or more of $LiPF_6$(lithium hexafluorophosphate), $LiBF_4$(lithium tetrafluoroborate), $LiClO_4$ (lithium perchlorate), $LiAsF_6$(lithium hexafluoroarsenate), LiFSI (lithium bis(fluorosulfonyl)imide), LiTFSI (lithium bis(trifluoromethanesulfonyl)imide), LiTFS (lithium trifluoromethanesulfonate), LiDFOB (lithium difluoro(oxalato)borate), Li-BOB (lithium bis(oxalato)borate), $LiPO_2F_2$(lithium difluorophosphate), LiDFOP (lithium difluoro bis(oxalato)phosphate), and LiTFOP (lithium tetrafluoro(oxalato)phosphate); the organic solvent can be an organic solvent known in the art for the electrolyte of a battery cell, such as one or more, preferably two or more of ethylene carbonate (EC), propylene carbonate (PC), ethyl methyl carbonate (EMC), diethyl carbonate (DEC), dimethyl carbonate (DMC), dipropyl carbonate (DPC), methylpropyl carbonate (MPC), ethylpropyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methylsulfonylmethane (MSM), ethyl methyl sulfone (EMS) and ethylsulfonylethane (ESE), and appropriate electrolyte salts and organic solvents can be selected according to actual needs.

Of course, the battery cell may not include an electrolyte solution.

In order to meet different power requirements, the battery may include a plurality of battery cells, wherein the plurality of battery cells may be in series connection, parallel connection or parallel-series connection. The parallel-series connection refers to a combination of series connection and parallel connection. Optionally, first, a plurality of battery cells may be in series connection, parallel connection, or parallel-series connection to form a battery module, and then, a plurality of battery modules may be in series connection, parallel connection, or parallel-series connection to form a battery. That is to say, a plurality of battery cells may directly constitute a battery, or may constitute battery modules or battery groups, which then constitute a battery. The battery is further installed in an electrical apparatus to provide electrical energy to the electrical apparatus.

At present, from the perspective of the development of the market situation, power batteries are increasingly widely applied. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. With the continuous expansion of the application field of power batteries, the market demand is also constantly expanding.

In the related art, the opening of the battery casing often faces upward in the vertical direction, the battery cells are fixed at the bottom of the battery box, and the electrode terminals face the cover covering the opening of the box.

However, in the battery configured as above, the applicant noticed that when the battery is installed in an electrical apparatus, the battery cells are fixed to the bottom of the battery box, which makes the rigidity of the top of the battery box which is more vulnerable to collision poor, and during the collision process of the battery, the internal battery cells are unevenly stressed, making the battery prone to damage, resulting in poor battery safety and affecting the battery performance.

In view of this, the embodiments of the present application provide a technical solution. In the embodiments of the present application, a battery cell is provided in a battery to be accommodated within an accommodating cavity of a box, and the battery cell is fixed within the accommodating cavity, and the electrode terminal of the battery cell is arranged towards the bottom wall of the accommodating cavity. In this way, the safety of the battery can be effectively improved.

The technical solutions described in the embodiments of the present application are all applicable to various apparatuses using batteries, such as mobile phones, portable devices, laptops, battery vehicles, electric toys, electric tools, electric vehicles, ships, spacecrafts, and the like. For example, the spacecrafts include airplanes, rockets, space shuttles, spaceships, and the like.

It should be understood that the technical solutions described in the embodiments of the present application are not only applicable to the foregoing apparatuses, but also applicable to all apparatuses using batteries. However, for the sake of brevity, the following embodiments take electric vehicles as an example for description.

For example, as shown in Fig.1, a schematic structural view of a vehicle 1000 according to an embodiment of the present application is shown. The vehicle 1000 may be a fuel vehicle, a gas vehicle, or a new-energy vehicle, and the new-energy vehicle may be an all-electric vehicle, a hybrid electric vehicle, an extended range electric vehicle, or the like. A motor 101, a controller 102 and a battery 100 may be provided inside the vehicle 1000, and the controller 102 is configured to control the battery 100 to supply power to the motor 101. As an example, the battery 100 may be arranged at the bottom or the head or the tail of the vehicle 1000. The battery 100 may be used for supplying power to the vehicle 1000. For example, the battery 100 may be used as an operating power source of the vehicle 1000, which is used for a circuit system of the vehicle 1000, for example, for operation power requirements of the vehicle 1000 during starting, navigation, and running. In another embodiment of the present application, the battery 100 not only can be used as the operating power source of the vehicle 1000, but also can be used as a driving power source of the vehicle 1000 to provide driving power for the vehicle 1000 by replacing or partially replacing fuel or natural gas.

In order to meet different power usage requirements, the battery 100 may include one or more battery cells 20. For example, as shown in Fig. 2 and Fig. 3, a schematic structural view of a battery 100 according to an embodiment of the present application is shown. The battery 100 may include a plurality of battery cells 20. The battery 100 may further include a box 10, the interior of the box 10 is a hollow structure, and a plurality of battery cells 20 are accommodated in the box 10. For example, the plurality of battery cells 20 are placed in the box 10 after connected in parallel or in series or in a parallel-series combination.

Optionally, the battery 100 may further include other structures, which will not be repeated here. For example, the battery 100 may further include a bus component, and the bus component is used for achieving electrical connection between the plurality of battery cells 20, such as parallel connection, series connection, or parallel-series connection. Specifically, the bus component may realize electrical connections between the battery cells 20 by connecting electrode terminals of the battery cells 20. Further, the bus component may be fixed to the electrode terminals of the battery cells 20 by welding. Electric energy of the plurality of battery cells 20 may be further led out through an electrically conductive mechanism penetrating the box. Optionally, the electrically conductive mechanism may also belong to the bus component.

Depending on different power requirements, the number of battery cells 20 may be set to any value. For example, there may be one battery cell 20. The plurality of battery cells 20 can be connected in series, in parallel or in parallel-series connection to implement large capacity or power. Each battery 100 may include a large quantity of battery cells 20, and therefore, in order to facilitate installation, the battery cells 20 may be arranged in groups, and each group of battery cells 20 forms a battery module. The quantity of battery cells 20 included in the battery module is not limited and may be set according to the requirements. The battery can include a plurality of battery modules, and these battery modules may be in series, parallel or series-parallel connection.

As shown in Fig. 4, a schematic structural view of a battery cell 20 according to an embodiment of the present application is shown. The battery cell 20 includes one or more electrode assemblies 22, a case 211, and a end cover 212. The case 211 and the end cover 212 form a case of the battery cell 20 or a battery case 21. The wall of the case 211 and the end cover 212 are both called the wall of the battery cell 20. For a cuboid-shaped battery cell 20, the wall of the case 211 includes a bottom wall and four side walls. The shape of the case 211 is determined according to the combined shape of one or more electrode assemblies 22. For example, the case 211 may be a hollow cuboid, cube, or cylinder, and one of the surfaces of the case 211 has an opening to facilitate placing the one or more electrode assemblies 22 in the case 211. For example, when the case 211 is a hollow cuboid or cube, one plane of the case 211 is an opening surface, i.e., the plane does not have a wall, so that the inside and outside of the case 211 are in communication with each other. When the case 211 is a hollow cylinder, an end face of the case 211 is an opening surface, i.e., the end face does not have a wall, so that the inside and outside of the case 211 are in communication with each other. The end cover 212 covers the opening and is connected with the case 211 to form an enclosed chamber in which the electrode assemblies 22 are placed. The case 211 is filled with electrolyte, such as an electrolyte solution; the case 211 may be made of various materials, such as copper, iron, aluminum, stainless steel, an aluminum alloy and plastic, which is not particularly limited in this embodiment of the present application.

The battery cell 20 may further include two electrode terminals 214, which may be provided on the end cover 212. The end cover 212 is generally in the shape of a flat plate, and the two electrode terminals 214 are fixed to the flat plate surface of the end cover 212. The two electrode terminals 214 are a positive electrode terminal 214a and a negative electrode terminal 214b respectively. Each of the electrode terminals 214 is provided with a corresponding connecting member 23, which may alternatively be referred to as a current collecting member, located between the end cover 212 and the electrode assembly 22 for electrically connecting the electrode assembly 22 and the electrode terminal 214.

As shown in Fig. 4, each electrode assembly 22 has a first tab 221a and a second tab 222a. The first tab 221a and the second tab 222a have opposite polarities. For example, when the first tab 221a is a positive tab, the second tab 222a is a negative tab. The first tab 221a of one or a plurality of electrode assemblies 22 is connected to one electrode terminal via one connecting member 23, and the second tab 222a of the one or a plurality of electrode assemblies 22 is connected to the other electrode terminal via the other connecting member 23. For example, the positive electrode terminal 214a is connected to the positive tab via one connecting member 23, and the negative electrode terminal 214b is connected to the negative tab via the other connecting member 23.

In this battery cell 20, according to actual use requirements, there may be a single or a plurality of electrode assemblies 22. As shown in Fig. 4, there are four separate electrode assemblies 22 in the battery cell 20.

A pressure relief mechanism 213 may also be provided on the battery cell 20. The pressure relief mechanism 213 is configured, when an internal pressure or temperature of the battery cell 20 reaches a threshold, to be actuated to release the internal pressure or heat. Specifically, the pressure relief mechanism 213 refers to an element or component that is actuated to release the internal pressure of the battery cell 20 when the internal pressure reaches a predetermined threshold. That is, when the internal pressure of the battery cell 2 reaches a predetermined threshold, the pressure relief mechanism 213 performs an action or is activated to a certain state, so that the internal pressure of the battery cell 20 can be released. The action produced by the pressure relief mechanism 213 may include, but is not limited to: at least part of the pressure relief mechanism 213 being broken, crushed, torn or opened, thus forming an opening or channel for releasing the internal pressure. At this point, high-temperature and high-pressure substances inside the battery cell 20 will be discharged as emissions outwards from the actuated part. In this way, the pressure of the battery cell 20 is capable of being released under controllable pressure, so as to prevent more serious potential accidents. The pressure relief mechanism 213 may take the form of an explosion-proof valve, an air valve, a pressure relief valve or a safety valve, and may specifically adopt a pressure-sensitive element or structure.

For example, the pressure relief mechanism 213 may be a temperature-sensitive pressure relief mechanism, and the temperature-sensitive pressure relief mechanism is configured to be capable of being melt when the internal temperature of the battery cell 20 provided with the pressure relief mechanism 213 reaches a threshold; and/or the pressure relief mechanism 213 may be a pressure-sensitive pressure relief mechanism, and the pressure-sensitive pressure relief mechanism is configured to be capable of being ruptured when the internal air pressure of the battery cell 20 provided with the pressure relief mechanism 213 reaches a threshold.

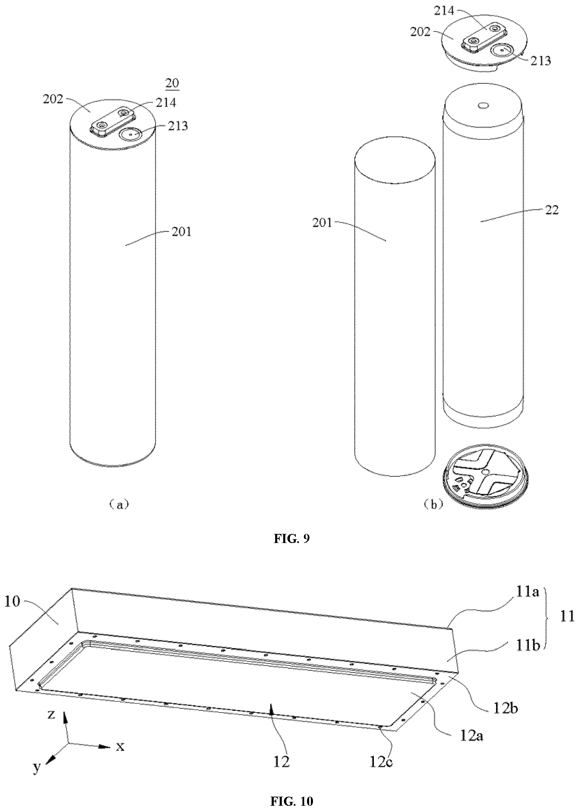

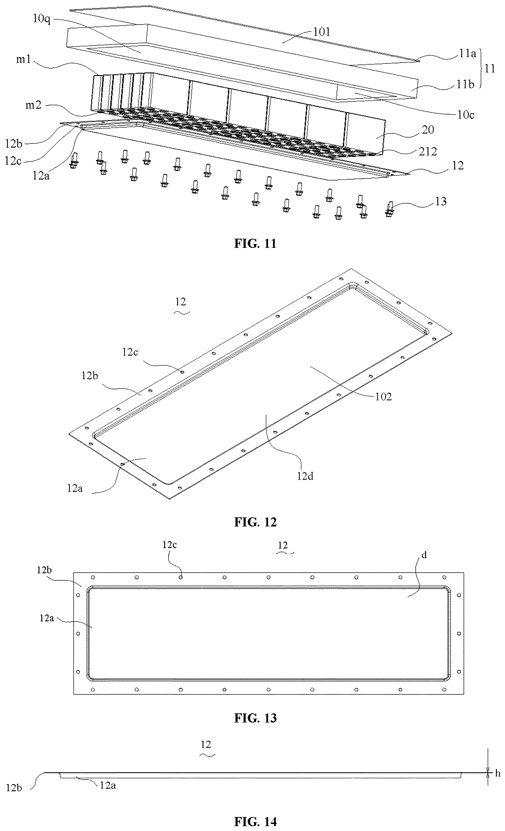

Fig. 10 and Fig. 11 show a schematic structural view of a battery cell 100 according to an embodiment of the present application.

The battery 100 includes a box 10 and a battery cell 20, wherein an accommodating cavity 10a is provided within the box 10; the accommodating cavity 10a includes a top wall 101 and a bottom wall 102 arranged oppositely in the vertical direction, and the top wall 101 and the bottom wall 102 are sequentially arranged from top to bottom in the vertical direction; the battery cell 20 is provided within the accommodating cavity 10a, and includes an electrode assembly 22 and an electrode terminal 214, wherein the electrode assembly 22 is electrically connected to the electrode terminal 214, so that the battery cell 20 is used to provide electrical energy.

Here, the battery cell 20 is fixed within the accommodating cavity 10a, and the electrode terminal 214 is arranged towards the bottom wall 102 of the accommodating cavity 10a, so as to provide a larger electric connection space for the electrode terminal 214, so that the energy density of the battery 100 can be improved, and the usability and safety of the battery 100 can be improved.

Illustratively, the battery cell 20 is fixed at the top within the box 10, and the rigidity of the top of the battery 100 can be increased to further increase the safety of the battery 100.

For convenience of description, in the embodiments of the present application, the vertical direction is taken as the up-down direction. It should be understood that when the battery 100 is in use, the vertical direction may also be other directions, and is not particularly limited herein.

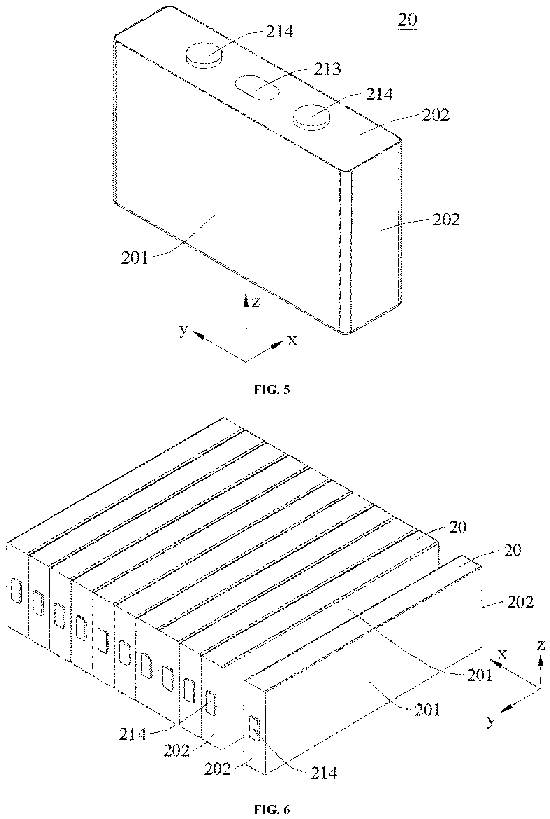

In some embodiments, as shown in Fig. 5, the battery cell 20 has a first wall 201 and a second wall 202 which are connected, wherein the first wall 201 is the wall with the largest area in the battery cell, and the second wall 202 and the first wall 201 are provided to intersect. The first wall 201 and the second wall 202 are then not parallel and have a common line.

Optionally, the battery cell 20 is generally formed into a rectangular parallelepiped structure, and the length of the battery cell 20 is greater than the width and height of the battery cell 20. The first wall 201 is located on one side of the battery cell 20 in a first direction x, and the battery cell 20 has a second wall 202 on at least one of the two sides thereof in a second direction y. The battery cell 20 has the second wall 202 on at least one of the two sides thereof in the vertical direction, and the electrode terminal 214 may be provided on the second wall 202 of the battery cell 20 in the vertical direction z; Of course, as shown in Fig. 6, the electrode terminal 214 may also be provided on the second wall 202 of the battery cell 20 in the second direction y.

Here, the electrode terminal 214 is provided on the second wall 202, and then the electrode terminal 214 is provided on a wall of the battery cell 20 other than the first wall 201 and intersecting with the first wall 201, so as to facilitate the arrangement of the electrode terminal 214, while facilitate the avoidance of the electrode terminal 214 and a reinforcing member 30 (described below), so that the reinforcing member 30 does not need to be provided with an avoidance portion for avoiding the electrode terminal 214, which is conducive to simplifying the structure of the reinforcing member 30.

Optionally, in the example of Fig. 6, the battery cell 20 may be a blade battery, the length of the battery cell 20 > the width of the battery cell 20 > the height of the battery cell 20, the length of the battery cell 20 in the second direction y > the width of the battery cell 20 in the vertical direction z > the height of the battery cell 20 in the first direction x, the first wall 201 is located at one end of the battery cell 20 in the height direction, the electrode terminal 214 is provided on the second wall 202, and the electrode terminal 214 may be located at one or both ends of the battery cell 20 in the length direction, and/or the electrode terminal 214 may be located at one or both ends of the battery cell 20 in the width direction.

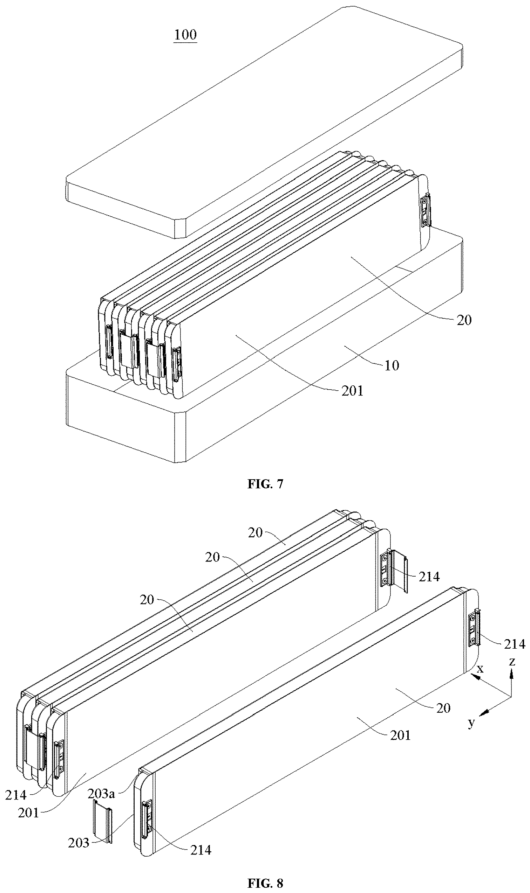

Of course, in the present application, the location of the electrode terminal 214 is not limited to this. As shown in Figs. 7 and 8, the electrode terminals 214 can also be provided on the first wall 201, which also facilitates the arrangement of the electrode terminals 214; for example, the battery cell 20 is a One-Stop battery cell. It can be seen that the battery 100 in the embodiment of the present application has good flexibility in the location of the electrode terminal 214.

In some embodiments, as shown in Fig. 8, there are a plurality of battery cells 20, and the plurality of battery cells 20 are arranged in the first direction x. In the first direction x, each battery cell 20 is provided with a first surface 203 opposite to the first wall 201. The first surface 203 is provided with an avoidance groove 203a. The avoidance groove 203a of one of two adjacent battery cells 20 is used to accommodate the electrode terminals 214 of the other battery cell 20. The first direction x is perpendicular to the first wall 201, so as to achieve a compact arrangement of the plurality of battery cells 20 in the first direction and save space.

In some embodiments, as shown in Figs. 4-6, the electrode terminal 214 is provided on the second wall 202, and the battery cell 20 includes two first walls 201 oppositely arranged and two second walls 202 oppositely arranged, at least two electrode terminals 214 are provided, and the plurality of electrode terminals 214 include a positive electrode terminal 214a and a negative electrode terminal 214b.

Here, at least two electrode terminals 214 are disposed on the same second wall 202 to help save the space occupied by the battery cell 20 on the premise of ensuring that adjacent electrode terminals 214 have appropriate spacing; or, each second wall 202 is provided with at least one electrode terminal 214 such that electrode terminals 214 located on different second walls 202 have sufficient spacing.

For example, in the examples of Figs. 4 and 5, the battery cell 20 includes two first walls 201 oppositely arranged along the first direction x and two second walls 202 oppositely arranged along the vertical direction z. The vertical direction z is not parallel to the first direction x, for example, the vertical direction z is perpendicular to the first direction x; and the plurality of electrode terminals 214 are all located on the same second wall 202 of the battery cell 20 in the vertical direction z.

In some embodiments, the electrode terminal 214 is disposed on the second wall 202 of the battery cell 20 in the second direction y, or the electrode terminal 214 is disposed on the second wall 202 of the battery cell 20 in the vertical direction z.

In the example of Fig. 11, the electrode terminal 214 is provided on the second wall 202 of the battery cell 20 facing the bottom wall 102 in the vertical direction.

Of course, for a cuboid-shaped battery cell 20, the battery cell 20 may also include two second walls 202 oppositely arranged along the second direction y, the second direction y is not parallel to the first direction, for example, the second direction y is perpendicular to the first direction; and the plurality of electrode terminals 214 are all located on the same second wall 202 of the battery cell 20 in the second direction y.

Regardless of whether the plurality of electrode terminals 214 are located on one side of the battery cell 20 in the second direction y or on one side of the battery cell 20 in the vertical direction z, when there are multiple battery cells 20 and the multiple battery cells 20 are arranged sequentially along the second direction y, the second walls 202 of two adjacent battery cells 20 face each other in the second direction y.

It should be noted that in the present application, the first wall 201 may be a flat surface or a curved surface, and the second wall 202 may be a flat surface or a curved surface.

In some embodiments, as shown in Fig. 9, the first wall 201 is formed in a cylindrical shape; in this case, the battery cell 20 may be substantially a cylindrical battery cell.

In some embodiments, as shown in Fig. 9, second walls 202 are provided at both axial ends of the first wall 201, and at least one second wall 202 is provided with the electrode terminal 214, and then all electrode terminals 214 of the battery cell 20 are provided on one of the second walls 202, or at least one electrode terminal 214 of the battery cell 20 is provided on one of the second walls 202, and the remaining electrode terminals 214 of the battery cell 20 are provided on the other second wall 202. Thus, the flexible arrangement of the electrode terminals 214 is facilitated.

In some embodiments, as shown in Fig. 9, one of the second walls 202 is provided with an exposed electrode terminal 214, and the electrode assembly 22 includes a positive electrode plate 221 and a negative electrode plate 222. One of the positive electrode plate 221 and the negative electrode plate 222 is electrically connected to the electrode terminal 214, and the other of the positive electrode plate 221 and the negative electrode plate 222 is electrically connected to the first wall 201, so as to realize normal power supply of the battery cell 20.

Of course, the other one of the positive electrode plate 221 and the negative electrode plate 222 can also be electrically connected to the other second wall 202, that is, the second wall 202 provided with the exposed electrode terminal 214 is not the same wall as the second wall 202 electrically connected with the other one of the positive electrode plate 221 and the negative electrode plate 222, which is also convenient for realizing normal power supply of the battery cell 20.

In some embodiments, at least one battery cell 20 is a pouch battery cell. When the battery 100 includes one battery cell 20, the battery cell 20 is a pouch battery cell; and when the battery 100 includes a plurality of battery cells 20, at least one of the plurality of battery cells 20 is a pouch battery cell. Therefore, it is convenient to enrich the types and structures of the battery 100 and the layout of the battery cells 20, so as to help the battery 100 meet the actual differentiated requirements.

In some embodiments, as shown in Figs. 4 and 5, the battery cell 20 further includes a pressure relief mechanism 213, and the pressure relief mechanism 213 and the electrode terminal 214 are disposed on the same wall of the battery cell 20. For example, the pressure relief mechanism 213 and the electrode terminal 214 are both disposed on the second wall 202.

Of course, in other embodiments of the present application, the battery cell 20 also includes a pressure relief mechanism 213. The pressure relief mechanism 213 and the electrode terminal 214 are respectively disposed on two walls of the battery cell 20.

Therefore, the location of the pressure relief mechanism 213 relative to the electrode terminal 214 has a certain degree of flexibility.

At present, from the perspective of the development of the market situation, batteries are more and more widely used. Batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. With continuous expansion of the battery application fields, the market demand is also constantly expanding.

The applicant noticed that when water vapor from the outside enters the inside of the box, it will corrode the battery cells and other devices inside the box, reducing the safety and service life of the battery. In related technologies, in order to improve the sealing performance of the battery, an additional sealing structure (such as a sealing plate) is provided inside the box for sealing. However, the additional sealing structure increases the structural complexity of the battery and increases the cost.

In order to improve the safety and service life of the battery, the applicant has researched and found that the box itself can be designed as a closed structure to reduce the complexity of the battery structure and the cost of the battery.

In some embodiments, as shown in Figs. 10 and 11, the box 10 includes a main body 11 and a bottom cover 12 disposed at the bottom of the main body 11, and the bottom cover 12 and the main body 11 together enclose to form an accommodating cavity 10a.

The main body 11 may be an integrally molded structure, or may be assembled from multiple parts. The main body 11 may be a hollow case structure, which defines a first space by itself. The bottom of the first space is open, and the bottom cover 12 covers the opening of the first space. The bottom cover 12 may have a hollow structure with one side open, and may itself have a second space. The second space provided by the bottom cover 12 and the first space provided by the main body 11 integrally form an accommodating cavity 10a. The bottom cover 12 itself does not need to have a space to form the accommodating cavity 10a. When the bottom cover 12 covers the opening of the first space of the main body 11, the bottom cover 12 seals the first space of the main body 11 and the two enclose to form an accommodating cavity 10a which is equivalent to the first space. In this case, the bottom cover 12 may have a flat plate structure. Of course, the accommodating cavity 10a of the box 10 can also be formed by a part of the first space provided by the main body 11. In this case, the bottom cover 12 can cover the opening of the first space and be recessed towards the first space to occupy a part of space of the first space. The first space, excluding the part of space occupied by the bottom cover 12, forms the accommodating cavity 10a of the box 10.

It can be understood that in this case, the bottom cover 12 is located at the bottom of the box 10 and is used to define the accommodating cavity 10a together with the main body 11. Specifically, the bottom cover 12 may be, but is not limited to, a plate-shaped structure, a block-shaped structure, etc., and may be flat-plate-shaped, bent-plate-shaped, etc., and is not specifically limited.

When the battery cell 20 is located in the accommodating cavity 10a, the battery cell 20 may be disposed on the bottom cover 12 and/or the main body 11. When the main body 11 is assembled from multiple parts, the battery cell 20 may be provided on one of the parts or on all the parts. In an embodiment, the main body 11 may include a top cover, an enclosure plate and a supporting plate. The enclosure plate encloses to form a third space with openings at both ends in the vertical direction. The top cover and the bottom cover 12 hermetically cover both ends of the third space in the vertical direction respectively. The top cover (such as the carrying member 11a described later), the enclosure plate (such as the frame 11b described later) and the bottom cover 12 together enclose to form an accommodating cavity 10a. The supporting plate is located in the third space, and the battery cells 20 are supported on the supporting plate. In other embodiments, the main body 11 may include a carrying member 11a and a frame 11b described below. For details see below. In the present application, the carrying member 11a may also be called a supporting plate or a top plate, and the frame 11b may also be called a side plate.

The bottom cover 12 and the main body 11 can be fixed by welding, hot-melt connection, bonding, fastening connection, snap fit, etc. Among them, the fastening connection refers to the connection achieved through fasteners 13, and the fasteners 13 include bolts, pins, rivets, pins, screws and other members. Snap-fit refers to the fixation through an engagement structure. For example, the bottom cover 12 has a hook and the main body 11 has a bayonet. When the hook is engaged in the bayonet, the bottom cover 12 and the main body 11 can be engaged and fixed. Of course, the connection method between the bottom cover 12 and the main body 11 is not limited thereto, and will not be exhaustive in the present application.

In some embodiments, the bottom cover 12 is hermetically connected to the main body 11 and they together form a closed accommodating cavity 10a. In this case, the box 10 defines a sealed accommodating cavity 10a through enclosure by its bottom cover 12 and its main body 11, so as to ensure the airtightness of the battery 100 through the sealing property of the box 10 itself without resorting to other sealing structures, and no additional sealing structure is required in the box 10, so that the structure of the battery 100 can be simplified, the cost of the battery 100 can be reduced, and the safety and service life of the battery 100 can be ensured.

There are many ways of hermetical connection between the bottom cover 12 and the main body 11, which may include but are not limited to the following ways: a sealing member is provided between the bottom cover 12 and the main body 11, and the bottom cover 12 and the main body 11 are hermetically connected through the sealing member; the bottom cover 12 and the main body 11 are hermetically connected through sealant; the bottom cover 12 and the main body 11 are plugged into each other and hermetically connected by a blocking structure formed by the plugging surface.

In the description of the present application, the bottom cover 12 of the battery 100 is located at the bottom of the main body 11, that is, the bottom cover 12 is located at the bottom of the main body 11 in the up and down vertical orientation z as shown in Figs. 10 and 11. In actual use, the up and down orientation shown in Figs. 10 and 11 may be, but is not limited to, the vertical direction, depending on the actual mounting situation of the battery 100. It should be pointed out that in the following description of the present application, the vertical direction is used as a reference to describe the positional relationship, size, etc. of each structure of the battery 100. It is not a limitation on the use of the battery 100, but only for the purpose of explaining and explaining the solution more clearly.

In some embodiments, the bottom cover 12 is hermetically connected to the main body 11 via a sealing member.

Sealing members refer to components and parts that can prevent fluids or solid particles from leaking from between adjacent joint surfaces, and can prevent external impurities such as dust and moisture from intruding into the battery 100. The sealing member hermetically connecting the main body 11 and the bottom cover 12 means that the sealing member is connected between the two opposite surfaces of the main body 11 and the bottom cover 12 and has a ring-shaped contact interface with the two surfaces to prevent external moisture from entering the interior of the battery 100 through the contact interface between itself and the two surfaces, thereby achieving a sealing effect.

Optionally, the sealing members can be sealing rings and sealing gaskets. Specifically, the sealing member may be made of rubber, silicone or other materials. Specifically, the sealing members can be O-shaped sealing members, square sealing members, special-shaped sealing members, etc. The specific shape of the sealing member can be adapted to the shapes of the two opposite surfaces of the bottom cover 12 and the main body 11. For example, when the two opposite surfaces of the bottom cover 12 and the main body 11 are annular surfaces, the sealing member may be an O-shaped sealing member.

In this case, the bottom cover 12 is hermetically connected to the main body 11 through the sealing member, and the sealing is reliable, and the cost is low.

It should be noted that after the bottom cover 12 and the main body 11 are sealed through the sealing member, the bottom cover can also be fixedly connected to the main body 11 in other ways. The other ways include but are not limited to snap-fit, plug-in, threaded connection, riveting, welding, bonding, etc. Understandably, when the bottom cover 12 and the main body 11 are sealed through the sealant, according to the adhesiveness of the sealant, when the adhesive performance of the sealant is good and meets the requirements (that is, the bottom cover 12 and the main body 11 are fixed and not separated), it is also possible not to fixedly connect the two with other methods.

In some embodiments, as shown in Figs. 10 and 11, the bottom cover 12 is detachably connected to the bottom of the main body 11. In this case, the main body 11 can be directly mounted on the mounting body, and the bottom cover 12 and the main body 11 jointly form an accommodating cavity 10a. When the components (such as battery cells) in the accommodating cavity a need to be replaced or maintained, it just needs to remove the bottom cover 12 to expose the components within the battery 100 and maintain or replace these components without removing the entire battery 100 from the mounting body, which greatly improves the convenience of maintaining the battery 100.

The bottom cover 12 and the main body 11 being detachably connected means that when the bottom cover 12 is connected to the main body 11, the bottom cover 12 has a first state in which it is completely connected to the main body 11 and forms the accommodating cavity 10a relative to the main body 11, and a second state in which it is not completely connected to or separated from the main body 11 to expose the battery cell 20. Under external force, the bottom cover 12 can be switched from the first state to the second state and also can be switched from the second state to the first state without damaging any parts in this process.

When the bottom cover 12 is in the second state in which it is not completely connected to the main body 11 relative to the main body 11 and makes the accommodating cavity 10a open, the bottom cover 12 and the main body 11 can be mounted in the following manner: the bottom cover 12 and the main body 11 are rotatably connected and can be fixedly connected via fasteners 13 or engagement. When the bottom cover 12 rotates relative to the main body 11 to close the accommodating cavity 10a, the bottom cover 12 and the main body 11 can be fixedly connected to the main body 11 through fasteners 13 or engagement, and the battery cells 20 are accommodated in the accommodating cavity 10a without being visible. At this time, the bottom cover 12 is in the first state. When the fastener 13 is removed or the engagement connection is released, the bottom cover 12 can rotate relative to the main body 11 to a position where the accommodating cavity 10 a is opened and the battery cells 20 are exposed. At this time, the bottom cover 12 is in the second state. The rotatable connection between the bottom cover 12 and the main body 11 may be, but is not limited to, the bottom cover 12 and the main body 11 being rotatably connected through a rotating shaft.

When the bottom cover 12 is in the second state in which it is separated from the main body 11 relative to the main body 11 and makes the accommodating cavity 10a open, the bottom cover 12 and the main body 11 can be mounted in the following manner: the bottom cover 12 and the main body 11 are fixedly connected only via fasteners 13 or engagement. When the fasteners 13 are mounted on the bottom cover 12 and the main body 11 or the engagement structure of the bottom cover 12 and the main body 11 is engaged, the bottom cover 12 and the main body 11 are completely fixed and jointly form the accommodating cavity 10a, and the battery cell 20 is accommodated in the accommodating cavity 10a and is invisible. At this time, the bottom cover 12 is in the first state. When the fasteners 13 are removed or all engagement connections are released, the bottom cover 12 can be separated from the main body 11 to expose the battery cells 20. At this time, the bottom cover 12 is in the second state.

When the bottom cover 12 is in the first state, it forms an accommodating cavity 10a with the main body 11 to protect the battery cells 20. When the bottom cover 12 is in the second state, the battery 100 is exposed, which facilitates relevant personnel to maintain or replace the battery cells 20.

In some embodiments, referring to Fig. 11, the bottom cover 12 and the main body 11 are detachably connected via fasteners 13.

Fasteners 13 refer to members that can fasten two or more parts (or members) into a whole, which can be but are not limited to: screws, bolts, rivets, plug pins, hinge pins, welding nails, etc.

In this case, the bottom cover 12 and the main body 11 are detachably connected through the fasteners 13, which is not only convenient for disassembly and assembly, but also features a simple structure and is economical.

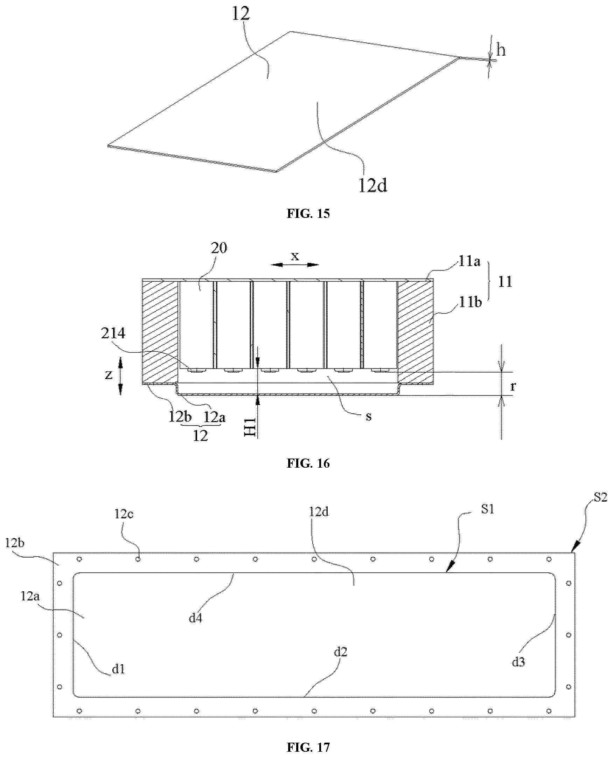

In some embodiments, as shown in Figs. 14 and 15, the minimum thickness h of the bottom cover 12 satisfies: 0.2mm < h < 20mm.

The thickness of the bottom cover 12 refers to the distance between the two vertical surfaces of the bottom cover 12 in a vertical cross section. The minimum thickness h of the bottom cover 12 is the shortest distance between the two side surfaces of the bottom cover 12 in the vertical direction. When the thickness of the bottom cover 12 is uniform everywhere, the bottom cover 12 can be in a flat plate shape (as shown in Fig. 15), and the minimum thickness of the bottom cover 12 is the equal thickness of the bottom cover 12 everywhere. When the thickness of the bottom cover 12 is uneven, the minimum thickness of the bottom cover 12 is the thickness of the thinnest part of the bottom cover 12.

Specifically, the minimum thickness h of the bottom cover 12 is optionally 0.3mm, 0.5mm, 0.8mm, 1mm, 1.5mm, 1.8mm, 2mm, 2.5mm, 2.8mm, 3mm, 3.5mm, 3.8mm, 4mm, 4.5mm, 4.7mm, 5mm, 5.5mm, 5.8mm, 6mm, 6.5mm, 7mm, 7.5mm, 8mm, 8.5mm, 9mm, 9.5mm, 10mm, 10.5mm, 11mm, 11.5mm, 12mm, 12.5mm, 13mm, 13.5mm, 14mm, 14.5mm, 15mm, 16mm, 16.5mm, 17mm, 17.5mm, 18mm, 18.5mm, 19mm, 19.5mm, etc. Preferably, it satisfies $0.5mm \leq h \leq 3mm$.

In this case, it has been proven that when the minimum thickness h of the bottom cover 12 satisfies 0.2mm < h < 20mm, the weight of the battery 100 can be effectively reduced, and the strength structure is reasonable.

It should be noted that in the description of the present application, with reference to the vertical direction, the "thickness" of a structure refers to the distance between the two side surfaces of the structure in the vertical direction on the cross-section in the vertical direction, and the "thickness" is not interpreted too much in the following description as it can be referred to here. Of course, it can be understood that the vertical direction is only for more convenient explanation of the solution of the present application, and does not limit the use mode of the battery 100.

In some embodiments, the weight M2 of the battery cell 20 and the minimum thickness h of the bottom cover 12 satisfy: $0.03mm/Kg \leq h/M2 \leq 100mm/Kg$.

The weight M2 of the battery cell 20 refers to the weight M2 of a single battery cell 20. When the battery 100 includes multiple battery cells 20, the weight of the battery cells 20 is the weight of all the battery cells 20.

Specifically, the ratio of the minimum wall thickness h of the bottom cover 12 to the weight M2 of the battery cell 20 is optionally 0.04mm/Kg, 0.05mm/Kg, 0.1mm/Kg, 0.4mm/Kg, 0.8mm/Kg, 1mm/Kg, 1.5mm/Kg, 2mm/Kg, 2.5mm/Kg, 3mm/Kg, 3.5mm/Kg, 4mm/Kg, 5mm/Kg, 6mm/Kg, 8mm/Kg, 10mm/Kg, 12mm/Kg, 13mm/Kg, 15mm/Kg, 16mm/Kg, 18mm/Kg, 20mm/Kg, 30mm/Kg, 35mm/Kg, 40mm/Kg, 45mm/Kg, 50mm/Kg, 55/Kg, 60mm/Kg, 65mm/Kg, 68mm/Kg, 70mm/Kg, 75mm/Kg, 80mm/Kg, 85mm/Kg, 90mm/Kg, 95mm/Kg, 98mm/Kg.

Table 1 The effect of the ratio of the minimum thickness h of the bottom cover 12 to the weight M2 of the battery cell 20 on the safety performance of the battery 100

| No. | h(mm) | m2(Kg) | h/M2(mm/Kg) | Test results |
| --- | --- | --- | --- | --- |
| 1 | 0.2 | 10 | 0.02 | Fire, explosion |
| 2 | 0.5 | 10 | 0.05 | No fire, no explosion |
| 3 | 1.2 | 3 | 0.4 | No fire, no explosion |
| 4 | 3 | 1 | 3 | No fire, no explosion |
| 5 | 5 | 1.5 | 3.33 | No fire, no explosion |
| 6 | 8 | 1.8 | 4.45 | No fire, no explosion |
| 7 | 10 | 2 | 5 | No fire, no explosion |
| 8 | 12 | 1.6 | 7.5 | No fire, no explosion |
| 9 | 15 | 1.7 | 8.82 | No fire, no explosion |

(continued)

| No. | h(mm) | m2(Kg) | h/M2(mm/Kg) | Test results |
|---|---|---|---|---|
| 10 | 20 | 2 | 10 | No fire, no explosion |
| 11 | 20 | 1 | 20 | No fire, no explosion |
| 12 | 20 | 0.5 | 40 | No fire, no explosion |
| 13 | 20 | 0.32 | 62.5 | No fire, no explosion |
| 14 | 20 | 0.25 | 80 | No fire, no explosion |
| 15 | 20 | 0.2 | 100 | No fire, no explosion |

Table 1 shows the test results of the effect of several sets of ratio of the minimum thickness h of the bottom cover 12 to the weight m2 of the battery cell 20 on the safety performance of the battery 100 when the test is carried out according to the standard of GB38031-2020 "Safety Requirements for Power Storage Batteries for Electric Vehicles". It can be seen from Table 1 that when h/m2 equals 0.02mm/Kg, the battery 100 is prone to fire and explosion. The reason is that the structural strength of the battery 100 cannot meet the requirements. When h/M2 is greater than 0.02mm/Kg, the structural strength of the bottom cover 12 is better, and the battery 100 is less likely to catch fire and explode. However, if h/m is too large, it will easily cause space waste and low energy density, so h/M2 is preferably not more than 100mm/Kg.

In this case, it has been proven that when the minimum thickness h of the bottom cover 12 and the weight m2 of the battery cell 20 satisfy $0.03mm/Kg \leq h/M2 \leq 100mm/Kg$, the battery 100 not only has good structural strength, but also has high energy density, and is not easy to catch fire and explode.

In some embodiments, referring to Figs. 10 to 12 together, the bottom cover 12 has a cover portion 12a and a mounting portion 12b. The mounting portion 12b encloses and is connected to the edge of the cover portion 12a, the cover portion 12a is used to define an accommodating cavity 10a, and the mounting portion 12b is connected to the main body 11.

The use of the cover portion 12a to define the accommodating cavity 10a means that the cover portion 12a and the main body 11 together enclose to form the accommodating cavity 10a, and the mounting portion 12b is connected to the main body 11 and does not participate in the definition of the accommodating cavity 10a. The cover portion 12a may be a plate-shaped or block-shaped member, and may be a flat plate-shaped or a bent plate-shaped member, which is not specifically limited. It can be seen from Figs. 10-12 that the mounting portion 12b encloses at the edge of the cover portion 12a, which means that the mounting portion 12b is continuously arranged along the edge of the cover portion 12a to form a closed structure connected from end to end. It can be understood that when projected in the vertical direction, the mounting portion 12b has a certain width, so that it can have an appropriate contact area with the main body 11, which not only facilitates the positioning and mounting between the mounting portion 12b and the main body 11, but also facilitates the arrangement of the sealing member. It also helps to improve the sealing performance between the mounting portion 12b and the main body 11.

The cover portion 12a and the mounting portion 12b may be integrally molded. When the bottom cover 12 is made of metal (such as aluminum, iron, stainless steel), the cover portion 12a and the mounting portion 12b can be integrally molded by die-casting, forging, hot pressing, cold pressing, etc. When the bottom cover 12 is made of a plastic material (such as PP, PE, ABS), the cover part 12a and the mounting portion 12b can be integrally molded by injection molding. The cover portion 12a and the mounting portion 12b may also be molded separately and then connected together. When the cover portion 12a and the mounting portion 12b are made of metal, the cover portion 12a and the mounting portion 12b can be welded or bonded together. When the cover portion 12a and the mounting portion 12b are made of a plastic material, the cover portion 12a and the mounting portion 12b can be bonded together. Of course, the cover portion 12a and the mounting portion 12b can also be fixedly connected together by snap fit, riveting or other methods.

The cover portion 12a and the mounting portion 12b may be located on the same plane. Specifically, optionally, the two surfaces of the cover portion 12a and the mounting portion 12b facing the main body 11 are in the same plane, and/or the two surfaces of the cover portion 12a and the mounting portion 12b away from the main body 11 are in the same plane. When the two surfaces of the cover portion 12a and the mounting portion 12b facing the main body 11 and the two surfaces away from the main body 11 are respectively on the same plane, the cover portion 12a and the mounting portion 12b can form a flat-plate bottom cover 12 ( As shown in Fig. 15).

The cover portion 12a and the mounting portion 12b may also be located on different planes. Specifically, the cover portion 12a is recessed toward the main body 11 relative to the mounting portion 12b, or the cover portion 12a protrudes away from the main body 11 relative to the mounting portion 12b, which is not specifically limited. The thicknesses of the cover portion 12a and the mounting portion 12b may be equal or different, which is not specifically limited.

In this case, the bottom cover 12 defines the accommodating cavity 10a through the cover portion 12a, and is connected to the main body 11 through the mounting portion 12b, which is well structured and easy to mount.

It can be understood that when the bottom cover 12 is hermetically connected to the main body 11, the bottom cover 12 is hermetically connected to the main body 11 via the mounting portion 12b, that is, the mounting portion 12b is hermetically connected to the main body 11. The mounting portion 12b and the main body 11 can be hermetically connected by a sealing member, a sealant, etc., which will not be exhaustively illustrated. The sealing member may be the sealing member mentioned in the above description, the arrangement of the sealing member may refer to the above description, with the difference that the sealing member is disposed between the mounting portion 12b and the main body 11. When sealant is used to hermetically connect the mounting portion 12b and the main body 11, the sealant may be coated on all surfaces of the mounting portion 12b that are in contact with the main body 11.

It can be understood that when the bottom cover 12 is detachably connected to the main body 11, the bottom cover 12 is detachably connected to the main body 11 via the mounting portion 12b, that is, the mounting portion 12b is detachably connected to the main body 11. The way in which the mounting portion 12b is detachably connected to the main body 11 can refer to the detachable connection between the bottom cover 12 and the main body 11 described above. It is only necessary to set the part of the bottom cover 12 that is detachably connected to the main body 11 as the mounting portion 12b. Therefore, the detachable connection between the mounting portion 12b and the main body 11 will not be described again here.

In some embodiments, the mounting portion 12b is detachably connected to the main body 11.

Specifically, the bottom cover 12 further includes a fixing hole 12c provided on the mounting portion 12b. The fastener 13 passes through the fixing hole 12c on the mounting portion 12b and is fastened to the main body 11. The fixing hole 12c is a through hole that runs through the mounting portion 12b in the vertical direction. Specifically, the fixing hole 12c can be a smooth through hole (such as when the fastener 13 is a rivet) or a threaded through hole (such as when the fastener 13 is a screw), or other types of through holes (such as hexagonal holes, square holes, waist-shaped holes). The specific form of the fixing hole 12c depends on the specific form and specific configuration of the fastener 13, and will not be described again here.

In some embodiments, the cover portion 12a and the mounting portion 12b have the same thickness.

When the cover portion 12a and the mounting portion 12b are integrally molded, they can be integrally molded in the manner described above, such as die-casting integral molding, cold pressing integral molding, hot pressing integral molding, injection molding integral molding, which will not be described again here. Since the cover portion 12a and the mounting portion 12b have the same thickness, they can be quickly processed using the same metal plate through stamping, cutting, etc. during molding.

In this case, the cover portion 12a and the mounting portion 12b have the same thickness, and the stress is equal everywhere during molding, which can improve the molding rate of the integral molding. They can also be quickly processed by simple methods such as plate cutting. The structure of the bottom cover 12 is simpler and more convenient to process.

In some embodiments, referring to Figs. 12 and 14, the cover portion 12a protrudes in a direction away from the accommodating cavity 10a relative to the mounting portion 12b.

As can be seen from the above, the cover portion 12a defines the accommodating cavity 10a. The fact that the cover portion 12a protrudes away from the accommodating cavity 10a means that the cover portion 12a protrudes away from the main body 11. That is to say, the cover portion 12a and the mounting portion 12b are staggered in the vertical direction, and the cover portion 12a is at the lowest point of the bottom cover 12. When the cover portion 12a protrudes away from the accommodating cavity 10a relative to the mounting portion 12b, certain redundant space can be formed between the cover portion 12a and the mounting portion 12b. This redundant space can increase the distance between the cover portion 12a and the battery cell 20. When an external force acts on the cover portion 12a, the external force can be reduced through this redundant space, reducing or avoiding the external force acting on the battery cell 20 and causing damage to the battery cell 20. Especially when the battery 100 is mounted on the bottom of the vehicle 1000 and the bottom cover 12 is at the lowest point of the battery 100, as the vehicle 1000 is traveling, stones on the ground can easily fly to the bottom, that is, the bottom cover 12 of the battery 100, and hit the bottom cover 12. At this time, the redundant space can reduce the impact of external force on the battery cells 20. In this case, the cover portion 12a protrudes relative to the mounting portion 12b, and the cover portion 12a of the bottom cover 12 can serve as a reinforcing structure of the bottom cover 12 to improve the bending resistance of the bottom cover 12.

In some embodiments, the bottom cover 12 is located at the bottom of the box 10 and is used to define the accommodating cavity 10a, and the wall of the bottom cover facing the battery cell forms the bottom wall of the accommodating cavity.

In some embodiments, referring to Fig. 16, the bottom cover 12 and the battery cell 20 are spaced apart.

The bottom cover 12 and the battery cell 20 being spaced apart means that a given distance r is maintained between the bottom cover 12 and the battery cells 20 in the vertical direction. With the given interval r, a buffer space is formed between the bottom cover 12 and the battery cell 20, which can prevent the external force acting on the bottom cover 12 from being transmitted to the battery cell 20 and damaging the battery cell 20. Especially when the battery 100 is mounted at the bottom of the vehicle 1000 and the bottom cover 12 is at the lowest point of the battery 100, as the vehicle 1000 is traveling, stones on the ground can easily fly to the bottom of the battery 100 and hit the bottom cover 12. At this time, the buffer space can interrupt the impact on the battery cell 20 as a result of the transmission of external force to the battery cell 20.

The bottom cover 12 and the battery cells 20 may be spaced apart as a result of the redundant space formed between the protruding cover portion 12a and the mounting portion 12b in the above embodiment. Alternatively, a given distance is maintained between one end of the battery cell 20 in the main body 11 and facing the bottom cover 12 and one end of the main body 11 facing the bottom cover 12. That is to say, the battery cell 20 is only located within a part of the accommodating cavity 10a defined by the main body 11, rather than located within the accommodating cavity 10a defined by the bottom cover 12, thereby ensuring that the given distance r is maintained between the battery cells 20 and the bottom cover 12 to form a buffer space.

It can be understood that when the battery 100 includes multiple battery cells 20, all the battery cells 20 are spaced apart from the bottom cover 12. Furthermore, in order to unify the size of the battery cells 20, the distances between the battery cells 20 and the bottom cover 12 are equal.

In some embodiments, referring to Figs. 12, 13 and 15, the bottom cover 12 has a feature surface 12d facing the accommodating cavity 10a, and the feature surface 12d is configured as a plane to reduce the occupation of the accommodating cavity 10a by the bottom cover 12 itself, leaving as much space as possible for mounting the battery cells 20 to improve the energy density and range of the battery.

The feature surface 12d faces the accommodating cavity 10a, indicating that the feature surface 12d is the inner surface of the bottom cover 12 capable of defining the accommodating cavity 10a. The feature surface 12d being configured as a plane means that in the arrangement direction of the main body 11 and the bottom cover 12, the feature surface 12d is a plane perpendicular to the arrangement direction. In practice, when the main body 11 and the bottom cover 12 are arranged in the vertical direction, the feature surface 12d of the bottom cover 12 is a plane parallel to the horizontal plane. When the main body 11 and the bottom cover 12 are arranged in the horizontal direction, the feature surface 12d of the bottom cover 12 is a plane parallel to the vertical plane.

When the feature surface 12d is a plane, a relatively equal distance (this distance may be zero) can be maintained between the feature surface 12d and each battery cell 20 accommodated in the accommodating cavity 10a. When the distance between the feature surface 12d and the battery cells 20 is kept relatively equal, the accommodating cavity 10a can accommodate more battery cells 20, that is, the space utilization of the accommodating cavity 10a is higher, the battery 100 can have higher energy density, and the range of the battery 100 is higher.

It can be understood that when the bottom cover 12 has the aforementioned cover portion 12a and the aforementioned mounting portion 12b, the feature surface 12d may be formed by the inner surface of the cover portion 12a facing the accommodating cavity 10a. It can further be understood that when the bottom cover 12 is spaced apart from the battery cells 20, the feature surface 12d and the battery cells 20 are spaced apart.

In some embodiments, the outer surface of the cover portion 12a away from the accommodating cavity 10a is parallel to the feature surface 12d.

The outer surface of the cover portion 12a away from the accommodating cavity 10a is arranged opposite to the feature surface 12d in the vertical direction. The outer surface of the cover portion 12a is used to be in contact with the atmospheric environment and withstand external force impact. When the outer surface of the cover portion 12a is a plane flush with the feature surface 12d, especially when the bottom cover 12 and the main body 11 are arranged vertically at the bottom of the vehicle 1000 and the bottom cover 12 is located at the lowest point of the battery 100, when the outer surface of the cover portion 12a is a plane, the windage resistance generated by the battery 100 can be greatly reduced, which helps to reduce the driving resistance of the vehicle 1000, reduce the driving energy consumption of the vehicle 1000, and improve the range of the battery 100.

Fig. 17 is a schematic view of the orthographic projection of the bottom cover 12 shown in Fig. 13 in the vertical direction. S1 represents the projected area of the feature surface 12d, and S2 represents the projected area of the bottom cover 12.

In some embodiments, in the vertical direction, the area S1 of the orthographic projection of the feature surface 12d and the area S2 of the orthographic projection of the bottom cover 12 satisfy: $S1/S2 \geq 0.2$. Further, it satisfies $S1/S2 \geq 0.5$.

In the embodiment shown in Fig. 17, in the orthographic projection in the vertical direction, the feature surface 12d is formed by the first feature side d1, the second feature side d2, the third feature side d3, and the fourth feature side d4 connected end to end, the area S1 of the orthographic projection of the feature surface 12d is the area of the region defined by the first feature side d1, the second feature side d2, the third feature side d3 and the fourth feature side d4. The area S2 of the orthographic projection of the bottom cover 12 is the area of the region defined by the edges of the bottom cover 12. Specifically, the ratio of the area S1 of the orthographic projection of the feature surface 12d to the area S2 of the orthogonal projection of the bottom cover 12 may be 0.3, 0.4, 0.5, 0.6, 0.7, 0.8, 0.9, or 1.

Table 2 The effect of the ratio of area S1 to area S2 on the range of the battery 100

| No. | S1/mm$^2$ | S2/mm$^2$ | S1/S2 | Test results |
|-----|-----------|-----------|-------|--------------|
| 1 | $0.3\times10^6$ | $2.6\times10^6$ | 0.115 | Poor |
| 2 | $0.52\times10^6$ | $2.6\times10^6$ | 0.2 | Good |
| 3 | $0.94\times10^6$ | $2.6\times10^6$ | 0.362 | Good |
| 4 | $1.3\times10^6$ | $2.6\times10^6$ | 0.5 | Fair |
| 5 | $1.5\times10^6$ | $2.6\times10^6$ | 0.577 | Fair |
| 6 | $1.8\times10^6$ | $2.6\times10^6$ | 0.629 | Fair |
| 7 | $2.2\times10^6$ | $2.6\times10^6$ | 0.846 | Excellent |
| 8 | $2.4\times10^6$ | $2.6\times10^6$ | 0.923 | Excellent |
| 9 | $2.6\times10^6$ | $2.6\times10^6$ | 1 | Excellent |

Table 2 shows the effect of several sets of ratio of the area S1 of the orthographic projection of the feature surface 12d to the area S2 of the orthographic projection of the bottom cover 12 on the range of the battery 100 tested according to the NEDC (New European Driving Cycle) standard. When S1/S2 is less than 0.2, the range of the battery 100 is poor. The reason is that when the feature surface 12d is small, the space utilization of the accommodating cavity 10a is low, the number of battery cells 20 accommodated in the battery 100 is small, the energy density of the battery 100 is low, resulting in a short range of the battery 100 and poor test results. When the ratio of S1/S2 reaches 0.2 and above (especially when S1/S2 reaches 0.5 and above), the larger the ratio, the better the range of the battery 100. The reason is that the larger the feature surface 12d, the higher the space utilization of the accommodating cavity 10a, the higher the energy density of the battery 100, so the range of the battery 100 is getting higher and higher, and the test results are getting better and better.

Since the feature surface 12d is a plane, the larger the area of the feature surface 12d occupying the bottom cover 12, the smaller the area of the inner surface of the bottom cover 12 that is concave or convex relative to the feature surface 12d. The inner surface that is recessed relative to the feature surface 12d will cause part of the space in the accommodating cavity 10a to be irregular, making it impossible to mount the battery cells 20, resulting in low space utilization of the accommodating cavity 10a. Part of the space of the accommodating cavity 10a formed by the inner surface protruding relative to the feature surface 12d is also irregular and cannot accommodate the battery cells 20, resulting in low space utilization of the accommodating cavity 10a. When the space utilization of the accommodating cavity 10a is low, the volume occupied by the battery cells 20 per unit space in the battery 100 is small, and the energy density of the battery 100 is low. Therefore, the larger the area of the bottom cover 12 occupied by the feature surface 12d, the greater the space utilization of the battery 100, the higher the energy density of the battery 100, and the better the range of the battery 100.

In some embodiments, referring to Fig. 17, in the vertical direction, the orthographic projection of the feature surface 12d is rectangular.

As shown in Fig. 17, the rectangular feature surface 12d is a region enclosed and defined by the first feature side d1, the second feature side d2, the third feature side d3 and the fourth feature side d4. In the battery 100, multiple battery cells 20 are mostly assembled to form a rectangular structure. The feature surface 12d is configured in a rectangular shape, which can be adapted to the overall structure of the battery cells 20 in the battery 100, and is helpful for arranging more battery cells 20 in the accommodating cavity 10a, increasing the energy density of the battery 100.

Of course, in other embodiments, in the vertical direction, the orthographic projection of the feature surface 12d may also be in other shapes, such as circle, polygon, ellipse and other special shapes.

In the embodiments of the present application, the main body 11 includes a carrying member 11a. The carrying member 11a may be a component of the main body 11 used to define the accommodating cavity 10a (for example, the carrying member 11a is the top cover or frame mentioned above), or it may be a component that is not used to define the accommodating cavity 10a but is located within the accommodating cavity 10a (for example, the carrying member 11a is the supporting plate mentioned above), which is not specifically limited. When the carrying member 11a is used to define the accommodating cavity 10a, the carrying member 11a can be a component of the main body 11 that is directly connected to the bottom cover 12 (such as the frame mentioned above), or it can be a component that is not connected to the bottom cover 12 (such as the top cover mentioned above).

In some embodiments, the carrying member 11a is provided on the top of the box 10, and the battery cells 20 are provided on the surface of the carrying member 11a.

In this case, the carrying member 11a is a component capable of carrying the weight of the battery cell 20, and may be a carrying plate, a carrying rod, a carrying block, a carrying sheet, a carrying frame, a carrying rope, etc., which is not specifically limited. Specifically, the battery cell 20 may be supported on the carrying member 11a, and in this case, the

EP 4 485 653 A1

battery cell 20 may be disposed above the carrying member 11a. Specifically, the battery cell 20 may also be hung on the carrying member 11a. In this case, the battery cell 20 may be hung on a wall surface of the carrying member 11a that is parallel to the gravity direction of the battery cell 20.

The battery cells 20 can be disposed above the carrying member 11a (for example, when the carrying member 11a is used as the supporting plate in the accommodating cavity 10a), or the battery cells 20 can be disposed below the carrying member 11a (for example, when the carrying member 11a is used as the top cover for defining the accommodating cavity 10a), and the battery cells 20 may also be disposed on the side of the carrying member 11a (for example, when the carrying member 11a is used as the frame for defining the accommodating cavity 10a).

In some embodiments, the battery cell 20 is bonded to the carrying member 11a. The bonding connection can reduce the size required in the vertical direction Z when connecting the battery cell 20 to the carrying member 11a, thereby reducing the overall thickness of the battery. Exemplarily, the carrying member 11a is used to define the accommodating cavity 10a, and the battery cells 20 are suspended from the carrying member 11a.

Specifically, the battery cell 20 and the carrying member 11a can be bonded with an adhesive such as epoxy resin glue, acrylate glue, which is not specifically limited. In this case, the battery cell 20 and the carrying member 11a are bonded, which not only facilitates connection, but also simplifies the structure of the battery 100.

In some embodiments, the wall of the carrying member 11a facing the battery cell 20 forms the top wall 101 of the accommodating cavity 10a. For example, the battery cell 20 may be disposed on the top wall 101 of the accommodating cavity 10a.

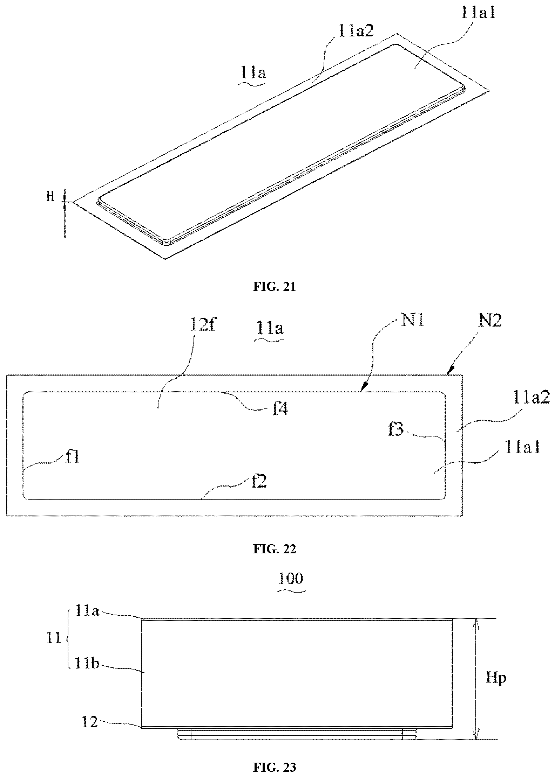

In some embodiments, as shown in Fig. 21, the battery cell 20 is disposed on the surface of the carrying member 11a, and the minimum thickness H of the carrying member 11a and the weight M1 of the battery 100 satisfy: 0.0002mm/kg < HM1 < 0.2mm/kg. In this case, the carrying member 11a can be used to bear the weight of the battery cell 20, and the battery 100 has good structural strength and will not have the problems of fire and explosion. At the same time, the energy density of the battery is higher, and the range of the battery is stronger.

The thickness of the carrying member 11a refers to the distance between the side surface of the carrying member 11a for placing the battery cells 20 and the other side surface opposite to it. When the battery cell 20 is disposed on the surface of the carrying member 11a in the vertical direction, the minimum thickness H of the carrying member 11a refers to the minimum distance between the two surfaces of the carrying member 11a in the vertical direction. When the battery cell 20 is on the surface of the carrying member 11a in the horizontal direction, the thickness of the carrying member 11a refers to the minimum distance between the two side surfaces of the carrying member 11a in the horizontal direction.

The weight of the battery 100 includes the entire weight of the main body 11, the bottom cover 12, the battery cells 20 and other components (such as wiring harness, thermal management system, power management system).

Specifically, the ratio of the minimum thickness H of the carrying member 11a to the weight M1 of the battery 100 can be designed as: 0.0003mm/kg, 0.0005mm/kg, 0.0008mm/kg, 0.001mm/kg, 0.003mm/kg, 0.005mm/kg, 0.008mm/kg, 0.01mm/kg, 0.03mm/kg, 0.05mm/kg, 0.06mm/kg, 0.08mm/kg, 0.1mm/kg, 0.12mm/kg, 0.15mm/kg, 0.16mm/kg, 0.19mm/kg, 0.02mm/kg.

Table 3 The Effect of the ratio of the minimum thickness H of the carrying member 11a to the weight M1 of the battery 100 on the safety performance of the battery 100

| No. | H(mm) | M1(Kg) | H/M(mm/Kg) | Test results |
|---|---|---|---|---|
| 1 | 0.1 | 1000 | 0.0001 | Fire, explosion |
| 2 | 0.2 | 1000 | 0.0002 | Fire, explosion |
| 3 | 0.6 | 600 | 0.001 | No fire, no explosion |
| 4 | 1.5 | 500 | 0.003 | No fire, no explosion |
| 5 | 2.5 | 500 | 0.005 | No fire, no explosion |
| 6 | 4 | 500 | 0.008 | No fire, no explosion |
| 7 | 3 | 300 | 0.01 | No fire, no explosion |
| 8 | 9 | 300 | 0.03 | No fire, no explosion |
| 9 | 10 | 200 | 0.05 | No fire, no explosion |
| 10 | 12 | 200 | 0.06 | No fire, no explosion |
| 11 | 16 | 200 | 0.08 | No fire, no explosion |
| 12 | 20 | 200 | 0.1 | No fire, no explosion |
| 13 | 30 | 200 | 0.15 | No fire, no explosion |

(continued)

| No. | H(mm) | M1(Kg) | H/M(mm/Kg) | Test results |
|-----|-------|--------|------------|--------------|
| 14 | 40 | 200 | 0.02 | No fire, no explosion |

Table 3 shows the results of the effect of several sets of ratio of the minimum thickness H of several groups of carrying members 11a to the weight M1 of the battery 100 on the safety performance of the battery 100 tested according to the standard of GB38031-2020 "Safety Requirements for Power Storage Batteries for Electric Vehicles". As can be seen from Table 3, when the H/M ratio does not exceed 0.0002mm/Kg, the battery 100 will catch fire and explode. The reason is that the structural strength of the battery 100 does not meet the requirements. When the H/M ratio exceeds 0.0002mm/Kg, the battery 100 will not catch fire or explode. However, when H/M is too large (for example, when it exceeds 0.1), due to the small weight of the battery 100 and the large thickness of the carrying plate, the proportion of the battery cells 20 of the battery 100 in the unit volume is low, the space utilization is low, the energy density of the battery 100 is too low, and the use cost of the battery 100 is high. Further, in the case of 0.0005mm/Kg $\leq$ H/M $\leq$ 0.1mm/Kg, the structural strength of the battery 100 meets the requirements and the energy density of the battery 100 is high, the range of the battery 100 is stronger and is free of safety accidents such as fire or explosion.

In some embodiments, the minimum thickness H of the carrying member 11a satisfies: 0.2mm < H < 20mm.

Specifically, the minimum thickness H of the carrying member 11a may be: 0.3mm, 0.5mm, 0.8mm, 0.9mm, 1.0mm, 1.2mm, 1.5mm, 2mm, 2.5mm, 3mm, 3.5mm, 4mm, 4.5mm, 5mm, 5.5mm, 6mm, 6.5mm, 7mm, 7.5mm, 8mm, 9mm, 10mm, 12mm, 15mm, 16mm, 18mm, 19mm. Furthermore, in the case of 0.5mm $\leq$ H $\leq$ 10mm, the carrying member 11a has better structural strength, the overall strength of the battery 100 is better, and the battery 100 is less likely to catch fire and explode. At the same time, the carrying member 11a occupies a small volume of the whole battery 100, the battery 100 has high space utilization, and the battery 100 has a high energy density.

In some embodiments, referring to Figs. 11, 16 and 27, the battery cell 20 is suspended from the carrying member 11a. Exemplarily, the carrying member 11a is used to define the accommodating cavity 10a, and the battery cells 20 are suspended from the carrying member 11a.

The battery cells 20 being suspended from the carrying member 11a means that the battery cells 20 are arranged below the carrying member 11a in the vertical direction, and the carrying member 11a bears the weight of the battery cells 20. The battery cells 20 are suspended from the carrying member 11a in the following ways: the battery cells 20 are directly bonded to the lower surface of the carrying member 11a; the battery cells 20 are connected to the carrying member 11a through fasteners 13 and are located below the carrying member 11a; the battery cells 20 are hung on the carrying member 11a through hooks and the like and are located below the carrying member 11a.

In this case, the battery cells 20 are suspended below the carrying member 11a, and the bottom cover 12 is located at the bottom of the box 10. When repairing the interior of the battery 100, the battery cells 20 can be exposed by removing the bottom cover 12 without removing the carrying member 11a, so that the maintenance of the battery 100 is more convenient. Also, when repairing the battery 100, the battery cell 20 can be removed and mounted on the carrying member 11a from below. Especially when the carrying member 11a is stressed as at least a part of the chassis of the vehicle 1000, it only needs to remove and mount the battery cells 20 from below the carrying member 11a without removing the carrying member 11a, which facilitates the maintenance of the battery 100.

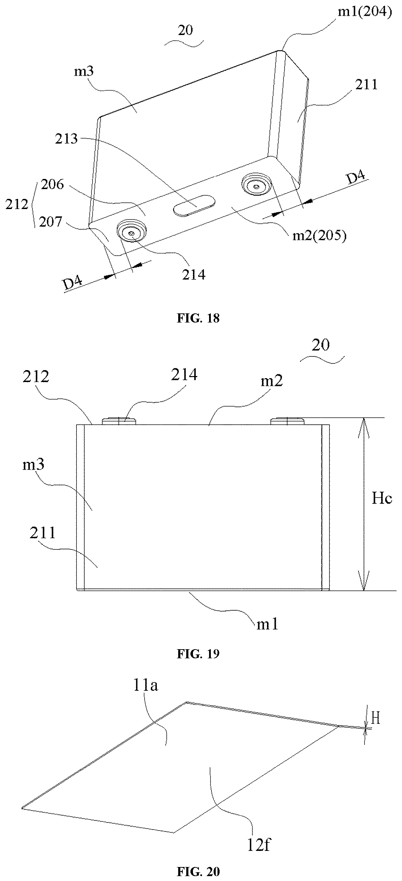

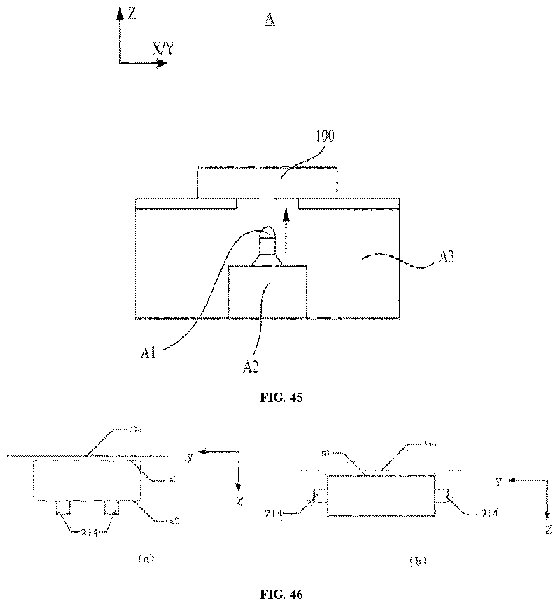

In some embodiments, referring to Figs. 18 and 46 together, the outer surface of the battery cell 20 facing the carrying member 11a is the first outer surface ml (which can also be understood as the top wall 204 of the battery cell 20 described in the present application), the electrode terminal 214 is arranged on the outer surface of the battery cell 20 except the first outer surface ml.

As described above, the electrode terminal 214 is used for being electrically connected to the electrode assembly 23 inside the battery cell 20, and is a component for outputting or inputting electric energy of the battery cell 20. The electrode terminals 214 at least partially extend outside the battery cell 20 to be electrically connected to the outside. The series connection and parallel connection between the battery cells 20 are realized through the series connection and parallel connection between their respective electrode terminals 214. The electrode terminal 214 has electrical conductivity to achieve electrical transmission, and may be an aluminum electrode, a copper electrode, etc.

The electrode terminal 214 is arranged on the outer surface of the battery cell 20 except for the first outer surface ml. The first outer surface ml faces the carrying member 11a and is usually a smooth surface without protruding or recessed structures such as electrode terminals 214 and liquid injection holes. When the battery cell 20 is suspended from the carrying member 11a, the first outer surface ml is the upward outer surface of the battery cell 20. Specifically, in an embodiment, the battery cell 20 includes the aforementioned case 211 and the end cover 212. The case 211 and the end cover 212 form the internal environment of the battery cell 20 for accommodating the electrode assembly 23. The end cover 212 is located at one end of the case 211, and the electrode terminal 214 is arranged on the end cover 212. In this case, any outer surface of the case 211 can be used as the first outer surface ml of the battery cell 20.

The electrode terminal 214 includes a positive electrode terminal and a negative electrode terminal, wherein the positive electrode terminal is configured for electrical connection with the positive electrode plate in the electrode assembly 23 and the negative electrode terminal is used for electrical connection with the negative electrode plate in the electrode assembly 23. It should be noted that the positive electrode terminal and the negative electrode terminal can be arranged on the same outer surface of the battery cell 20 (such as a square battery cell 20), or they can be respectively arranged on two different outer surfaces of the battery cell 20 (such as a cylindrical battery cell 20). When the positive electrode terminal and the negative electrode terminal are arranged on two different outer surfaces of the battery cell 20, the first outer surface m1 is a surface of the battery cell 20 that is different from the two outer surfaces.

In addition to the battery cells 20, the battery 100 is usually also provided with components such as a sampling wire harness and a high-voltage wire harness that electrically connect the battery cells 20, and a protective structure to protect the battery cells 20. In this case, the electrode terminals 214 are arranged at the surfaces of the battery cell 20 other than the first outer surface ml . When arranging components such as sampling wire harnesses, high-voltage wire harnesses, and protective structures on the electrode terminals 214, these components can be arranged through the spaces between the battery cell 20 and other structures of the main body 11 except the carrying member 11a (such as through the space between the battery cell and the bottom cover and/or the space between the battery cell and the inner side surface of the main body) without limitation from the carrying member 11a, which is more convenient for the arrangement of the components. Also, since the first outer surface ml is a smooth surface, the first outer surface ml can be attached to the carrying member 11a. In this way, the battery cell 20 and the carrying member 11a can be mounted closely without reserving a space between the battery cell 20 and the carrying member 11a, which helps to improve the space utilization of the battery 100.

In some embodiments, also referring to Fig. 18, the battery cell 20 has a second outer surface m2 (which can also be understood as the bottom wall 205 of the battery cell 20 described in the present application) disposed opposite to the first outer surface ml, and electrode terminals 214 are arranged on the second outer surface m2.

The second outer surface m2 is the outer surface of the battery cell 20 that is opposite to the first outer surface ml. When the battery cell 20 is suspended from the carrying member 11a, the second outer surface m2 is opposite to the bottom cover 12. As mentioned above, the battery cells 20 and the bottom cover 12 may be spaced apart. In this case, there is a buffer space between the second outer surface m2 and the bottom cover 12, and the portion of the electrode terminal 214 extending beyond the battery cell 20 is located in the buffer space. In this way, the wire harness and connecting sheet connected to the electrode terminal 214 can be arranged within the buffer space. Also, the buffer space also has the aforementioned ability to prevent the external force hitting the bottom cover 12 from acting on the battery cells 20 and damaging the battery cells 20. Therefore, the buffer space can not only interrupt the effect of external forces, but also enable the layout of wiring harnesses, etc. In addition, the space utilization of the buffer space and the battery 100 is also improved.

Of course, in other embodiments, referring to Fig. 46, the electrode terminal 214 may also be arranged on the third outer surface m3 intersecting with the first outer surface m1 in the battery cell 20.

In some embodiments, referring to Figs. 11 and 16, the carrying member 11a is located on the top of the box 10 and is used to define the accommodating cavity 10a. Since the bottom cover 12 is located at the bottom of the box 10, the carrying member 11a is arranged opposite to the bottom cover 12. The carrying member 11a serves as the structure on the top of the box 10, and the box 10 can be mounted on the mounting body via the carrying member 11a. In this case, the battery cells 20 arranged on the carrying member 11a can strengthen the strength of the carrying member 11a, thereby increasing the stiffness of the top of the battery 100. This can extend the application of the battery 100 to scenarios where the top is stressed, such as being used a part of the chassis of the battery 1000.

In some embodiments, as shown in Figs. 20 and 22, the carrying member 11a has a carrying surface 12f facing the accommodating cavity 10a, and the carrying surface 12f is configured as a plane.

The carrying surface 12f is the inner surface of the carrying member 11a facing the accommodating cavity 10a, and is used to define the accommodating cavity 10a. The carrying surface 12f being configured as a plane means that in the arrangement direction of the main body 11 and the bottom cover 12, the carrying surface 12f is a plane perpendicular to the arrangement direction. In practice, when the main body 11 and the bottom cover 12 are arranged in the vertical direction, the carrying member 11a and the bottom cover 12 are arranged oppositely in the vertical direction, and the carrying surface 12f of the carrying member 11a is a plane parallel to the horizontal plane. When the main body 11 and the bottom cover 12 are arranged in the horizontal direction, the carrying member 11a and the bottom cover 12 are arranged oppositely in the horizontal direction, and the carrying surface 12f of the carrying member 11a is a plane parallel to the vertical plane.

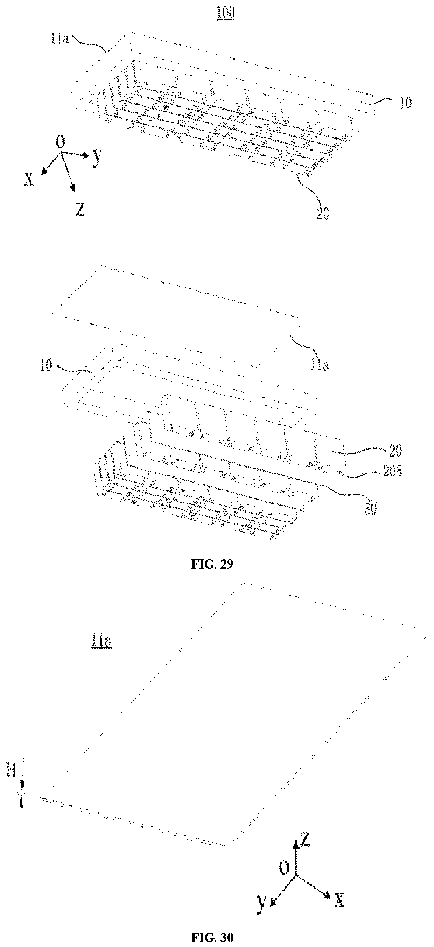

As shown in Figs. 20 and 30, the carrying member 11a may be the entire inner surface of the carrying member 11a facing the accommodating cavity 10a. In this case, the carrying member 11a may be in the shape of a flat plate. As shown in Figs. 21 and 22, the carrying member 11a can also be a part of the inner surface of the carrying member 11a facing the accommodating cavity 10a. In this case, the carrying surface 12f is only the portion of the inner surface of the carrying member 11a used to define the accommodating cavity 10a.

When the carrying surface 12f is a plane, a relatively equal distance (this distance may be zero) can be maintained between the carrying surface 12f and each battery cell 20 accommodated in the accommodating cavity 10a. When the distance between the carrying surface 12f and the battery cells 20 is kept relatively equal, the accommodating cavity 10a can accommodate more battery cells 20, that is to say, the space utilization of the accommodating cavity 10a is higher, the battery 100 can have higher energy density, and the range of the battery 100 is higher.

In some embodiments, the battery cell 20 is disposed on the carrying surface 12f. The battery cells 20 are mounted on the carrying member 11a via the carrying surface 12f. In this case, when assembling the battery, the carrying member can be mounted first and then the battery cells can be hoisted from bottom to top. Especially when the carrying member is at least a part of the vehicle chassis, the carrying member as a force-bearing structure can be mounted on the mounting body first, and then the battery cells are hoisted from bottom to top, which makes battery assembly more convenient. The battery cells suspended from the carrying member can strengthen the strength of the carrying member, thereby increasing the stiffness of the top of the battery. This can extend the application of the battery to scenarios where the top is stressed, such as being used a part of the chassis of the battery.

The battery cell 20 can be bonded to the carrying surface 12f, or can be fixedly connected to the carrying surface 12f via fasteners 13 or the like, or can be welded or snap fit to the carrying surface 12f, which is not specifically limited.

Since the carrying surface 12f is a plane, the carrying surface 12f can have a larger contact area with the battery cell 20 provided thereon, and the mounting of the battery cell 20 is more stable. Also, when the carrying surface 12f is planar, compared with an uneven surface such as a curved surface, the carrying surface 12f can be connected to a larger number of battery cells 20, which can increase the number of battery cells 20 mounted in the battery 100, thereby increasing the space utilization and energy density of the battery 100.

It can be understood that when the battery cell 20 is suspended from the carrying member 11a, the battery cell 20 is suspended from the carrying surface 12f.

In some embodiments, in the vertical direction, the area N1 of the orthographic projection of the carrying surface 12f and the area N2 of the orthographic projection of the carrying member 11a satisfy: $N1/N2 \geq 0.2$. Further, it satisfies $N1/N2 \geq 0.5$.

In the embodiment shown in Fig 22, in the orthographic projection in the vertical direction, the carrying surface 12f is formed by the first carrying edge f1, the second carrying edge f2, the third carrying edge f3 and the fourth carrying edge f4 connected end to end, and the area N1 of the orthographic projection of the carrying surface 12f is the area of the region defined by the first carrying edge f1, the second carrying edge f2, the third carrying edge f3 and the fourth carrying edge f4. The area N2 of the orthographic projection of the carrying member 11a is the area of the region defined by the edge of the carrying member 11a.

Specifically, the ratio of the area N1 of the orthographic projection of the carrying surface 12f to the area N2 of the orthogonal projection of the carrying member 11a may be 0.2, 0.3, 0.4, 0.5, 0.6, 0.7, 0.8, 0.9, or 1.

Table 4 The effect of the ratio of area N1 to area N2 on the range of the battery 100

| No. | N1(mm$^2$) | N2(mm$^2$) | N1/N2 | Test results |
|---|---|---|---|---|
| 1 | $1.8 \times 10^5$ | $2.16 \times 10^6$ | 0.083 | Poor |
| 2 | $2.16 \times 10^5$ | $2.16 \times 10^6$ | 0.1 | Poor |
| 3 | $4.32 \times 10^5$ | $2.16 \times 10^6$ | 0.2 | Good |
| 4 | $8 \times 10^5$ | $2.16 \times 10^6$ | 0.37 | Good |
| 5 | $1.2 \times 10^6$ | $2.16 \times 10^6$ | 0.56 | Fair |
| 6 | $1.7 \times 10^6$ | $2.16 \times 10^6$ | 0.787 | Excellent |
| 7 | $2.16 \times 10^6$ | $2.16 \times 10^6$ | 1 | Optimal |

Table 4 shows the effect of several sets of ratio of the area N1 of the orthographic projection of the carrying surface 12f to the area N2 of the orthographic projection of the carrying member 11a on the range of the battery 100 tested according to the NEDC (New European Driving Cycle) standard. When N1/N2 is less than 0.2, the range of the battery 100 is poor. The reason is that when the carrying surface 12f is small, the number of battery cells 20 carried on the carrying member 11a is small, the space utilization of the accommodating cavity 10a is low, the energy density of the battery 100 is low, resulting in a short range of the battery 100 and poor test results. When the ratio of N1/N2 reaches 0.2 and above (especially when N1/N2 reaches 0.5 and above), the larger the ratio, the better the range of the battery 100. The reason is that the larger the carrying surface 12f, the greater the number of battery cells 20 carried on the carrying member 11a, the higher the space utilization of the accommodating cavity 10a, the higher the energy density of the battery 100, so the range of the battery 100 is getting higher and higher, and the test structure is getting better and better. When the carrying member 11a has a flat plate structure as shown in Fig. 20, the orthographic projection area N1 of the carrying surface 12f is equal to the orthographic projection area N2 of the carrying member 11a, and the battery 100 has the best range effect.

In some embodiments, in the vertical direction, the orthographic projection of the carrying surface 12f is rectangular.

As shown in Fig. 22, the rectangular carrying surface 12f is an area enclosed and defined by the first carrying side f1, the second carrying side f2, the third carrying side f3 and the fourth carrying side f4. In the battery 100, multiple battery cells 20 are mostly assembled to form a rectangular structure. The carrying surface 12f is configured in a rectangular shape, which can be adapted to the overall structure formed in the battery, and is helpful for arranging more battery cells 20 in the accommodating cavity 10a, increasing the energy density of the battery 100.

Of course, in other embodiments, in the vertical direction, the orthographic projection of the carrying surface 12f may also be in other shapes, such as circle, polygon, ellipse and other special shapes.

In some embodiments, referring to Fig. 21. The carrying portion 11a has a carrying portion Ha1 and a connecting portion 111a2. The connecting portion 11a2 encloses and is connected to the edge of the carrying portion 11a1. The carrying portion 11a1 is used to define the accommodating cavity 10a. The connecting portion 11a2 is connected to parts of the box 10 except the carrying member 11a.

The carrying portion 11a1 is used to define the accommodating cavity 10a, and the connection part 11a2 is used to connect with the part of the box 10 except the carrying member 11a, but does not participate in the definition of the accommodating cavity 10a. The carrying portion 11a1 may be a plate-shaped or block-shaped member, and may be a flat plate-shaped or a bent plate-shaped member, which is not specifically limited. As can be seen from Fig. 21, the connecting portion 11a2 enclosing the edge of the carrying portion 11a1 means that the connecting portion 11a2 is a structure continuously connected end to end along the edge of the carrying portion 11a1. It can be understood that in the projection in the vertical direction, the connecting portion 11 a2 has a certain width, so that it can have an appropriate contact area with other structures of the box 10 except the carrying member 11a, which more conveniently achieves the mounting and connection of the connecting portion 11a2 with other structures of the box 10 except the carrying member 11a.

The carrying portion 11a1 and the connecting portion 11a2 may be integrally molded. When the carrying member 11a is made of metal (such as aluminum, iron, stainless steel), the carrying portion 11a1 and the connecting portion 11a2 can be integrally molded by die-casting, forging, hot pressing, cold pressing, etc. When the carrying portion 11a is made of a plastic material (such as PP, PE, ABS), the carrying portion 11a1 and the connecting portion 11a2 can be integrally molded by injection molding. The carrying portion 11a1 and the connecting portion 11a2 may also be molded separately and then connected together. When the carrying portion 11a1 and the connecting portion 11a2 are made of metal, the carrying portion 11a1 and the connecting portion 11a2 can be welded or bonded together. When the carrying portion 11a1 and the connecting portion 11a2 are made of a plastic material, the cover portion 12a and the mounting portion 12b can be bonded together. Of course, the carrying portion 11a1 and the connecting portion 11a2 can also be fixedly connected together by snap fit, riveting or other methods.

Specifically, the connecting portion 11a2 is connected to the parts of the main body 11 except the carrying member 11a by either integral molding or fixed connection. When the connecting portion 11a2 is integrally molded with the parts of the main body 11 except the carrying member 11a, that is to say, the main body 11 is an integrally molded workpiece, which can be integrally molded by die-casting, forging, hot pressing, cold pressing, injection molding, etc. When the connecting portion 11a2 is fixedly connected to the parts of the main body 11 except the carrying member 11a, they can be fixedly connected through fasteners 13, snap-fit connection with an engagement structure, etc., which is not specifically limited.

The carrying portion 11a1 and the connecting portion 11a2 may be located on the same plane. Specifically and optionally, the two surfaces of the carrying portion 11a1 and the connecting portion 11a2 facing the bottom cover 12 are in the same plane, and/or the two surfaces of the carrying portion 11a1 and the connecting portion 11a2 away from the bottom cover 12 are in the same plane. When the two surfaces of the carrying portion 11a1 and the connecting portion 11a2 facing the bottom cover 12 and the two surfaces away from the bottom cover 12 are respectively on the same plane, the carrying portion 11a1 and the connecting portion 11a2 can form a flat plate shaped carrying member 11a (shown in Fig. 20).

The carrying portion 11a1 and the connecting portion 11a2 may also not be located on the same plane. Specifically, the carrying portion 11a1 protrudes away from the accommodating cavity 10a relative to the connecting portion 11a2, or the carrying portion 11a1 is recessed toward the accommodating cavity 10a relative to the connecting portion 11a2, which is not specifically limited. The thicknesses of the carrying portion 11a1 and the connecting portion 11a2 may be equal or unequal, which is not specifically limited.

In this case, the carrying portion 11a defines the accommodating cavity 10a through the carrying portion 11a1, and is connected to the structures of the main body 11 except the carrying portion 11a through the connecting portion 11a2, which is well structured.

It can be understood that when the carrying member 11a includes the aforementioned carrying portion 11a1 and the aforementioned connecting portion 111a2, the battery cell 20 is provided on the carrying portion 11a1.

It can be understood that when the carrying member 11a includes the aforementioned carrying portion 11a1 and the aforementioned connecting portion 11a2, the inner surface of the carrying portion 11a1 facing the accommodating cavity 10a is configured to form the carrying surface 12f.

In some embodiments, the carrying portion 11a1 protrudes in a direction away from the accommodating cavity 10a relative to the connecting portion 11a2.

As can be seen from the above, the carrying portion 11a1 defines the accommodating cavity 10a. Protrusion of the carrying portion 11a1 away from the accommodating cavity 10a means that the carrying portion 11a1 and the connecting portion 11a2 are staggered in the vertical direction. The carrying portion 11a1 is located at the highest point of the carrying member 11a. In this case, a space that is a part of the accommodating cavity 10a can be formed between the carrying portion 11a1 and the connecting portion 11a2, and this space can accommodate the battery cells 20.

When the carrying portion 11a1 protrudes away from the accommodating cavity 10a relative to the connecting portion 11a2, the carrying portion 11a1 can serve as a reinforcing structure of the carrying member 11a to improve the bending resistance of the carrying member 11a.

In some embodiments, the thickness of the carrying portion 11a1 and the connecting portion 11a2 are equal.

When the thicknesses of the carrying portion 11a1 and the connecting portion 11a2 are equal, the carrying portion 11a1 and the connecting portion 11a2 can be integrally molded by die casting, cold pressing, or hot pressing from the same plate, making the molding of the carrying portion 11a more convenient. At the same time, the thicknesses of the carrying portion 11a1 and the connecting portion 11a2 are equal, and the stress is equalized everywhere during molding, which can improve the molding rate of the carrying portion 11a.

In some embodiments, the outer surface of the carrying portion 11a1 away from the accommodating cavity 10a is parallel to the carrying surface 12f.

The outer surface of the carrying portion 11a1 away from the accommodating cavity 10a is arranged opposite to the carrying surface 12f in the vertical direction. The outer surface of the carrying portion 11a1 can be in contact with the atmospheric environment. When the battery 100 is mounted on the vehicle 1000, the carrying portion 11a1 with a planar outer surface can reduce the driving resistance of the vehicle 1000, reduce the driving energy consumption of the vehicle 1000, and improve the range of the battery 100.

In some embodiments, referring to Figs. 10 and 11, the main body 11 includes a frame 11b and a carrying member 11a. The frame 11b encloses to from an enclosed space 10q with two run-through ends in the vertical direction. The bottom cover 12 and the carrying member 11a respectively cover the two opposite ends of the enclosed space 10q in the vertical direction. The bottom cover 12, the frame 11b and the carrying member 11a together enclose to form the accommodating cavity 10a.

The frame 11b encloses itself to form an enclosed space 10q with two run-through ends in the vertical direction. The carrying member 11a covers the top of the enclosed space 10q, and the bottom cover 12 covers the bottom of the enclosed space 10q. That is, the carrying member 11a is located at the top of the box 10 and is used to define the accommodating cavity 10a. The bottom cover 12 is located at the bottom of the box 10 and is used to define the accommodating cavity 10a. The frame 11b, the carrying member 11a and the bottom cover 12 enclose to form the accommodating cavity 10a. The frame 11b, the carrying member 11a and the bottom cover 12 can be made of the same material, such as aluminum alloy, copper alloy, steel, plastic. Of course, the frame 11b, the carrying member 11a and the bottom cover 12 can also be made of different materials, which is not specifically limited. In the orthographic projection in the vertical direction, the frame 11b can be in the shape of a rectangle, a circle, a polygon, etc., which is not specifically limited.

The frame 11b is parallel to the vertical direction, the frame 11b is arranged around the battery group 20, and the frame 11b connects the carrying member 11a and the bottom cover 12. When the carrying portion 11a includes the aforementioned carrying portion 11a1 and the connecting portion 11a2, the carrying portion 11a is connected to the frame 11b through the connecting portion 11a2. When the bottom cover 12 includes the aforementioned cover portion 12a and the aforementioned mounting portion 12b, the bottom cover 12 is connected to the frame 11b via the mounting portion 12b.

In this case, the accommodating cavity 10a of the battery 100 can be formed by taking the frame 11b as the basis and connecting the carrying member 11a and the bottom cover 12 to both ends of the frame 11b in the vertical direction. The structure of the box 10 is simple.

In some embodiments, the carrying member 11a and the frame 11b are fixedly connected (such as detachably connected) or integrally molded. The carrying member 11a and the frame 11b can be integrally molded by injection molding, die casting, forging, cold pressing, hot pressing, etc. The carrying member 11a and the frame 11b can be fixedly connected through fasteners 13, snap fit with engagement structures, welding, bonding, hot-melting, etc.

When the carrying member 11a and the frame 11b are integrally molded, and the main body 11 is integrally molded, the main body 11 only needs to be connected to the bottom cover 12 to assemble the box 10, and the box 10 is easy to assemble. When the carrying member 11a and the frame 11b are fixedly connected, the molding process of the carrying member 11a and the frame 11b is easier, which can reduce the process cost of the box 10.

It can be understood that when the carrying member 11a has the carrying portion 11a1 and the connecting portion 11a2, the connecting portion 11a2 is connected to the frame 11b. When the bottom cover 12 has the cover portion 12a and the mounting portion 12b, the mounting portion 12b is connected to the frame 11b.

Referring to Figs. 18 and 23, in some embodiments, in the vertical direction, the height Hc of the battery cell 20 and the height Hp of the battery 100 satisfy: $0.02 \leq Hc/Hp \leq 0.98$.

The height Hc of the battery cell 20 refers to the maximum length of the battery cell 20 in the vertical direction when the main body 11 and the bottom cover 12 are arranged in the vertical direction. Taking the battery cell 20 shown in Figs. 18 and 19 as an example, when the first outer surface m1 of the battery cell 20 is disposed away from the outer surface where the electrode terminal 214 is located, the maximum length of the battery cell 20 refers to the distance between the electrode terminal 214 and the first outer surface ml. Of course, when the first outer surface ml of the battery cell 20 is adjacent to the outer surface where the electrode terminal 214 is located, the height Hc of the battery cell 20 refers to the distance between the first outer surface ml of the battery cell 20 and the outer surface arranged opposite to it.

The height Hp of the battery 100 refers to the maximum length of the battery 100 in the vertical direction z when the main body 11 and the bottom cover 12 are arranged in the vertical direction z.

Specifically, the ratio of the height Hc of the battery cell 20 to the height Hp of the battery 100 may be 0.02, 0.03, 0.05, 0.08, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 0.98.

Table 5 The effect of the ratio of the height Hc of the battery cell 20 to the height Hp of the battery 100 on the safety of the battery 100

| No. | Hc/mm | Hp/mm | Hc/Hp | Test result |
|---|---|---|---|---|
| 1 | 248 | 252 | 0.984 | Fire, explosion |
| 2 | 138 | 150 | 0.92 | No fire, no explosion |
| 3 | 115 | 135 | 0.85 | No fire, no explosion |
| 4 | 90 | 120 | 0.75 | No fire, no explosion |
| 5 | 78 | 120 | 0.65 | No fire, no explosion |
| 6 | 110 | 200 | 0.55 | No fire, no explosion |
| 7 | 60 | 200 | 0.3 | No fire, no explosion |
| 8 | 60 | 600 | 0.1 | No fire, no explosion |
| 9 | 50 | 1000 | 0.05 | No fire, no explosion |

Table 5 shows the effect of several sets of ratio of the height Hc of battery cell 20 to the height Hp of battery 100 on the safety of battery 100 tested under the standard GB38031-2020 "Safety Requirements for Power Storage Batteries for Electric Vehicles". It can be seen from Table 5 that when Hc/Hp exceeds 0.98, the structure of the box 10 occupies a very small height of the battery 100, and the strength of the box 10 cannot meet the requirements, and safety accidents such as fire and explosion may occur. In the case of $0.02 \leq Hc/Hp$, the structural strength of the box 10 can meet the requirements, and fire and explosion will not occur. When Hc/Hp is less than 0.02, although the structural strength of the box 10 can meet the requirements, the space utilization of the battery 100 is low and the energy density is too low.

Furthermore, in the case of $0.5 \leq Hc/Hp < 0.94$, not only does the strength of the battery 100 meet the requirements and there will be no safety accidents such as fire and explosion, but the space utilization of the battery 100 is high and the energy density of the battery 100 is high.

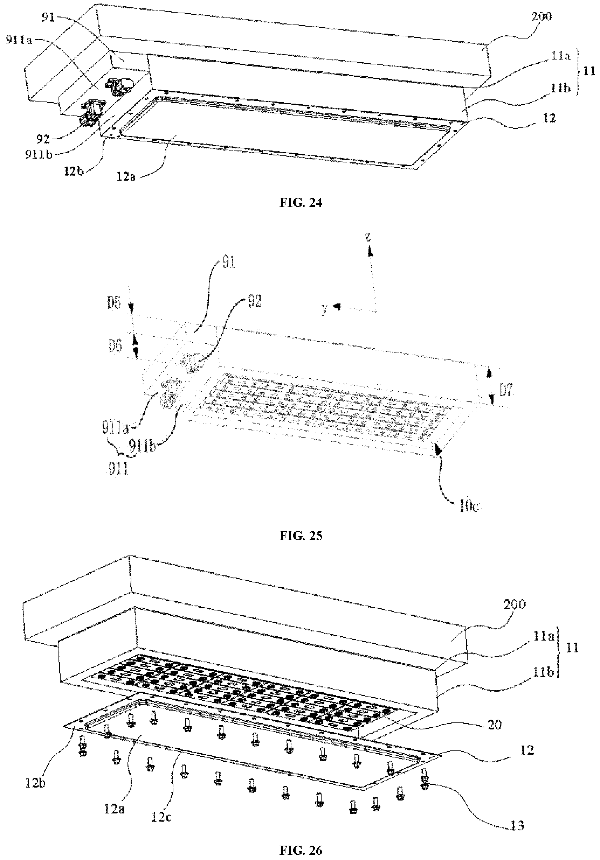

In some embodiments, referring to Figs. 24 to 28, electrical apparatuses include a vehicle 1000, and the battery 100 is disposed at the bottom of the vehicle body 200; the vehicle body 200 may include a passenger compartment floor, and the battery 100 is disposed on the lower side of the passenger compartment. For an introduction to the vehicle 1000, refer to the above description and it will not be described again here.

The vehicle body 200 of the vehicle 1000 refers to the part of the vehicle 1000 used for carrying people and loading cargo, including the driver compartment, passenger compartment, engine compartment, luggage compartment, etc. The vehicle body 200 generally includes a vehicle body shell and doors, windows, decorative parts, seats, air conditioning devices, etc. located on the vehicle body shell. The vehicle body shell usually refers to the structure composed of the longitudinal beams, cross beams, chassis, pillars and other main carrying members of the vehicle 1000, as well as the sheet metal parts connected to them. In the embodiments of the present application, the battery 100 being disposed at the bottom of the vehicle body 200 mainly means that the battery 100 is disposed at the bottom of the vehicle body shell. In this case, arranging the battery 100 at the bottom of the vehicle body 200 does not occupy the space inside the vehicle body 200 and helps reduce the volume and weight of the vehicle body 200.

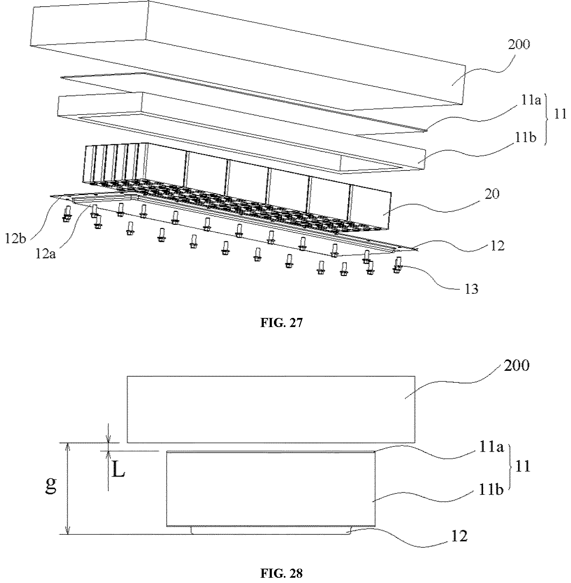

In some embodiments, referring to Fig. 28, the main body 11 includes the carrying member 11a located on the top of the box 10. The carrying member 11a is used to define the accommodating cavity 10a. In the vertical direction, the distance L between the carrying member 11a and the vehicle body 200 satisfies: $L \geq 0$.

Since the battery 100 is located at the bottom of the vehicle body 200 and the carrying member 11a is located at the top of the box 10, the carrying member 11a of the battery 100 is closest to the vehicle body 200. The distance L between the carrying member 11a and the vehicle body 200 refers to the distance between the highest point of the carrying member 11a and the vehicle body 200 located above it in the vertical direction. When the carrying portion 11a includes the aforementioned carrying portion 11a1 and the aforementioned connecting portion 11a2, the distance L between the carrying portion 11a and the vehicle body 200 is the distance between the outer surface of the carrying portion 11a1 away from the accommodating cavity 10a and the vehicle body 200 located above it.

When the distance L between the carrying member 11a and the vehicle body 200 is equal to 0, the carrying member 11a is in contact with the vehicle body 200. When the distance L between the carrying member 11a and the vehicle body 200 is greater than 0, the carrying member 11a is spaced apart from the vehicle body 200 and is not in contact with the vehicle body. It can be understood that in this case, the bottom cover 12 is at the bottom of the carrying member 11a, and the distance g between the bottom cover 12 and the vehicle body 200 is greater than 0.

When the battery 100 is mounted under the vehicle body 200, the range within the distance from the bottom of the battery 100 to the vehicle body 200 is the mounting space occupied by the battery 100. When the carrying member 11a is spaced apart from the vehicle body 200, there will be a certain amount of waste space between the battery 100 and the vehicle body 200. If the carrying member 11a is in contact with the vehicle body 200, the waste space existing between the battery 100 and the vehicle body 200 can be allocated to the space range of the battery 100. As such, with the same occupation space under the body 200, the battery 100 being in contact with the vehicle body 200 can increase the volume of the battery 100, thereby increasing the power and energy density of the battery 100.

In this case, when the distance L between the carrying member 11a and the vehicle body 200 is equal to zero, the battery 100 can have larger power and higher energy density, and the vehicle 1000 has a stronger range. When the distance L between the carrying member 11a and the vehicle body 200 is greater than zero, the mounting of the carrying member 11a is more flexible.

In some embodiments, referring to Figs. 24-28, the main body 11 includes the carrying member 11a located on the top of the box 10. The carrying member 11a is used to define the accommodating cavity 10a. The battery 100 is mounted on the vehicle body 200 via the carrying member 11a.

Since the battery 100 is located at the bottom of the vehicle body 200 and the carrying member 11a is located at the top of the box 10, the carrying member 11a of the battery 100 is closest to the vehicle body 200. The battery 100 is mounted on the vehicle body 200 through the carrying member 11a. Specifically, the carrying member 11a may be fixed to the vehicle body 200 through fasteners 13 (such as screws, bolts, rivets), welding or other methods.

When the battery cell 20 is disposed on the carrying member 11a, the structure formed by the battery cell 20 and the carrying member 11a is connected to the vehicle body 200, which can improve the strength of the top of the battery 100 and in turn improve the mounting strength of the battery 100.

In some embodiments, the carrying member 11a is configured to form at least a part of the chassis of the vehicle body 200.

As a part of the vehicle body 200, the chassis is a combination of four parts: the transmission system, the driving system, the steering system and the braking system. It is used to support and mount the engine of the vehicle 1000 and its components and assemblies, forming the overall profile of the vehicle 1000 and carrying engine power to ensure normal driving.

The chassis is located at the bottom of the vehicle body 200, and the carrying member 11a directly serves as at least a part of the chassis. That is, the carrying member 11a is used to form at least a part of the chassis of the vehicle body 200. In this way, the carrying member 11a is integrated with the chassis of the vehicle body 200, so that the space occupied by the gap between the traditional chassis and the battery 100 can be allocated into the battery 100 to increase the space of the battery 100, which helps to increase the energy of the battery 100, thereby improving the range of the vehicle 1000.

According to some embodiments of the present application, referring to Figs. 24-28, the electrical apparatus includes the vehicle 1000, and the battery 100 is provided at the bottom of the vehicle body 200 of the vehicle 1000. The battery 100 includes a box 10 and a battery cell 20. The box 10 includes a carrying member 11a at the top. The battery cell 20 is located in the box 10 and suspended from the carrying member 11a, the electrode terminals 214 of the battery cell 20 are located on the outer surface of the battery cell 20 away from the carrying member 11a, and the carrying member 11a forms at least a part of the chassis of the vehicle 1000.

In this case, the battery cell 20 is suspended from the carrying member 11a, which can increase the strength of the carrying member 11a and in turn increase the strength of the top of the battery cell 20, so that the carrying member 11a can meet certain force requirements when used as the chassis. At the same time, the electrode terminals 214 of the battery cell 20 are away from the carrying member 11a, and the battery cell 20 can be directly mounted on the carrying member 11a, so that the gap between the battery cell 20 and the carrying member 11a is eliminated, and the saved gap is used for increasing the mounting space of the battery cell 20, which can increase the energy of the battery 100 and in turn improve the range of the vehicle 1000.

In some embodiments, there are multiple battery cells 20, the multiple battery cells 20 are arranged in the second direction y, and the second direction is perpendicular to the vertical direction Z. the carrying member 11a is connected to the top wall 204 of the multiple battery cells 20, and the top wall 204 of the battery cell 20 is parallel to the second direction y, the vertical direction Z is perpendicular to the top wall 204 of the battery cell 20, and the battery cell 20 is located below the carrying member 11a. As such, the carrying member 11a and the battery cells 20 are in direct surface contact, the carrying member 11a is directly connected to the top wall 201 of the battery cells 20, and there is no need to leave any space in the middle, which can improve the space utilization of the battery 100, thereby increasing the energy density of the battery 100. At the same time, the battery cell 20 and the carrying member 11a are connected into a whole, which can improve the structural strength of the battery 100.

It can be seen that the top wall 204 of the battery cell 20 is connected to the bottom surface of the carrying member 11a, the bottom surface of the carrying member 11a can be the surface close to the battery cell 20 in the vertical direction, and the top wall 204 of the battery cell 20 can be the surface of the battery cell 20 close to the carrying member 11a in the vertical direction.

The relationship between the size N of the carrying member 11a in the vertical direction Z and the weight M2 of the battery cell 20 satisfies: $0.04mm/kg \leq N/M2 \leq 100mm/kg$, which can not only make the size N of the carrying member 11a in the vertical direction Z within a reasonable range to avoid wasting the internal space of the battery due to excessive N, but also make the connection between the battery cell 20 and the carrying member 11a stronger, enhance the structural strength of the battery, and improve the performance of the battery.

The size N of the carrying member 11a in the vertical direction may be the thickness of the carrying member 11a in the vertical direction. The carrying member 11a may be the upper cover of the box of the battery, or may be a part of the electrical apparatus, such as the chassis of a vehicle. When the carrying member 11a is the chassis of the vehicle, the battery cell 20 is connected to the carrying member 11a, that is, the battery cell 20 is connected to the chassis surface of the vehicle. The battery cells 20 are directly connected to the chassis of the vehicle, so that there is no need to provide the upper cover of the box of the battery, which saves the space occupied by the upper cover of the box of the battery, improves the space utilization of the battery, thereby improving the energy density of the battery.

In the case of N/M2 > 100mm/kg, the size N of the carrying member 11a in the vertical direction is relatively large. Although the cell has greater structural strength, the carrying member 11a also occupies a larger space, resulting in a reduction in the internal space utilization of the battery, which in turn leads to a reduction in the energy density of the battery.

In the case of N/M2 < 0.04mm/kg, the carrying member 11a cannot meet the structural strength requirements of the battery. During the use of the battery, the carrying member 11a may deform or even break in the direction of gravity, and the battery cells 20 may also be separated from the carrying member 11a, and safety accidents such as fire and explosion may occur.

The test results for carrying portions of different sizes and battery cells of different weights are shown in Table 6.

Table 6 The test results for carrying portions of different sizes and battery cells of different weights

| N/mm | M2/kg | N/M2 mm/kg | Test results |
|---|---|---|---|
| 0.2 | 10 | 0.02 | Fire, explosion |
| 0.4 | 8 | 0.05 | No fire, no explosion |
| 0.4 | 1 | 0.4 | No fire, no explosion |
| 1 | 3.5 | 0.286 | No fire, no explosion |
| 5.5 | 1.5 | 3.667 | No fire, no explosion |
| 10 | 2 | 5 | No fire, no explosion |
| 18 | 2 | 9 | No fire, no explosion |

In some examples, the carrying member 11a may also be called a mounting wall.

Optionally, the top wall 204 of the battery cell 20 may be the wall with the largest surface area of the battery cell 20. In this way, the contact area between the carrying member 11a and the battery cell 20 is large, which can ensure the connection strength between the carrying member 11a and the battery cell 20. In other embodiments, the carrying member 11a can also be connected to the wall of the battery cell 20 with a smaller surface area, which is not limited in the embodiments of the present application.

In some optional embodiments, the electrode terminal 214 is provided on the bottom wall 205 of the battery cell 20, and the bottom wall 205 and the top wall 204 are separated and arranged oppositely in the vertical direction; or, the electrode terminal 214 is provided on the side wall of the battery cell 20, the side wall is connected to the top wall 204 and is parallel to the vertical direction.

When the battery cell 20 is in use, the vertical direction may be parallel to the direction of gravity, and the electrode terminal 214 may face the ground along the direction of gravity. For example, the battery 100 includes a carrying member 11a and a box 10, the box 10 is located below the carrying member 11a, the top wall 204 of the battery cell 20 faces the carrying member 11a and is connected to the carrying member 11a, the bottom wall 205 of the battery cell 20 faces the bottom of the box 10, and the electrode terminals 214 also face the bottom of the box 10, that is, face the ground. In this way, the top wall 204 without the electrode terminals 214 can be directly connected to the carrying member 11a, and the battery cells 20 and the carrying member 11a are connected into a whole, which enhances the overall structural strength of the battery 100. At the same time, there is no need to leave a gap between the top wall 201 and the carrying member 11a, which improves the space utilization of the battery and thus increases the energy density of the battery.

Optionally, the electrode terminal 214 may also be disposed on one of the two walls of the battery cell 20 that are oppositely disposed along the second direction y, that is, the side wall on which the electrode terminal 214 is disposed is connected to the top wall 204, and the side wall on which the electrode terminals 214 are positioned is parallel to the vertical direction. For example, the electrode terminals 214 of the battery cells 20 in the same column arranged along the second direction are also arranged along the second direction.

Optionally, the size N of the carrying member 1 1a in the vertical direction is 0.2mm to 20mm. Optionally, the weight M2 of the battery cell 20 is 1kg to 10kg. In this way, the size of the carrying member 11a in the vertical direction can be flexibly selected according to the weight M2 of the battery cell 20 or the corresponding appropriate battery cell 20 can be selected according to the size of the carrying member 11a in the vertical direction.

Optionally, as shown in Fig. 20, the carrying member 11a may be a plate-shaped structure, such as a flat plate. In the plate-shaped structure, as long as the surface of the carrying member 11a in contact with the top wall 204 of the battery cell 20 can be made flat, there are no specific restrictions on other aspects.

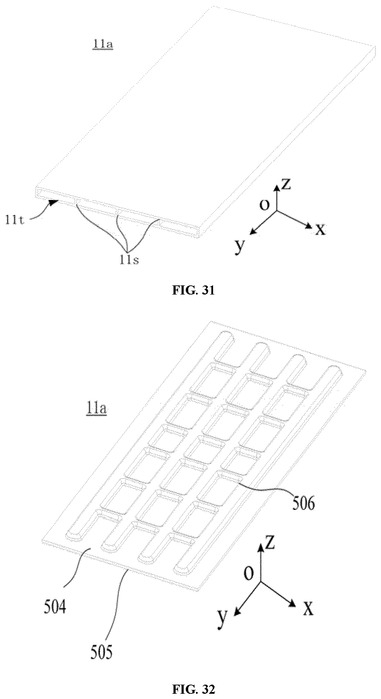

Optionally, as shown in Fig. 31, a hollow cavity 11t is provided inside the carrying member 11a. On the one hand, the hollow cavity 11t can provide expansion space for the battery cell 20. On the other hand, the hollow cavity 11t can also serve as a flow channel to accommodate fluid to adjust the temperature of the battery cell 20.

Exemplarily, the hollow cavity 11t is used to accommodate the heat exchange medium to adjust the temperature of the battery cell 20. In this case, the carrying member 11a can also be called a thermal management component. Of course, in other examples, a heat exchange member may be provided between the battery cell 20 and the carrying member 11, and the heat exchange member may be a component with a channel to act as a thermal management component, or the heat exchange member may be made into any other component capable of regulating the temperature of the battery cells 20, which is not limited in the present application.

Optionally, a reinforcing plate 11s may be provided in the hollow cavity 11t, and the reinforcing plate 11s may extend along the first direction. On the one hand, the reinforcing plate 11s can enhance the structural strength of the carrying member 11a. On the other hand, the reinforcing plate 11s can form multiple flow channels inside the carrying member 11a for accommodating the heat exchange medium, wherein the multiple flow channels can communicate with each other or be independent of each other.

The heat exchange medium may be liquid or gas, and the temperature regulation refers to heating or cooling multiple battery cells 20. In the case of cooling the battery cells 20, the hollow cavity 11t can accommodate the cooling medium to adjust the temperature of multiple battery cells 20. In this case, the heat exchange medium can also be called a cooling medium or a cooling fluid, more specifically, a cooling liquid or a cooling gas. In addition, the heat exchange medium may also be used for heating, which is not limited in the embodiments of the present application. Optionally, the heat exchange medium may flow in a circulating manner to achieve a better temperature regulation effect. Optionally, the fluid may be water, a mixture of water and ethylene glycol, a refrigerant or air, etc.

Optionally, as shown in Fig. 32, the carrying member 11a is provided with a reinforcing portion 506. The carrying member 11a may include a first surface 504 and a second surface 505. The second surface 505 is connected to the top wall 204 of the battery cell 20. The reinforcing portion 506 is provided on the first surface 504 and/or the second surface 505. The reinforcing portion 506 can enhance the structural strength of the carrying member 11a. Optionally, the reinforcing portion 506 may be a protrusion and/or a groove formed by stamping the carrying member 11a, which is not limited in the embodiments of the present application.

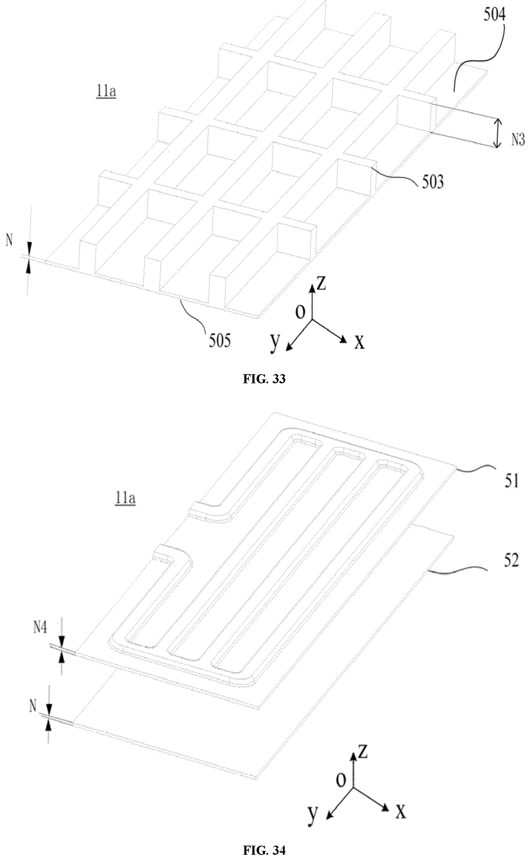

Optionally, as shown in Fig. 33, in the vertical direction, the surface of the carrying member 11a away from the battery cells 20 is provided with a reinforcing rib 503; in the example of Fig. 33, the surface of the carrying member 11a away from the battery cells 20 in the vertical direction may be the first surface 504, and the reinforcing rib 503 is provided above the first surface 504. The reinforcing rib 503 can enhance the structural strength of the carrying member 11a.

It is to be noted that the size of the reinforcing rib 503 in the vertical direction is N3, and in the case of $(N+N3)/N > 2$, it can consider that the size of N and the weight M2 of the battery cell 20 satisfy $0.04mm/kg \leq N/M2 \leq 100mm/kg$. The reinforcing ribs 503 can belong to batteries or electrical apparatuses, such as vehicles. The reinforcing ribs 503 can be arranged according to the vehicle's structural strength requirements. When the size of the reinforcing ribs 503 in the vertical direction is large, the relationship between the size N3 of the reinforcing rib 503 and the weight M2 of the battery cell 20 is no longer considered. From another perspective, when the size N3 of the reinforcing rib 503 is smaller, for example, in the case of $(N+N3)/N \leq 2$, then the relationship between $(N+N3)$ and M2 satisfies: $0.04mm/kg \leq (N+N3)/M2 \leq 100mm/kg$.

The number and shape of the reinforcing ribs 503 can be specifically arranged according to the needs of the electrical apparatus or the mounting mode of the battery, which is not specifically limited in the embodiments of the present application.

Optionally, the reinforcing rib 503 and the carrying member 11a have an integrally molded structure, which facilitates processing and helps save processes. In other embodiments, the reinforcing rib 503 can also be molded separately from the carrying member 11a, and then they are connected or assembled through splicing, welding, bonding, machining, stamping, etc., which is not specifically limited in the embodiments of the present application.

Optionally, the carrying member 11a can be a single-layer plate structure or a multi-layer plate structure. Compared with the single-layer plate structure, the carrying member 11a of the multi-layer plate structure has greater rigidity and strength.

Optionally, as shown in Fig. 34, the carrying member 11a includes a first plate 51 and a second plate 52, the second plate 52 is connected to the top wall 204 of the battery cell 20, and the first plate 51 and the second plate 52 are arranged oppositely in the vertical direction. The second plate 52 may be a flat plate, and the first plate 51 may be a non-flat plate. The specific settings of the first plate 51, such as size, strength, etc., can be adjusted according to the specific needs of the electrical apparatus, which is not limited in the embodiments of the present application. The carrying member 11a may further include a third plate, a fourth plate, etc., and the embodiments of the present application do not limit the number of plates included in the carrying member 11a.

In the embodiment shown in Fig. 34, the size N of the carrying member 11a may be the size of the second plate 52 in the vertical direction, and the size of the first plate 51 in the vertical direction may be N4, and in the case of $(N+N4)/N > 2$, for N and M2, only $0.04mm/kg \leq N/M2 \leq 100mm/kg$ is considered. In the case of $(N+N4)/N \leq 2$, the relationship between $(N+N4)$ and M2 satisfies: $0.04mm/kg \leq (N+N4)/M2 \leq 100mm/kg$.

In some embodiments, the relationship between the size N of the carrying member 11a in the vertical direction and the weight M2 of the battery cell 20 also satisfies: $0.1mm/kg \leq N/M2 \leq 20mm/kg$. In this way, the battery will not catch fire or explode, and the safety of the battery can be better guaranteed while meeting the energy density of the battery 100.

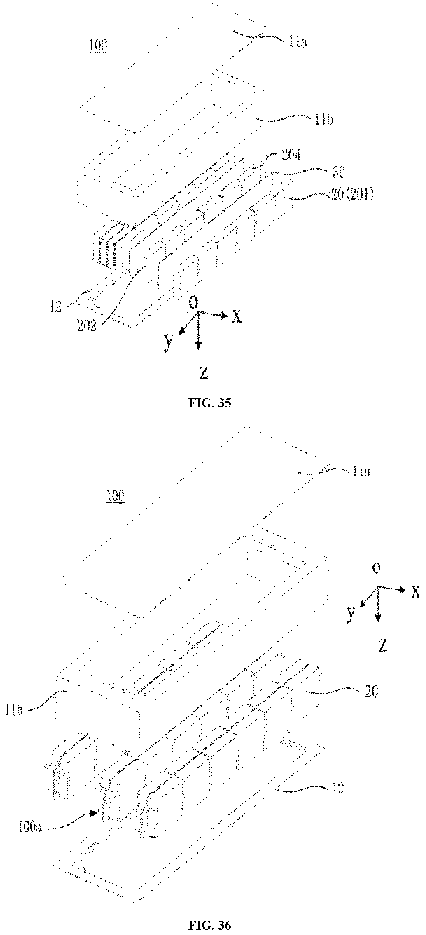

In some embodiments, as shown in Fig. 35, the battery 100 further includes a reinforcing member 30, and a plurality of battery cells 20 are arranged in sequence along the second direction y. The reinforcing member 30 extends along the second direction y and is connected to the first wall 201 of each battery cell 20 of the plurality of battery cells 20, with the first wall 201 being two walls of the battery cell 20 opposite to each other along the first direction x, that is, the two first walls 201 are oppositely arranged along the first direction x, the first direction x is perpendicular to the first wall 201, and the first wall 201 may be adjacent to the top wall of the battery cell 20 and the bottom wall of the battery cell 20.

The reinforcing member 30 is connected to the first wall 201 of each battery cell 20, so that the reinforcing member 30 is integrally connected to the battery cell 20 to improve the structural strength of the battery. In this case, there is no need to provide side plates or beams and other structures within the battery, which can greatly improve the space utilization rate inside the battery, and improve the structural strength and energy density of the battery.

Of course, the reinforcing member 30 may also be referred to as a spacer.

Optionally, the first wall 201 may be the wall with the largest surface area of the battery cell 20, so that the connection strength between the reinforcing member 30 and the battery cell 20 can be enhanced. In other embodiments, the first wall 201 may also be a wall with a smaller surface area of the battery cell 20, and this is not particularly limited in the embodiments of the present application.

Optionally, the battery cell 20 may further include two side walls oppositely arranged along the second direction y, and the side walls are adjacent to the top wall of the battery cell, the bottom wall of the battery cell, and the first wall 201, wherein the side walls of two adjacent battery cells 20 arranged in the second direction y are opposite to each other.

Optionally, the size of the reinforcing member 30 in the first direction x is 0.1mm~100mm. In this way, the strength of the reinforcing member 30 and the energy density of the battery 10 can be balanced.

When the size of the reinforcing member 30 in the first direction x is too small, the rigidity of the reinforcing member 30 is poor, and the structural strength of the battery 100 cannot be effectively improved. When the size of the reinforcing member 30 in the first direction x is too large, it takes up too much space inside the battery 100, which is unfavorable for improving the energy density of the battery 10. Therefore, the size of the reinforcing member 30 in the first direction x is set to be 0.1mm~100mm, which can both ensure the energy density of the battery 100 and improve the structural strength of the battery 100.

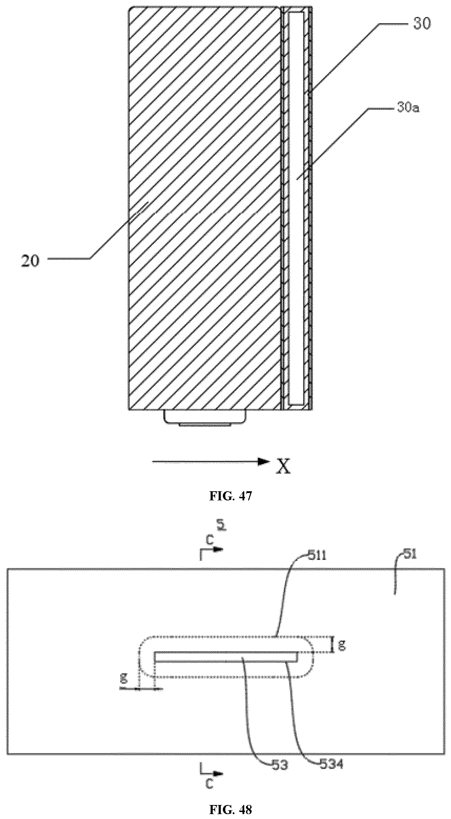

Optionally, as shown in Fig. 47, the inside of the reinforcing member 30 is provided with a hollow cavity 30a, which can be used to provide an expansion space for the battery cell 20, and can also be used as a flow channel to contain a fluid (liquid or gas) to adjust the temperature of the battery cell, and can also reduce the weight of the reinforcing member 30 while ensuring the strength of the reinforcing member 30; in this case, the reinforcing member 30 may also be referred to as a thermal management component. Optionally, a structural reinforcing member can also be provided inside the hollow cavity structure, both to increase the strength of the reinforcing member 30 and to form a plurality of flow channels.

Here, adjusting the temperature of the battery cells 20 means heating or cooling the plurality of battery cells 20.

Optionally, the reinforcing member 30 may be a metal spacer, in which case an insulating layer, which can be an insulating film or an insulating paint, is provided on the surface of the reinforcing member 30.

Optionally, the reinforcing member 30 is a non-metallic spacer, i.e. the reinforcing member 30 is a non-metallic insulating plate.

Optionally, the battery 10 includes a plurality of rows of a plurality of battery cells 20 and a plurality of reinforcing members 30 arranged in the second direction y, wherein the plurality of rows of battery cells 20 and the plurality of reinforcing members 30 are alternately arranged in the first direction x. In this way, the plurality of rows of battery cells 20 and the plurality of reinforcing members 30 are integrally connected to each other and accommodated within the box, so that the structural strength of the whole battery 10 can be further ensured, and the performance of the battery can be improved.

The plurality of rows of battery cells 20 and the plurality of reinforcing member 30 are alternately arranged in the first direction, wherein, along the first direction, the arrangement may be the battery cell - the reinforcing member - the battery cell, or the arrangement may be the reinforcing member - the battery cell - the reinforcing member.

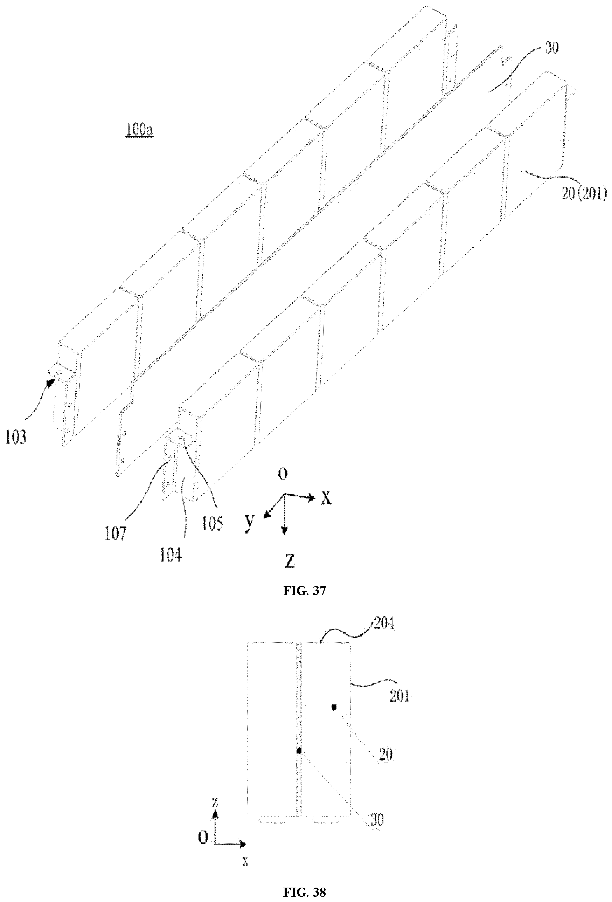

Optionally, as shown in Figs. 36 and 37, the battery 10 includes a plurality of battery modules 100a, the battery module 100a includes at least one row of a plurality of battery cells 20 arranged in the second direction y and at least one reinforcing member 30, and the at least one row of battery cells 20 and the at least one reinforcing member 30 are alternately arranged in the first direction x.

Optionally, as shown in Fig. 37, the battery module 100a includes N rows of battery cells 20 and N-1 reinforcing members 30, and the reinforcing members 30 are provided between two adjacent rows of battery cells 20, wherein N is an integer greater than 1, and in Fig. 37, N is 2. In this way, the number of the reinforcing members 30 can be reduced, and the energy density of the battery 10 can be improved.

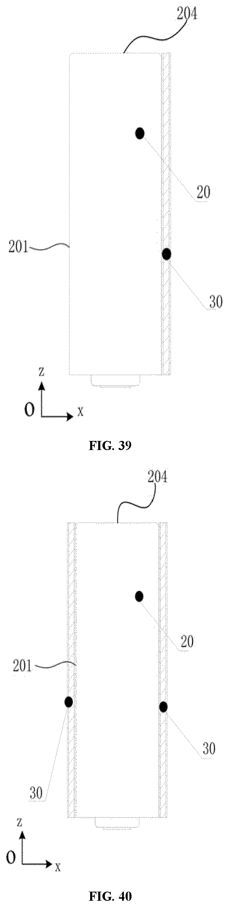

For example, as shown in Fig. 38, the number of the reinforcing members 30 is one less than the number of rows of the battery cells 20 in the first direction x; as shown in Fig. 39, the number of the reinforcing members 30 is equal to the number of rows of the battery cells 20; and as shown in Fig. 40, the number of the reinforcing members 30 is one greater than the number of rows of the battery cells 20 in the first direction x.

Optionally, the battery module 100a may include N rows of battery cells 20 and N+1 reinforcing members 30, wherein the reinforcing members 30 are provided between two adjacent rows of battery cells, and N is an integer greater than 1. Optionally, battery modules 100a having different arrangements of battery cells 20 and reinforcing members 30 may be combined with each other to form the battery 10.

Optionally, the plurality of battery modules 100a are arranged along the first direction, and there is a gap between adjacent battery modules 100a, so that an expansion space can be provided for the battery cell 20.

Optionally, as shown in Fig. 37, the end of the reinforcing member 30 in the second direction y is provided with a fixing structure 103, and the reinforcing member 30 is fixed to the carrying member 11a through the fixing structure 103. The fixing structure 103 can be directly connected to the carrying member 111a, or can be connected to the side wall of the box 10 and then connected to the carrying member 111a. In this way, each battery cell 20 is fixed to the carrying member 11a by the reinforcing member 30 and the fixing structure 103. In this way, the fixed connection between the battery cell 20 and the carrying member 11a is strengthened, and the entire battery 10 is connected as a whole, and the structural strength of the battery 10 is improved.

Optionally, the fixing structure 103 may include a fixing plate 104. The fixing plate 104 is fixedly connected to the end of the reinforcing member 30, and is fixedly connected to the battery cell 20 located at the end of the reinforcing member 30. For example, for the rectangular battery cell 20, the fixing plate 104 can be vertically connected to the reinforcing member 30, and the fixing plate and the reinforcing member 30 are connected to the two adjacent side walls of the rectangular battery cell 20 respectively, thereby further strengthening the fixing effect on the battery cell 20.

Optionally, the fixing plate 104 may be made of the same material as the reinforcing member 30, such as metal, plastic or composite materials. The thickness of the fixing plate 104 may also be the same as that of the reinforcing member 30. The material or thickness of the fixing plate 104 may also be different from that of the reinforcing member 30. For example, the fixing plate 104 may have a higher strength or thickness, which is not limited in the embodiments of the present application.

Optionally, the reinforcing member 30 and the fixing plate 104 can be connected by resistance welding, resistance riveting, SPR riveting, locking bolts or snap-fit or other connection methods.; the fixing plate 104 can also be fixed on the carrying member 11a by resistance welding, resistance riveting, SPR riveting, locking bolts or snap-fit or other connection methods, which is not limited in the embodiments of the present application.

Optionally, the fixing plate 104 and the battery cell 20 may be fixedly connected by bonding, for example, bonded by structural adhesive, which is not limited in the embodiments of the present application.

Optionally, the fixing plate 104 includes a first connecting portion 105 extending away from the battery cell 20 in the first direction, and the first connecting portion 105 is used to connect the carrying member 11a. For example, taking the second surface 505 of the connecting carrying member 11a as an example, the fixing plate 104 can extend at a position close to the second surface 505 in a direction away from the battery cell 20, that is outward to form the first connecting portion 105, and it is connected to the second surface 505 through the first connecting portion 105.

The first connecting portion 105 can be parallel to the second surface 505 of the carrying member 11a, and the area of the first connecting portion 105 can be set according to how it is fixed to the side wall of the connected box 10 to meet the required fixing effect.

Optionally, the first connecting portion 105 may be formed by bending the fixing plate 104. For example, the first connecting portion 105 may be formed by bending the edge of the fixing plate 104 close to the second surface 505 in a direction away from the battery cell 20. For example, the upper edge of the fixing plate 104 can be bent outward to form the first connecting portion 105. In this way, the first connecting portion 105 and the main body of the fixing plate 104 have an integrated structure, thereby enhancing the connection performance.

Optionally, the fixing plate 104 further includes a second connecting portion 107 extending away from the battery cell 20 in the first direction. The second connecting portion 107 is used to connect the fixing plate 104 and the reinforcing member 30. For example, at the position where the fixing plate 104 is connected to the reinforcing member 30, the second connecting portion 107 can be formed by extending outward in the direction away from the battery cell 20. The fixing plate 104 is fixedly connected to the reinforcing member 30 through the second connecting portion 107.

Optionally, in addition to connecting the reinforcing member 30, the second connecting portion 107 can also realize the connection between the fixing plates 104 at the same time. For example, one fixing plate 104 is provided for each row of battery cells 20, and the reinforcing member 30 and the two fixing plates 104 corresponding to the two rows of battery cells 20 are fixed together through the second connecting portion 107.

The second connecting portion 107 may be parallel to the reinforcing member 30. The area of the second connecting portion 107 can be set according to the fixing mode to satisfy the required fixing effect.

Optionally, the reinforcing member 30 is bonded to the first wall 201. The reinforcing member 30 is fixedly connected to the first wall 201 by bonding, the structure is simple, and it is convenient for processing and assembly.

Optionally, the reinforcing member 30 may also be clamped between the battery cells 20 in adjacent rows by abutting against the first wall 201.

In some embodiments, as shown in Figs. 11, 16, 26, 41, 43 and 44, the battery cells 20 are placed upside down in the box 10 with the end cover 212 facing the bottom wall 102 to enhance the overall rigidity of the battery and reduce the probability of damage in a collision; the end cover 212 is provided with a pressure relief mechanism 213 and an electrode terminal 214, and the pressure relief mechanism 213 and the electrode terminal 214 are both disposed toward the bottom wall 102 to improve the stability of the battery.

For example, the battery cell 20 is placed upside down in the box 10 with the end cover 212 facing the bottom wall 102, which means that the battery cell 20 and the box 10 are arranged upside down relative to each other in the vertical direction.

Therefore, by placing the battery cell 20 and the box 10 upside down, the battery cell 20 can be disposed on the top of the battery 100, thereby increasing the rigidity of the top of the battery 100 and increasing the safety of the battery 100. In addition, the end cover 212 of the battery cell 20 faces the bottom of the battery 100, which can increase the energy density of the battery 100 and improve the availability of the battery 100. Arranging the electrode terminals 214 toward the bottom wall 102 can provide a large electrical connection space for the electrode terminals 214. The pressure relief mechanism 213 is arranged toward the bottom wall 102 so that the pressure relief direction of the pressure relief mechanism 213 is toward the bottom of the battery 100, thereby preventing the pressure relief mechanism 213 from discharging toward other external devices connected to the top of the battery 100, which can increase the safety of the battery 100.

Optionally, the electrode terminals 214 are disposed on both sides of the pressure relief mechanism 213; of course, the pressure relief mechanism 213 may also have other positional relationships with the electrode terminals 214.

In some embodiments of the present application, as shown in Figs. 11, 27, and 41, the box 10 includes a carrying member 11a and a frame 11b, the carrying member 11a is disposed on the top of the box 10, and the battery cell 20 and the carrying member 1 1a are fixedly connected.

The carrying member 1 1a is arranged on the top of the box 10 and is arranged with the frame 11b from top to bottom along the vertical direction Z. The carrying member 11a is a plate body extending in the horizontal direction and is used to increase the rigidity of the top of the battery 100. The frame 1 1b is a plate body extending in the vertical direction Z. The frame 1 1b surrounds the carrying member 11a, and an opening 10c is formed at the bottom of the box so that there is a space inside the box 10 to accommodate the battery cells 20. The battery cell 20 is fixedly connected to the carrying member 11a, which can increase the rigidity of the top of the battery 100 and reduce the possibility of the battery 100 being damaged in a collision.

Optionally, the battery cell 20 may be directly connected to the carrying member 11a by bonding, or they may be fixedly connected by other means.

Optionally, the frame 11b can be integrally molded with the carrying member 1 1a, or can be fixedly connected to the carrying member 11a through welding, bonding, fasteners or welding self-tapping processes, which is not limited in the present application.

For example, the electrode terminal 214 of the battery cell 20 is disposed toward the opening 10c of the bottom wall 102, and the end surface of the battery cell 20 opposite to the electrode terminal 214 is fixed to the carrying member 11a. In actual application, the battery 100 is fixed through the top of the box 10 to an external device, such as inside the vehicle 1000. The battery cells 20 disposed on the top of the battery 100 can increase the rigidity of the top of the battery 100, reduce the possibility of damage to the battery 100 in a collision, and increase the safety of the battery 100. Moreover, the electrode terminals 214 of the battery cells 20 face the opening 10c, and the side of the battery cells 20 opposite to the electrode terminals 214 is fixedly connected to the top of the box 10, so that the battery 100 can reserve less space for placing the battery cells 20, increasing the energy density of the battery 100 and at the same time enabling better combination of the battery cells 20 with the box 10.

In an optional embodiment, a cooling channel is embedded inside the carrying member 11a. Since the battery cell 20 is disposed on the carrying member 11a, the top of the battery cell 2 is in contact with the carrying member 11a. Considering the performance of the battery 100, a channel is embedded inside the carrying member 11a, through which a gas or liquid as the heat exchange medium flows, which, for the battery 100, can have an effect of regulating the temperature of the battery 100 when the battery 100 is working, thereby increasing the service life and availability of the battery 100.

In another optional embodiment, the channel can also be provided as a thermal management component between the battery cell 20 and the carrying member 11a, or formed as any other component that can be configured to regulate the temperature of the battery 100, which is not limited in the embodiments of the present application.

In some embodiments of the present application, as shown in Figs. 11, 27 and 41, the box 10 further includes a bottom cover 12 provided at the opening 10c, the frames 11b are connected to each other to form a frame structure, and the bottom cover 12 and the frame 11b are fixedly connected.

The frames 11b are connected to each other to form a frame structure, that is, the frame 1 1b is arranged in the circumferential direction of the carrying member 11a and is combined with the carrying member 11a to form the box 10 to accommodate the battery cells 2. The bottom cover 12 is fixedly connected to the frame 11b, thereby covering the opening 10c, so that the box 1 has a relatively sealed structure.

The bottom cover 12 includes a cover portion 12a and a mounting portion 12b. The mounting portion 12b is provided in the circumferential direction of the cover portion 12a and matches the frame 11b. That is to say, the cover portion 12a covers the opening 10c formed by the frame 11b, and the mounting portion 12b is fixed to the frame 11b to fixedly connect the bottom cover 12 and the frame 11b. Optionally, the mounting portion 12b and the frame 11b can be connected by bolts, and the mounting portion 12b and the frame 1 1b can also be fixedly connected in other ways.

In the vertical direction Z, the cover portion 12a protrudes from the bottom 102 relative to the mounting portion 12b. This results in a relatively larger distance between the battery cell 20 disposed inside the box 10 and the bottom cover 12. It should be understood that the protruding distance of the cover portion 12a relative to the mounting portion 12b should be selected based on the energy density of the battery 100, and it should not be too large to increase the volume of the battery 100 and reduce the energy density of the battery 100.

Of course, the cover portion 12a can also be called the main body part, and the mounting portion 12b can also be called the fitting part.

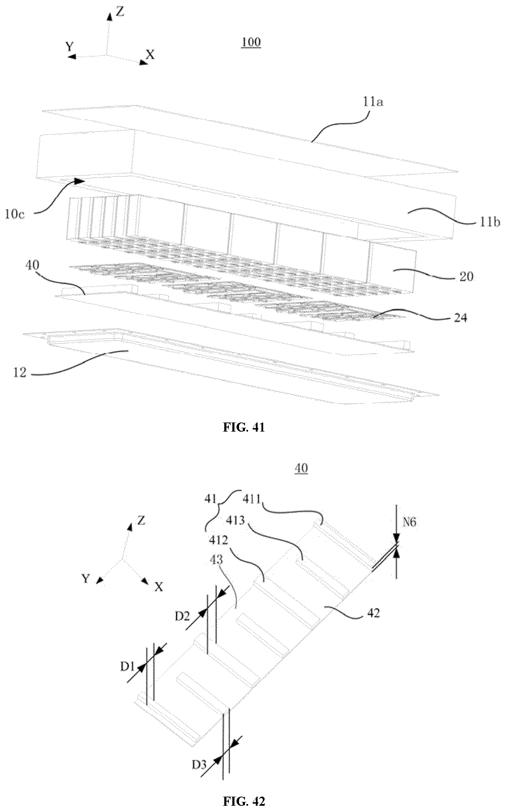

In some embodiments, as shown in Figs. 41 and 42, the battery 100 further includes a protective assembly 40. The protective assembly 40 is disposed between the battery cell 20 and the bottom wall 102 to support the battery cell 20. The battery cell 20, the protective assembly 40 and the bottom wall 102 are arranged in sequence from top to bottom along the vertical direction Z. The protective assembly 40 can directly or indirectly abut against the battery cell 20 for supporting, which can increase the structural strength of the battery 100, improve the force-bearing performance of the battery 100 and reduce the possibility of damage to the battery 100 in a collision.

Of course, in some examples, the protective assembly 40 may also be called a carrying assembly.

Exemplarily, the battery cell 20 is fixedly connected to the carrying member 11a, and the protective assembly 40 is fixedly connected to the battery cell 20, which can fix the structure of the battery 100 in many ways and improve the stability of the battery 100.

In some embodiments, as shown in Fig. 41, the battery cell 20 is placed upside down in the box 10 with the end cover 212 facing the bottom wall 102. In this case, the protective assembly 40 directly or indirectly abut against the end cover 212 of the battery cell 20. Abutting against means that two parts are in direct contact with each other or abut through other parts, but are not fixed to each other.

Exemplarily, the end cover 212 is provided with a pressure relief mechanism 213 and an electrode terminal 214. Both the pressure relief mechanism 213 and the electrode terminal 214 are provided toward the bottom wall 102. The protective assembly 40 supports the battery cell 20 to protect the pressure relief mechanism. 213 and the electrode terminal 214.

In some embodiments, as shown in Figs. 11 and 41, the box 10 includes a main body 11 and a bottom cover 12 disposed at the bottom of the main body 11. The bottom cover 12 and the main body 11 are hermetically connected and together form a closed accommodating cavity 10a. The wall of the bottom cover 12 facing the battery cell 20 forms the bottom wall 102 of the accommodating cavity 10a. In this case, the protective assembly 40 is disposed between the battery cell 20 and the bottom cover.

In some embodiments, as shown in Figs. 11 and 41, the battery cell 20 is placed upside down in the box 10 with the end cover 212 facing the bottom wall 102. The end cover 212 is provided with a pressure relief mechanism 213 and an electrode terminal 214. The wall of the bottom cover 12 facing the battery cell 20 forms the bottom wall 102 of the accommodating cavity. The protective assembly 40 is disposed between the battery cell 20 and the bottom cover 12, that is, between the pressure relief mechanism 213, the electrode terminal 214 and the bottom cover 12 and is configured to support the battery cells 20 and the bottom cover 12, thereby providing protection for the pressure relief mechanism 213 and the electrode terminals 214 to protect them during a collision.

In some embodiments, as shown in Fig. 41, the battery 100 further includes a bus component 24, the bus component 24 is used for electrically connecting with the electrode terminals of at least two battery cells 20, the protective assembly 40 is disposed between the bottom wall 102 and the bus component 24, and the protective assembly 40 is also used to insulate the battery cell 20 from the bottom wall 102.

Therefore, the protective assembly 40 is disposed between the bottom wall 102 and the bus component 24 to support the battery cells 20. That is, the protective assembly 40 can abut against the partial region of the battery cells 20 that is not covered by the bus component 24 and the bottom wall 102 of the accommodating cavity 10a at the upper and lower sides respectively to provide supporting force for the battery cell 20 in the vertical direction Z. At the same time, the protective assembly 40 can ensure that there is a certain gap between the battery cells 20 and the bottom wall 102 of the accommodating cavity 10a and that they are not in contact with each other, so that the bus component connected to the battery cells 20 keeps a certain distance from the bottom wall 102 of the accommodating cavity 10a, which insulates the bus component and the battery cells 20 from the bottom wall 102 of the accommodating cavity 10a to prevent the exposed bottom wall 102 from being disturbed by the external environment and causing electrical interference to the battery cells 20 and bus component 24.

Further, the protective assembly 40 may have a flat surface extending perpendicular to the vertical direction Z, thereby providing another protective layer on the bottom of the box 10 to further reduce the effect to the battery cells 20 and the bus components 24 when the bottom wall 102 of the accommodating cavity 10a receives a collision.

In some examples, as shown in Fig. 41, the battery cell 20 is placed upside down in the box 10 with the end cover 212 facing the bottom wall 102. The end cover 212 is provided with electrode terminals 214, and the electrode terminals 214 are electrically connected to the corresponding bus component 24. The flat bottom surface of the battery cell 20 opposite to the top surface where the electrode terminal 214 is provided is connected to the top of the box 10 so that the electrode terminal 214 is located on the side away from the top of the box 10, which can effectively improve the structural strength of the top of the battery 100. Also, by connecting the bottom of the battery cell 20 to the top of the box 10, it can improve the space utilization inside the box 10, thereby increasing the overall energy density of the battery.

The bus component 24 in the embodiments of the present application may be a CCS (Cells Contact System) assembly, that is, an integrated wire harness composed of a flexible circuit board, a plastic structural member, a busbar, etc., used to form all the connections between multiple battery cells 20. The battery cell 20 can be charged and discharged through the bus component. Optionally, the bus component in the embodiments of the present application may be welded to the electrode terminal of the battery cell 20, so that the connection between the bus component and the battery cell 20 is fixed.

Optionally, the bus component 24 may include multiple assemblies, each assembly is connected corresponding-ingly to a battery module composed of the battery cells 20, and then these assemblies are electrically connected to form the required series/parallel/parallel-series connection. Alternatively, the bus component 24 may be provided as a whole and connected to each battery cell 20 through the same assembly.

Optionally, the box 10 includes a carrying member 11a, a frame 11b and a bottom cover 12. The frame 11b extends in the vertical direction Z by a distance longer than the extending distance of the battery cells 20, bus components and protective components 40 in the vertical direction Z. In this case, the bottom cover 12 can cover the lower end of the frame 11b.

In some embodiments, as shown in Fig. 42, the protective assembly 40 includes a protective strip 41, and the protective strip 41 abuts against the battery cell 20.

In some examples, the protective assembly 40 can also be a carrying assembly, and the protective strip 41 can also be called a protective member, or a carrying strip. For example, the protective assembly 40 includes a protective member, and the carrying assembly includes a carrying strip.

Optionally, the protective assembly 40 may include multiple protective strips 41, those protective strips 41 respectively abut against the multiple battery cells 20 to maintain a certain distance between the battery cells 20 and the bottom wall 102, reducing the effect on the battery by the bottom wall 102 receiving a collision.

Optionally, the protective strip 41 can abut against the surface of the battery cell 20 on which the electrode terminal 214 is provided. Specifically, the protective strip 41 can abut against the partial region capable of bearing force of the surface of the battery cell 20 on which the electrode terminal is provided except where the electrode terminal is located.

For example, the protective strip 41 abut against the "shoulders" located on both sides of the electrode terminal in the second direction Y on the surface. On this basis, the protective strips 41 need to be arranged at positions corresponding to the battery cells 20. There are multiple battery cells 20, and when the multiple battery cells 20 are arranged in an array, correspondingly, there are also multiple protective strips 41. The multiple protective strips 41 are arranged spaced apart from each other along the second direction, and each protective strip 41 extends along the first direction, so that the multiple protective strips 41 form a strip structure arranged at intervals in parallel. In addition to the protective strips 41 located at the edges, other protective strips 41 may be disposed at positions where adjacent battery cells 20 are connected. That is, each protective strip 41 may abut against two adjacent battery cells 20 in the second direction Y at the same time.

Optionally, the first direction X is perpendicular to the second direction Y, and the first direction and the second direction are perpendicular to the vertical direction respectively, forming a relatively regular structure that is easy to process.

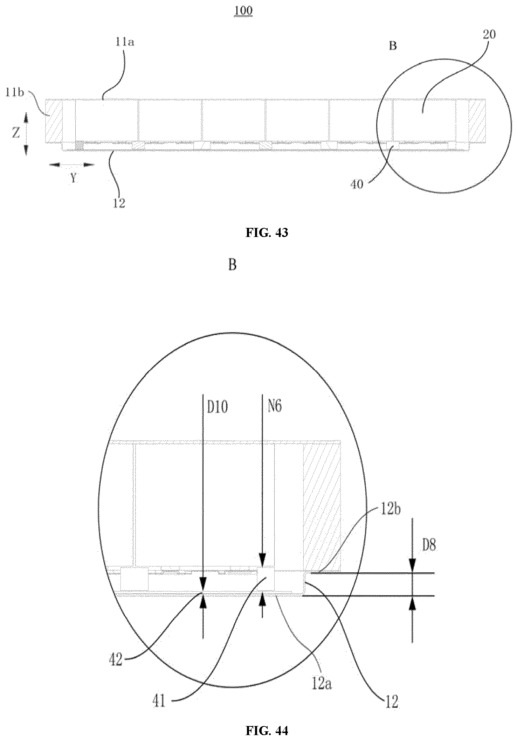

In some optional embodiments, as shown in Figs. 43 and 44, the orthographic projection of the electrode terminal 30 on the bottom wall 102 is located between the orthogonal projections of adjacent protective strip 41 on the bottom wall 102, and the protective strip 41 abuts against the battery cell 20. In this case, the protective strip 41 abuts against the shoulder of the battery cell 20, so that the connection between the electrode terminal and the bus component 24 is not hindered by the protective assembly 40, and after the battery cells 20 are lifted up by the protective components 40, allowing the electrode terminals to fall between adjacent protective strips 41 can disperse the force generated by collisions to multiple battery cells 20, thereby preventing the electrode terminals from being damaged by collisions.

In some embodiments, the protective strip 41 is fixedly connected to the battery cell 20 and/or the box 10, that is, the protective strip 41 is fixedly connected to at least one of the battery cell 20 and the box 10 to ensure the arrangement reliability of the protective strip 41.

For example, when the protective strip 41 is fixedly connected to the box 10, the protective strip 41 is fixedly connected to the bottom wall 102; the box 10 includes a bottom cover 12, and the wall of the bottom cover 12 facing the battery cell 20 forms the bottom wall 102 of the accommodating cavity 10a, and the protective strip 41 is fixedly connected to the bottom cover 12.

Optionally, the protective strip 41 is bonded to the battery cell 20 and/or the box 10, that is, the protective strip 41 is bonded to at least one of the battery cell 20 and the box 10 to facilitate assembly.

For example, when the protective strip 41 is bonded to the box 10, the protective strip 41 is bonded to the bottom wall 102; the box 10 includes a bottom cover 12, and the wall of the bottom cover 12 facing the battery cell 20 forms the bottom wall 102 of the accommodating cavity 10a, the protective strip 41 is bonded to the bottom cover 12.

In some optional embodiments, the multiple protective strips 41 include edge protective strips 411, first protective strips 412 and second protective strips 413. Along the second direction y, the edge protective strips 411 are provided at the edge of the assembly formed by the battery cells 20 arranged in an array, and the first protective strips 412 and the second protective strips 413 are alternately distributed between two edge protective strips 411.

The protective strips 41 in the embodiments of the present application may include three types of protective members respectively arranged at different positions, wherein the edge protective strips 411 are arranged at the edges of the battery cells 200, and the first protective strips 412 and the second protective strips 413 are alternately arranged between the edge protective strips 411. The first protective strip 412 and the second protective strip 413 may have different sizes to match a variety of different connecting elements in the bus component and provide required space for connection between adjacent battery cells 200.

Optionally, the protective strips 41 in the embodiments of the present application can include multiple different sizes, and the size of each protective strip 41 can be adjusted accordingly according to the length of the battery cell 200 and the positions of the electrode terminals 214 and the pressure relief mechanism thereon. When each protective strip 41 abuts against multiple battery cells 20, each protective strip 41 may abut between two adjacent battery cells 20. In this case, the distance between the first protective strip 412 and the second protective strip 413 can be approximately the same as the length of the battery cell 20 itself. The alternately arranged first protective strips 412 and second protective strips 413 can match the arrangement of the bus component 24 to form a safe and reliable electrically connected loop.

In some embodiments, along the first direction X, the extension length of the first protective strip 412 is greater than the extension length of the second protective strip 413.

As mentioned above, the first protective strip 412 and the second protective strip 413 in the embodiments of the present application can have different lengths in their own extension directions, and can be arranged, through the gaps between adjacent second protective strips 413, on hard connecting elements such as a busbar for forming electrical connection between the battery cells 20 to electrically connect two adjacent battery cells 20 in the second direction y through the connecting element. That is, by adjusting the length of the second protective strip 413 and the spacing between adjacent second protective strips 413 in the second direction y, the hard connecting elements in the bus component 24 are avoided.

Optionally, according to the position of the connecting elements between the battery cells 20, the first protective strip 412 may have an extension length along the first direction X that is the same as the length of the inner cavity of the box 10 in this direction, that is, it extends integrally and completely inside the box 10, or the first protective strip 412 may be provided with a broken opening in the first direction X to arrange corresponding connecting elements at the broken opening. Arranging the connecting elements in the bus component 24 at the broken opening of the protective strip 41 can also maintain a certain distance between the connecting element and the bottom wall 102 to form protection against impact and maintain insulation.

In some optional embodiments, along the second direction Y, the widths of the first protective strip 412 and the second protective strip 413 are greater than the width of the edge protective strip 411; since the edge protective strip 411 is disposed at the edge of the array of battery cells 20, unlike the first protective strip 412 or the second protective strip 413, the edge protective strip 411 does not need to support two adjacent rows of battery cells 20 at the same time in the second direction Y, but only needs to support one row of battery cells 20. The width of the edge protective strip 411 can be smaller than the first protective strip 412 and the second protective strip 413 and can achieve a good supporting effect.

Optionally, the width of the first protective strip 412 is greater than the width of the second protective strip 413, and the width of the second protective strip 413 is greater than the width of the edge protective strip 411. The protective strips 41 in the embodiments of the present application may include the edge protective strips 411 arranged on the edge and the first protective strips 412 and second protective strips 413 alternately arranged between the edge protective strips 411, wherein the edge protective strips 411 only abut against one row of battery cells 20, so their widths may be smaller compared with the first protective strips 412 and the second protective strips 413, and the first protective strips 412 and the second protective strips 413 may be disposed at the junction of two adjacent rows of battery cells 20 and abut against multiple battery cells 20 at the same time. By making each first protective strip 412 abuts against two adjacent battery cells 20 at the same time, the number of required protective strips 41 can be reduced, thereby improving production efficiency.

Optionally, in the battery provided by the embodiments of the present application, the width and position of each protective strip 41 in the protective assembly 40 can be designed according to the position and size of the partial region of the battery cell 20 that overlaps with the protective assembly 40. Specifically, the width of the protective strip 41 can be selected based on the pressure that the battery cell 20 can bear and the expected magnitude of impact, and the location of the protective strip 41 can then be selected based on the positions of the electrode terminals 214 and the pressure relief mechanism.

In some optional embodiments, the extension length of the protective assembly 40 in the vertical direction Z is greater than 1.5 mm.

The protective assembly 40 in the embodiments of the present application needs to extend to a certain size in the vertical direction Z, that is, each protective strip 41 needs to have a certain thickness. The protective assembly 40 is used to provide the battery cell 20 with protection against collisions from the lower side, therefore the relationship between the thickness of the protective assembly 40 itself and the impact energy has a great impact on whether the battery will catch fire and explosion and other safety issues. On this basis, the protective assembly 40 needs to have a certain basic thickness to provide the corresponding protection strength. Exemplarily, the overall thickness of the protective assembly 40 in the embodiments of the present application may be greater than 1.5 mm.

In some embodiments, as shown in Figs. 41-44, the pressure relief mechanism 213 of the battery cell 20 is also disposed toward the bottom wall of the accommodating cavity; the protective assembly 40 includes multiple protective strips 41 distributed at intervals along the length direction of the box 10. There are multiple battery cells 20, and the pressure relief mechanism 213 and electrode terminal 214 of each battery cell 20 are located between two adjacent protective strips 41. For example, the protective strips 41 can be provided at the junction of adjacent battery cells 20 to avoid contact with the electrode terminals 214 and the like, and to support the battery cells 20.

For ease of description, in some embodiments, the length direction of the box 10 is the arrangement direction of the multiple battery cells 20, that is the second direction, also one of the horizontal directions. The length direction Y and the vertical direction Z are perpendicular to each other. When the included angle between the length direction Y and the vertical direction Z is between 85° and 90°, the length direction Y and the vertical direction Z can be regarded as perpendicular to each other. It should be understood that the length direction Y may also be other directions, and the length direction Y may not be perpendicular to the height direction Z, which will not be described in detail in the present application.

The multiple protective strips 41 are arranged spaced apart from each other along the length direction Y, that is, the protective components 40 are arranged along the length direction Y between the multiple battery cells 20 and the bottom cover 12. As an example, the protective strip 41 may be formed in a strip shape, protruding from the bottom cover 12 in the vertical direction Z and fixed to the battery cell 20, so that the pressure relief mechanism 213 and the electrode terminal 214 of the battery 100 are located between two adjacent protective strips 41 to protect the pressure relief mechanism 213 and the electrode terminal 214.

In some embodiments, as shown in Fig. 42, the multiple protective strips 41 include edge protective strips 411, first protective strips 412 and second protective strips 413. Along the length direction Y, the edge protective strips 411 are provided at both side edges of multiple battery cells 20 arranged in an array, and the first protective strips 412 and the second protective strips 413 are alternately distributed between two edge protective strips 411.

The edge protective strips 411 are provided at both side edges of the multiple battery cells 20 arranged in an array, that is, on the edge of the battery cell 20 located at the outermost side of the array, so as to support both the battery cells 20 at a position where the battery cells 20 are close to the box 10. The first protective strips 412 and the second protective strips 413 are alternately distributed between the two edge protective strips 411, which can make the protective strips 41 more adaptable to the array distribution of the battery cells 20, thus providing better support to the battery cells 20.

For convenience of description, in the embodiments of the present application, the width direction of the box 10 is taken as the first direction X, that is, the other horizontal direction. The length direction Y, the vertical direction Z and the width direction X are perpendicular to each other. When the included angles between the length direction Y, the vertical direction Z and the width direction X are between 85° and 90°, the three directions can be regarded as perpendicular to each other. It should be understood that the width direction X may also be other directions, and the width direction X may not be perpendicular to the length direction Y and the vertical direction Z, which will not be described in detail in the present application.

In some embodiments, as shown in Figs. 41 and 42, multiple battery cells 20 are electrically connected through bus components 24. The bus component 24 spans between the electrode terminals 214 of adjacent battery cells 20 to connect multiple battery cells 20 in series, parallel or parallel-series. Since in some embodiments of the present application, the bus component 24 spans between the electrode terminals 214 of adjacent battery cells 20 in the length direction Y, at least some protective strips 41 include a notch to avoid the bus component 24; the notch can be provided at one end of the corresponding protective strip 41, and the notch can also be provided at other positions, which depends on the arrangement of the bus component 24, and is not specifically limited. Therefore, in the width direction X, the extension length of the first protective strip 412 is larger than the extension length of the second protective strip 413, so that the second protective strip 413 avoids the bus component 24.

The lengths of the first protective strip 412 and the second guard strip 413 in the width direction X are different, so that the protective member can avoid the bus component 24, thus the protective assembly 40 is better adapted to the structure of the battery 100, and the battery cells 20 is convenient to be connected in series, in parallel and in parallel-series with each other.

Optionally, when the bus component 24 spans between the electrode terminals 214 in other directions, the first protective strip 412 and the second protective strip 413 may change in size according to specific circumstances.

Optionally, the extension length of the protective strips 41 may only indicate the sum of the lengths of the protective strips 41 in the width direction, so that he total length of the second protective strips 413 is smaller than that of the first protective strips 412, that is, the protective strip 413 can avoid the bus component 24 at any position. It can be at one end of the second protective strip 413 or in the middle of the second protective strip 413, depending on the arrangement of the bus component 24.

In some embodiments, as shown in Fig. 42, the protective assembly 40 further includes a main plate 42, the protective strip 41 is connected to the main plate 42, the main plate 42 is located between the protective strip 41 and the bottom wall 102, then the protective strip 41 is provided on the surface of the main plate 42 facing the top of the box 10.

Of course, the main plate 42 can also be called a connecting plate.

Optionally, there are multiple protective strips 41, and the multiple protective strips 41 are all disposed on the surface of the main plate 42 facing the top of the box 10. The main plate 42 is disposed close to the bottom wall 102. The main plate 42 can stabilize the relative positions between the multiple protective strips 41 to avoid dislocation after receiving a collision.

The main plate 42 can extend in the same direction as the bottom wall 102 and abut against the bottom wall 102. It can also be further limited through grooves or the like provided on the bottom wall 102. The main plate 42 is arranged between the protective strip 41 and the bottom wall 102 and extends to cover a large area, thereby improving the insulation performance between the bus component 24 and the battery cell 20 and the bottom wall of the box 10.

Optionally, in order to provide the required protective strength, the thickness of the main plate 42 may be greater than 0.5 mm.

Optionally, the main plate 42 is fixedly connected to the bottom wall 102 to facilitate reliable placement of the main plate 42 and increase the structural solidity of the battery 100; for example, the main plate 42 and the bottom wall 102 are bonded and fixed to facilitate assembly.

Optionally, the main plate 42 can also abut against the bottom wall 102, which is not limited in the embodiments of the present application.

In some embodiments, the main plate 42 and the protective strip 41 are integrally molded or detachably connected to facilitate the processing of the main plate 42 and the protective strip 41. When the protective strip 41 and the main plate 42 are integrally molded, the manufacturing of the protective assembly 40 can be facilitated. When the protective strip 41 is detachably connected to the main plate 42, the position of the protective strip 41 can be easily adjusted according to the arrangement of the battery cells 20, so that the protective assembly 40 can be used in a wider range of applications.

In some optional embodiments, the protective assembly 40 is bonded and fixed to the battery cell 20. In the embodiments of the present application, the protective assembly 40 abuts against the shoulder of the battery cell 20. In this case, the two can be bonded and fixed to further improve the overall strength and the stability of the connection, and avoid dislocation between the protective assembly 40 and the battery cell 20 as a result of impact. Optionally, each protective strip in the protective assembly 40 can be bonded to a corresponding position on the battery cell 20, or at least some of the protective strips can be bonded to the battery cell 20, which can include edge protective strips 411.

In some embodiments, as shown in Fig. 18, the end cover 212 includes a functional region 206 and shoulders 207. The functional region 206 is provided with electrode terminals. The shoulders 207 are located on both sides of the functional region 206 along the second direction y. The battery cells 20 abuts against the protective strip 41 through the shoulders 207, and the second direction y is perpendicular to the vertical direction.

Of course, the end cover 212 can also be called a top cover plate.

What the functional region 206 indicates is that the end cover 21 is provided with a region that enables the battery cell 20 to realize its own function, or a region where the battery cell 20 can interact with the outside, such as an electrode terminal that allows the battery cell 20 to be electrically connected to the outside. Since the functional region 206 is often provided with electrode terminals or other functional components, the functional region 206 should not be subjected to force during use of the battery 100. The shoulder 207 indicates the region of the end cover 21 that can bear force except the functional region 206.

The functional region 206 is arranged between the shoulders 207, so that the shoulders 207 can achieve a certain protective effect on the functional region 206. By making the battery cell 20 abuts against the protective strip 41 through the shoulder 207, the battery 100 can have a more compact structure, damage to the functional region 206 due to force is avoided, and the service life of the battery cell 20 is extended.

Optionally, the protective strip 41 is fixedly connected to the shoulder 207.

In some embodiments, the electrode terminal is disposed between two adjacent protective strips 42, and the electrode terminal 214 and the bottom wall 102 (e.g., the bottom cover 12) are spaced apart.

Since the functional region 206 is located between two shoulders 207 and the shoulders 207 overlap the protective strips 41, the electrode terminals 214 of the functional region 206 are also located between the two adjacent protective strips 42. The electrode terminal 214 and the bottom wall 102 are spaced apart, that is, the electrode terminal 214 is not in contact with the bottom wall 102. The electrode terminal 214 can be regarded as being suspended between the two protective strips 42 to facilitate educing the electric energy of the battery cell 20 through the electrode terminal 214 to improve the availability of the battery cell 20.

Optionally, the pressure relief mechanism and the electrode terminal of the battery cell 20 are disposed on the same side of the battery cell 20, so that the pressure relief mechanism 213 is also disposed toward the bottom wall 102. The functional region 206 is provided with a pressure relief mechanism 213 and electrode terminals 214. In the functional region 206, the electrode terminals 214 can be arranged on both sides of the pressure relief mechanism 213 to reduce the effect of the pressure relief mechanism 213 on the electrode terminals 214 during pressure relief.

In some embodiments, as shown in Fig. 44, in the vertical direction (e.g., the thickness direction of the main plate), the thickness of the protective strip 41 is greater than the extension height of the part of the electrode terminals 214 exposed to the battery cell 20, so that the electrode terminals 214 can be suspended between adjacent protective strips 41 to avoid coming into contact with other components and affecting functions.

In some embodiments of the present application, as shown in Figs. 43 and 44, the shoulders 207 of two adjacent battery cells 20 jointly overlap the same protective strip 41.

In the box 10, one battery cell 20 can be mounted, or multiple battery cells 20 can be mounted. When multiple battery cells 20 are mounted in the box 10, the multiple battery cells 20 are arranged adjacent to each other in the box 10. Since the protective strips 41 are arranged spaced apart from each other along the main plate 42 along the first direction x, the shoulders 207 are located on both sides of the functional region 206 in the first direction x, so that the shoulders 207 can be located at the junction of adjacent battery cells 20, which allows the shoulders 207 of two adjacent battery cells 20 to jointly overlap the same protective strip 41.

By allowing adjacent battery cells 20 in the first direction x to share the same protective strip 41, the number of protective strips 41 can be reduced as much as possible, which facilitates the manufacture of the protective assembly 40.

In some embodiments of the present application, as shown in Figs. 18 and 42, in the first direction x, the width D11 of the protective strip 41 (for example, the width D1 of the edge protective strip 4111, the width D2 of the first protective strip 412, the width D3 of the second protective strip 413 in the present application) and the extension width D4 of the shoulder 207 satisfy: $0.5D4 \leq D11 \leq 2D4$.

When the width D11 of the protective strip 41 is greater than or equal to 0.5 times the extension width D4 of the shoulder 207, sufficient supporting force can be provided for the battery cell 20. When the protective strip 41 supports two adjacent battery cells 20 at the same time, the width of the protective strip 41 in the second direction Y is less than or equal to 2 times the extension width of the shoulder 207, so that the protective strip 41 can only be in contact with the shoulders 207 of the two adjacent battery cells 20, thereby avoiding coming into contact with the functional region 206 and affecting the function of the battery cells 20.

Preferably, the relationship between the width D11 of the protective strip 41 and the extension width D4 of the shoulder 207 can satisfy D4 ≤ D11 ≤ 2D4. Since the protective strip 41 may be offset between adjacent battery cells 20, the width of the protective strip 41 in the length direction Y is greater than or equal to the extension width of the shoulder 207, so that the protective strip 41 can simultaneously support two adjacent battery cells 20 rather than only support one due to offset. The latter may result in poor structural stability of the battery 100 due to uneven force.

In some embodiments, the protective strip 41 abuts against the electrode terminal 214, or the protective strip 41 and the electrode terminal 214 are spaced apart. This facilitates flexible arrangement of the protective strip 41.

In some embodiments, as shown in Figs. 18, 43 and 44, the orthographic projection of the electrode terminal 214 on the bottom wall 102 is located between the orthogonal projections of the adjacent protective strips 41 on the bottom wall 102.

The protective assembly 40 in the embodiments of the present application includes multiple protective strips 40 that abut against the battery cells 20, wherein the orthographic projection of the electrode terminals 30 in the battery cells 20 on the bottom wall can be located between adjacent protective strips. In this case, the protective strips 41 abut against the shoulders of the battery cells 20, so that the connection between the electrode terminals 214 and the bus component 24 is not hindered by the protective assembly 40. Also, after the battery cells 20 are supported by the protective assembly 40, the electrode terminals 30 fall between adjacent protective strips 41, which can disperse the force generated by collisions to multiple battery cells 20 and prevent the electrode terminals 30 from being damaged by collision.

In some embodiments, as shown in Figs. 41 and 42, the electrode terminals 214 of two adjacent battery cells 20 are electrically connected through the bus component 24, and in the second direction y, the extension length of one of two adjacent protective strips 41 is smaller than that of the other, so as to form an avoidance notch 43. The avoidance notch 43 is used for avoiding the bus component 24.

The bus component 24 is a component for electrically connecting multiple battery cells 20. The bus component 24 spans between the electrode terminals 214 of adjacent battery cells 20 to connect multiple battery cells 20 in series, parallel or parallel-series. Since the bus component 24 spans between the electrode terminals 214 of adjacent battery cells 20 in the second direction Y, at least some protective strips 41 extending along the first direction X need to avoid it to form an avoidance notch 43.

The extension length of one of two adjacent protective strips 41 is smaller than the extension length of the other, that is, the protective strip 41 with a longer extension length and the protective strip 41 with a shorter extension length are alternately distributed. Optionally, the length of the protective strip 41 can also be adjusted according to the arrangement of the bus component 24. Moreover, the extension length of the protective strips 41 in the first direction X only indicates the sum of the lengths of the protective strips 41 in the first direction X. That is to say, the avoidance notch 43 can be arranged at one end of the protective strip 41 or at the middle of the protective strip 41, which depends on the arrangement of the bus components 24, and is not specially limited in the embodiments of the present application.

Arranging the avoidance notch 43 in the protective strip 41 can make the protective assembly 40 better adapt to the structure of the battery 100 and facilitate the battery cells 20 to be connected in series, parallel and parallel-series with each other.

In some optional embodiments, as shown in Fig. 18, the battery cell 20 further includes a pressure relief mechanism 213. The pressure relief mechanism 213 is provided on the same side as the electrode terminal 214. The pressure relief mechanism 213 is also arranged at the lower side of the battery cell 20 to protect it together with the electrode terminal 214 to avoid collision with the box 10 and the like, thereby improving the overall safety and reliability of the battery 100.

Optionally, the pressure relief mechanism 213 and the bottom wall 102 are spaced apart. In the second direction y, the electrode terminals 214 are provided on both sides of the pressure relief mechanism 213, which can reduce the effect of the pressure relief mechanism 213 on the electrode terminals 214 during pressure relief. Moreover, the pressure relief mechanism 213 and the bottom wall 102 are spaced apart, that is, the pressure relief mechanism 213 is not in contact with the bottom wall 102, thereby providing a larger pressure relief space for the pressure relief mechanism 213, reducing the risk caused by the discharge of emissions and improving the safety of battery 100.

In some optional embodiments, as shown in Figs. 18, 43 and 44, the orthographic projection of the pressure relief mechanism 213 on the bottom wall 102 of the accommodating cavity 10a is located between the orthogonal projections of the adjacent protective strips 41 on the bottom wall 102. When the battery cells 20 and the protective components 40 are matched, the pressure relief mechanism 213 can be disposed between the region where adjacent protective strips 41 and the battery cells 20 abut against each other. That is, the pressure relief mechanism 213 is disposed on the side close to the bottom wall 102 and does not come into contact with the protective assembly 40, so that in the case of an external impact, the impact force can be dispersed on the shoulders of the battery cell 20, preventing the pressure relief mechanism 213 from being damaged by the collision, thereby improving the safety of the battery 100.

In some embodiments, as shown in Fig. 42, along the length direction Y, the width D1 of the edge protective strip 411, the width D2 of the first protective strip 412, the width D3 of the second protective strip 413, and the width D4 of the shoulder 207 satisfy: 0.2D4 ≤ D1 ≤ D4, 0.5D4 ≤ D2 ≤ 2D4, 0.5D4 ≤ D3 ≤ 2D4.

Since the edge protective strip 411 is disposed at the edge of the array of battery cells 20, the edge protective strip 411 is only in contact with one side shoulder 207 of the edge battery cell 20 in the length direction Y, so that the width D1 of the edge protective strip 411 is less than or equal to the width D4 of the shoulder 207, which can prevent the edge protective strip 411 from coming into contact with the functional region 206 and affecting the function of the battery cell 20. If the width D1 of the edge protective strip 411 is greater than or equal to 0.2 times the width D4 of the shoulder 207, the edge protective strip 411 can provides sufficient support for the battery cells 20.

Since the first protective strip 412 is disposed between adjacent battery cells 20, the width D2 of the first protective strip 412 is greater than or equal to 0.5 times the extension width D4 of the shoulder 207, which can provide sufficient supporting force for the battery cells 20. Preferably, when the width D2 of the first protective strip 412 is greater than or equal to the extension width D4 of the shoulder 207, the first protective strip 412 can support two adjacent battery cells 2 at the same time, without the problem that only one battery cell can be supported due to offset to result in poor structural stability of the battery 100 due to uneven force. The width D2 of the first protective strip 412 is less than or equal to 2 times the width D4 of the shoulder 207, so that the first protective strip 412 can only be in contact with the shoulders 207 of two adjacent battery cells 20 while supporting the two adjacent battery cells 20, thereby avoiding coming into contact with the functional region 206 and affecting the function of the battery cells 20.

Similar to the first protective strip 412, the width D3 of the second protective strip 413 may be greater than or equal to 0.5 times the extension width D4 of the shoulder 207 and less than or equal to 2 times the width D4 of the shoulder 207.

In some embodiments, as shown in Figs. 41 and 42, the protective assembly 40 further includes a main plate 42. The main plate 42 is disposed between the protective strip 41 and the bottom wall 102 to absorb and disperse external impact forces in the horizontal direction. The protective strip 41 protrudes from the main plate 42 in the vertical direction, and the protective strip 41 can form a bump. For example, the box 10 includes a bottom cover 12, and the wall of the bottom cover 12 facing the battery cell 20 forms the bottom wall 102, and the main plate 42 is disposed between the protective strip 41 and the bottom cover 12.

By providing the main plate 42, multiple protective strips 41 in the protective assembly 40 can be combined into a whole. Furthermore, by providing the main plate 42 extending along the length direction Y, the force on the protective assembly 40 can also be dispersed, so as to increase the structural strength of the battery 100.

In some examples, the protective assembly 40 can also be called a carrying assembly, and the protective strip 41 can also be called a carrying strip, and the carrying assembly includes the main plate and the carrying strip.

Optionally, in order to avoid affecting the electrical connection between the battery cells 20, the protective assembly 40 may be an insulating member. It can be understood that the insulating member indicates that the protective assembly 40 may be made entirely of insulating materials, or may be an object whose surface is covered with an insulating material (such as an insulating coating) to exhibit insulating properties as a whole. When the protective assembly 40 is an object whose surface is covered with an insulating material, the core material can be a metallic material, an insulating material, a composite material, etc., and the outer surface of the core material is covered with an insulating material. At the same time, the protective strip 41 and the main plate 42 should have a certain degree of hardness and elasticity, so as to support the battery cells 20 while producing a certain amount of deformation when being impacted to protect the battery cells 20.

Optionally, the protective strip 41 and the main plate 42 can be integrally molded to facilitate the manufacture of the protective assembly 40. The protective strip 41 and the main plate 42 can also be detachably connected to each other to facilitate adjusting the position of the protective assembly 40 according to the arrangement of the battery cells 20, so that the protective assembly 40 can be used in a wider range of applications.

In some embodiments, the main plate 42 is fixedly connected to the bottom cover 12 to increase the structural solidity of the battery 100. Optionally, the main plate 42 can also abut against the bottom wall 102, for example, the main plate 42 abuts against the bottom cover 12, which is not limited in the embodiments of the present application.

In some embodiments, as shown in Fig. 16, there is a first distance H1 between the end cover 212 of the battery cell 2 and the bottom wall 102, and the first distance H1 satisfies 2mm < H1 < 30mm. When the wall of the bottom cover 12 facing the battery cell 20 forms the bottom wall 102, the distance between the end cover 212 of the battery cell 20 and the bottom cover 12 is also the first distance H1.

When the cover portion 12a of the bottom cover 12 protrudes from the bottom extension surface of the box 10 relative to the mounting portion 12b, the first distance H1 indicates the distance from the side of the battery cell 20 with electrode terminals and pressure relief mechanism to the cover portion 12a in the vertical direction Z. The first distance H1 satisfies 2mm < H1 < 30mm. Preferably, the first distance H1 satisfies 5mm ≤ H1 ≤ 20mm. Within this value range, it can ensure the battery 100 to have an appropriate volume, so that the battery 100 has good discharge performance.

In some embodiments, the ratio of the first distance H1 to the weight M2 of a single battery cell 20 satisfies 0.2mm/Kg < H1/M2 < 50mm/Kg.

The ratio H1/M2 of the first distance H1 to the weight M2 of a single battery cell 20 can indicate the energy density and structural strength of the battery 100. When the ratio of the first distance H1 to the weight M2 of a single battery cell 20 is too large, the energy density of the battery 100 will be too low. When the ratio of the first distance H1 to the weight M2 of a single battery cell 20 is too small, the structural strength of the battery 100 will be insufficient, which may lead to safety accidents in collisions. Therefore, H1/M2 satisfies 0.2mm/Kg < H1/M2 < 50mm/Kg. Preferably, H1/M2 satisfies 0.5mm/Kg ≤ H1/M2 ≤ 20mm/Kg. Within this value range, the battery 100 has good energy density and appropriate structural strength.

In order to verify that the battery 100 whose ratio H1/M2 of the first distance H1 to the weight M2 of a single battery cell 20 is within an appropriate range has good performance, exemplarily, the battery 100 is subjected to a collision test using the collision test apparatus A. As shown in Fig. 45, the collision test apparatus A includes an impact head A1, a launching device A2, and a rack A3. During the test, the battery 100 is placed on the rack A3, so that the impact head A1 is driven by the launching device A2 and collides with the battery 100 at a certain speed. The test conditions can be selected as follows: the collision direction is the vertical direction Z, the collision position is the weak point of the battery 100, and the collision energy is 90J.

Since the battery 100 is applied to an electrical apparatus such as the vehicle 1000, it is mounted on the vehicle 1000 through the top of the box 10, and the bottom of the battery 100 is impacted in the vertical direction Z to simulate the scene after mounting the battery 100 on the vehicle 1000. The weak point of the battery 100 refers to the position where the battery 100 is easily damaged. This point is often within a radius of 240mm from the geometric center of the battery 100. Collision on the weak point of the battery 100 can simulate the state of the battery 100 after the collision at a position with weak structural strength of the battery 100. The impact energy is 90J, which can be equivalent to the impact head A1 impacting the battery 100 at a speed of 4.2m/s. It is understandable that other impact energies can also be used to collide with the battery 100, for example, 120J (collision speed 4.9m/s) or 150J (collision speed 5.5m/s). During the actual experiment, one impact energy can be used to impact the battery 100 multiple times, or multiple impact energies can be used to impact the battery 100 multiple times.

After the battery 100 is impacted with the collision test apparatus A, it is observed at ambient temperature for 2 h to detect whether the battery 100 catches fire or explodes. Optionally, after the battery 100 is subjected to a collision test with the collision test apparatus A, the battery 100 can also be tested for the shell protection level, etc., which is not limited in the embodiments of the present application.

Table 7 shows the test results of the collision test performed on the battery 100 through the above method when the first distance H1, the weight M2 of a single battery cell 20, and the value of H1/M2 adopt different values.

Table 7

|  | H1(mm) | M2(mm) | H1/M2(mm/Kg) | Collision test |
|---|---|---|---|---|
| Embodiment 1 | 5 | 10 | 0.5 | No fire, no explosion |
| Embodiment 2 | 10 | 5 | 2 | No fire, no explosion |
| Embodiment 3 | 15 | 3 | 5 | No fire, no explosion |
| Embodiment 4 | 20 | 2 | 10 | No fire, no explosion |
| Embodiment 5 | 25 | 1 | 25 | No fire, no explosion |
| Comparative Embodiment 1 | 2 | 10 | 0.2 | Fire, explosion |
| Comparative Embodiment 2 | 30 | 1 | 30 | Fire, explosion |
| Comparative Embodiment 3 | 25 | 0.5 | 50 | Fire, explosion |

As shown in Table 7, when 2mm < H1 < 30mm is satisfied and H1/M2 satisfies 0.2mm/Kg < H1/M2 < 50mm/Kg, in a collision test of a certain intensity, the battery 100 will not catch fire or explode, and has good safety.

In some embodiments, as shown in Fig. 42, in the height direction Z (that is, the vertical direction) of the box 1, the extension height of the protective strip 41 is the second distance N6, and the second distance N6 satisfies 0.5mm ≤ N6 ≤ 30mm.

The protective strip 41 has a certain size in the height direction Z so that it can protrude from the main plate 42 and support the battery cell 20. The second distance N6 is set so that a certain distance can be kept between the end cover 212 of the battery cell 20 and the bottom wall 102, thereby keeping the energy density of the battery 100 moderate.

The ratio N6/M2 of the second distance N6 to the weight M2 of a single battery cell 20 can indicate the energy density and structural strength of the battery 100. When the ratio of the second distance N6 to the weight M2 of a single battery cell 20 is too large, the energy density of the battery 100 will be too low. When the ratio of the second distance N6 to the weight M2 of a single battery cell 20 is too small, the structural strength of the battery 100 will be insufficient and a safety accident may occur in a collision. Therefore, the ratio N6/M2 of the second distance N6 to the weight M2 of a single battery cell 20 satisfies 0.05mm/Kg < N6/M2 ≤ 50mm/Kg. Within this value range, the battery 100 has good energy density and appropriate structural strength.

In order to verify that the battery 100 with the ratio N6/M2 of the second distance N6 to the weight M2 of a single battery cell 20 within a suitable range has good performance, the battery 100 may be subjected to a structural strength test. During the structural strength test of the battery 100, exemplarily, the structural strength of the battery 100 may be judged through multiple tests such as a shear strength test and a compressive strength test.

In the shear strength test, exemplarily, the battery 100 can be fixed between the clamps of the shear testing machine, then the detection head of the shear testing machine is used to drive the battery 100 to move along the length direction Y or the width direction X at a speed of 5 mm/min, and the tensile force F exerted by the detection head when the box 1 is damaged is recorded. Taking the projected area of the battery 100 in the height direction Z as the area A, the value of F/A is the shear strength that the battery 100 can withstand.

In the compressive strength test, for example, an extrusion head can be used to apply pressure to the battery 100 in the height direction Z and the length direction Y or the width direction X. The extrusion head moves toward the battery 100 at a speed of 2 m/s, stops moving when the extrusion force reaches 50KN or the deformation of the battery 100 reaches 30%, and is kept for 10 min. After the compressive strength test, the battery 100 is allowed to stand at ambient temperature for 2 h for observation.

Optionally, the structural strength of the battery 100 can also be tested through other structural strength tests, which are not limited in the embodiments of the present application.

Table 8 shows the results of the structural strength of the battery 100 tested by the above method when the battery cell 20 is fixed on the protective strip 41 and the second distance N6, the weight M2 of a single battery cell 20 and the value of N6/M2 adopt different values.

Table 8

|  | N6(mm) | M2(Kg) | N6/M2(mm/Kg) | Structural strength |
|---|---|---|---|---|
| Embodiment 6 | 0.5 | 10 | 0.05 | Good |
| Embodiment 7 | 5 | 5 | 1 | Good |
| Embodiment 8 | 10 | 4 | 2.5 | Fair |
| Embodiment 9 | 10 | 2 | 5 | Fair |
| Embodiment 10 | 20 | 1 | 20 | Excellent |
| Embodiment 11 | 30 | 0.6 | 50 | Excellent |
| Comparative Embodiment 4 | 0.5 | 5 | 0.04 | Poor |
| Comparative Embodiment 5 | 52 | 1 | 52 | Poor |

As shown in Table 8, when N6 satisfies $0.5mm \le N6 \le 30mm$ and N6/M2 satisfies $0.05mm/Kg \le H2/M \le 50mm/Kg$, the battery 100 has good structural strength in the strength structure test.

In some embodiments, as shown in Figs. 42 and 44, in the vertical direction, the thickness of the protective strip 41 is the second distance N6, because the cover portion 12a of the bottom cover 12 protrudes from the extension surface of the bottom wall 102 relative to the mounting portion 12b, the distance between the cover portion 12a and the mounting portion 12b in the vertical direction is the fourth size D8. The protective assembly 40 is disposed between the battery cell 20 and the bottom cover 12. The protective assembly 40 may have a shape matching the cover portion 12a, and the vertical size of the main plate 42 is the sixth size D10.

In order for the battery 100 to have appropriate energy density and structural strength, the sum of the second distance N6 and the sixth size D10 should be not less than the fourth size D8, that is, $N6+D10 \ge D8$ is satisfied. That is to say, in the first direction X, the overall size of the protective assembly 40 should be larger than the distance difference between the cover portion 12a and the mounting portion 12b. In this way, the protective assembly 40 is fixed to the battery cell 20 to keep the distance between the battery cell 20 and the cover portion 12a of the bottom cover 12, and sufficient ejection space is reserved for the pressure relief mechanism 213 when the pressure relief mechanism 213 and the electrode terminal 214 face the bottom cover 12 together.

In some other optional embodiments, the protective assembly 40 abuts against the battery cell 20, and in this case, the second distance N6 satisfies $5mm \le N6 \le 30mm$, and the ratio N6/M2 of the second distance N6 to the weight M2 of a single battery cell 20 satisfies $0.5mm/Kg \le N6/M2 \le 50mm/Kg$, preferably, $1mm/Kg \le N6/M2 \le 30mm/Kg$. Within this value range, the battery has good energy density and appropriate structural strength.

Table 9 shows the results of the collision test performed on the battery 100 by the collision test method described above when the protective assembly 40 abuts against the battery cell 20 and the second distance N6, the weight M2 of a single battery cell 20 and the value of N6/M2 adopt different values.

Table 9

| No. | N6(mm) | M2(Kg) | N6/M2(mm/Kg) | Collision test |
|---|---|---|---|---|
| Embodiment 12 | 5 | 10 | 0.5 | No fire, no explosion |
| Embodiment 13 | 10 | 5 | 2 | No fire, no explosion |
| Embodiment 14 | 15 | 3 | 5 | No fire, no explosion |
| Embodiment 15 | 30 | 1 | 30 | No fire, no explosion |
| Embodiment 16 | 25 | 0.5 | 50 | No fire, no explosion |
| Comparative Embodiment 7 | 3 | 2 | 0.2 | Fire, explosion |
| Comparative Embodiment 8 | 52 | 1 | 52 | Fire, explosion |

As shown in Table 9, when N6 satisfies $5mm \leq N6 \leq 30mm$ and N6/M2 satisfies $0.5mm/Kg \leq N6/M2 \leq 50mm/Kg$, in a collision test of a certain intensity, the battery 100 will not catch fire or explode, and has good safety.

In some embodiments, as shown in Figs. 24 and 25, the battery 100 further includes a connecting plate 91 and a connector 92. The connecting plate 91 is provided on one side of the box 10 and protrudes along the horizontal direction (for example, the second direction y). The connecting plate 91 and the bottom wall 102 form an accommodating portion 911 in the vertical direction. The connector 92 is disposed in the accommodating portion 911 and connected to the connecting plate 91. The connector 92 is electrically connected to the battery cell 20.

Of course, the connecting plate 91 can also be called an adapter board, and the connector 92 can also be called an adapter.

As shown in Figs. 24 and 25, the connecting plate 91 is a boss protruding from one side of the box 10 in the second direction y, and has a thickness difference from the bottom wall 102 of the box 10 in the vertical direction z. The accommodating portion 911 is a space formed due to the thickness difference and constituted by the connecting surface of the connecting plate 91 and the side of the box 10 connected with it for the connector 92 to be disposed therein. Providing the connector 92 in the accommodating portion 911 can protect the connector 92 and reduce the impact force received by the connector 92 in a collision.

The battery 100 is electrically connected to an external device through the connector 92. Therefore, the connector 92 needs to be electrically connected to the battery cell 20. This indicates that the connector 92 is electrically connected to the battery cell 20 through a current path provided inside the connecting plate 91, so as to obtain the electric energy of the battery cells 20 in the box 10 and supply power to external electrical apparatuses.

Intersection of the horizontal direction and the vertical direction means that the connecting plate 91 can form a certain included angle with the extension direction of the box 10, but cannot be parallel to the box 10, so that the connector 92 can be arranged in the accommodating portion 911 between the connecting plate 91 and the box 10. In the embodiments of the present application, for convenience of explanation, the horizontal direction and the vertical direction are perpendicular to each other as an example; optionally, the horizontal direction and the vertical direction may not be perpendicular to each other.

In some embodiments, the connector 92 does not extend beyond the bottom wall 102 in the vertical direction. As a result, the connector 92 is completely located within the accommodating portion 911, avoiding contact with external devices located in the circumferential direction of the battery 100, and reducing the effect on the connector 92 as it electrically connects the battery cell 20 to the external device.

In some embodiments, the bottom wall of the box 10 is formed with an opening 10c. The box 10 further includes a frame 11b distributed along the circumference of the opening 10c. The frames 11b are connected to each other to form a frame structure, and the connecting plate 91 is integrally molded with the frame 11b.

In the box 10, the frame 11b and the carrying member 11a are arranged in sequence from top to bottom along the vertical direction. The frame 11b is a plate body extending in the vertical direction and surrounding the carrying member 11a. The opening 10c is formed at the bottom of the box 10 so that there is a space inside the box 10 that can accommodate the battery cells 20. The connecting plate 91 extends from one side of the frame 11b and is integrally molded with the frame 11b, thereby increasing the force-bearing strength of the connecting plate 91.

Optionally, the connecting plate 91 may not be integrally molded with the frame 11b, but may be fixedly connected to the frame 11b through at least one of welding, bonding, fasteners, or hot-melt self-tapping process. Similarly, the connecting plate 91 and the carrying member 11a, and the frame 11b and the carrying member 11a may also be integrally molded, or may be fixedly connected in the above manner, which is not limited in the embodiments of the present application.

In some embodiments of the present application, as shown in Figs. 24 and 25, the surface of the connecting plate 91 facing the accommodating portion 911 is the first protective surface 911a, the surface of the frame 11b facing the accommodating portion 911 is the second protective surface 911b, the connector 92 is connected to the first protective surface 911a, and the connector 92 is spaced apart from the second protective surface 911b.

That is to say, the first protective surface 911a is the side surface of the connecting plate 91 away from the top of the box 10, and the second protective surface 911b is the side surface of the frame 11b of the box 10 close to the connecting plate 91. The first protective surface 911a and the second protective surface 911b are connected to form the accommodating portion 911. The connector 92 extends from the first protective surface 911a in the vertical direction to be overhung in the accommodating portion 911 and is not in contact with the second protective surface 911b, so as to reduce the impact that the connecting plate 91 may receive in a collision.

Optionally, the first protective surface 911a and the second protective surface 911b may be perpendicularly connected to each other, that is, the first protective surface 911a extends along the second direction (the arrangement direction of the multiple battery cells 20), and the second protective surface 911b extends in the vertical direction, so that the first protective surface 911a and the second protective surface 911b are perpendicular to each other, thereby increasing the mounting space of the connector 92 and maximizing the accommodating portion 911.

In some embodiments, as shown in Figs. 24 and 25, in the vertical direction z, the thickness of the connecting plate 91 is the first size D5, the extension height of the connector 92 is the second size D6, and the extension height of the frame 11b is the third size D7. The sum of the first size D5 and the second size D6 is not greater than the third size D7, that is, $D5+D6 \leq D7$, which enables the connector 92 to be completely located in the accommodating portion 911, thereby protecting the connector 92.

In some optional embodiments, the connector 92 may extend along the vertical direction Z and faces the extension surface where the bottom wall 102 of the box 10 is located. Adopting this structure can facilitate the electrical connection between the connector 92 and the external device, and compared with arranging the connector 92 in the horizontal direction, the connector 92 has better force-bearing performance.

In some embodiments, as shown in Figs. 11, 26 and 27, the box 10 further includes a bottom cover 12 disposed at the opening 10c, and the bottom cover 12 is connected to the frame 11b. The bottom cover 12 covers the opening 10c, so that the box 100 has a relatively sealed structure. The bottom cover 12 includes a cover portion 12a and a mounting portion 12b. The mounting portion 12b is provided in the circumferential direction of the cover portion 12a and matches the frame 11b. That is to say, the cover portion 12a covers the opening 10c formed by the frame 11b, and the mounting portion 12b is fixed to the frame 11b to connect the bottom cover 12 and the frame 11b.

In the vertical direction z, the cover portion 12a protrudes from the extension surface of the bottom wall 102 relative to the mounting portion 12b, so that there is a relatively larger distance between the battery cells 20 disposed inside the box 10 and the bottom cover 12, to give room to the bus component 24 or other components between the electrode terminals 214 of the battery cells 20 to prevent the bottom cover 12 from being too close to the electrode terminals 214 of the battery cells 20. It should be understood that the protruding distance of the cover portion 12a relative to the mounting portion 12b should be selected based on the energy density of the battery 100, and it should not be too large to increase the volume of the battery 100 and reduce the energy density of the battery 100.

In addition, when the pressure relief mechanism 213 is disposed toward the bottom wall of the accommodating cavity 10a, the pressure relief mechanism 213 can be disposed toward the opening 10c. When the battery cell 2 is thermally runaway, the pressure relief mechanism 213 erupts toward the bottom cover 12. In this case, the structure in which the cover portion 12a protrudes from the extension surface of the bottom 102 relative to the mounting portion 12b enables the pressure relief mechanism 213 to have a larger eruption space. Moreover, the pressure relief mechanism 213 erupts toward the bottom, that is, the eruption direction is toward the ground, which can increase the safety of the battery 100.

In some embodiments, the bottom cover 12 is detachably connected to the frame 11b to facilitate the assembly of the battery 100. Exemplarily, as shown in Figs. 26 and 27, the bottom cover 12 and the frame 11b are detachably connected through fasteners 13 such as bolts. The bottom cover 12 and the frame 11b can also be fixedly connected in other ways, which is not limited in the embodiments of the present application.

In some embodiments, the box 10 includes a carrying member 11a disposed on the top, and the battery cells 2 are connected to the carrying member 11a.

The carrying member 11a is a plate body extending in the second direction y on the top of the box 10. The carrying member 11 can increase the rigidity of the top of the battery 100 and reduce the possibility of the battery 100 being damaged in a collision. Connecting the battery cell 20 to the carrying member 11a, that is, disposing the battery cell 20 on the top of the battery 100, can increase the rigidity of the top of the battery 100, reduce the possibility of damage to the battery 100 in a collision, and increase the safety of the battery 100.

Optionally, the battery cell 20 can be directly bonded and fixed to the carrying member 11a, or can be fixed to the carrying member 11a in other ways, such as by bolted connection, which is not limited in the embodiments of the present application.

In some embodiments, as shown in Figs. 24 and 25, the side surface of the connecting plate 91 away from the accommodating portion 911 and the side surface of the carrying member 11a away from the opening 10c are located on the same horizontal plane. That is to say, the side surfaces of the connecting plate 91 and the carrying member 11a at the top of the box 11 are located on the same plane. When the battery 100 is fixed to an external device, the connecting plate 91 and the carrying member 11a can be fixed to the same surface of the external device. Moreover, the side surfaces of the connecting plate 91 and the carrying member 11a being on the same horizontal plane can increase the force-bearing strength of both of them, so that the battery 100 has better force-bearing capacity.

The connecting plate 91 protrudes toward the extension surface of the bottom wall 102 along the vertical direction z, that is, the connecting plate 91 has a certain thickness in the vertical direction. In a collision, the side of the connecting plate 91 away from the box 10 may bear a certain impact force, so that the connecting plate 91 has a certain thickness, which can increase the stiffness of the connecting plate 91 and better protect the connector 92.

Optionally, the connecting plate can be integrally molded with the box 10, or the connecting plate can be positioned and connected to the box 10 through fixed connection methods such as welding connection, bonding connection or FDS connection, which is not specifically limited in the present application.

In some embodiments, as shown in Figs. 11 and 18, the battery 100 includes battery cells 20 and a reinforcing member 30. A carrying member 11a is provided on the top of the box 10, and multiple battery cells 20 are arranged along the second direction y, that is, the second direction y is the arrangement direction of a row of battery cells 20 in the battery 100.

The battery cell 20 includes a first wall 201 and a first outer surface m1. The first wall 201 is the wall with the largest surface area in the battery cell 20. The first outer surface m1 is connected to the first wall 201. The reinforcing member 30 extends along the second direction y and is connected to the first wall 201 of each battery cell 20 in the multiple battery cells 20. In this way, the contact area between the reinforcing member 30 and the battery cell 20 is larger, which can ensure the connection strength between the reinforcing member 30 and the battery cell 20. That is to say, the first wall 201 of the battery cell 20 faces the reinforcing member 30, that is, the first wall 201 of the battery cell 20 is parallel to the second direction y.

The carrying member 11a is connected to the first outer surface m1 of each battery cell 20 in the multiple battery cells 20. When the battery cell 20 is mounted on an electrical apparatus, the battery cell 20 is located below the carrying member 11a, and the carrying portion 11a is used to hang the battery cell 20.

The carrying member 11a may be the upper cover of the box 10 of the battery 100, or may be a part of the electrical apparatus, such as the chassis of a vehicle 1000. When the carrying member 11a is the chassis of the vehicle 1000, the first outer surface m1 of the battery cell 20 is connected to the carrying member 11a, that is, the first outer surface m1 of the battery cell 20 is connected to the chassis surface of the vehicle 1000. The battery cells 20 are directly connected to the chassis of the vehicle, so that there is no need to provide the upper cover of the box of the battery 100, which saves the space occupied by the upper cover of the box of the battery 100, improves the space utilization of the battery 100, thereby improving the energy density of the battery 10.

In the embodiments of the present application, in the battery 100, the reinforcing member 30 is connected to the first wall 201 with the largest surface area of each battery cell 20 in a row of multiple battery cells 20 arranged along the second direction y, and the multiple battery cells 20 are connected into a whole through the reinforcing member 30. In this case, the battery 100 does not need to be provided with side plates or structures such as beams, which can maximize the space utilization inside the battery 100 and improve the structural strength and energy density of the battery 100. In the battery 10, the carrying member 11a is also connected to the first outer surface m1 of each battery cell 20 of the multiple battery cells 20 arranged along the second direction y, and the first outer surface m1 is connected to the first wall 201. When the battery cell 20 is mounted on an electrical apparatus, the battery cell 20 is located below the carrying member 11a and is hung from the carrying member 11a. In this way, the first outer surface m1 of the battery cell 20 is directly connected to the carrying member 11a, and no space is required between the carrying member 11a and the battery cell 20, further improving the space utilization inside the battery 10 and increasing the energy density of the battery 100. Also, the battery cells 20 are hung from the carrying member 11a, which can improve the structural strength of the battery 100. Therefore, the technical solutions of the embodiments of the present application can improve the performance of the battery 100.

In this case, the electrode terminal 214 can be arranged on the outer surface of the battery cell 20 except the first outer surface m1, that is, the electrode terminal 214 is disposed on the wall that is not the carrying member 11a, so that there is no need to reserve space between the battery cell 20 and the carrying member 11a for the electrode terminals 214, thereby greatly improving the space utilization inside the battery 100 and increasing the energy density of the battery 100. In the examples of Figs. 10, 18 and 46 (a), the electrode terminal 214 is arranged on the second outer surface m2 of the battery cell 20 that is opposite to the first outer surface m1 along the vertical direction z. In the example of Fig. 46 (b), the electrode terminal 214 is arranged on the side wall of the battery cell 20 perpendicular to the second direction y.

In some embodiments, the size T1 of the reinforcing member 30 in the first direction x and the size T2 of the battery cell 20 in the first direction x satisfy $0 < T1/T2 \leq 7$.

When T1/T2 is too large, the reinforcing member 30 occupies a large space, which affects the energy density. In addition, the reinforcing member 30 conducts heat for the battery cell 20 too quickly, which may also cause safety problems. For example, thermal runaway of one battery cell 20 may cause thermal runaway of other battery cells 20

48

connected to the same reinforcing member 30. In the case of $0 < T1/T2 \leq 7$, the energy density of the battery 100 and the safety performance of the battery 100 can be guaranteed.

Optionally, $0 < T1/T2 \leq 1$ is further satisfied in order to further improve the energy density of the battery 100 and guarantee the safety performance of the battery 100.

Optionally, the weight M3 of the reinforcing member 30 and the weight M2 of the battery cell 20 satisfy $0 < M3/M2 \leq 20$. When M3/M2 is too large, the gravimetric energy density will be lost. In the case of $0 < M3/M2 \leq 20$, the gravimetric energy density of the battery 100 and the safety performance of the battery 100 can be guaranteed.

Further optionally, $0.1 \leq M3/M2 \leq 1$ is satisfied in order to further improve the energy density of the battery 100 and guarantee the safety performance of the battery 100.

In some embodiments, the area S3 of the surface of the reinforcing member 30 connected to the first walls 201 of the plurality of battery cells 20 and the area S4 of the first walls 201 satisfy: $0.2 \leq S3/S4 \leq 30$.

S3 is the total area of one side surface of the reinforcing member 30 connected to the battery cells 20. When S3/S4 is too large, it will affect the energy density. When S3/S4 is too small, the heat conduction effect is too poor, which affects the safety performance. When $0.2 \leq S3/S4 \leq 30$, the energy density of the battery 10 and the safety performance of the battery 10 can be guaranteed.

Optionally, $2 \leq S3/S4 \leq 10$ is further satisfied to further improve the energy density of the battery 10 and guarantee the safety performance of the battery 10.

Optionally, the specific heat capacity Q of the reinforcing member 30 and the weight M3 of the reinforcing member 30 satisfy: $0.02KJ/(kg^2/°C) \leq Q/M3 \leq 100KJ/(kg^2/°C)$. When $Q/M3 < 0.02KJ/(kg^2/°C)$, the reinforcing member 30 will absorb more energy, resulting in too low temperature of the battery cells 20, which may lead to lithium precipitation; and when $Q/M3 > 100KJ/(kg^2/°C)$, the thermal conductivity of the reinforcing member 30 is poor, and the heat cannot be taken away in time. The above arrangement can ensure the safety performance of the battery 100.

Further, if $0.3KJ/(kg^2/°C) \leq Q/M3 \leq 20KJ/(kg^2/°C)$, the safety performance of the battery 100 is further improved.

In some embodiments, as shown in Fig. 41, the top of the box 10 is provided with a carrying member 11a, and the bottom of the box 10 is provided with a protective assembly 40. The carrying member 11a is fixedly connected to the battery cell 20, and the protective assembly 40 is fixedly connected to the battery cell 20, so as to fix the position of the battery cell 20 and enhance the structural stability of the battery 100.

In this case, both the carrying member 11a and the protective assembly 40 may also be called a supporting plate.

Optionally, the battery cell 20 can be directly bonded to the carrying member 11a and the protective assembly 40 through adhesive, or can be fixedly connected to the carrying member 11a and the protective assembly 40 in other ways.

For ordinary battery cells, the pressure relief mechanism is welded to the battery casing to fix the pressure relief mechanism to the battery casing, and when the battery cell is thermally runaway, the pressure relief mechanism is used to release the internal pressure of the battery cell to improve the safety of the battery cell. Taking the pressure relief mechanism as a rupture disc mounted on the end cover of the battery casing as an example, when the battery cell is thermally runaway, the rupture disc is destroyed to discharge the emissions inside the battery cell to achieve the purpose of releasing the internal pressure of the battery cell. Since the pressure relief mechanism is welded to the battery casing, cracks may appear at the welding position during long-term use of the battery cell, resulting in a reduction in the strength of the welding position, and it is easy to happen that the welding position is damaged when the pressure inside the battery cell does not reach the initiation pressure of the pressure relief mechanism, leading to failure of the pressure relief mechanism and low reliability of the pressure relief mechanism.

In order to improve the reliability of the pressure relief mechanism, the inventor found through research that the pressure relief mechanism and the battery casing of the battery cell can be an integrally molded structure, that is, a part of the battery casing is used as the pressure relief mechanism. For example, part of the end cover is weakened, so that the strength of that part of the end cover is reduced and a weak region is formed, thereby forming an integrated pressure relief mechanism. In this way, the reliability of the pressure relief mechanism can be effectively improved.

Therefore, in some embodiments, as shown in Figs. 48-83, the battery cell 20 further includes a battery casing 21, the electrode assembly 22 is accommodated in the battery casing 21, the battery casing 21 is provided with a pressure relief mechanism 213, the pressure relief mechanism 213 is integrally molded with the battery casing 21 to improve the reliability of the pressure relief mechanism 213.

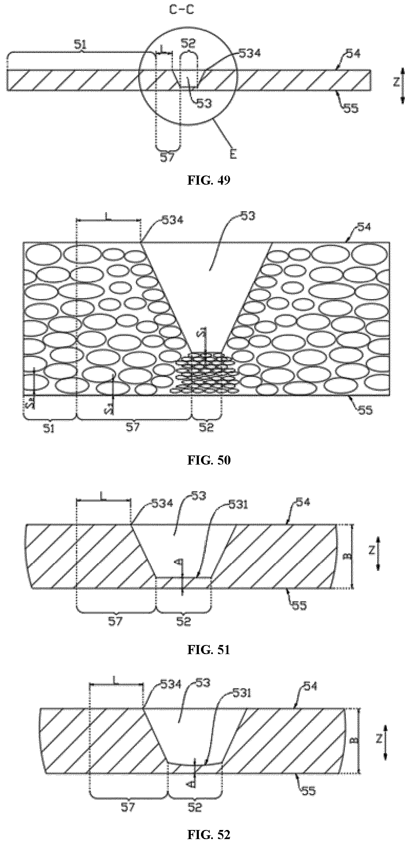

In some embodiments, as shown in Figs. 48 and 49, the battery casing 21 includes an integrally molded non-weak region 51 and a weak region 52. The battery casing 21 is provided with a grooved portion 53, the non-weak region 52 is formed around the grooved portion 53, the weak region 52 is formed at the bottom of the grooved portion 53, and the weak region 52 is configured to be destroyed when the battery cell 20 releases the internal pressure. The pressure relief mechanism 213 includes the weak region 52 to further ensure the reliable use of the pressure relief structure 213.

The battery casing 21 is a component that can accommodate the electrode assembly 22 together with other components. The battery casing 21 is a part of the shell of the battery cell 20. The end cover (or called cover plate) of the shell can be the battery casing 21, or the case 211 of the shell can be the battery casing 21. The battery casing 21 may be made of metal, such as copper, iron, aluminum, steel, aluminum alloy, etc. The battery casing 21 may be made of aluminum plastic film.

The weak region 52 is a weaker part of the battery casing than other regions. When the internal pressure of the battery cell 20 reaches a threshold, the weak region 52 of the battery casing 21 can be destroyed to release the internal pressure of the battery cell 20. The weak region 52 can be damaged by rupture, detachment, etc. For example, when the internal pressure of the battery cell 20 reaches a threshold, the weak region 52 ruptures under the action of emissions (gas, electrolyte solution, etc.) inside the battery cell 20 so that the emissions inside the battery cell 20 can be discharged smoothly. The weak region 52 can be in various shapes, such as rectangle, circle, ellipse, ring, arc, U-shape, H-shape, etc. The thickness of the weak region 52 may be uniform or non-uniform.

The weak region 52 is formed at the bottom of the grooved portion 53, and the grooved portion 53 can be molded by stamping, so that the weak region 52 and the non-weak region 51 are integrally molded. After the grooved portion 53 is molded by stamping on the battery casing, the battery casing is thinned in the region where the grooved portion 53 is provided, and the weak region 52 is formed correspondingly. The grooved portion 53 may be one stage of grooves. Along the depth direction of the grooved portion 53, the groove side surface of the grooved portion 53 is continuous. For example, the grooved portion 53 is a groove whose internal space is in the shape of a cuboid, a cylinder, or the like. The grooved portion 53 may also be multiple stages of grooves. The multiple stages of grooves are arranged along the depth direction of the grooved portion 53. Among adjacent two stages of grooves, the inner (deeper position) stage of grooves are provided at the groove bottom surface of the outer (shallower position) stage of grooves. For example, the grooved portion 53 is a stepped groove. During molding, multiple stages of grooves can be formed by stamping step by step along the depth direction of the grooved portion 53, and the weak region 52 is formed at the bottom of the stage of grooves located at the deepest position (innermost) of the multiple stages of grooves.

The non-weak region 51 is formed around the grooved portion 53. The strength of the non-weak region 51 is greater than the strength of the weak region 52. The weak region 52 is more easily damaged than the non-weak region 51. When the grooved portion 53 is formed on the battery casing by stamping, the non-weak region 51 may be the unstamped part of the battery casing. The thickness of the non-weak region 51 may be uniform or non-uniform.

The measurement method of the average grain size can be found in the intercept point method in GB6394-2017, which will not be repeated here. When measuring the average grain size of the weak region 52, the measurement can be performed along the thickness direction of the weak region 52; when measuring the average grain size of the non-weak region 51, the measurement can be performed along the thickness direction of the non-weak region 51.

In Fig. 49, the thickness direction of the weak region 52 is consistent with the thickness direction of the non-weak region 51, both of which are the z direction.

The inventor also noticed that after forming an integrated pressure relief mechanism on the battery casing, the weak region of the battery casing has poor mechanical properties. Under normal use conditions of the battery cells, the weak regions are prone to fatigue damage due to the long-term change of internal pressure of the battery cells, which affects the service life of the battery cells.

For this reason, in some embodiments, the average grain size of the weak region 52 is $S_1$, and the average grain size of the non-weak region 51 is $S_2$, which satisfies: $0.05 \le S_1/S_2 < 0.9$.

In the embodiments of the present application, the weak region 52 and the non-weak region 51 are integrally molded, which has good reliability. Since it satisfies $S_1/S_2 < 0.9$, the average grain size of the weak region 52 is quite different from the average grain size of the non-weak region 51, the average grain size of the weak region 52 is reduced to refine the grains of the weak region 52, which improves the material mechanical properties of the weak region 52, improve the toughness and fatigue resistance of the weak region 52, reduce the risk of the weak region 52 being damaged under normal use conditions of the battery cell 20, and improve the service life of the battery cell 20.

In the case of $S_1/S_2 < 0.05$, the molding difficulty of the weak region 52 increases, and the strength of the weak region 52 is too large, it becomes more difficult for the weak region 52 to be destroyed when the battery cell 20 is thermally runaway, and it is easy to cause untimely pressure relief.

Therefore, in the case of $S_1/S_2 \ge 0.05$, it reduces the difficulty of forming the weak region 52 and improves the timeliness of pressure relief of the battery cell 20 when thermal runaway occurs.

For example, $S_1/S_2$ can be any one of 0.01, 0.03, 0.04, 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, or a range value between any two of them.

In some embodiments, $0.1 \le S_1/S_2 < 0.5$ makes the overall performance of the battery casing 21 better and ensures that the weak region 52 has sufficient strength under normal service conditions of the battery cell 20 while ensuring that the weak region 52 can be destroyed in time when the battery cell 20 is thermally runaway.

For example, $S_1/S_2$ can be any one of 0.1, 0.12, 0.15, 0.17, 0.2, 0.22, 0.25, 0.27, 0.3, 0.32, 0.35, 0.37, 0.4, 0.42, 0.45, 0.47, 0.5, or a range value between any two of them.

In some embodiments, it satisfies $0.4\mu m \le S_1 \le 75\mu m$.

$S_1$ can be any one of $0.4\mu m$, $0.5\mu m$, $1\mu m$, $2\mu m$, $3\mu m$, $4\mu m$, $5\mu m$, $10\mu m$, $15\mu m$, $20\mu m$, $25\mu m$, $28\mu m$, $30\mu m$, $35\mu m$, $36\mu m$, $40\mu m$, $45\mu m$, $49\mu m$, $50\mu m$, $55\mu m$, $60\mu m$, $65\mu m$, $70\mu m$, $72\mu m$, $75\mu m$, or a range value between any two of them.

The inventor observes that in the case of $S_1 > 75 \mu m$, the toughness and the fatigue resistance of the weak region 52 are poor; in the case of $S_1 < 0.4 \mu m$, the forming difficulty of the weak region 52 is relatively large, and the strength of the weak region 52 is too large, it becomes more difficult for the weak region 52 to be destroyed when the battery cell 20 is thermally runaway, and it is easy to cause untimely pressure relief.

Therefore, in the case of $0.4 \mu m \leq S_1 \leq 75 \mu m$, on the one hand, it reduces the difficulty of forming the weak region 52 and improves the timeliness of pressure relief of the battery cell 20 when thermal runaway occurs; on the other hand, it improves the toughness and fatigue resistance of the weak region 52, reducing the risk of the weak region 52 being damaged under normal use of the battery cell 20.

In some embodiments, it satisfies $1 \mu m \leq S_1 \leq 10 \mu m$.

$S_1$ can be any one of $1 \mu m$, $1.5 \mu m$, $1.6 \mu m$, $2 \mu m$, $2.5 \mu m$, $2.6 \mu m$, $3 \mu m$, $3.5 \mu m$, $3.6 \mu m$, $4 \mu m$, $4.5 \mu m$, $4.6 \mu m$, $5 \mu m$, $5.5 \mu m$, $5.6 \mu m$, $6 \mu m$, $6.5 \mu m$, $6.6 \mu m$, $7 \mu m$, $7.5 \mu m$, $7.6 \mu m$, $8 \mu m$, $8.5 \mu m$, $8.6 \mu m$, $9 \mu m$, $9.5 \mu m$, $9.6 \mu m$, $10 \mu m$, or a range value between any two of them.

In the embodiment, $1 \mu m \leq S_1 \leq 10 \mu m$ makes the overall performance of the battery casing 21 better and ensures that the weak region 52 has sufficient strength under normal service conditions of the battery cell 20 while ensuring that the weak region 52 can be destroyed in time when the battery cell 20 is thermally runaway.

In some embodiments, it satisfies $10 \mu m \leq S_2 \leq 150 \mu m$.

$S_2$ can be any one of $10 \mu m$, $15 \mu m$, $20 \mu m$, $25 \mu m$, $30 \mu m$, $35 \mu m$, $40 \mu m$, $45 \mu m$, $50 \mu m$, $55 \mu m$, $60 \mu m$, $65 \mu m$, $70 \mu m$, $75 \mu m$, $80 \mu m$, $85 \mu m$, $90 \mu m$, $95 \mu m$, $100 \mu m$, $105 \mu m$, $110 \mu m$, $115 \mu m$, $120 \mu m$, $125 \mu m$, $130 \mu m$, $135 \mu m$, $140 \mu m$, $145 \mu m$, $150 \mu m$, or a range value between any two of them.

Further, it satisfies $30 \mu m \leq S_2 \leq 100 \mu m$.

$S_2$ can be any one of $30 \mu m$, $32 \mu m$, $35 \mu m$, $37 \mu m$, $40 \mu m$, $42 \mu m$, $45 \mu m$, $47 \mu m$, $50 \mu m$, $52 \mu m$, $55 \mu m$, $57 \mu m$, $60 \mu m$, $62 \mu m$, $65 \mu m$, $67 \mu m$, $70 \mu m$, $72 \mu m$, $75 \mu m$, $77 \mu m$, $80 \mu m$, $82 \mu m$, $85 \mu m$, $87 \mu m$, $90 \mu m$, $92 \mu m$, $95 \mu m$, $97 \mu m$, $100 \mu m$, or a range value between any two of them.

In some embodiments, the minimum thickness of the weak region is $A_1$, which satisfies: $1 \leq Ai/Si < 100$.

$A_1/S_1$ can be any one of 1, 2, 4, 5, 10, 15, 20, 21, 22, 23, 25, 30, 33, 34, 35, 37, 38, 40, 45, 50, 55, 60, 65, 70, 75, 80, 85, 90, 93, 94, 95, 100, or a range value between any two of them.

In the case of $A_1/S_1 < 1$, in the thickness direction of the weak region 52, the number of grain layers of the weak region 52 is too small, the fatigue strength of the weak region 52 is too small; in the case of $A_1/S_1 > 100$, in the thickness direction of the weak region 52, the number of grain layers of the weak region 52 is too large, and the strength of the weak region 52 is too large, which easily leads to the risk that the weak region 52 cannot be damaged in time when the battery cell 20 is thermally runaway.

Therefore, in the case of $1 \leq Ai/Si \leq 100$, on the one hand, it makes the weak region 52 have more grain layers in the thickness direction, improves the fatigue resistance of the weak region 52, and reduces the risk of the weak region 52 being damaged under the normal use of the battery cell 20; on the other hand, it makes that the weak region 52 can be destroyed in a more timely manner when the battery cell 20 is thermally runaway, so as to achieve the purpose of timely pressure relief.

In some embodiments, it satisfies $5 \leq Ai/Si \leq 20$.

$Ai/Si$ can be any one of 5, 5.5, 6, 6.5, 7, 7.5, 8, 8.5, 9, 9.5, 10, 10.5, 11, 11.5, 12, 12.5, 13, 13.5, 14, 14.5, 15, 15.5, 16, 16.5, 17, 17.5, 18, 18.5, 19, 19.5, 20, or a range value between any two of them.

In the embodiment, $5 \leq Ai/Si \leq 20$ makes the overall performance of the battery casing better and ensures that the weak region 52 can be destroyed in time when the battery cell 20 is thermally runaway, and ensures that the weak region 52 has sufficient fatigue resistance under normal service conditions of the battery cell 20, which increases the service life of the battery cell 20.

In some embodiments, the minimum thickness of the weak region is $A_1$, and the hardness of the weak region is $Bi$, which satisfies: $5HBW/mm \leq Bi/Ai \leq 10000HBW/mm$.

$Bi/Ai$ can be any one of 5HBW/mm, 6HBW/mm, 7HBW/mm, 20HBW/mm, 50HBW/mm, 61HBW/mm, 62HBW/mm, 63HBW/mm, 64HBW/mm, 75HBW/mm, 90HBW/mm, 100HBW/mm, 120HBW/mm, 150HBW/mm, 190HBW/mm, 500HBW/mm, 1000HBW/mm, 1200HBW/mm, 1750HBW/mm, 1800HBW/mm, 2100HBW/mm, 4000HBW/mm, 5000HBW/mm, 8000HBW/mm, 9000HBW/mm, 10000HBW/mm, or a range value between any two of them.

The hardness of the weak region 52 is Brinell hardness in HBW. The measurement method of Brinell hardness can be implemented by referring to the measurement principles in GB/T23.1-2018. During the actual measurement process, the hardness of the weak region 52 can be measured on the inner surface or the outer surface of the weak region 52 in the thickness direction. Taking the battery casing as the end cover 11 of the battery cell 20 as an example, the hardness of the weak region 52 can be measured on the outer surface of the weak region 52 away from the inside of the battery cell 20, and the hardness of the weak region 52 can also be measured on the inner surface of the weak region 52 facing the inside of the battery cell 20.

In the case of $Bi/Ai > 10000HBW/mm$, the weak region 52 is thin and has a large hardness, which results in the weak region 52 being very thin and brittle, the weak region 52 being easily damaged under normal service conditions of the battery cell 20, and the service life of the battery cell 20 being short. In the case of $B_i/A_i < 5HBW/mm$, the weak region 52 is thick and has low hardness, and when the battery cell 20 is thermally runaway, the weak region 52 will be stretched and extended and the timeliness of pressure relief will be poor.

In the embodiment, not only the influence of the thickness of the weak region 52 on the performance of the battery casing is taken into consideration, but also the influence of the hardness of the weak region 52 on the performance of the battery casing is taken into consideration. In the case of $5HBW/mm \leq B_i/A_i \leq 10000HBW/mm$, the weak region 52 can have sufficient strength under the normal use conditions of the battery cell 20, the weak region 52 will not be easily damaged due to fatigue, and the service life of the battery cell 20 can be improved; it also enables timely pressure relief of the battery casing through the weak region 52 in case of thermal runaway of the battery cell 20, which reduces the risk of explosion of the battery cell 20 and improves the safety of the battery cell 20.

In some embodiments, it satisfies $190HBW/mm \leq B_i/A_i \leq 4000HBW/mm$.

$B_i/A_i$ can be any one of 190HBW/mm, 250HBW/mm, 280HBW/mm, 300HBW/mm, 350HBW/mm, 400HBW/mm, 450HBW/mm, 500HBW/mm, 600HBW/mm, 700HBW/mm, 875HBW/mm, 1000HBW/mm, 1200HBW/mm, 1500HBW/mm, 1750HBW/mm, 1800HBW/mm, 2000HBW/mm, 2100HBW/mm, 2500HBW/mm, 3000HBW/mm, 3500HBW/mm, 4000HBW/mm, or a range value between any two of them.

In the embodiment, $190HBW/mm \leq B_i/A_i \leq 4000HBW/mm$ makes the overall performance of the battery casing better and ensures that the weak region 52 has sufficient strength under normal service conditions of the battery cell 20 while ensuring that the weak region 52 can be destroyed in time when the battery cell 20 is thermally runaway. On the premise of ensuring the safety of the battery cell 20, the service life of the battery cell 20 is increased.

In some embodiments, it satisfies $0.02mm \leq A_1 \leq 1.6mm$.

$A_1$ can be any one of 0.02mm, 0.04mm, 0.05mm, 0.06mm, 0.1mm, 0.15mm, 0.2mm, 0.25mm, 0.3mm, 0.35mm, 0.4mm, 0.45mm, 0.5mm, 0.55mm, 0.6mm, 0.7mm, 0.75mm, 0.8mm, 0.85mm, 0.9mm, 0.95mm, 1mm, 1.05mm, 1.1mm, 1.15mm, 1.2mm, 1.25mm, 1.3mm, 1.35mm, 1.4mm, 1.42mm, 1.43mm, 1.45mm, 1.47mm, 1.5mm, 1.55mm, 1.6mm, or a range value between any two of them.

In the case of $A_1 < 0.02mm$, the forming of the weak region 52 is difficult, and the weak region 52 is easy to be damaged in the forming process; when the weak region 52 is > 1.6mm, it becomes more difficult for the weak region 52 to be destroyed when the battery cell 20 is thermally runaway, and it is easy to cause untimely pressure relief.

Therefore, in the case of $0.02mm \leq A_1 \leq 1.6mm$, it improves the timeliness of pressure relief of the battery cell 20 when thermal runaway occurs while reducing the difficulty of forming the pressure relief region 56 of the battery casing.

In some embodiments, it satisfies $0.06mm \leq A_1 \leq 0.4mm$.

$A_1$ can be any one of 0.06mm, 0.07mm, 0.08mm, 0.1mm, 0.15mm, 0.18mm, 0.2mm, 0.25mm, 0.3mm, 0.35mm, 0.4mm, or a range value between any two of them.

In the embodiment, in the case of $0.06mm \leq A_1 \leq 0.4mm$, it further reduces the difficulty of forming the weak region 52 and improves the timeliness of pressure relief of the battery cell 20 when thermal runaway occurs.

In some embodiments, the hardness of the weak region is $B_i$, and the hardness of the non-weak region is $B_2$, which satisfies: $1 < B_1/B_2 < 5$.

The hardness of the non-weak region 51 is Brinell hardness in HBW. During the actual measurement process, the hardness of the non-weak region 51 can be measured on the inner surface or the outer surface of the non-weak region 51 in the thickness direction. Taking the battery casing as the end cover 11 of the battery cell 20 as an example, the hardness of the non-weak region 51 can be measured on the outer surface of the non-weak region 51 away from the inside of the battery cell 20, and the hardness of the non-weak region 51 can also be measured on the inner surface of the non-weak region 51 facing the inside of the battery cell 20.

In the embodiment, $B_1 > B_2$ is satisfied, which is equivalent to increasing the hardness of the weak region 52, thereby increasing the strength of the weak region 52 and reducing the risk of the weak region 52 being destroyed under normal use conditions of the battery cell 20.

$B_1/B_2$ can be any one of 1.1, 1.5, 2, 2.5, 3, 3.5, 3.6, 4, 4.5, 5, or a range value between any two of them.

In the case of $B_1/B_2 > 5$, it may be possible to cause the hardness of the weak region 52 to be too high, and the weak region 52 may be difficult to be destroyed when the battery cell 20 is thermally runaway.

Therefore, $B_1/B_2 \leq 5$ reduces the risk that the weak region 52 cannot be destroyed in time when the battery cell 20 is thermally runaway, and improves the safety of the battery cell 20.

In some embodiments, it satisfies $B_1/B_2 \leq 2.5$.

$B_1/B_2$ can be any one of 1.1, 1.11, 1.12, 1.2, 1.25, 1.3, 1.4, 1.5, 1.6, 1.7, 1.71, 1.72, 1.8, 1.9, 2, 2.1, 2.2, 2.3, 2.4, 2.5 or a range value between any two of them.

In the embodiment, $B_1/B_2 \leq 2.5$ can further reduce the risk that the weak region 52 cannot be destroyed in time when the battery cell 20 is thermally runaway.

In some embodiments, it satisfies $5HBW \leq B_2 \leq 150HBW$.

$B_2$ can be any one of 5HBW, 8HBW, 9HBW, 9.5HBW, 10HBW, 15HBW, 16HBW, 19HBW, 20HBW, 30HBW, 40HBW, 50HBW, 52HBW, 52.5HBW, 53HBW, 60HBW, 70HBW, 90HBW, 100HBW, 110HBW, 120HBW, 130HBW, 140HBW, 150HBW, or a range value between any two of them.

In some embodiments, it satisfies $5HBW \leq B_1 \leq 200HBW$.

$B_1$ can be any one of 5HBW, 6HBW, 8HBW, 10HBW, 15HBW, 19HBW, 20HBW, 30HBW, 50HBW, 60HBW, 70HBW, 90HBW, 100HBW, 110HBW, 120HBW, 130HBW, 140HBW, 150HBW, 160HBW, 170HBW, 180HBW, 190HBW, 200HBW, or a range value between any two of them.

In some embodiments, referring to Figs. 51 and 52, Fig. 52 is a partial enlarged view of the battery casing 21 provided by other embodiments of the present application. The minimum thickness of the weak region 52 is $A_1$, and the minimum thickness of the non-weak region 51 is $A_2$, which satisfies: $0.05 \leq A_1/A_2 < 0.95$.

The minimum thickness of the weak region 52 is the thickness at the thinnest position of the weak region 52. The minimum thickness of the non-weak region 51 is the thickness at the thinnest position of the non-weak region 51.

As shown in Figs. 51 and 52, the battery casing 21 has a first side surface 54 and a second side surface 55 that are oppositely arranged. The grooved portion 53 is recessed from the first side surface 54 in the direction toward the second side surface 55, and the part of the battery casing that is located between the groove bottom surface 531 of the grooved portion 53 and the second side surface 55 is the weak region 52.

The first side surface 54 and the second side surface 55 can be arranged in parallel or at a small angle. If the first side surface 54 and the second side surface 55 are arranged at a small angle, for example, the angle between them is within 10 degrees, the minimum distance between the first side surface 54 and the second side surface 55 is the minimum thickness of the non-weak region 51; as shown in Figs 51 and 52, if the first side surface 54 and the second side surface 55 are parallel, the distance between the first side surface 54 and the second side 55 is the minimum thickness of the non-weak region 51.

The groove bottom surface 531 of the grooved portion 53 may be a plane or a curved surface. If the groove bottom surface 531 of the grooved portion 53 is a plane, the groove bottom surface 531 of the grooved portion 53 and the second side surface 55 may be parallel, or may be arranged at a small angle. If the groove bottom surface 531 of the grooved portion 53 and the second side surface 55 are arranged at a small angle, for example, the angle between them is within 10 degrees, the minimum distance between the groove bottom surface 531 of the grooved portion 53 and the second side surface 55 is the minimum thickness of the weak region 52; as shown in Fig. 51, if the groove bottom surface 531 of the grooved portion 53 is parallel to the second side surface 55, the distance between the groove bottom surface 531 of the grooved portion 53 and the second side surface 55 is the minimum thickness of the weak region 52. As shown in Fig. 52, if the groove bottom surface 531 of the grooved portion is a curved surface, for example, the groove bottom surface 531 of the grooved portion 53 is an arc surface, the minimum distance between the groove bottom surface 531 of the grooved portion 53 and the second side surface 55 is the minimum thickness of the weak region 52.

For example, $A_1/A_2$ can be any one of 0.05, 0.06, 0.07, 0.08, 0.1, 0.15, 0.2, 0.25, 0.3, 0.35, 0.4, 0.45, 0.5, 0.55, 0.6, 0.65, 0.7, 0.8, 0.85, 0.9, 0.95, or a range value between any two of them.

In the case of $A_1/A_2 < 0.05$, the strength of the weak region 52 may be insufficient. In the case of $A_1/A_2 > 0.95$, the weak region 52 may not be easily damaged when the battery cell 20 is thermally runaway, and pressure relief is not timely, causing the battery cell 20 to explode. Therefore, $0.05 \leq A_1/A_2 < 0.95$ can not only reduce the probability of the weak region 52 rupturing under normal use conditions of the battery cell 20, but also reduce the probability of the battery cell 20 exploding when thermal runaway occurs.

In some embodiments, it satisfies $0.12 \leq A_1/A_2 \leq 0.8$.

$A_1/A_2$ can be any one of 0.12, 0.13, 0.14, 0.15, 0.17, 0.2, 0.22, 0.25, 0.27, 0.3, 0.32, 0.35, 0.37, 0.4, 0.42, 0.45, 0.47, 0.5, 0.52, 0.55, 0.57, 0.6, 0.62, 0.65, 0.66, 0.67, 0.7, 0.72, 0.75, 0.77, 0.8, or a range value between any two of them.

In the embodiment, $0.12 \leq A_1/A_2 < 0.8$ makes the overall performance of the external components better and ensures that the weak region 52 has sufficient strength under normal service conditions of the battery cell 20 while ensuring that the weak region 52 can be destroyed in time when the battery cell 20 is thermally runaway. When forming the grooved portion 53 by stamping, controlling $A_1/A_2$ between 0.12 and 0.8 can make it easier to satisfy $S_1/S_2 \leq 0.5$ to achieve the purpose of refining the grains of the weak region 52.

In some embodiments, it satisfies $0.2 \leq A_1/A_2 \leq 0.5$.

$A_1/A_2$ can be any one of 0.2, 0.21, 0.22, 0.23, 0.24, 0.25, 0.26, 0.27, 0.28, 0.29, 0.3, 0.31, 0.32, 0.33, 0.34, 0.35, 0.36, 0.37, 0.38, 0.39, 0.4, 0.41, 0.42, 0.43, 0.44, 0.45, 0.46, 0.47, 0.48, 0.49, 0.5, or a range value between any two of them.

In the embodiment, by controlling $A_1/A_2$ between 0.2 and 0.5, the strengthening effect of grain refinement on the weak region 52 will be better than the weakening effect of thickness reduction on the weak region 52, so that the weak region 52 has better anti-fatigue performance, which further reduces the risk of the weak region 52 being destroyed under normal use conditions of the battery cell 20, and ensures that the weak region 52 is destroyed in time when the battery cell 20 is thermally runaway, improving the timeliness of pressure relief.

In some embodiments, it satisfies $0.02mm \leq A_1 \leq 1.6mm$. Further, it satisfies $0.06mm \leq A_1 \leq 0.4mm$.

In some embodiments, it satisfies $1mm \leq A_2 \leq 5mm$. $A_2$ can be any one of 1mm, 2mm, 3mm, 4mm, 5mm, or a range value between any two of them.

In the case of $A_2 > 5mm$, the thickness of the non-weak region 51 is large, the battery casing uses more materials, the weight of the battery case is large, and the economy is poor. In the case of $A_2 < 1mm$, the thickness of the non-weak region 51 is small, and the battery casing has poor resistance to deformation. Therefore, $1mm \leq A_2 \leq 5mm$ makes the battery casing more economical and has good resistance to deformation.

Further, it satisfies $1.2mm \leq A_2 \leq 3.5mm$.

$A_2$ can be any one of 1.2mm, 1.25mm, 1.3mm, 1.4mm, 1.5mm, 1.6mm, 1.7mm, 1.8mm, 1.9mm, 2mm, 2.1mm, 2.2mm, 2.3mm, 2.4mm, 2.5mm, 2.6mm, 2.7mm, 2.8mm, 2.9mm, 3mm, 3.1mm, 3.2mm, 3.3mm, 3.4mm, 3.5mm, or a range value between any two of them.

In the embodiment, it satisfies $1.2mm \leq A_2 \leq 3.5mm$, so that the battery casing has better economy and deformation resistance. Further, it satisfies $2mm \leq A_2 \leq 3mm$.

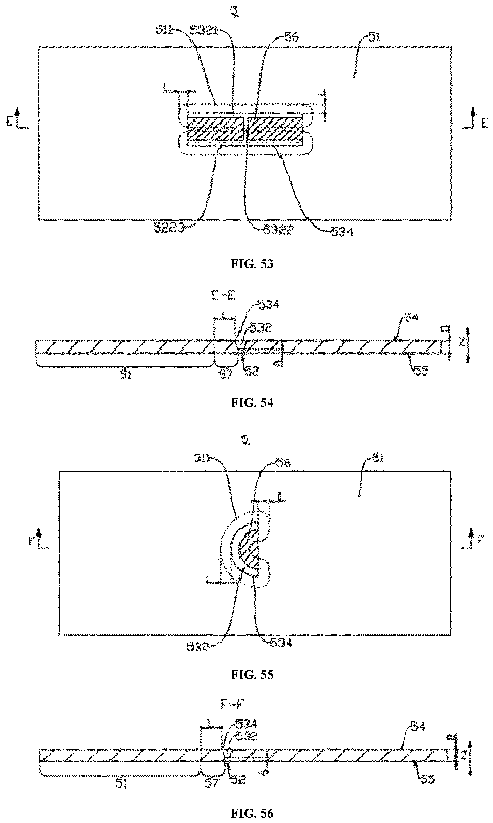

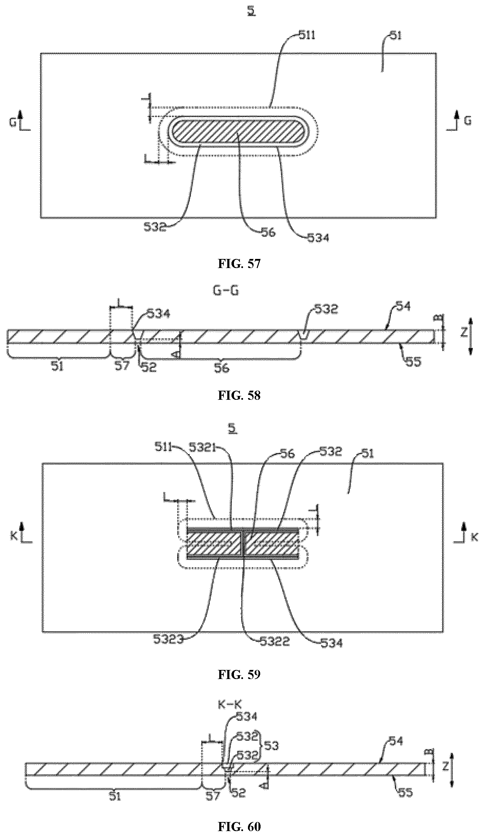

In some embodiments, referring to Fig. 53, Fig. 53 is a schematic structural view of the battery casing 21 provided in some embodiments of the present application (showing one stage of scored grooves 532); Fig. 54 is an E-E cross-sectional view of the battery casing 21 shown in Fig. 53; Fig. 55 is a schematic structural view of the battery casing 21 provided in some embodiments of the present application (showing one stage of scored grooves 532); Fig. 56 is an F-F cross-sectional view of the battery casing shown in Fig. 5; Fig. 125 is a schematic structural view of the battery casing provided in some other embodiments of the present application (showing one stage of scored grooves 532); Fig. 58 is a G-G cross-sectional view of the battery casing shown in Fig. 53. The battery casing 21 has a pressure relief region 56. The grooved portion 53 includes one stage of scored grooves 532. The scored grooves 532 are provided along the edge of the pressure relief region 56. The pressure relief region 56 is configured to be openable with the scored grooves 532 as a boundary, and the weak region 52 forms the bottom of the scored groove 532.

The pressure relief region 56 is a region where the battery casing can be opened after the weak region 52 is destroyed. For example, when the internal pressure of the battery cell 20 reaches a threshold, the weak region 52 cracks, and the pressure relief region 56 opens outward under the action of the emissions inside the battery cell 20. After the pressure relief region 56 is opened, a discharge port can be formed in the battery casing at a position corresponding to the pressure relief region 56, and the emissions inside the battery cell 20 can be discharged through the discharge port to release the pressure inside the battery cell 20.

The scored groove 532 can be formed on the battery casing by stamping. There are only one stage of scored grooves 532 in the grooved portion 53, and the one stage of scored grooves 532 can be formed by single stamping. The scored groove 532 can be a groove of various shapes, such as annular groove, arc groove, U-shaped groove, H-shaped groove. The weak region 52 is formed at the bottom of the scored groove 532, and the shape of the weak region 52 is the same as the shape of the scored groove 532. For example, the weak region 52 is a U-shaped groove, and the weak region 52 extends along a U-shaped track.

In the embodiment, the weak region 52 forms the bottom of the scored groove 532. When the weak region 52 is destroyed, the pressure relief region 56 can be opened with the weak region 52 as a boundary to achieve pressure relief, which increases the pressure relief region of the battery casing.

In some embodiments, continuing to refer to Figs. 54, 56 and 58, the battery casing 21 has a first side surface 54 and a second side surface 55 arranged oppositely, and the scored groove 532 is recessed from the first side surface 54 in the direction toward the second side surface 55.

The first side surface 54 can be the inner surface of the battery casing 21 facing the inside of the battery cell 20, and the second side surface 55 can be the outer surface of the battery casing away from the inside of the battery cell 20; or the first side surface 54 can be the outer surface of the battery casing away from the battery cell 20, and the second side surface 55 is the inner surface of the battery casing facing the interior of the battery cell 20. For example, the first side surface 54 is parallel to the second side surface 55, and the minimum thickness of the non-weak region 51 is the distance between the first side surface 54 and the second side surface 55.

The groove bottom surface of the scored groove 532 is the groove bottom surface 531 of the grooved portion. The part of the battery casing 21 between the groove bottom surface of the scored groove 532 and the second side surface 55 is the groove bottom wall of the scored groove 532, and the groove bottom wall of the scored groove 532 is the weak region 52.

In the embodiment, the grooved portion 53 only includes one stage of scored grooves 532, the scored grooves 532 constitute the grooved portion 53, the grooved portion 53 has one stage of grooves, and the structure is simple. During forming, the scored groove 532 can be formed on the first side surface 54, which makes the forming simple, improves production efficiency, and reduces production costs.

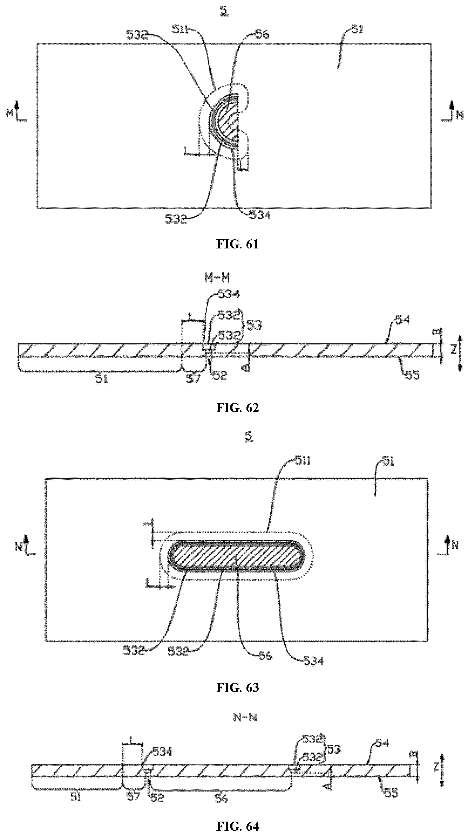

In some embodiments, referring to Figs. 59-64, Fig. 59 is a schematic structural view of the battery casing 21 provided in some embodiments of the present application (showing two stages of scored grooves 532); Fig. 60 is a K-K cross-sectional view of the battery casing 21 shown in Fig. 59; Fig. 61 is a schematic structural view of the battery casing provided in some further embodiments of the present application (showing two stages of scored grooves 532); Fig. 62 is an M-M cross-sectional view of the battery casing shown in Fig. 61; Fig. 63 is a schematic structural view of the battery casing provided in some other embodiments (showing two stages of scored grooves 532); Fig. 64 is an N-N cross-sectional view of the battery casing shown in Fig. 63. The battery casing 21 includes a first side surface 54 and a second side surface 55 that are oppositely arranged. The grooved portion 53 includes multiple stages of scored grooves 532. The multiple stages of scored grooves 532 are sequentially provided on the battery casing along the direction from the first side surface 54 to the second side surface 55, and the weak region 52 is formed at the bottom of the stage of scored grooves 532 farthest from the first side surface 54. The battery casing has a pressure relief region 56, and the scored grooves 532 are provided along the edge of the pressure relief region 56. The pressure relief region 56 is configured to be open with the stage of scored grooves 532 farthest from the first side surface 54 as a boundary.

The grooved portion 53 includes multiple stages of scored grooves 532. It can be understood that the grooved portion 53 has multiple stages of grooves. Each stage of scored grooves 532 are provided along the edge of the pressure relief region 56, and the multiple stages of scored grooves 532 have the same shape. There may be two, three, four or more stages of scored grooves 532 in the grooved portion 53. Each stage of scored grooves 532 can be formed on the battery casing by stamping. During forming, the scored grooves 532 of various stages can be formed by stamping sequentially along the direction from the first side surface 54 to the second side surface 55. When forming the multiple stages of scored grooves 532 by stamping, the multiple stages of scored grooves 532 can be formed correspondingly through multiple times of stamping, and one stage of scored grooves 532 are formed once every stamping. The scored groove 532 can be a groove of various shapes, such as annular groove, arc groove, U-shaped groove, H-shaped groove.

The weak region 52 is formed at the bottom of the stage of scored grooves 532 farthest from the first side surface 54, and the stage of scored grooves 532 farthest from the first side surface 54 are the deepest (innermost) stage of scored grooves 532. Among adjacent two stages of scored grooves 532, the stage of scored grooves 532 away from the first side surface 54 are disposed on the bottom surface of the stage of scored grooves 532 close to the first side surface 54. The part of the battery casing between the groove bottom surface of the stage of scored grooves 532 farthest from the first side surface 54 and the second side surface 55 is the groove bottom wall of the stage of scored grooves 532 farthest from the first side surface 54, and the groove bottom wall is the weak region 52. The groove bottom surface of the stage of scored grooves 532 farthest from the first side surface 54 is the groove bottom surface 531 of the grooved portion.

During forming, multiple stages of scored grooves 532 can be formed on the battery casing step by step, which can reduce the forming depth of each stage of scored grooves 532, thereby reducing the forming force that the battery casing receives when forming each stage of scored grooves 532, reducing the risk of cracks in the battery casing, so that the battery casing is less likely to fail due to cracks at the position where the scored groove 532 is provided, thereby increasing the service life of the battery casing.

In some embodiments, referring to Figs. 60, 62, and 64, the stage of scored grooves 532 farthest from the second side surface 55 are recessed from the first side surface 54 toward the second side surface 55.

Taking the case where there are two stages of scored grooves 532 in the grooved portion 53 as an example, the two stages of scored grooves 532 are the first-stage scored grooves and the second-stage scored grooves. The first-stage scored grooves are provided on the first side surface 54, that is, the first-stage scored grooves are recessed from the first side surface 54 toward the second side surface 55, and the second-stage scored grooves are provided on the groove bottom surface of the first-stage scored grooves; that is, the second-stage scored grooves are recessed from the groove bottom surface of the first-stage scored grooves toward the second side surface 55. The first-stage scored grooves are the outermost stage of scored grooves 532, and the second-stage scored grooves are the innermost stage of scored grooves 532.

The grooved portion 53 is composed of multiple stages of scored grooves 532. During forming, the multiple stages of scored grooves 532 can be gradually processed in the direction from the first side surface 54 to the second side surface 55 with high forming efficiency.

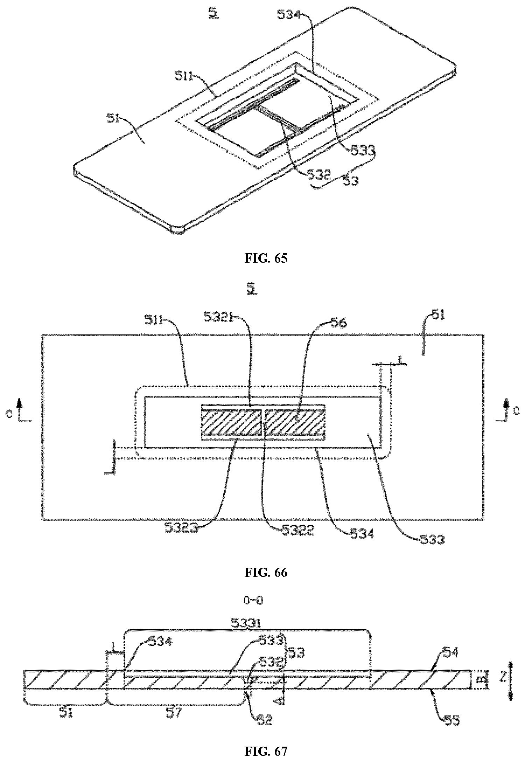

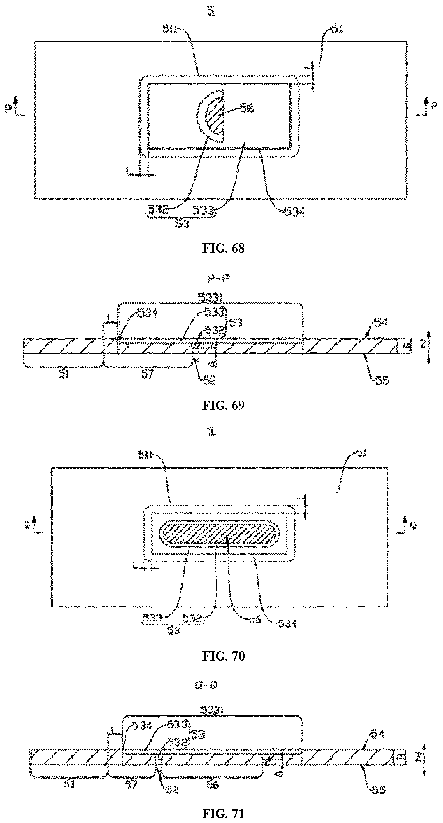

In some embodiments, referring to Figs. 65-71, Fig. 65 is an axonometric view of the battery casing provided in some embodiments of the present application; Fig. 66 is a schematic structural view of the battery casing shown in Fig. 65 (showing one stage of scored grooves 532 and one stage of sunk grooves 533); Fig. 67 is an O-O cross-sectional view of the battery casing shown in Fig. 66; Fig. 68 is a schematic structural view of the battery casing provided in some further embodiments of the present application (showing one stage of scored grooves 532 and one stage of sunk grooves 533); Fig. 69 is a P-P cross-sectional view of the battery casing shown in Fig. 68; Fig. 70 is a schematic structural view of the battery casing provided in some other embodiments of the present application (showing one stage of scored grooves 532 and one stage of sunk grooves 533); Fig. 71 is a Q-Q cross-sectional view of the battery casing shown in Fig. 70. The battery casing 21 includes a first side surface 54 and a second side surface 55 that are oppositely arranged. The grooved portion 53 further includes one stage of sunk grooves 533. The sunk grooves 533 are recessed from the first side surface 54 toward the second side surface 55, and the pressure relief region 56 is formed on the groove bottom wall 5331 of the sunk groove.

It should be noted that, regardless of whether there are one stage or multiple stages of scored grooves 532 in the grooved portion 53, the grooved portion 53 may include one stage of sunk grooves 533. It can be understood that the grooved portion 53 has both scored grooves 532 and sunk grooves 533, and the grooved portion 53 has multiple stages of grooves. The sunk grooves 533 and the scored grooves 532 are provided along the direction from the first side surface 54 to the second side surface 55. During forming, the sunk grooves 533 can be formed on the battery casing first, and then the scored grooves 532 can be formed on the groove bottom wall 5331 of the sunk grooves.

The groove bottom wall 5331 of the sunk groove is the part of the battery casing located below the groove bottom surface of the sunk groove 533. After the sunk groove 533 is formed on the first side surface 54, the remaining part of the battery casing in the region where the sunk groove 533 is provided is the groove bottom wall 5331 of the sunk groove. As shown in Figs. 67, 69, and 71, the part of the battery casing 21 located between the groove bottom surface of the sunk groove 533 and the second side surface 55 is the groove bottom wall 5331 of the sunk groove. The pressure relief region 56 may be a part of the groove bottom wall 5331 of the sunk groove.

The sunk groove 533 is provided to ensure that with a certain thickness of the final weak region 52, the depth of the scored groove 532 can be reduced, thereby reducing the forming force that the battery casing receives when the scored groove 532 is formed, and reducing the risk of cracks of the battery casing. In addition, the sunk groove 533 can provide an avoidance space for the pressure relief region 56 during the opening process. Even if the first side surface 54 is blocked by an obstacle, the pressure relief region 56 can still be opened to release pressure.

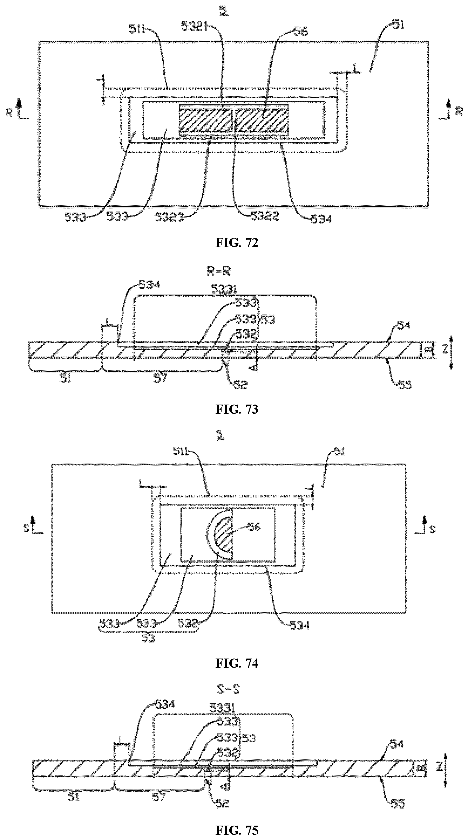

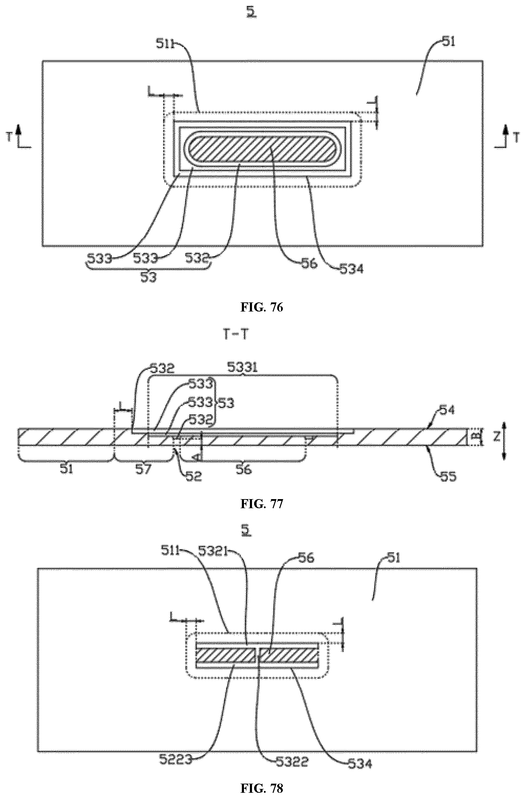

In some embodiments, referring to Fig. 72-77, Fig. 72 is a schematic structural view of the battery casing provided in some embodiments of the present application (showing one stage of scored grooves 532 and two stages of sunk grooves 533); Fig. 73 is an R-R cross-sectional view of the battery casing shown in Fig. 72; Fig. 74 is a schematic structural view of the battery casing provided in some further embodiments of the present application (showing one stage of scored grooves 532 and two stages of sunk grooves 533); Fig. 75 is an S-S cross-sectional view of the battery casing shown in Fig. 74; Fig. 76 is a schematic structural view of the battery casing provided in some other embodiments of the present application (showing one stage of scored grooves 532 and two stages of sunk grooves 533); Fig. 77 is a T-T cross-sectional view of the battery casing shown in Fig. 76. The battery casing includes a first side surface 54 and a second side surface 55 that are oppositely arranged. The grooved portion 53 further includes multiple stages of sunk grooves 533. The multiple stages of sunk grooves 533 are sequentially provided on the battery casing 21 along the direction from the first side surface 54 to the second side surface 55, the stage of sunk grooves 533 farthest from the second side surface 55 are recessed from the first side surface 54 toward the second side surface 55, and the pressure relief region 56 is formed on the groove bottom wall 5331 of the stage of sunk grooves farthest from the first side surface 54.

It should be noted that, regardless of whether there are one stage or multiple stages of scored grooves 532 in the grooved portion 53, the grooved portion 53 may include multiple stages of sunk grooves 533. It can be understood that the grooved portion 53 has both scored grooves 532 and sunk grooves 533, and the grooved portion 53 has multiple stages of grooves. The sunk grooves 533 and the scored grooves 532 are provided along the direction from the first side surface 54 to the second side surface 55. During forming, multiple stages of sunk grooves 533 can be formed on the battery casing first, and then the scored grooves 532 can be formed on the groove bottom wall 5331 of the stage of sunk grooves farthest from the first side surface 54.

The stage of sunk grooves 533 farthest from the second side surface 55 are the outermost stage of sunk grooves 533, and the stage of sunk grooves 533 farthest from the first side surface 54 are the innermost stage of sunk grooves 533. The outermost stage of sunk grooves 533 are provided on the first side surface 54, and the outermost stage of sunk grooves 533 are recessed from the first side surface 54 toward the second side surface 55.

The groove bottom wall 5331 of the stage of sunk grooves farthest from the first side surface 54 is the part of the battery casing located below the groove bottom surface of the stage of sunk grooves 533 farthest from the first side surface 54. After multiple stages of sunk grooves 533 are formed on the battery casing, the remaining part of the battery casing in the region of the stage of sunk grooves 533 farthest from the first side surface 54 is the groove bottom wall 5331 of the sunk grooves. As shown in Figs. 73, 75, and 77, the part of the battery casing between the groove bottom surface of the stage of sunk grooves 533 farthest from the first side surface 54 and the second side surface 55 is the groove bottom wall 5331 of the stage of sunk grooves farthest from the first side surface 54. The pressure relief region 56 may be a part of the groove bottom wall 5331 of the stage of sunk grooves farthest from the first side surface 54.

There may be two, three, four or more stages of sunk grooves 533 in the grooved portion 53. Among adjacent two stages of sunk grooves 533, the stage of sunk grooves 533 away from the first side surface 54 are disposed on the bottom surface of the stage of sunk grooves 533 close to the first side surface 54. Along the direction from the first side surface 54 to the second side surface 55, the profile of the groove bottom surface of the multiple stages of sunk groove 533 decreases stage by stage. Each stage of sunk grooves 533 can be formed on the battery casing by stamping. During forming, the sunk grooves 533 of various stages can be formed by stamping sequentially along the direction from the first side surface 54 to the second side surface 55, and then the scored grooves 532 are formed by stamping. Taking the case that there are two stages of sunk grooves 533 and one stage of scored grooves 532 in the grooved portion 53 as an example, during forming by stamping, two times of stamping can be performed first to form the two stages of sunk grooves 533 correspondingly, and then stamping can be performed once to form one stage of scored grooves 532 correspondingly. For example, in Figs. 72-77, there are two stages of sunk grooves 533 in the grooved portion 53.

When forming the multiple stages of sunk groove 533, the forming depth of each stage of sunk grooves 533 can be reduced, the forming force on the battery casing when forming each stage of sunk grooves 533 can be reduced, and the risk of cracks in the battery casing can be reduced. In addition, the multiple stages of sunk grooves 533 can provide an avoidance space for the pressure relief region 56 during the opening process. Even if the first side surface 54 is blocked by an obstacle, the pressure relief region 56 can still be opened to release pressure.

In some embodiments, the internal space of the sunk groove 533 is a cylinder, a prism, a truncated cone or a truncated pyramid.

The internal space of the sunk groove 533 is the space defined by the groove side surfaces and the groove bottom surface of the sunk groove 533. Among them, the prism may be a triangular prism, a quadrangular prism, a pentagonal prism, a hexagonal prism, etc.; the truncated pyramid may be a triangular truncated pyramid, a quadrangular truncated pyramid, a pentagonal truncated pyramid or a hexagonal truncated pyramid, etc. For example, in Figs. 72-77, the internal space of the grooved portion 53 is a quadrangular prism. Specifically, the internal space of the grooved portion 53 is a cuboid.

In the embodiment, the sunk groove 533 has a simple structure and is easy to form, and can provide more avoidance space for the pressure relief region 56 during the opening process.

In some embodiments, referring to Figs. 53, 59, 66, and 72, the scored groove 532 includes a first groove segment 5321, a second groove segment 5322, and a third groove segment 5323. The first groove segment 5321 and the third groove segment 5323 are arranged oppositely. The second groove segment 5322 connects the first groove segment 5321 and the third groove segment 5323. The first groove segment 5321, the second groove segment 5322 and the third groove segment 5323 are arranged along the edge of the pressure relief region 56.

The first groove segment 5321, the second groove segment 5322 and the third groove segment 5323 can all be linear grooves or non-linear grooves, such as arc-shaped grooves. In an embodiment in which the first groove segment 5321, the second groove segment 5322 and the third groove segment 5323 are all linear grooves, it can be understood that the first groove segment 5321, the second groove segment 5322 and the third groove segment 5323 all extend along a straight line, the first groove segment 5321 and the third groove segment 5323 can be arranged in parallel or at an included angle. The first groove segment 5321 and the third groove segment 5323 may both be perpendicular to the second groove segment 5322, or they may not be perpendicular to the second groove segment 5322.

The connection position between the second groove segment 5322 and the first groove segment 5321 can be located at one end of the first groove segment 5321, or can be located at a position offset from one end of the first groove segment 5321. For example, the connection position of the second groove segment 5322 and the first groove section 5321 is located at the midpoint of the first groove segment 5321 in the extension direction. The connection position of the second groove segment 5322 and the third groove segment 5323 can be located at one end of the third groove segment 5323, or can be located at a position offset from the third groove segment 5323. For example, the connection position between the second groove segment 5322 and the third groove segment 5323 is located at the midpoint of the third groove segment 5323 in the extension direction.

It should be noted that in an embodiment in which the grooved portion 53 includes multiple stages of scored grooves 532, it can be understood that among adjacent two stages of scored grooves 532, the first groove segment 5321 of the stage of scored grooves 532 far away from the first side surface 54 is disposed on the groove bottom surface of the first groove segment 5321 of the stage of scored grooves 532 close to the first side surface 54; the second groove segment 5322 of the stage of scored grooves 532 away from the first side surface 54 is disposed on the groove bottom surface of the second groove segment 5322 of the stage of scored grooves 532 close to the first side surface 54; the third groove segment 5323 of the stage of scored grooves 532 far away from the first side surface 54 is disposed on the groove bottom surface of the third groove segment 5323 of the stage of scored grooves 532 close to the first side surface 54.

In the embodiment, the pressure relief region 56 can be opened with the first groove segment 5321, the second groove segment 5322, and the third groove segment 5323 as boundaries, and when the battery cell 20 releases pressure, the pressure relief region 56 can be opened more easily, achieving large-area pressure relief of the battery casing.

In some embodiments, continuing to refer to Figs. 53, 59, 66 and 72, the first groove segment 5321, the second groove segment 5322 and the third groove segment 5323 define two pressure relief regions 56, and the two pressure relief regions 56 are respectively located on both sides of the second groove segment 5322.

Exemplarily, the first groove segment 5321, the second groove segment 5322 and the third groove segment 5323 form an H-shaped scored groove 532, the connection position of the second groove segment 5322 and the first groove segment 5321 is located at the midpoint position of the first groove segment 5321, and the connection position between the third groove segment 5323 and the second groove segment 5322 is located at the midpoint position of the third groove segment 5323. The two pressure relief regions 56 are symmetrically arranged on both sides of the second groove segment 5322.

The two pressure relief regions 56 are respectively located on both sides of the second groove segment 5322, so that the two pressure relief regions 56 are bounded by the second groove segment 5322. After the battery casing ruptures at the position of the second groove segment 5322, the two pressure relief regions 56 can be opened in folio form along the first groove segment 5321 and the third groove segment 5323 to achieve pressure relief, which can effectively improve the pressure relief efficiency of the battery casing.

In other embodiments, the first groove segment 5321, the second groove segment 5322 and the third groove segment 5323 are connected in sequence, and the first groove segment 5321, the second groove segment 5322 and the third groove segment 5323 define a pressure relief region 56.

The first groove segment 5321, the second groove segment 5322 and the third groove segment 5323 are connected in sequence to form a U-shaped scored groove 532.

In some embodiments, the scored groove 532 is a groove that extends along a non-closed trajectory.

A non-closed trajectory refers to a trajectory whose two ends in the extension direction are not connected. The non-closed trajectory can be an arc trajectory, a U-shaped trajectory, etc.

In the embodiment, the scored groove 532 is a groove along anon-closed track, and the pressure relief region 56 can be opened by flipping. After the pressure relief region 56 is opened, it is finally connected to other regions of the battery casing, which reduces the risk of splashing after the pressure relief region 56 is opened.

In some embodiments, referring to Figs. 55, 61, 68 and 74, the scored groove 532 is an arc-shaped groove.

The arc-shaped groove is a groove extending along an arc-shaped trajectory, and the arc-shaped trajectory is a non-closed trajectory. The central angle of the arc-shaped groove may be less than, equal to or greater than 180°.

The arc-shaped groove has a simple structure and is easy to form. During the pressure relief process, the pressure relief region 56 can quickly break along the arc-shaped groove, so that the pressure relief region 56 can be quickly opened.

In some embodiments, referring to Figs. 57, 63, 70, and 76, the scored groove 532 is a groove extending along a closed trajectory.

A closed trajectory refers to a trajectory that is connected at both ends. A closed trajectory can be a circular trajectory, a rectangular trajectory, etc.

During the pressure relief process, the battery casing 21 can rupture along the scored groove 532 so that the pressure relief region 56 can be opened in a detachable manner, thereby increasing the pressure relief area of the battery casing 21 and improving the pressure relief rate of the battery casing 21.

In some embodiments, the scored groove 532 is an annular groove.

The annular groove can be a rectangular annular groove or a circular annular groove.

The annular groove has a simple structure and is easy to form. During the pressure relief process, the battery casing 21 can quickly break along the annular groove, so that the pressure relief region 56 can be quickly opened.

In some embodiments, the area of the pressure relief region 56 is E1, which satisfies: $90mm^2 \leq E1 \leq 1500mm^2$.

In Figs. 53, 55, 57, 59, 61, 63, 66, 68, 70, 72, 74 and 76, the area of the shaded portion is the area of the pressure relief region 56.

It should be noted that in an embodiment in which the grooved portion 53 includes multiple stages of scored grooves 532, the area of the pressure relief region 56 is the area of the region defined by the deepest (innermost) stage of scored grooves 532.

The area E1 of the pressure relief region 56 may be any one of $90mm^2$, $95mm^2$, $100mm^2$, $150mm^2$, $200mm^2$, $250mm^2$, $300mm^2$, $350mm^2$, $400mm^2$, $450mm^2$, $500mm^2$, $550mm^2$, $600mm^2$, $650mm^2$, $700mm^2$, $750mm^2$, $800mm^2$, $900mm^2$, $950mm^2$, $1000mm^2$, $1050mm^2$, $1100mm^2$, $1150mm^2$, $1200mm^2$, $1250mm^2$, $1300mm^2$, $1350mm^2$, $1400mm^2$, $1450mm^2$, $1500mm^2$, or a range value between any two of them.

When the area E1 of the pressure relief region 56 is $< 90mm^2$, the pressure relief area of the battery casing is small, and the pressure relief timeliness when the battery cell 20 is thermally runaway is poor; in the case of $E1 > 1500mm^2$, the impact resistance of the pressure relief region 56 is poor, the deformation of the pressure relief region 56 is increased after receiving a force, the weak region 52 is easy to be damaged under the normal use condition of the battery cell 20, and the service life of the battery cell 20 is affected. Therefore, in the case of $90mm^2 \leq$ area E1 of the pressure relief region 56 $\leq 1500mm^2$, it can not only increase the service life of the battery cell 20, but also improve the safety of the battery cell 20.

Further, it satisfies $150mm^2 \leq$ area E1 of the pressure relief region 56 $\leq 1200mm^2$. As a result, the overall performance of the battery casing is better, and the battery casing has a large pressure relief area and good impact resistance.

Further, it satisfies $200mm^2 \leq$ area E1 of the pressure relief region 56 $\leq 1000mm^2$.

Further, it satisfies $250mm^2 \leq$ area E1 of the pressure relief region 56 $\leq 800mm^2$.

In some embodiments, referring to Figs. 48-77, the battery casing 21 has a first side surface 54 and a second side surface 55 arranged oppositely, the grooved portion 53 is recessed from the first side surface 54 toward the second side surface 55, the grooved portion 53 forms an outer edge 534 on the first side surface 54, the region outside the first distance between the battery casing and the outer edge 534 is the non-weak region 51, the first distance is g, g=5mm.

In the embodiment shown in Figs. 53-58, the grooved portion 53 only includes one stage of scored grooves 532, the scored grooves 532 are provided on the first side surface 54, and the groove side surface of the scored groove 532 intersects with the first side surface 54 to form the outer edge 534, and the groove surface sides of the scored grooves 532 surround the groove bottom surface of the scored grooves 532. It should be noted that, in the embodiments shown in Fig.

55, since the scored groove 532 is a groove extending along a closed trajectory, the groove side surface of the scored groove 532 intersects with the first side surface 54 to form an inner ring line and an outer ring line located outside the inner ring line, and the outer ring line is the outer edge 534.

In the embodiments shown in Figs. 59-64, the grooved portion 53 only includes multiple stages of scored grooves 532, the outermost scored grooves 532 are disposed on the first side surface 54, and the groove side surface of the outermost scored grooves 532 and the first side surface 54 intersect to form the outer edge 534. It should be noted that, in the embodiments shown in Fig. 63, since the scored groove 532 is a groove extending along a closed trajectory, the outermost groove side surface of the scored groove 532 intersects with the first side surface 54 to form an inner ring line and an outer ring line located outside the inner ring line, and the outer ring line is the outer edge 534.

In the embodiments shown in Figs. 65-71, the grooved portion 53 further includes one stage of sunk grooves 533, the sunk grooves 533 are provided on the first side surface 54, the groove side surface of the sunk groove 533 intersects with the first side surface 54 to form the outer edge 534, the groove side surfaces of the sunk grooves 533 surround the groove bottom surface of the sunk groove 533. In the embodiments shown in Figs. 72-77, the grooved portion 53 further includes multiple stages of sunk grooves 533. The outermost stage of sunk grooves 533 are arranged on the first side surface 54, and the side surface of the outermost stage of grooves and the first side surface 54 intersect to form the outer edge 534.

It can be understood that the distance between the outer edge 534 and the inner edge 511 of the non-weak region 51 is the first distance g, and the shape of the inner edge 511 of the non-weak region 51 can be substantially the same as the shape of the outer edge 534. The direction of the first distance g may be perpendicular to the thickness direction of the non-weak region 51, that is, the first distance may be measured along the thickness direction perpendicular to the non-weak region 51. When measuring the average grain size of the non-weak region 51, the measurement may be made in the region outside the outer edge 534.

In the embodiment, the non-weak region 51 is not easily affected in the process of forming the grooved portion 53, so that the grains of the non-weak region 51 are more uniform.

It should be noted that, as shown in Figs. 53 and 59, in the embodiment in which the first groove segment 5321 and the third groove segment 5323 of the scored groove 532 are arranged oppositely, taking the case where the first groove segment 5321 and the third groove segment 5323 are parallel as an example, when the spacing between the first groove segment 5321 and the third groove segment 5323 is greater than 2*g, the inner edge 511 of the non-weak region 51 is partially located in the pressure relief region 56, so that the pressure relief region 56 is partially located in the non-weak region 51. In other embodiments, referring to Fig. 78, Fig. 78 is a schematic structural view of a battery casing provided by other embodiments of the present application. When the spacing between the first groove segment 5321 and the third groove segment 5323 is less than or equal to 2*g, the inner edge 511 of the non-weak region 51 is not located in the pressure relief region 56, and the inner edge 511 of the non-weak region 51 is generally rectangular. Along the width direction of the first groove segment 5321, the spacing between the first groove segment 5321 and the inner edge 511 of the non-weak region 51 is g; along the length direction of the first groove segment 5321, the spacing between the first groove segment 5321 and the inner edge 511 of the non-weak region 51 is g; along the width direction of the third groove segment 5323, the spacing between the third groove segment 5323 and the inner edge 511 of the non-weak region 51 is g; along the length direction of the third groove segment 5323, the spacing between the third groove segment 5323 and the inner edge 511 of the non-weak region 51 is g.

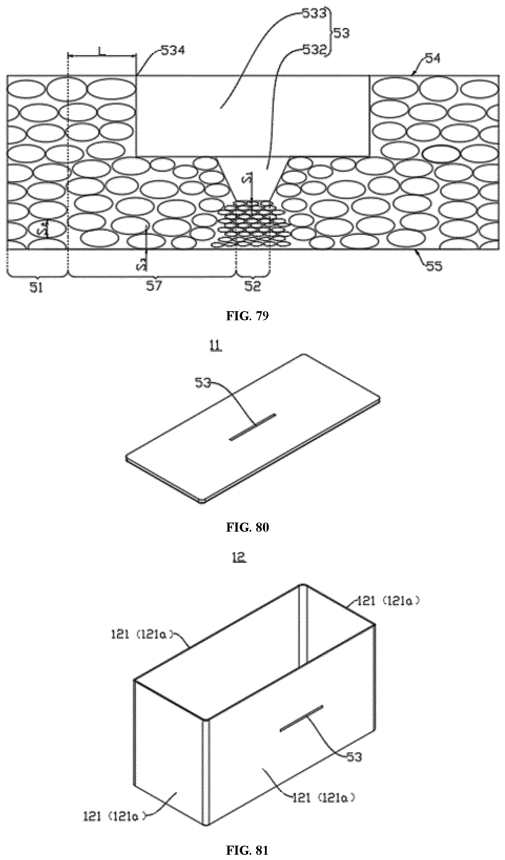

In some embodiments, referring to Fig. 79, Fig. 79 is a grain pattern (schematic view) of the battery casing provided by other embodiments of the present application. The battery casing 21 further includes a transition region 57, the transition region 57 connects the weak region 52 and the non-weak region 51, the average grain size of the transition region 57 is $S_3$, which satisfies: $S_3 < S_2$.

For example, it satisfies $S_3 > S_1$.

The transition region 57 is the part of the battery casing 21 that connects the weak region 52 and the non-weak region 51. The transition region 57 is arranged around the outer side of the weak region 52, the non-weak region 51 is around the outer side of the transition region 57, and the weak region 52, the transition region 57 and the non-weak region 51 are integrally molded.

The average grain size of the transition region 57 may gradually decrease from the non-weak region 51 to the weak region 52. For example, as shown in Fig. 79, taking the case where the grooved portion 53 includes one stage of sunk grooves 533 and one stage of scored grooves 532 as an example, the average grain size of the transition region 57 located at the outer side region of the sunk groove 533 can be larger than the average grain size of the transition region 57 located at the bottom region of the sunk groove 533, the average grain size of the transition region 57 located at the outer side region of the sunk groove 533 may be less than or equal to the average grain size $S_2$ of the non-weak region 51, and the average grain size of the transition region 57 located at the bottom region of the sunk groove 533 may be larger than the average grain size $S_1$ of the weak region 52.

In the embodiment, the transition region 57 plays a role in connecting the weak region 52 and the non-weak region 51, so that the weak region 52 and the non-weak region 51 are integrally molded.

In some embodiments, referring to Figs. 80 and 81, Fig. 80 is a structural schematic view of the end cover 11 provided by some embodiments of the present application. The battery casing 21 is an end cover 11, the end cover 11 is used to close the opening of the case 12, and the case 12 is used to accommodate the electrode assembly 22.

It can be understood that the end cover 11 is provided with a grooved portion 53 to form a weak region 52 and a non-weak region 51 correspondingly. The first side surface 54 and the second side surface 55 of the battery casing are respectively two opposite surfaces of the end cover 11 in the thickness direction, that is, one of the first side surface 54 and the second side surface 55 is the inner surface of the end cover 11 in the thickness direction, and the other is the outer surface of the end cover 11 in the thickness direction.

The end cover 11 can be a circular or rectangular plate structure.

Exemplarily, in the embodiment shown in Fig. 80, the end cover 11 is a rectangular plate structure.

In the embodiment, the end cover 11 has a pressure relief function to ensure the safety of the battery cells 20.

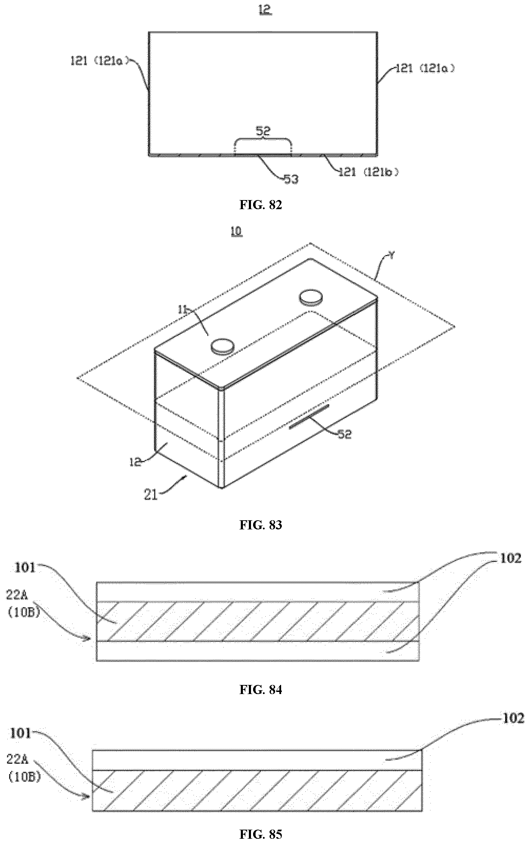

In some embodiments, referring to Figs. 81 and 82, Fig. 81 is a structural schematic view of the case 12 provided by some embodiments of the present application; Fig. 82 is a schematic structural view of the case 12 provided by other embodiments of the present application. The battery casing is a case 12, the case 12 has an opening, and the case 12 is used to accommodate the electrode assembly 2.

In the embodiment, the case 12 is a battery casing, and the end cover 11 is used to close the opening of the case 12. The case 12 may be a hollow structure with an opening at one end or openings at the opposite ends, and the case 12 and the end cover 11 may form the case 1 of the battery cell 20. The case 12 may be a cuboid, a cylinder, or the like.

In the embodiment, the battery casing 21 is the case 12, so that the case 12 has a pressure relief function to ensure the safety of the battery cells 20.

In some embodiments, the case 12 includes multiple integrally molded wall portions 121, the multiple wall portions 121 jointly define the internal space of the case 12, and at least one wall portion 121 is provided with the grooved portion 53.

In the case 12, the grooved portion 53 may be provided on one wall portion 121 to form the integrally molded weak region 52 and non-weak region 51 correspondingly on the wall portion 121, or the grooved portion 53 may be provided on multiple wall portions 121 to form the integrally molded weak region 52 and non-weak region 51 on each wall portion 121 of the grooved portion 53. For the wall portion 121 provided with the grooved portion 53, the first side surface 54 and the second side surface 55 of the battery casing are respectively two opposite surfaces of the wall portion 121 in the thickness direction, that is, one of the first side surface 54 and the second side surface 55 is the inner surface of the wall portion 121 in the thickness direction, and the other is the outer surface of the wall portion 121 in the thickness direction.

In the embodiment, multiple wall portions 121 are integrally molded, so that the wall portion 121 provided with the grooved portion 53 has better reliability.

In some embodiments, continuing to refer to Figs. 81 and 82, the multiple wall portions 121 include a bottom wall 121b and multiple side walls 121a surrounding the bottom wall 121b, the case 12 forms an opening at one end opposite to the bottom wall 121b. The bottom wall 121b is provided with the grooved portion 53; and/or at least one side wall 121a is provided with the grooved portion 53.

In the embodiment, the case 12 is a hollow structure with an opening formed at one end. The number of side walls 121a in the case 12 may be three, four, five, six or more. There may be one, two, three, four, five, six or more side walls 121a provided with the grooved portion 53.

For example, in Fig. 81, only one side wall 121a is provided with the grooved portion 53 to form the weak region 52 and non-weak region 51 correspondingly on the side wall 121a; in Fig. 82, only the bottom wall 121b is provided with the grooved portion 53 to correspondingly form the weak regions 52 and non-weak regions 51 on the bottom wall 121b.

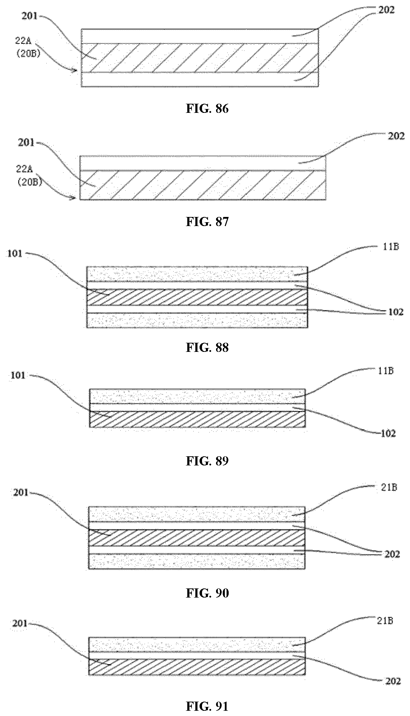

In some embodiments, continuing to refer to Figs. 81 and 91, the case 12 is a cuboid. It can be understood that the number of side walls 121a in the case 12 is four.

The cuboid case 12 is suitable for square battery cells and can meet the large capacity requirements of the battery cells 20.

In some embodiments, the battery casing 21 is made of aluminum alloy.

The aluminum alloy battery casing is light in weight, has good ductility, has good plastic deformation ability, and is easy to form. Since aluminum alloy has good ductility, when forming the grooved portion 53 on the battery casing by stamping, it is easier to control $S_1/S_2$ below 0.5 (including 0.5), and the forming yield is higher.

In some embodiments, the aluminum alloy includes the following components in mass percentage: aluminum $\geq$ 99.6%, copper $\leq$ 0.05%, iron $\leq$ 0.35%, magnesium $\leq$ 0.03%, manganese $\leq$ 0.03%, silicon $\leq$ 0.25%, titanium $\leq$ 0.03 %, vanadium $\leq$ 0.05%, zinc $\leq$ 0.05%, other individual elements $\leq$ 0.03%. This aluminum alloy has lower hardness and better molding ability, which reduces the difficulty of molding the grooved portion 53, improves the molding accuracy of the grooved portion 53, and improves the pressure relief consistency of the battery casing.

In some embodiments, the aluminum alloy includes the following components in mass percentage: aluminum $\geq$ 96.7%, 0.05% $\leq$ copper $\leq$ 0.2%, iron $\leq$ 0.7%, manganese $\leq$ 1.5%, silicon $\leq$ 0.6%, zinc $\leq$ 0.1%, other individual elements $\leq$ 0.05%, and the total composition of other elements $\leq$ 0.15%. Battery casings made of this aluminum alloy are harder, stronger and have good resistance to damage.

In some embodiments, the battery cell 20 further includes a case 12, the case 12 has an opening, and the case 12 is used to accommodate the electrode assembly 22. The battery casing 21 is an end cover 11, and the end cover 11 closes the opening.

In some embodiments, the battery casing 21 is a case 12, the case 12 has an opening, and the case 12 is used to accommodate the electrode assembly 22. The battery cell 20 further includes an end cover 11, and the end cover 11 closes the opening.

In some embodiments, referring to Fig. 83, Fig. 83 is a structural schematic view of the battery cell 20 provided by some embodiments of the application, and the weak region 52 is located at the lower part of the battery cell 20.

In the battery cell 20, along the height direction of the battery casing 21 of the battery cell 20, the part of the battery cell 20 below the mid-plane Y of the battery casing 21 is the lower part of the battery cell 20, wherein the mid-plane Y is perpendicular to the height direction of the battery casing 21, the distances from the mid-plane Y to both end surfaces of the battery casing 21 in the height direction are equal. For example, the battery casing 21 includes a case 12 and an end cover 11, and the end cover 11 closes the opening of the case 12. The case 12 and the end cover 11 are arranged along the height direction of the battery casing 21. Along the height direction of the battery casing 21, the mid-plane Y is located in the middle between the outer surface of the end cover 11 away from the case 12 and the outer surface of the case 12 away from the end cover 11.

If the weak region 52 is located at the lower part of the battery cell 20, the grooved portion 53 is located at the lower part of the battery cell 20, and both the weak region 52 and the grooved portion 53 are located below the mid-plane Y. The weak region 52 can be located on the case 12, and the weak region 52 can also be located on the end cover 11. The weak region 52 may be located on the side wall 121a of the case 12 or on the bottom wall 121b of the case 12. As shown in Fig. 71, taking the weak region 52 being located on the side wall 121a of the case 12 as an example, the bottom wall 121b of the case 12 can be located below the end cover 11, and the weak region 52 is located below the mid-plane Y, making the distance between the weak region 52 and the bottom wall 121b of the case 12 is greater than the distance between the weak region 52 and the end cover 11.

Since the weak region 52 is located at the lower part of the battery cell 20, during the use of the battery 100, under the gravity of the electrode assembly 2, electrolyte solution, etc. inside the battery cell 20, the weak region 52 will be subjected to a large force. The weak region 52 and the non-weak region 51 form an integrally molded structure, which has good structural strength, better reliability, thereby increases the service life of the battery cell 20.

In some embodiments, the battery cell 20 includes a case 12, the case 12 is used for accommodating the electrode assembly 22. The case 12 includes the integrally molded bottom wall 121b and multiple side walls 121a surrounding the bottom wall 121b. The bottom wall 121b is integrally molded with the side walls 121a. The case 12 forms an opening at the end opposite to the bottom wall 121b. The weak region 52 is located on the bottom wall 121b.

It can be understood that the bottom wall 121b is located below the mid-plane Y.

In the embodiment, the weak region 52 is located on the bottom wall 121b so that the weak region 52 is provided downward. When the battery cell 20 is thermally runaway, after the weak region 52 is destroyed, the emissions from the battery cell 20 will be ejected downward, which reduces the risk of safety accidents. For example, in the vehicle 1000, the battery 100 is generally mounted below the passenger compartment, with the weak region 52 facing downward, so that the emissions emitted by the battery cell 20 due to thermal runaway are ejected in a direction away from the passenger compartment, thereby reducing the impact of the emissions on the passenger compartment, reducing the risk of safety accidents.

In some embodiments, the battery cell 20 includes an end cover 11, the end cover 11 is used for closing the opening of the case 12, the case 12 is used for accommodating the electrode assembly 22, and the weak region 52 is located on the end cover 11.

It can be understood that the end cover 11 is located below the mid-plane Y.

In the embodiment, the weak region 52 is located on the end cover 11 so that the weak region 52 is provided downward. When the battery cell 20 is thermally runaway, after the weak region 52 is destroyed, the emissions from the battery cell 20 will be ejected downward, which reduces the risk of safety accidents.

In some embodiments, the embodiments of the present application provide an end cover 11 for the battery cell 20, and the end cover 11 includes the integrally molded non-weak region 51 and weak region 52. The end cover 11 is provided with a one-stage grooved portion 53, the non-weak region 51 is formed around the grooved portion 53, and the weak region 52 is formed at the bottom of the grooved portion 53. The weak region 52 is configured to be destroyed when the battery cell 20 releases the internal pressure. It has a first side surface 54 away from the interior of the battery cell 20. The grooved portion 53 forms an outer edge 534 on the first side surface 54. The region of the end cover 11 outside the outer edge 534 is the non-weak region 51. The average grain size of the weak region 52 is $S_1$, the average grain size of the non-weak region 51 is $S_2$, the minimum thickness of the weak region 52 is A, the minimum thickness of the non-weak region 51 is B, the hardness of the weak region 52 is Hi, and the hardness of the non-weak region 51 is $H_2$, satisfying: $0.1 \leq S_1/S_2 \leq 0.5$, $5 \leq A/Si \leq 20$, $190HBW/mm \leq Hi/A \leq 4000HBW/mm$, $1 < H_1/H_2 \leq 2.5$, $0.2 \leq A/B \leq 0.5$.

In some embodiments, the embodiments of the present application provide a case 12 for the battery cell 20, and the case 12 includes the integrally molded non-weak region 51 and weak region 52. The case 12 is provided with a one-stage grooved portion 53, the non-weak region 51 is formed around the grooved portion 53, and the weak region 52 is formed at the bottom of the grooved portion 53. The weak region 52 is configured to be destroyed when the battery cell 20 releases the internal pressure. It has a first side surface 54 away from the interior of the battery cell 20. The grooved portion 53 forms an outer edge 534 on the first side surface 54. The region of the end cover 11 outside the outer edge 534 is the non-weak region 51. The average grain size of the weak region 52 is $S_1$, the average grain size of the non-weak region 51 is $S_2$, the minimum thickness of the weak region 52 is A, the minimum thickness of the non-weak region 51 is B, the hardness of the weak region 52 is Hi, and the hardness of the non-weak region 51 is $H_2$, satisfying: $0.1 \leq S_1/S_2 \leq 0.5$, $5 \leq A/S_1 \leq 20$, $190HBW/mm \leq H_1/A \leq 4000HBW/mm$, $1 < H_1/H_2 < 2.5$, $0.2 \leq A/B \leq 0.5$.

The features and performance of the present application are described in further detail below in conjunction with the embodiments.

In each embodiment and comparative embodiment, the battery cell 20 is a square battery cell 20, the end cover 11 in the battery cell 20 serves as the battery casing, the capacity is 150Ah, and the chemical system is NCM.

I. Test methods:

(1) Test of average grain size of weak region 52 and non-weak region 51.

The average grain size of the weak region 52 and the non-weak region 51 was measured using the electron backscattered diffraction (EBSD) method. The battery casing was cut into 3 sections, and the cross section at both ends of the middle section had a weak region 52 and a non-weak region 51. The cutting direction was perpendicular to the length direction of the weak region 52, and the cutting equipment did not change the grain structure. The middle section was selected for sampling, with the sample thickness less than 5mm and length less than 10mm. Then, after the sample was electrolytically polished, the sample was fixed on a sample holder tilted at 70°, an appropriate magnification was selected, and a scanning electron microscope (SEM) equipped with an electron backscatter diffraction (EBSD) accessory was used for EBSD scanning. Based on the results, the average grain size (that is, the diameter of the equal circles of the complete grains in the inspection plane) was finally calculated.

(2) Test for minimum thickness of weak region 52 and non-weak region 51.

The battery casing was cut into 3 sections, the middle section was taken as the sample, and the cross section at both ends of the sample had a weak region 52 and a non-weak region 51. The cutting direction was perpendicular to the length direction of the weak region 52. After the middle section was polished to fully remove burrs, the sample was placed on a three-dimensional coordinate tester, and the thickness of the weak region 52 and the non-weak region 51 on the cross section was measured.

(3) Test for hardness of weak region 52 and non-weak region 51.

The battery casing was cut into 3 sections, the middle section was taken as the sample, and the cross section at both ends of the sample had a weak region 52 and a non-weak region 51. The cutting direction was perpendicular to the length direction of the weak region 52. After the test section was polished to fully remove burrs, the sample was placed horizontally (the sample's section direction was parallel to the extrusion direction of the hardness tester) and the hardness was measured on the Brinell hardness tester. If the width of the weak region 52 is < 1mm or the indenter size of the Brinell hardness tester is much larger than the width of the weak region 52, a non-standard indenter should be processed for hardness measurement in accordance with the Brinell hardness measurement and conversion principle.

(4) The cracking rate of the weak region 52 under normal use conditions of the battery cell 20.

The battery 100 was placed under the conditions of $25\pm2°C$, and was charged and discharged cyclically in a charge and discharge interval of 5%-97% SOC. The internal gas pressure of the battery cell 20 was monitored at the same time, and 500 sets of tests were performed at the same time. The test cut-off condition: the service life of the battery cells 20 drops to 80% SOH or the weak region 52 of any group of battery cells 20 cracks during the cycle. The condition for determining cracking of the weak region 52s: the internal air pressure value of the battery cell 20 decreases, and the decrease value is > 10% of the maximum air pressure. The cracking rate of the weak region 52 was statistically calculated, cracking rate = number of cracks/total number* 100%.

(5) The explosion rate of the battery cell 20 during thermal runaway.

A small heating film was built into the battery cell 20. The heating film was energized to heat the battery cell 20 until the battery cell 20 underwent thermal runaway. Whether the battery cell 20 explodes was observed. 500 sets of tests were repeatedly carried out, and the explosion rate of 20 battery cells was statistically calculated, explosion rate = number of explosions/total number*100%.

II. Test results

In the embodiments and comparative embodiments, the test results of the average grain size $S_1$ of the weak region 52, the average grain size $S_2$ of the non-weak region 51, the minimum thickness $A_1$ the weak region 52, the minimum thickness $A_2$ of the non-weak region 51, the hardness $B_1$ of the weak region 52 and the hardness $B_2$ of the non-weak region 51 are shown in Table 11; the cracking rate $Q_1$ of the weak region 52 under the normal use conditions of the battery cell 20 and the explosion rate $Q_2$ of the battery cell 20 when thermal runaway occurs are shown in Table 12.

Table 11

| | $S_1$ (mm) | $S_2$ (mm) | $S_1/S_2$ | $A_1$ (mm) | $Ai/S_1$ | $B_1$ (HBW) | $B_1/A_1$ | $B_2$ (HBW) | $B_1/B_2$ | $A_2$ (mm) | $A_1/A_2$ |
|---|---|---|---|---|---|---|---|---|---|---|---|
| Embodiment 1 | 0.036 | 0.04 | 0.9 | 0.15 | 4.16 7 | 90 | 600 | 52.5 | 1.71 4 | 1.5 | 0.1 |
| Embodiment 2 | 0.028 | 0.04 | 0.7 | 0.15 | 5.35 7 | 90 | 600 | 52.5 | 1.71 4 | 1.5 | 0.1 |
| Embodiment 3 | 0.02 | 0.04 | 0.5 | 0.15 | 7.5 | 90 | 600 | 52.5 | 1.71 4 | 1.5 | 0.1 |
| Embodiment 4 | 0.01 | 0.04 | 0.25 | 0.15 | 15 | 90 | 600 | 52.5 | 1.71 4 | 1.5 | 0.1 |
| Embodiment 5 | 0.004 | 0.04 | 0.1 | 0.15 | 37.5 | 90 | 600 | 52.5 | 1.71 4 | 1.5 | 0.1 |
| Embodiment 6 | 0.002 | 0.04 | 0.05 | 0.15 | 75 | 90 | 600 | 52.5 | 1.71 4 | 1.5 | 0.1 |
| Embodiment 7 | 0.0016 | 0.04 | 0.04 | 0.15 | 93.7 5 | 90 | 600 | 52.5 | 1.71 4 | 1.5 | 0.1 |
| Embodiment 8 | 0.01 | 0.04 | 0.25 | 1.2 | 120 | 90 | 75 | 52.5 | 1.71 4 | 1.5 | 0.8 |
| Embodiment 9 | 0.01 | 0.04 | 0.25 | 1 | 100 | 90 | 90 | 52.5 | 1.71 4 | 1.5 | 0.66 7 |
| Embodiment 10 | 0.01 | 0.04 | 0.25 | 0.2 | 20 | 90 | 450 | 52.5 | 1.71 4 | 1.5 | 0.13 3 |
| Embodiment 11 | 0.01 | 0.04 | 0.25 | 0.05 | 5 | 90 | 180 0 | 52.5 | 1.71 4 | 1.5 | 0.03 3 |
| Embodiment 12 | 0.01 | 0.04 | 0.25 | 0.01 | 1 | 90 | 900 0 | 52.5 | 1.71 4 | 1.5 | 0.00 7 |
| Embodiment 13 | 0.01 | 0.04 | 0.25 | 0.016 | 1.6 | 200 | 125 00 | 100 | 2 | 1.5 | 0.01 1 |
| Embodiment 14 | 0.01 | 0.04 | 0.25 | 0.02 | 2 | 200 | 100 00 | 100 | 2 | 1.5 | 0.01 3 |
| Embodiment 15 | 0.01 | 0.04 | 0.25 | 0.05 | 5 | 200 | 400 0 | 100 | 2 | 1.5 | 0.03 3 |
| Embodiment 16 | 0.01 | 0.04 | 0.25 | 0.1 | 10 | 19 | 190 | 9.5 | 2 | 1.5 | 0.06 7 |

(continued)

| | $S_1$ (mm) | $S_2$ (mm) | $S_1/S_2$ | $A_1$ (mm) | $Ai/S_1$ | $B_1$ (HBW) | $B_1/A_1$ | $B_2$ (HBW) | $B_1/B_2$ | $A_2$ (mm) | $A_1/A_2$ |
|---|---|---|---|---|---|---|---|---|---|---|---|
| Embodiment 17 | 0.01 | 0.04 | 0.25 | 1 | 100 | 6 | 6 | 3 | 2 | 1.5 | 0.66 7 |
| Embodiment 18 | 0.01 | 0.04 | 0.25 | 1.2 | 120 | 4.8 | 4 | 2.4 | 2 | 1.5 | 0.8 |
| Embodiment 19 | 0.01 | 0.04 | 0.25 | 0.15 | 15 | 315 | 210 0 | 52.5 | 6 | 1.5 | 0.1 |
| Embodiment 20 | 0.01 | 0.04 | 0.25 | 0.15 | 15 | 262.5 | 175 0 | 52.5 | 5 | 1.5 | 0.1 |
| Embodiment 21 | 0.01 | 0.04 | 0.25 | 0.15 | 15 | 131.2 5 | 875 | 52.5 | 2.5 | 1.5 | 0.1 |
| Embodiment 22 | 0.01 | 0.04 | 0.25 | 0.15 | 15 | 52.5 | 350 | 52.5 | 1 | 1.5 | 0.1 |
| Embodiment 23 | 0.01 | 0.04 | 0.25 | 0.15 | 15 | 42 | 280 | 52.5 | 0.8 | 1.5 | 0.1 |
| Embodiment 24 | 0.01 | 0.04 | 0.25 | 1.47 | 147 | 90 | 61.2 24 | 52.5 | 1.71 4 | 1.5 | 0.98 |
| Embodiment 25 | 0.01 | 0.04 | 0.25 | 1.425 | 143 | 90 | 63.1 58 | 52.5 | 1.71 4 | 1.5 | 0.95 |
| Embodiment 26 | 0.01 | 0.04 | 0.25 | 1.2 | 120 | 90 | 75 | 52.5 | 1.71 4 | 1.5 | 0.8 |
| Embodiment 27 | 0.01 | 0.04 | 0.25 | 0.75 | 75 | 90 | 120 | 52.5 | 1.71 4 | 1.5 | 0.5 |
| Embodiment 28 | 0.01 | 0.04 | 0.25 | 0.3 | 30 | 90 | 300 | 52.5 | 1.71 4 | 1.5 | 0.2 |
| Embodiment 29 | 0.01 | 0.04 | 0.25 | 0.18 | 18 | 90 | 500 | 52.5 | 1.71 4 | 1.5 | 0.12 |
| Embodiment 30 | 0.01 | 0.04 | 0.25 | 0.075 | 7.5 | 90 | 120 0 | 52.5 | 1.71 4 | 1.5 | 0.05 |
| Embodiment 31 | 0.01 | 0.04 | 0.25 | 0.06 | 6 | 90 | 150 0 | 52.5 | 1.71 4 | 1.5 | 0.04 |
| Comparative Embodiment 1 | 0.038 | 0.04 | 0.95 | 0.15 | 3.94 7 | 90 | 600 | 52.5 | 1.71 4 | 1.5 | 0.1 |
| Comparative Embodiment 2 | 0.04 | 0.04 | 1 | 0.15 | 3.75 | 90 | 600 | 52.5 | 1.71 4 | 1.5 | 0.1 |
| Comparative Embodiment 3 | 0.048 | 0.04 | 1.2 | 0.15 | 3.12 5 | 90 | 600 | 52.5 | 1.71 4 | 1.5 | 0.1 |

Table 12

| | $Q_1$ | $Q_2$ |
|---|---|---|
| Embodiment 1 | 8% | 0.6% |
| Embodiment 2 | 6.8% | 0.8% |
| Embodiment 3 | 6.2% | 1.4% |

(continued)

|  | $Q_1$ | $Q_2$ |
|---|---|---|
| Embodiment 4 | 5% | 1.6% |
| Embodiment 5 | 2.8% | 1.8% |
| Embodiment 6 | 0.8% | 2.2% |
| Embodiment 7 | 0.6% | 6.4% |
| Embodiment 8 | 0.4% | 8% |
| Embodiment 9 | 1.2% | 4% |
| Embodiment 10 | 2.6% | 1.8% |
| Embodiment 11 | 3.2% | 1.4% |
| Embodiment 12 | 6% | 1% |
| Embodiment 13 | 10.2% | 0.6% |
| Embodiment 14 | 6.2% | 1.8% |
| Embodiment 15 | 3.8% | 3.8% |
| Embodiment 16 | 2.4% | 6.6% |
| Embodiment 17 | 1% | 8.8% |
| Embodiment 18 | 0.8% | 12% |
| Embodiment 19 | 1.2% | 10% |
| Embodiment 20 | 1.8% | 4.4% |
| Embodiment 21 | 2.4% | 2.2% |
| Embodiment 22 | 6% | 1.4% |
| Embodiment 23 | 8% | 1% |
| Embodiment 24 | 1% | 14.2% |
| Embodiment 25 | 1.4% | 9.2% |
| Embodiment 26 | 2.2% | 8% |
| Embodiment 27 | 3% | 3.6% |
| Embodiment 28 | 3.6% | 1.6% |
| Embodiment 29 | 5% | 1% |
| Embodiment 30 | 7.4% | 0.4% |
| Embodiment 31 | 10.4% | 0.4% |
| Comparative Embodiment 1 | 20.2% | 0.6% |
| Comparative Embodiment 2 | 22.4% | 0.4% |
| Comparative Embodiment 3 | 26.4% | 0.4% |

According to Table 11 and Table 12, it can be seen from Embodiments 1 to 7 that in the case of $S_1/S_2 \leq 0.9$, the cracking rate of the weak region 52 is low under normal use conditions of the battery cell 20. In Comparative Embodiment 1 where it satisfies $0.9 < S_1/S_2 < 1$, the cracking rate of the weak region 52 increases significantly under normal use conditions of the battery cell 20; in Comparative Embodiment 2 where it satisfies $S_1/S_2=1$, the weak region 52 has a significantly increased cracking rate under the normal use conditions of the battery cell 20; in Comparative Embodiment 3 where it satisfies $S_1/S_2 > 1$, the cracking rate of the weak region 52 also increases significantly under the normal use conditions of the battery cell 20. Comparing Embodiments 1 to 7 and Comparative Embodiments 1 to 3, it can be seen that controlling $S_1/S_2$ to not exceed 0.9 can effectively reduce the risk of the weak region 52 being damaged under normal use conditions of the battery cell 20, thereby improving the service life of the battery cell 20.

According to Embodiment 7, it can be seen that in the case of $S_1/S_2 < 0.5$, it is more difficult for the weak region 52 to be destroyed when the battery cell 20 is thermally runaway. If the pressure is not released in time, the risk of the battery cell 20 exploding is significantly increased. It can be seen from Embodiments 3 to 5 that in the case of $0.1 \leq S_1/S_2 \leq 0.5$, the cracking rate of the weak region 52 under the normal use conditions of the battery cell 20 and the explosion rate of the battery cell 20 when thermal runaway occurs are both low, which ensures that the weak region 52 has sufficient strength under normal service conditions of the battery cell 20 while ensuring that the weak region 52 can be destroyed in time when the battery cell 20 is thermally runaway.

From the comparison of Embodiments 9 to 12 with Embodiment 8, it can be seen that in the case of $1 \leq A_1/S_1 \leq 100$, the battery cell 20 can release pressure in time when thermal runaway occurs, and the explosion rate of the battery cell 20 is low. In the case of $5 \leq A_1/S_1 \leq 20$, the comprehensive performance of the battery cell 20 is better, and the cracking rate of the weak region 52 under the normal use conditions of the battery cell 20 and the explosion rate of the battery cell 20 when thermal runaway occurs are both low.

From the comparison of Embodiments 14 to 17 with Embodiment 13, it can be seen that the cracking rate of the weak region 52 is higher under the normal use condition of the battery cell 20 in the case of $B_1/A_1 > 10000HBW/mm$. By comparing Embodiments 14 to 17 with Embodiment 18, it can be seen that in the case of Bi/Ai < 5HBW/mm, the explosion rate of the battery cell 20 is higher when thermal runaway occurs. In the case of 5HBW/mm ≤ Bi/Ai < 10000HBW/mm, it can not only reduce the risk of rupture of the weak region 52 under the normal use conditions of the battery cell 20, but also can timely achieve pressure relief through the weak region 52 when the battery cell 20 is thermally runaway, reducing the risk of battery cell 20 exploding. As can be seen from Embodiments 15 to 16, in the case of 190HBW/mm ≤ Bi/Ai < 4000HBW/mm, the comprehensive performance of the battery cell 20 is better, and the cracking rate of the weak region 52 under the normal use conditions of the battery cell 20 and the explosion rate of the battery cell 20 when thermal runaway occurs are both low.

From the comparison of Embodiments 19 to 21 with Embodiments 22 to 23, it can be seen that in the case of $B_1/B_2 \leq 1$, the cracking rate of the weak region 52 under the normal use conditions of the battery cell 20 is relatively high. $B_1/B_2 > 1$ can effectively reduce the cracking rate of the weak region 52 under normal use conditions of the battery cell 20. A comparison of Embodiments 20 to 21 with Embodiment 19 shows that in the case of $B_1/B_2 > 5$, the battery cell 20 has a higher explosion rate when thermal runaway occurs, and $B_1/B_2 \leq 5$ can reduce the risk of explosion of the battery cell 20.

From the comparison of Embodiments 25 to 30 with Embodiment 24, it can be seen that in the case of $A_1/A_2 > 0.95$, the battery cell 20 has a higher explosion rate when thermal runaway occurs. Comparing Embodiments 25 to 30 with Embodiment 31, it can be seen that in the case of $A_1/A_2 < 0.05$, the cracking rate of the weak region 52 under normal use conditions of the battery cell 20 is relatively high. In the case of $0.05 \leq A_1/A_2 \leq 0.95$, it can not only reduce the risk of rupture of the weak region 52 under the normal use conditions of the battery cell 20, but also can timely achieve pressure relief through the weak region 52 when the battery cell 20 is thermally runaway, reducing the risk of battery cell 20 exploding. As can be seen from Embodiments 26 to 29, in the case of $0.12 \leq A_1/A_2 \leq 0.8$, the comprehensive performance of the battery cell 20 is better, and the cracking rate of the weak region 52 under the normal use conditions of the battery cell 20 and the explosion rate of the battery cell 20 when thermal runaway occurs are both low, and $0.2 \leq A_1/A_2 \leq 0.5$ provides better effect.

In some embodiments, as shown in Figs. 4 and 84-94, the electrode assembly 22 includes a positive electrode plate 1B and a negative electrode plate 2B. The positive electrode plate 1B and/or negative electrode plate 2B include a current collector 22A and an active material layer 22B. The current collector 22A includes a supporting layer 22A1 and a conductive layer 22A2. The supporting layer 22A1 is used to support the conductive layer 22A2. The supporting layer 22A1 has appropriate rigidity to support and protect the conductive layer 22A2, ensuring the overall strength of the current collector 22A, and has appropriate flexibility so that the current collector 22A and the electrode plate can be rolled during processing; the conductive layer 22A2 is used to support the active material layer 22B and provide electrons to the active material layer 22B, that is, it plays the role of conducting electricity and collecting current.

Since the density of the supporting layer 22A1 is lower than that of the conductive layer 22A2, the weight of the current collector 22A of the present application is significantly lighter than that of the traditional current collector. Therefore, the current collector 22A of the present application can significantly increase the gravimetric energy density of the electrochemical device.

Optionally, the supporting layer 22A1 is an insulating layer.

In some embodiments, as shown in Figs. 84-94, along the thickness direction of the supporting layer, the conductive layer is disposed on at least one side of the supporting layer, the conductive layer can be disposed on the two opposite surfaces of the supporting layer, and the structural view thereof is shown in Figs. 84 and 86; or, the conductive layer can be disposed on only one side of the supporting layer, and the structural view thereof is shown in Figs. 85 and 87. This facilitates flexible arrangement of the conductive layer.

In some embodiments, the room temperature film resistance Rs of the conductive layer 22A2 satisfies: $0.016\Omega/\square \leq Rs \leq 420\Omega/\square$.

Film resistance is measured in ohm/square ($\Omega/\square$), which can be applied to a two-dimensional system in which the conductor is considered as a two-dimensional entity, which is equivalent to the concept of resistivity used in a three-dimensional system. When using the concept of film resistance, current is theoretically assumed to flow along the plane of the film.

For conventional three-dimensional conductors, the calculation formula of resistance is:

$$R = \rho \frac{L}{A}$$

wherein, $\rho$ represents resistivity, A represents cross-sectional area, and L represents length. The cross-sectional area can be decomposed into the width W and the film thickness t, that is, the resistance can be written as:

$$R = \frac{\rho}{t} \frac{L}{W} = R_s \frac{L}{W}$$

wherein, Rs is the film resistance. When the diaphragm is square in shape, L=W, the measured resistance R is the film resistance Rs of the diaphragm, and Rs has nothing to do with the size of L or W, Rs is the resistance value of the unit square, so the unit of $R_S$ can be expressed as ohms per square ($\Omega/\square$).

The room temperature film resistance in the present application refers to the resistance value measured using the four-probe method on the conductive layer under normal temperature.

In existing lithium-ion battery cells, when a short circuit occurs within the battery cell under abnormal circumstances, a large current is generated instantaneously, accompanied by a large amount of short-circuit heat. This heat usually also causes thermit reaction at the positive electrode aluminum foil current collector, causing the battery cells to catch fire, explode, etc.

In the present application, the above technical problem is solved by increasing the room temperature film resistance Rs of the current collector.

The internal resistance of a battery cell usually includes the battery ohmic internal resistance and the battery polarization internal resistance, wherein the active material resistance, current collector resistance, interface resistance, electrolyte solution composition, etc. will all have a significant impact on the battery cell internal resistance.

When a short circuit occurs under abnormal circumstances, the internal resistance of the battery cell will reduce greatly due to the internal short circuit. Therefore, increasing the resistance of the current collector can increase the internal resistance of the battery cell after a short circuit, thereby improving the safety performance of the battery cell. In the present application, when the battery cell can limit the influence of the short-circuit damage on the battery cell to the "point" range, the influence of the short-circuit damage on the battery cell can be limited to the damage point and position, and the short-circuit current is greatly reduced due to the high resistance of the current collector, the temperature rise of the battery cell due to the short-circuit heat generation is not obvious, and the normal use of the battery cell in a short period of time is not affected, which is called "point break".

When the room temperature film resistance Rs of the conductive layer is not less than 0.016$\Omega/\square$, the short-circuit current can be greatly reduced when the battery cell is internally short-circuited, thereby greatly reducing the short-circuit heat generation and greatly improving the safety performance of the battery cell. In addition, the short-circuit heat generation can be controlled in the range that the battery cell can completely absorb it, therefore, the heat generated at the position where the internal short-circuit occurs can be completely absorbed by the battery cell, and the resulting temperature rise of the battery cell is also very small, so that the influence of the short-circuit damage to the battery cell can be limited to the range of "point", and only "point break" is formed, without affecting the normal operation of the battery cell in a short time.

However, when the room temperature film resistance Rs of the conductive layer is too large, it will affect the conduction and current collection functions of the conductive layer, and electrons cannot be effectively conducted between the current collector, the electrode active material layer, and the interface between the two. That is, it will increase the polarization of the electrode active material layer on the surface of the conductive layer and affect the electrochemical performance of the battery cells. Therefore, the room temperature film resistance Rs of the conductive layer is not more than 420$\Omega/\square$.

In the present application, the upper limit of the room temperature film resistance Rs can be 420$\Omega/\square$, 400$\Omega/\square$, 350$\Omega/\square$, 300$\Omega/\square$, 250$\Omega/\square$, 200$\Omega/\square$, 150$\Omega/\square$, 100$\Omega/\square$, 80$\Omega/\square$, 60$\Omega/\square$, 40$\Omega/\square$, 25$\Omega/\square$, 20$\Omega/\square$, 18$\Omega/\square$, 16$\Omega/\square$, 14$\Omega/\square$, 12$\Omega/\square$, 10$\Omega/\square$, 8$\Omega/\square$, 6$\Omega/\square$, 4$\Omega/\square$, 2$\Omega/\square$, 1.8$\Omega/\square$, the lower limit of room temperature film resistance Rs can be 0.016$\Omega/\square$, 0.032$\Omega/\square$, 0.048$\Omega/\square$, 0.064$\Omega/\square$, 0.08$\Omega/\square$, 0.09$\Omega/\square$, 0.1$\Omega/\square$, 0.2$\Omega/\square$, 0.4$\Omega/\square$, 0.6$\Omega/\square$, 0.8$\Omega/\square$, 1$\Omega/\square$, 1.2$\Omega/\square$, 1.4$\Omega/\square$, 1.6$\Omega/\square$; the range of room temperature film resistance Rs can be composed of any value of the upper limits or the lower limits.

In some embodiments, the room temperature film resistance of the conductive layer 22A2 satisfies: 0.032$\Omega/\square \le$ Rs $\le$ 21$\Omega/\square$, more preferably 0.080$\Omega/\square \le$ Rs $\le$ 8.4$\Omega/\square$.

In some embodiments, the thickness d2 of the conductive layer 22A2 satisfies: 1 nm $\le$ d2 $\le$ 1$\mu$m.

In the present application, the upper limit of the thickness d2 of the conductive layer 22A2 may be 1μm, 900nm, 800nm, 700nm, 600nm, 500nm, 450nm, 400nm, 350nm, 300, 250nm, 200nm, 150nm, 120nm, 100nm, 80nm, 60nm, the lower limit of the thickness d2 of the conductive layer can be 1nm, 5nm, 10nm, 15nm, 20nm, 25nm, 30nm, 35nm, 40nm, 45nm, 50nm, 55nm; the range of the thickness d2 of the conductive layer can be composed of any value of the upper limits or the lower limits.

In some embodiments, the thickness d2 of the conductive layer 22A2 satisfies: $20nm \leq d2 \leq 500nm$, more preferably $50nm \leq d2 \leq 200nm$.

If the conductive layer 22A2 is too thin, although it is beneficial to increasing the room temperature film resistance Rs of the current collector 22A, it will easily be damaged during the electrode plate processing process. If the conductive layer 22A2 is too thick, it will affect the gravimetric energy density of the battery cell and is not conducive to increasing the room temperature film resistance Rs of the conductive layer 22A2.

In some embodiments, the thickness of the supporting layer 22A1 is d1, and d1 satisfies $1μm \leq d1 \leq 50μm$.

In the present application, the upper limit of the thickness d1 of the supporting layer 22A1 may be 50μm, 45μm, 40μm, 35μm, 30μm, 2.5μm, 20μm, 15μm, 12μm, 10μm, 8μm, and the lower limit of the thickness d1 of the supporting layer 22A1 may be 1μm, 1.5μm, 2μm, 3μm, 4μm, 5μm, 6μm, 7μm; the range of the thickness d1 of the supporting layer 22A1 can be composed of any value of the upper limits or the lower limits.

In some embodiments, d1 satisfies: $2μm \leq d1 \leq 30μm$; more preferably, $5μm \leq d1 \leq 20μm$.

The supporting layer 22A1 mainly plays the role of supporting and protecting the conductive layer. If the supporting layer 22A1 is too thin, it will easily break during the electrode plate processing and other processes; if it is too thick, the volumetric energy density of the battery cell using the current collector 22A will be reduced.

In some embodiments, the material of the conductive layer 22A2 is selected from at least one of metal conductive materials and carbon-based conductive materials.

The metal conductive material is preferably at least one of aluminum, copper, nickel, titanium, silver, a nickel-copper alloy, and an aluminum-zirconium alloy; and the carbon-based conductive material is preferably at least one of graphite, acetylene black, graphene, and a carbon nanotube.

In some embodiments, the material of the supporting layer 22A1 comprises one or more of polymer materials and polymer-based composite material.

The aforementioned polymer materials include, for example, one or more of polyamide-based polymers, polyimide-based polymers, polyester-based polymers, polyolefin-based polymers, polyalkyne-based polymers, silicone polymers, polyethers, polyols, polysulfone, polysaccharide polymers, amino acid polymers, polysulfur nitride polymer materials, aromatic ring polymers, aromatic heterocyclic polymers, polyphenylene sulfide, polysulfones, epoxy resins, phenolic resins, derivatives thereof, crosslinked products thereof and copolymers thereof.

As an example, the polyamide-based polymer can be one or more of polyamide (PA for short, commonly known as nylon) and polyparaphenylene terephthalamide (PPTA, commonly known as aramid); the polyimide-based polymer can be polyimide (PI); the polyester-based polymer can be one or more of polyethylene terephthalate (PET), polybutylene terephthalate (PBT), polyethylene naphthalate (PEN) and polycarbonate (PC); the polyolefin-based polymer can be one or more of polyethylene (PE), polypropylene (PP) and polypheylene ether (PPE); the derivatives of polyolefin-based polymers can be polyvinyl alcohol (PVA), polystyrene (PS), polyvinyl chloride (PVC), polyvinylidene fluoride (PVDF), polytetrafluoroethylene (PTEE) and sodium polystyrene sulfonate (PSS); the polyacetylene-based polymer can be polyacetylene (PA); the siloxane polymer can be silicone rubber; the polyether can be, for example, one or more of polyoxymethylene (POM), poly(phenylene oxide) (PPO) and polyphenylene sulfide (PPS); the polyol can be polyethylene glycol (PEG); the polysaccharide polymer can be, for example, one or more of cellulose and starch; the amino acid polymer can be protein; the aromatic ring polymer can be one or more of polyphenylene and polyparaphenylene; the aromatic heterocyclic polymer can be one or more of polypyrrole (Ppy), polyaniline (PAN), polythiophene (PT) and polypyridine (PPY); the copolymer of polyolefin-based polymers and their derivatives can be acrylonitrile-butadiene-styrene copolymer (ABS).

In addition, the aforementioned polymer materials can also be doped by means of redox, ionization or electrochemistry.

The aforementioned polymer-based composite material comprises the aforementioned polymer material and an additive, wherein the additive may be at least one or more of metallic materials and inorganic non-metallic materials.

As an example, the metallic material can be one or more of aluminum, aluminum alloy, copper, copper alloy, nickel, nickel alloy, titanium, titanium alloy, iron, iron alloy, silver and silver alloy; the inorganic non-metallic material can be one or more of carbon-based materials, alumina, silicon dioxide, silicon nitride, silicon carbide, boron nitride, silicate and titanium oxide, such as one or more of glass materials, ceramic materials and ceramic composite materials. The aforementioned carbon-based material may be one or more of graphite, superconducting carbon, acetylene black, carbon black, Ketjen black, carbon dot, carbon nanotube, graphene, and carbon nanofiber.

The aforementioned additive may be a carbon-based material coated with a metallic material, such as one or more of nickel-coated graphite powder and nickel-coated carbon fiber.

In some preferred embodiments, the supporting layer includes one or more of polyethylene terephthalate (PET), polybutylene terephthalate (PBT), polyethylene naphthalate (PEN), and polyimide (PI).

It can be understood that the supporting layer can be a single-layer structure or a composite layer structure formed by more than two layers of sub-supporting layers, such as two layers, three layers, four layers, etc. When the supporting layer is a composite layer structure formed by two or more sub-supporting layers, the materials of the individual layers may be the same or different.

In some embodiments, the material of the supporting layer is selected from one of organic polymer insulating materials, inorganic insulating materials, and composite materials. Further preferably, the composite material is composed of organic polymer insulating materials and inorganic insulating materials.

In some embodiments, the organic polymer insulating material is selected from at least one of polyamide (PA for short), polyethylene terephthalate (PET for short), polyimide (PI for short), polyethylene (PE for short), polypropylene (PP for short), polystyrene (PS for short), polyvinyl chloride (PVC for short), acrylonitrile butadiene styrene copolymers (ABS for short), polybutylene terephthalate (PBT for short), poly-p-phenylene terephthamide (PPA for short), epoxy resin, polyphenylene ether (PPE for short), polyformaldehyde (POM for short), phenol-formaldehyde resin, polytetrafluoroethylene (PTFE for short), silicone rubber, polyvinylidenefluoride (PVDF for short) and polycarbonate (PC for short).

The inorganic insulating material is preferably at least one of alumina (A12O3), silicon carbide (SiC), and silicon dioxide (SiO2); the composite is preferably at least one of epoxy resin glass fiber reinforced composite materials or polyester resin glass fiber reinforced composite materials.

Since the density of the supporting layer is generally smaller than that of the metal, the embodiments of the present application can increase the gravimetric energy density of the battery cell while improving the safety performance of the battery cell. Moreover, since the supporting layer can play a good role in supporting and protecting the conductive layer located on its surfaces, breakage of the electrode plate is not likely to occur, which is common in traditional current collectors.

In some embodiments, the conductive layer may be formed on the insulating layer by at least one of mechanical rolling, bonding, vapor deposition, and electroless plating. The vapor deposition is preferably physical vapor deposition (PVD). The physical vapor deposition is preferably at least one of evaporating and sputtering method. The evaporating is preferably at least one of vacuum evaporating, thermal evaporation deposition, and electron beam evaporation method (EBEM). The sputtering is preferably magnetron sputtering.

In some embodiments, in order to facilitate the penetration of the electrolyte solution into the electrode active material layer and reduce the polarization of the battery cells, the structure of the current collector can be further improved. For example, holes of 10 $\mu$m $\leq$ hole diameter $\leq$ 100 $\mu$m can be provided in the conductive layer, the hole area can account for 5% to 50% of the total area of the conductive layer; or through holes 10 $\mu$m $\leq$ through hole diameter $\leq$ 100 $\mu$m running through the supporting layer and the conductive layer are provided in the current collector with a porosity of 5% to 50%.

Specifically, for example, electroless plating can be used to form holes in the conductive layer, and mechanical drilling can be used to form through holes that run through the supporting layer and the conductive layer in the current collector.

In some embodiments, the positive electrode plate 1B includes a current collector (or positive electrode current collector 10B) and an active material layer (or positive electrode active material layer 11B) formed on the surface of the current collector. The positive electrode current collector 10 includes a positive electrode supporting layer 101 and a positive electrode conductive layer 102. The structural schematic view of the positive electrode current collector 10B is shown in Figs. 84 and 85, and the structural schematic view of the positive electrode plate 1B is shown in Figs. 88 and 89.

In some embodiments, the negative electrode plate 2B includes a current collector (or negative electrode current collector 20B) and an active material layer (or negative electrode active material layer 21B) formed on the surface of the current collector, the negative electrode current collector 20B includes a negative electrode supporting layer 201 and a negative electrode conductive layer 202. The structural schematic view of the negative electrode current collector 20B is shown in Figs. 154 and 155, and the structural schematic view of the negative electrode plate 2B is shown in Figs. 90 and 91.

In some embodiments, as shown in Figs. 84 and 86, when both sides of the supporting layer are provided with conductive layers, and the current collector is coated with the active material on both sides, the prepared electrode plate is as shown in Figs. 88 and 89, and can be directly applied to battery cells. As shown in Figs. 85 and 87, when one side of the insulating layer is provided with a conductive layer, one side of the current collector is coated with the active material, the prepared electrode plate is shown in Figs. 89 and 91, which can be folded and used in battery cells.

Preferably, the positive electrode plate of the battery cell of the present application adopts the above arrangement including the current collector and the active material layer. The aluminum content in conventional positive electrode current collectors is high, when a battery cell is short-circuited under abnormal conditions, the heat generated at the short-circuit point can trigger a violent thermit reaction, thereby generating a large amount of heat and causing accidents such as explosion of the battery cell, so that when the positive electrode plate of the battery cell adopts the above structure, since the amount of aluminum in the positive electrode current collector is only nanometer-thick, the amount of aluminum in the positive electrode current collector is greatly reduced. As a result, the thermit reaction can be avoided, thereby significantly improve the safety performance of battery cells.

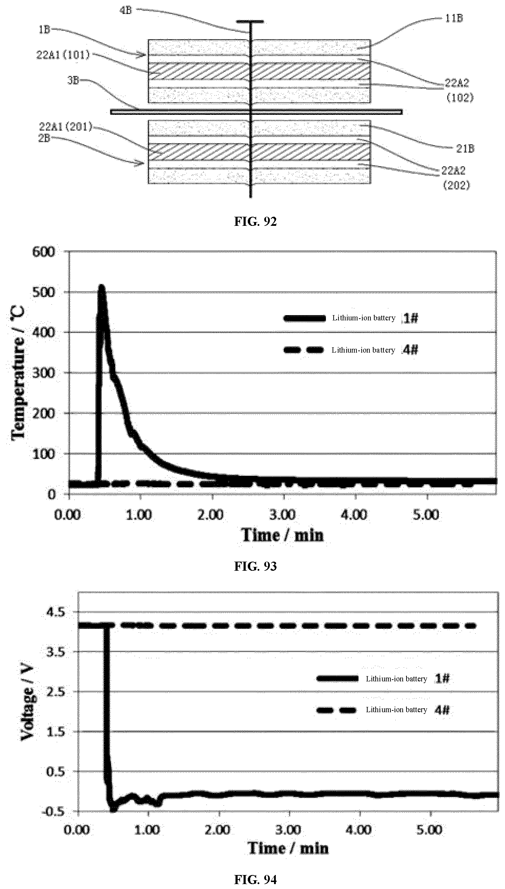

The nail penetration experiment is used below to simulate the abnormal situation of the battery cell and the changes of the battery cell after the nail penetration is observed. Fig. 92 is a schematic view of a nail penetration experiment in the present application. For the sake of simplicity, the figure only shows that nail 4B penetrates a layer of positive electrode plate 1B, a layer of separator 3B and a layer of negative electrode plate 2B of the battery. It should be noted that in the actual nail penetration experiment, nail 4B penetrates the entire battery cell, usually includes multiple layers of positive electrode plates 1B, multiple layers of separators 3B and multiple layers of negative electrode plates 2B.

In addition, through a large number of experiments, it has been found that the greater the capacity of the battery cell, the smaller the internal resistance of the battery cell, and the worse the safety performance of the battery cell, that is, the battery cell capacity (Cap) and the battery internal resistance ® are inversely related:

$$r = A/Cap$$

In the formula, r represents the internal resistance of the battery, Cap represents the capacity of the battery cell, and A is a coefficient.

The battery cell capacity Cap is the theoretical capacity of the battery cell, usually the theoretical capacity of the positive electrode of the battery cell.

R can be obtained by testing by an internal resistance meter.

For conventional lithium-ion battery cells composed of conventional positive electrode plates and conventional negative electrode plates, when an internal short circuit occurs under abnormal circumstances, basically all conventional lithium-ion battery cells will produce varying degrees of smoke, fire, explosion etc.

As for the battery cell using an electrode plate including a current collector and an active material layer in the embodiments of the present application, since it has a relatively large internal resistance of the battery when the battery cell capacity is the same, it can have a larger A value.

For the battery cell using an electrode plate including a current collector and an active material layer in the embodiments of the present application, when the coefficient A satisfies $40Ah \cdot m\Omega \leq A \leq 2000Ah \cdot m\Omega$, the battery cell can have good electrochemical performance and good safety performance.

When the A value is too large, the electrochemical performance of the battery cell will be degraded due to excessive internal resistance, so it is not practical.

When the A value is too small, the temperature of the battery cell will rise too high when an internal short circuit occurs, and the safety performance of the battery cell will be reduced.

Further preferably, the coefficient A satisfies $40Ah \cdot m\Omega \leq A \leq 1000Ah \cdot m\Omega$; more preferably, the coefficient A satisfies $60Ah \cdot m\Omega \leq A \leq 600Ah \cdot m\Omega$.

The battery cell using an electrode plate including a current collector and an active material layer in the embodiments of the present application also relates to the use of the current collector in preparing a battery cell that only forms a point break to protect itself when subjected to abnormal conditions that cause short circuits. In the embodiments of the present application, the battery cell can limit the influence of short circuit damage on the battery cell to the" point" range, the normal use of the battery cell in a short time is not affected, which is called "point break".

In another aspect, the embodiments of the present application further relate to the use of the current collector as a current collector for a battery cell that only forms a point break when subjected to an abnormal situation that causes a short circuit.

Preferably, the abnormal conditions that cause short circuit include collision, extrusion, foreign matter piercing, etc. Since the short circuit caused during these damage processes is caused by electrically connecting the positive and negative electrodes with materials with certain conductivity, in the embodiments of the present application, these abnormal conditions are collectively referred to as nail penetration. In the detailed description of the present application, a nail penetration experiment is used to simulate the abnormal situation of the battery cell.

Embodiments

1. Preparation of current collector

A supporting layer such as an insulating layer of a certain thickness was selected, a conductive layer of a certain thickness was formed on its surface by vacuum evaporation, mechanical rolling or bonding, and the room temperature film resistance of the conductive layer was measured.

Among others,

(1) The forming conditions of the vacuum evaporation method were as follows: a surface-cleaned insulating layer was placed in the vacuum plating chamber, the high-purity metal wire in the metal evaporation chamber was melted and evaporated at a high temperature of 1600°C to 2000°C; after passing through the cooling system in the vacuum plating chamber, the evaporated metal was finally deposited on the surface of the insulating layer to form a conductive layer.

(2) The forming conditions of the mechanical rolling method were as follows: the foil of the conductive layer material was placed in the mechanical roller, rolled to a predetermined thickness by applying a pressure of 20t to 40t, then placed on the surface of the insulating layer with cleaned surfaces, and finally the two were placed in a mechanical roller to combine them tightly by applying a pressure of 30t to 50t.

(3) The forming conditions of the bonding method were as follows: The foil of the conductive layer material was placed in a mechanical roller, and rolled to a predetermined thickness by applying a pressure of 20t to 40t; then, on the surface of the insulating layer that has been cleaned, a mixed solution of PVDF and NMP was coated; finally, the aforementioned conductive layer with a predetermined thickness was bonded to the surface of the insulating layer and dried at 100°C.

(4) The method for measuring film resistance at normal temperature was as follows:

An RTS-9 double electric four-probe tester was used, and the test environment was as follows: normal temperature 23 $\pm$2°C, relative humidity $\leq$ 65%.

When testing, the surface of the material to be tested was cleaned, then it was placed horizontally on the test board, the four probes were put down so that the probes had good contact with the surface of the material to be tested, and then the automatic test mode was adjusted to calibrate the current range of the material, the film rectangular resistance was measured under an appropriate certain current range, and 8 to 10 data points of the same sample were collected for data measurement accuracy and error analysis.

The specific parameters of the current collectors and their electrode plates in the embodiments of the present application are shown in Table 13, and the specific parameters of the current collectors and their electrode plates in the comparative embodiments are shown in Table 14.

2. Preparation of electrode plate

Through the conventional battery coating process, the positive electrode slurry or negative electrode slurry was coated on the surface of the current collector, and the positive electrode plate or negative electrode plate was obtained after drying at 100°C.

Conventional positive electrode plate: the current collector was an Al foil with a thickness of 12 $\mu$m, and the electrode active material layer was a ternary (NCM) material layer of a certain thickness.

Conventional negative electrode plate: the current collector was Cu foil with a thickness of 8 $\mu$m, and the electrode active material layer was a graphite material layer of a certain thickness.

The specific parameters of the current collectors and their electrode plates in the embodiments of the present application are shown in Table 13, and the specific parameters of the current collectors and their electrode plates in the comparative embodiments are shown in Table 14.

3. Preparation of battery cells:

Through the conventional battery cell manufacturing process, the positive electrode plate (compacted density: 3.4g/cm3), PP/PE/PP separator and negative electrode plate (compacted density: 1.6g/cm3) were wound together into a bare battery cell. Then it was placed in the battery case, injected with an electrolyte solution (EC:EMC in a volume ratio of 3:7, 1mol/L LiPF6), and then subjected to processes such as sealing and formation to finally obtain the lithium-ion battery cell.

The specific composition of the lithium-ion battery cells produced in the embodiments of the present application and the lithium-ion battery cells of the comparative embodiments are shown in Table 15.

Table 13

| Electrode plate No. | Supporting layer | | Conductive layer | | Formation method | $R_S(\Omega/\square)$ | Electrode active material layer | |
|---|---|---|---|---|---|---|---|---|
| | Material | d1 | Material | d2 | | | Material | Thickness |
| Electrode plate 1# | PI | 1$\mu$m | Ti | 1 nm | Vacuum eva-poration | 420 | LCO | 55$\mu$m |

(continued)

| Electrode plate No. | Supporting layer | | Conductive layer | | Formation method | $R_S(\Omega/\square)$ | Electrode active material layer | |
|---|---|---|---|---|---|---|---|---|
| | Material | d1 | Material | d2 | | | Material | Thickness |
| Electrode plate 2# | PET | 5μm | Al | 30nm | Vacuum evaporation | 0.94 | LCO | 55μm |
| Electrode plate 3# | PI | 9μm | Al | 200nm | Vacuum evaporation | 0.14 | NCM | 55μm |
| Electrode plate 4# | PI | 30μm | Ag | 1000nm | Mechanical rolling | 0.016 | NCM | 55μm |
| Electrode plate 5# | PI | 2μm | Cu | 5nm | Vacuum evaporation | 3.36 | Graphite | 70μm |
| Electrode plate 6# | PI | 5μm | Cu | 20nm | Vacuum evaporation | 0.84 | Graphite | 70μm |
| Electrode plate 7# | PET | 8μm | Ni | 160nm | Vacuum evaporation | 0.44 | Graphite | 70μm |
| Electrode plate 8# | PET | 20μm | Al | 500nm | Vacuum evaporation | 0.034 | NCM | 55μm |

Table 14

| Electrode plate No. | Supporting layer | | Conductive layer | | Formation method | $R_S(\Omega/\square)$ | Electrode active material layer | |
|---|---|---|---|---|---|---|---|---|
| | Material | d1 | Material | d2 | | | Material | Thickness |
| Electrode plate of Comparative Embodiment 1# | PI | 9μm | Al | 2000nm | Bonding | 0.014 | LCO | 55μm |
| Electrode plate of Comparative Embodiment 2# | PET | 20μm | Cu | 1200nm | Mechanical rolling | 0.014 | Graphite | 70μm |

Table 15

| Lithium-ion battery cell No. | Composition of electrode plate | | Cap (Ah) |
|---|---|---|---|
| Lithium-ion battery cell 1 # | Conventional positive electrode plate | Conventional negative electrode plate | 3.2 |
| Lithium-ion battery cell 2 # | Electrode plate 1# | Conventional negative electrode plate | 3.2 |
| Lithium-ion battery cell 3 # | Electrode plate 2# | Conventional negative electrode plate | 3.2 |
| Lithium-ion battery cell 4 # | Electrode plate 3# | Conventional negative electrode plate | 3.2 |
| Lithium-ion battery cell 5 # | Electrode plate 4# | Conventional negative electrode plate | 3.2 |
| Lithium-ion battery cell 6 # | Electrode plate of Comparative Embodiment 1# | Conventional negative electrode plate | 3.2 |
| Lithium-ion battery cell 7 # | Conventional positive electrode plate | Electrode plate 5# | 3.2 |

(continued)

| Lithium-ion battery cell No. | Composition of electrode plate | | Cap (Ah) |
|---|---|---|---|
| Lithium-ion battery cell 8 # | Conventional positive electrode plate | Electrode plate 6# | 3.2 |
| Lithium-ion battery cell 9 # | Conventional positive electrode plate | Electrode plate 7# | 3.2 |
| Lithium-ion battery cell 10 # | Electrode plate 8# | Conventional negative electrode plate | 3.2 |
| Lithium-ion battery cell 11# | Conventional positive electrode plate | Electrode plate of Comparative Embodiment 2# | 3.2 |
| Lithium-ion battery cell 12 # | Electrode plate 2# | Electrode plate 7# | 3.2 |
| Lithium-ion battery cell 13 # | Electrode plate 3# | Electrode plate 6# | 3.2 |
| Lithium-ion battery cell 14 # | Electrode plate 3# | Conventional negative electrode plate | 10.5 |
| Lithium-ion battery cell 15 # | Electrode plate 3# | Conventional negative electrode plate | 48 |

Among them, by further increasing the number of winding layers of the battery cell, lithium-ion battery cell 14# and lithium-ion battery cell 15# with further increased capacity were prepared.

Experimental Embodiments

1. Battery cell testing method:

The cycle life of lithium-ion battery cells was tested. The specific test method is as follows:
The lithium-ion battery cell 1# and lithium-ion battery cell 4# were charged and discharged at two temperatures of 25°C and 45°C respectively, that is, first charged with a current of 1C to 4.2V, and then discharged with a current of 1C to 2.8V, the discharge capacity of the first cycle was recorded; then a 1C/1C charge and discharge cycle was performed on the battery cell for 1000 cycles, and the discharge capacity of the battery cell of the 1000th cycle was recorded; the discharge capacity of the 1000th cycle was divided by the discharge capacity of the first cycle to obtain the capacity retention rate of the 1000th cycle.
The experimental results are as shown in Table 16.

2. Testing of battery internal resistance

The test was conducted using an internal resistance meter (model HIOKI-BT3562). The test environment was: normal temperature 23±2°C. Before the test, the positive and negative ends of the internal resistance meter was short-circuited to calibrate the resistance to zero; during the test, the positive and negative electrode tabs of the lithium-ion battery cell to be tested were cleaned, and then the positive and negative electrode test ends of the internal resistance meter were connected to the positive and negative electrode tabs of the lithium-ion battery cell respectively for testing and recording. The coefficient A was calculated according to the formula r=A/Cap.

3. Experimental methods and test methods for one-time nail penetration experiment and six-time consecutive nail penetration experiment:

(1) One-time nail penetration experiment: After the battery cell was fully charged, it was fixed, the battery cell was penetrated with a steel needle with a diameter of 8mm at a speed of 25mm/s at room temperature, the steel needle was kept in the battery cell, and after nail penetration was completed, the battery cell was observed and tested.
(2) Six-time nail penetration experiment: After the battery cell was fully charged, it was fixed, six steel needles with a diameter of 8mm were quickly penetrated through the battery cell in sequence at a speed of 25mm/s at room temperature, the steel needles were kept in the battery cell, and after nail penetration was completed, the battery cell was observed and tested.

(3) Test of the battery cell temperature: Using multi-channel thermometer, temperature sensing wires were attached to the geometric center of the needling surface and back of the battery cell to be penetrated by nails. After the nail penetration was completed, the battery cell temperature was tracked and tested for five minutes, and then the battery cell temperature in the five minutes was recorded.

(4) Test of the battery cell voltage: The positive and negative electrodes of the battery cell to be penetrated by nails were connected to the measuring ends of the internal resistance meter. After the nail penetration was completed, the battery cell voltage was tracked and tested for five minutes, and then the battery cell voltage in the five minutes was recorded.

The recorded battery cell temperature and voltage data are shown in Table 17.

Table 16

| Lithium-ion battery cell No. | Capacity retention rate | |
|---|---|---|
| | 25°C | 45°C |
| Lithium-ion battery cell 1 # | 89.2% | 86.5% |
| Lithium-ion battery cell 2 # | 88.0% | 86.2% |

Table 17

| Lithium-ion battery cell No. | One-time nail penetration experiment | | Six-time consecutive nail penetration experiment | |
|---|---|---|---|---|
| | Battery cell temperature rise (°C) | Battery cell voltage (V) | Battery cell temperature rise (°C) | Battery cell voltage (V) |
| Lithium-ion battery cell 1 # | 500 | 0 | N/A | N/A |
| Lithium-ion battery cell 2 # | 2.1 | 4.25 | 3.7 | 4.25 |
| Lithium-ion battery cell 3 # | 3.4 | 4.35 | 3.2 | 4.32 |
| Lithium-ion battery cell 4 # | 3.5 | 4.15 | 4.1 | 4.14 |
| Lithium-ion battery cell 5 # | 8.7 | 4.05 | 10.2 | 3.96 |
| Lithium-ion battery cell 6 # | 270 | 0 | N/A | N/A |
| Lithium-ion battery cell 7 # | 2.5 | 4.15 | 2.3 | 4.13 |
| Lithium-ion battery cell 8 # | 2.3 | 4.16 | 4.0 | 4.06 |
| Lithium-ion battery cell 9 # | 2.1 | 4.15 | 2.3 | 4.11 |
| Lithium-ion battery cell 10 # | 8.0 | 4.03 | 11.2 | 3.95 |
| Lithium-ion battery cell 11 # | 540 | 0 | N/A | N/A |
| Lithium-ion battery cell 12 # | 2.7 | 4.30 | 3.5 | 4.29 |
| Lithium-ion battery cell 13 # | 3.1 | 4.13 | 4.8 | 4.10 |
| Note: "N/A" means that if a steel needle penetrates the battery cell, thermal runaway and destruction will occur instantly | | | | |

Table 18

| Lithium-ion battery cell No. | Cap (Ah) | r (mΩ) | Coefficient A | One-time nail penetration experiment |
|---|---|---|---|---|
| | | | | Battery temperature rise (°C) |
| Lithium-ion battery cell 4 # | 3.2 | 40 | 128 | 3.5 |
| Lithium-ion battery cell 5 # | 3.2 | 13 | 42 | 8.7 |

(continued)

| Lithium-ion battery cell No. | Cap (Ah) | r (mΩ) | Coefficient A | One-time nail penetration experiment |
|---|---|---|---|---|
| | | | | Battery temperature rise (°C) |
| Lithium-ion battery cell 14 [#] | 10.5 | 12 | 126 | 3.8 |
| Lithium-ion battery cell 15 [#] | 48 | 8 | 384 | 2.6 |
| Lithium-ion battery cell 6 [#] | 3.2 | 10 | 32 | 270 |
| Lithium-ion battery cell 11[#] | 3.2 | 8.5 | 27 | 540 |

The battery cell temperature v.s. time curves of the lithium-ion battery cell 1[#] and lithium-ion battery cell 4[#] are shown in Fig. 93, and the voltage v.s. time curves are shown in Fig. 94.

According to the results in Table 16, compared with the lithium-ion battery cell 1[#] using conventional positive electrode plates and conventional negative electrode plates, the lithium-ion battery cell 4[#] using the current collector of the embodiments of the present application has good cycle life, which is equivalent to the cycling performance of conventional battery cells. This shows that the current collector in the embodiments of the present application does not have any obvious adverse effects on the produced electrode plates and battery cells.

In addition, the current collectors of the embodiments of the present application can greatly improve the safety performance of lithium-ion battery cells. Judging from the results in Table 17 and Figs. 93 and 94, for the lithium-ion battery cells 1[#], 6[#], and 11[#] that did not use the current collectors of the embodiments of the present application, at the moment of nail penetration, the temperature of the battery cells increased sharply by several hundred degrees and the voltage plummeted to zero. This shows that at the moment of nail penetration, the battery cell was internally short-circuited, generating a large amount of heat, the battery cell instantly suffered thermal runaway and damage, and could not continue to work. Also, because the battery cell was thermally runaway and destroyed at the moment after the first steel needle penetrated into the battery cell, it was impossible to carry out the experiment of six steel needles penetrating the battery cell consecutively.

As for the lithium-ion battery cells 2[#] to 5[#], 7[#] to 10[#], 12[#] and 13[#] using the current collectors in the embodiments of the present application, no matter whether one nail penetration test or six-time consecutive nail penetration experiments were performed on them, the temperature rise of the battery cell could basically be controlled at around 10°C or below 10°C, the voltage remained basically stable, and the battery core could work normally.

The data in Table 18 shows that the coefficient A of the lithium-ion battery cell 6[#] and the lithium-ion battery cell 11[#] that did not use the current collector of the embodiments of the present application was small. The coefficient A of the lithium-ion battery cells 4[#], 5[#], 14[#] to 15[#] using the current collector in the embodiments of the present application was larger. It is confirmed that the larger the coefficient A is, the smaller the temperature rise will be when an internal short circuit occurs in the battery cell under abnormal circumstances, and the better the safety performance of the battery cell will be.

Therefore, in the case of an internal short circuit of a battery cell, the current collector of the embodiments of the present application can greatly reduce the heat generation due to the short circuit, thereby improving the safety performance of the battery cell; in addition, the influence of the short circuit damage on the battery cell can be limited to the "point" range, only forming a "point break", without affecting the normal operation of the battery cell in a short period of time.

Further, the light transmittance k of the supporting layer satisfies: 0% ≤ k ≤ 98%.

In some embodiments, for the current collector including a supporting layer and a conductive layer, the current collector has a high absorption rate of laser energy, so that the current collector, and the electrode plate and electrochemical device using the current collector can be processed during laser cutting with high processability and processing efficiency. In particular, it has high processability and processing efficiency during low-power laser cutting processing. The laser power during the aforementioned laser cutting process is, for example, 100W or less.

Preferably, the light transmittance k of the supporting layer satisfies 0 ≤ k ≤ 95%, which can better improve the processability and processing efficiency of the current collector and the electrode plate and electrochemical device using the current collector during laser cutting processing, especially improve the processability and processing efficiency during low-power laser cutting. More preferably, the light transmittance k of the supporting layer satisfies 15% ≤ k ≤ 90%.

In some embodiments, the supporting layer contains colorants. By adding a colorant to the supporting layer and adjusting the content of the colorant, the light transmittance of the supporting layer can be adjusted.

The colorant can cause the supporting layer to display a certain degree of black, blue or red, but is not limited thereto. For example, it can also cause the supporting layer to display a certain degree of yellow, green or purple.

The colorant may be one or more of inorganic pigments and organic pigments.

Inorganic pigments are, for example, one or more of carbon black, cobalt blue, ultramarine blue, iron oxide, cadmium red, chrome orange, molybdenum orange, cadmium yellow, chrome yellow, nickel titanium yellow, titanium white, zinc barium white and zinc white.

The organic pigment may be one or more of phthalocyanine pigments, azo pigments, anthraquinone pigments, indigo pigments and metal complex pigments. As an example, the organic pigment may be one or more of plastic red GR, plastic violet RL, lightfast yellow G, permanent yellow, rubber scarlet LC, phthalocyanine blue and phthalocyanine green.

In some embodiments, the thickness d1 of the supporting layer is preferably $1\mu m \leq d1 \leq 30\ \mu m$, which is beneficial to improving the processability and processing efficiency of the current collector during laser cutting, and in particular improving the processability and processing efficiency of the current collector during low-power laser cutting. At the same time, the mechanical strength of the supporting layer is ensured, preventing the supporting layer from breaking during the processing of current collectors, electrode plates and electrochemical devices, and ensuring that the electrochemical device has a high gravimetric energy density.

Among them, the upper limit of the thickness d1 of the supporting layer can be $30\mu m$, $25\mu m$, $20\mu m$, $15\mu m$, $12\mu m$, $10\mu m$, $8\mu m$, and the lower limit can be $1\ \mu m$, $1.5\mu m$, $2\mu m$, $3\mu m$, $4\mu m$, $5\mu m$, $6\mu m$, $7\mu m$; the thickness d1 of the supporting layer can be composed of any value of the upper limits or the lower limits. Preferably, the thickness d1 of the supporting layer is $1\ \mu m \leq d1 \leq 20\mu m$; further preferably $2\mu m \leq d1 \leq 15\mu m$; and more preferably $3\mu m \leq d1 \leq 12\mu m$.

In some embodiments, the thickness d1 of the supporting layer and the light transmittance k of the supporting layer satisfy:

in the case of $12\mu m \leq d1 \leq 30\mu m$, it satisfies $30\% \leq k \leq 80\%$; and/or,
in the case of $8\mu m \leq d1 < 12\mu m$, it satisfies $40\% \leq k \leq 90\%$; and/or,
in the case of $1\mu m \leq d1 < 8\mu m$, it satisfies $50\% \leq k \leq 98\%$.

The thickness and light transmittance of the supporting layer satisfy the above relationship, so that when the laser irradiates the supporting layer, the supporting layer can absorb as much laser energy as possible, so that the current collector has high processability and processing efficiency during laser cutting processing, especially, the current collector has higher processability and processing efficiency during low-power laser cutting processing, avoiding adhesion. The thickness and light transmittance of the supporting layer satisfy the above relationship, which is also conducive to making the supporting layer have appropriate mechanical strength and preventing the supporting layer from breaking during the processing of current collectors, electrode plates and electrochemical devices.

Preferably, the tensile strength of the supporting layer in the MD direction (Mechanical Direction) is greater than or equal to 100Mpa, and further preferably is 100Mpa to 400Mpa.

The tensile strength of the supporting layer in the MD direction can be tested using equipment and methods known in the art. For example, the maximum tensile stress of the supporting layer when it breaks in MD direction is tested using a tensile strength tester, preferably with a Japanese ALGOL tensile test head, according to the DIN53455-6-5 measurement standard, and the ratio of the maximum tensile stress experienced when the supporting layer breaks in the MD direction to the cross-sectional area of the supporting layer is the tensile strength of the supporting layer in the MD direction.

The supporting layer can have the aforementioned tensile strength by adjusting the chemical composition, molecular weight and distribution, chain structure and chain construction, aggregation structure, phase structure, etc. of the polymer material.

In some embodiments, the conductive material of the conductive layer may be one or more of metallic materials, carbon-based conductive materials, and conductive polymer materials.

As an example, the aforementioned metallic material can be one or more of aluminum, aluminum alloy, copper, copper alloy, nickel, nickel alloy, iron, iron alloy, titanium, titanium alloy, silver and silver alloy, preferably one or more of aluminum, copper, nickel, iron, titanium, silver, nickel-copper alloy and aluminum-zirconium alloy.

When the conductive layer is made of metallic materials, the conductive layer may be formed on the supporting layer by at least one of mechanical rolling, bonding, vapor deposition, and electroless plating, wherein the vapor deposition is preferably physical vapor deposition (PVD); the physical vapor deposition is preferably at least one of evaporating and sputtering method; the evaporating is preferably at least one of vacuum evaporating, thermal evaporation deposition, and electron beam evaporation method (EBEM), and the sputtering is preferably magnetron sputtering.

Preferably, the conductive layer made of metallic materials can be formed on the supporting layer by at least one of vapor deposition and electroless plating, so as to make the connection between the supporting layer and the conductive layer stronger.

As an example, the conditions for forming the conductive layer by mechanical rolling described above are as follows: the metallic foil is placed in the mechanical roller, rolled to a predetermined thickness by applying a pressure of 20t to 40t, placed on the surface of the supporting layer with cleaned surfaces, and then the two are placed in a mechanical roller to combine them tightly by applying a pressure of 30t to 50t.

As another example, the conditions for forming a conductive layer through bonding described above are as follows: the metallic foil is placed in a mechanical roller, and rolled to a predetermined thickness by applying a pressure of 20t to 40t; then, on the surface of the supporting layer that has been cleaned, a mixed solution of polyvinylidene fluoride (PVDF) and N- methyl pyrrolidone (NMP) is coated; finally, the aforementioned conductive layer with a predetermined thickness is bonded to the surface of the supporting layer and dried at 100°C.

As yet another example, the conditions for forming the conductive layer by vacuum evaporation described above are as follows: the surface-cleaned supporting layer is placed in the vacuum plating chamber, the high-purity metal wire in the metal evaporation chamber is melted and evaporated at a high temperature of 1300°C to 2000°C; after passing through the cooling system in the vacuum plating chamber, the evaporated metal was finally deposited on the surface of the supporting layer to form a conductive layer.

The aforementioned carbon-based conductive material may be, for example, one or more of graphite, superconducting carbon, acetylene black, carbon black, Ketjen black, carbon dot, carbon nanotube, graphene, and carbon nanofiber.

When the conductive layer uses a carbon-based conductive material, it can be formed on the supporting layer by at least one of mechanical rolling, bonding, vapor deposition, in-situ formation, and coating.

The aforementioned conductive polymer material is, for example, one or more of polysulfur nitrides, aliphatic conjugated polymers, aromatic ring conjugated polymers and aromatic heterocyclic conjugated polymers. The aliphatic conjugated polymer is, for example, polyacetylene; the aromatic ring conjugated polymer is, for example, one or more of polyparaphenylene, polyphenylene, and polynaphthalene; the aromatic heterocyclic conjugated polymer is, for example, one or more of polypyrrole, polyacetylene, polyaniline, polythiophene and polypyridine. Doping can also be used to increase electron delocalization and improve conductivity, which is beneficial to further improving the rate performance of electrochemical devices.

When the conductive layer uses a conductive polymer material, it can be formed on the supporting layer by at least one of mechanical rolling, bonding, in-situ formation, and coating.

The conductive layer is preferably made of metallic materials, such as metal foil, carbon-coated metal foil or porous metal plate.

The provision of the supporting layer can significantly reduce the thickness of the conductive layer in the current collector of the present application compared with traditional metal current collectors. The thickness d2 of the conductive layer is preferably $30nm \leq d2 \leq 3\mu m$. Reducing the thickness of the conductive layer can reduce the weight of the current collector, electrode plates and electrochemical devices, and increase the gravimetric energy density of the electrochemical device. Also, due to the reduced thickness of the conductive layer, under abnormal conditions such as the battery cell being punctured by a sharp object, the metal burrs produced by the current collector are smaller, thereby better improving the safety performance of the electrochemical device. Using a conductive layer with a thickness of $30nm \leq d2 \leq 3\mu m$, the current collector has good conductivity and current collection properties, which is beneficial to reducing the internal resistance of the battery cell and reducing the polarization phenomenon, thus improving the rate performance and cycling performance of the electrochemical device.

The upper limit of the thickness d2 of the conductive layer can be $3\mu m$, $2.5\mu m$, $2\mu m$, $1.8\mu m$, $1.5\mu m$, $1.2\mu m$, $1\mu m$, 900nm, the lower limit of the thickness d2 of the conductive layer can be 800nm, 700nm, 600nm, 500nm, 450nm, 400nm, 350nm, 300nm, 100nm, 50nm, 30nm, and the range of the thickness d2 of the conductive layer can be composed of any of the upper limits and lower limits. Preferably, the thickness d2 of the conductive layer is $300nm \leq d2 \leq 2\mu m$.

As an example, conductive layers are provided on both surfaces of the supporting layer in the thickness direction, with thicknesses of d21 and d22 respectively, where it satisfies $30nm \leq d21 \leq 3\mu m$, preferably $300nm \leq d21 \leq 2\mu m$; $30nm \leq d22 \leq 3\mu m$, preferably $300nm \leq d22 \leq 2\mu m$.

As another example, the conductive layer is provided on only one of the two surfaces of the supporting layer itself in the thickness direction, with a thickness of d23, where it satisfies $30nm \leq d23 \leq 3\mu m$, preferably $300nm \leq d23 \leq 2\mu m$.

The current collector of the present application can be used as one or both of the positive electrode current collector and the negative electrode current collector.

When the current collector of the present application is used in a positive electrode plate, for example, as a positive electrode current collector, the conductive layer of the current collector can be a metal foil, a carbon-coated metal foil, or a porous metal plate, such as aluminum foil.

When the current collector of the present application is used in a negative electrode plate, for example, as a negative electrode current collector, the conductive layer of the current collector can be a metal foil, a carbon-coated metal foil, or a porous metal plate, such as copper foil.

When the electrode plate of the present application is used as a positive electrode plate, the active material layer can use a positive electrode active material known in the art, which can reversibly intercalate/deintercalate ions.

Taking lithium-ion secondary battery cells as an example, the positive electrode active material uses compounds that can reversibly intercalate/deintercalate lithium ions, such as lithium-containing transition metal oxides, where the transition metals can be one or more of Mn, Fe, Ni, Co, Cr, Ti, Zn, V, Al, Zr, Ce and Mg. As an example, the lithium-containing transition metal oxide may be one or more of $LiMn_2O_4$, $LiNiO_2$, $LiCoO_2$, $LiNi_{1-y}Co_yO_2$ ($0 < y < 1$), $LiNi_aCo_bAl_{1-a-b}O_2$ ($0 < a < 1$, $0 < b < 1$, $0 < a+b < 1$), $LiMn_{1-m-n}Ni_mCo_nO_2$ ($0 < m < 1$, $0 < n < 1$, $0 < m+n < 1$), $LiMPO_4$ (M can be one or more of Fe, Mn,

and Co) and $Li_3V_2(PO_4)_3$.

Lithium-containing transition metal oxides can also be doped or surface-coated to give the compounds a more stable structure and better electrochemical properties.

The active material layer of the positive electrode plate can further include a binder and a conductive agent. The binder and the conductive agent are not particularly limited in the present application, and can be selected according to actual needs.

As an example, the above binder may be one or more of styrene butadiene rubber (SBR), water-based acrylic resin, carboxymethyl cellulose (CMC), polyvinylidene fluoride (PVDF), polytetrafluoroethylene (PTFE), polyvinyl butyral (PVB), ethylene-vinyl acetate copolymer (EVA), and polyvinyl alcohol (PVA).

As an example, the above conductive agent may be one or more selected from graphite, superconducting carbon, acetylene black, carbon black, Ketjen black, carbon dot, carbon nanotube, graphene, and carbon nanofiber.

The positive electrode plate can be prepared in accordance with the conventional method in the art. Generally, the positive electrode active material, and the optional conductive agent and binder can be dispersed in a solvent (such as N-methyl pyrrolidone, NMP for short) to form a uniform positive electrode slurry, the positive electrode slurry is coated on the positive electrode current collector, and after drying, cold pressing and other processes, a positive electrode plate is obtained.

When the electrode plate of the present application is used as a negative electrode plate, the active material layer can use a negative electrode active material known in the art, which can reversibly intercalate/deintercalate ions.

Taking the same lithium-ion secondary battery cell as an example, the negative electrode active material uses a substance that can reversibly intercalate/deintercalate lithium ions, such as one or more of metallic lithium, natural graphite, artificial graphite, mesocarbon microbeads (abbreviated as MCMB), hard carbon, soft carbon, silicon, silicon-carbon composite, SiO, Li-Sn alloy, Li-Sn-O alloy, Sn, SnO, $SnO_2$, spinel structure lithium titanate $Li_4Ti_5O_{12}$ and Li-Al alloys.

The active material layer of the negative electrode plate can further include a binder and a conductive agent. The binder and the conductive agent are not particularly limited in the present application, and can be selected according to actual needs.

As an example, the binder may be one or more of styrene butadiene rubber (SBR), water-based acrylic resin, carboxymethyl cellulose (CMC), polyvinylidene fluoride (PVDF), polytetrafluoroethylene (PTFE), polyvinyl butyral (PVB), ethylene-vinyl acetate copolymer (EVA), and polyvinyl alcohol (PVA).

As an example, the above conductive agent may be one or more selected from graphite, superconducting carbon, acetylene black, carbon black, Ketjen black, carbon dot, carbon nanotube, graphene, and carbon nanofiber.

Thickeners such as carboxymethylcellulose (CMC) may also be included in the negative electrode plate.

The negative electrode plate can be prepared in accordance with the conventional method in the art. Generally, the negative electrode active material, and the optional conductive agent, binder band thickener can be dispersed in a solvent which may be deionized water or NMP, to form a uniform negative electrode slurry, the negative electrode slurry is coated on the negative electrode current collector, and after drying, cold pressing and other processes, a negative electrode plate is obtained.

In some embodiments, the positive electrode plate, the separator and the negative electrode plate of the battery cell are stacked sequentially, so that the separator is positioned between the positive electrode plate and the negative electrode plate to separate them to obtain an electrode assembly, or they can be wound to obtain an electrode assembly; the electrode assembly is put into a package shell, then injected with an electrolyte solution and sealed, thereby preparing a battery cell.

It takes a lithium-ion secondary battery cell as an example to illustrate the battery cell:

Embodiment 1

Preparation of supporting layer

The supporting material was PET. A certain content of colorant carbon black was added to the PET and mixed evenly. The supporting layer was obtained after extrusion casting, cold roll rolling and bidirectional stretching of the PET in a hot-melt state.

Preparation of current collector

The supporting layer was placed in the vacuum plating chamber, and the high-purity aluminum wire in the metal evaporation chamber was melted and evaporated at a high temperature of 1300°C to 2000°C. The evaporated metal passed through the cooling system in the vacuum plating chamber and was finally deposited on both surfaces of the supporting layer, forming a conductive layer. Thee thickness D2 of the conductive layer on both surfaces was equal.

Embodiments 2 to 10

Different from Embodiment 1, the relevant parameters during the preparation process were adjusted, and the specific parameters are shown in Table 19 below.

Comparative Embodiment 1

Different from Embodiment 4, no colorant was added to the supporting layer.

Tests

(1) Test of light transmittance of supporting layer:

Using the LS117 light transmittance meter, the light transmittance of the supporting layer was tested in accordance with the GB2410-80 standard, including: first, the instrument was powered on and self-calibrated. The interface displays T = 100%, which means the calibration is OK. Then, the supporting layer sample was clamped between the probe and the receiver. The interface automatically displayed the light transmittance value of the supporting layer.

(2) Test of tensile strength of the supporting layer in the MD direction:

Using a tensile strength tester, the tensile strength of the supporting layer in the MD direction was tested according to the DIN53455-6-5 standard. The Japanese ALGOL (1kg) tensile test head was used, and the supporting layer sample was mounted between the two test heads to test the maximum tensile stress when the supporting layer broke in the MD direction. The ratio of the maximum tensile stress experienced when the supporting layer breaks in the MD direction to the cross-sectional area of the supporting layer sample is the tensile strength of the supporting layer in the MD direction.

(3) Current collector cutting performance test:

IPG company's model YLP-V2-1-100-100-100 optical fiber laser was used, the power was set to 100W and the frequency to 150kHz. The current collector was mounted on the cutting component of the laser for cutting, and the maximum cut-off speed of the current collector was tested. The maximum cut-off speed of the current collector refers to the maximum cutting speed that can be achieved when laser cuts the current collector without adhesion.
The test results of Embodiments 1 to 10 and Comparative Embodiment 1 are shown in Table 19 below.

Table 19

| | Conductive layer | | Supporting layer | | | | | Maximum cut-off speed m/min |
|---|---|---|---|---|---|---|---|---|
| | Material | d2 μm | Material | d1 μm | Colorant | Transmittance% | Tensile strength Mpa | |
| Embodiment 1 | Al | 0.03 | PET | 1 | Carbon black | 98 | 50 | 30 |
| Embodiment 2 | Al | 0.3 | PET | 6 | Carbon black | 92 | 149 | 36 |
| Embodiment 3 | Al | 1 | PET | 6 | Carbon black | 87 | 137 | 50 |
| Embodiment 4 | Al | 1 | PET | 10 | Carbon black | 96 | 237 | 20 |
| Embodiment 5 | Al | 1 | PET | 10 | Cadmium red | 55 | 185 | 80 |
| Embodiment 6 | Al | 1.5 | PET | 15 | Cobalt blue | 80 | 298 | 30 |
| Embodiment 7 | Al | 2 | PET | 15 | Carbon black | 54 | 246 | 60 |

(continued)

| | Conductive layer | | Supporting layer | | | | | Maximum cut-off speed m/min |
|---|---|---|---|---|---|---|---|---|
| | Material | d2 μm | Material | d1 μm | Colorant | Transmittance% | Tensile strength Mpa | |
| Embodiment 8 | Al | 2 | PET | 20 | Carbon black | 45 | 300 | 55 |
| Embodiment 9 | Al | 3 | PET | 30 | Carbon black | 40 | 323 | 50 |
| Embodiment 10 | Al | 0.03 | PET | 30 | Carbon black | 40 | 323 | 55 |
| Comparative Embodiment 1 | Al | 1 | PET | 10 | / | 100 | 247 | 15 |

Comparative analysis of Embodiments 4 and 5 and Comparative Embodiment 1 shows that by reducing the light transmittance of the supporting layer, the cutting speed of the current collector is significantly increased under low-power laser cutting without adhesion.

Through the test results of Embodiments 1 to 10, it can be concluded that by reducing the light transmittance of the supporting layer, the cutting performance and cutting speed of the current collector during laser cutting are significantly improved in the present application. In particular, the cutting performance and cutting rate of the current collector are significantly improved during low-power laser cutting.

Hereinafter, the positive electrode active material of the present application is specifically disclosed in detail with appropriate reference to the drawings.

In some embodiments, the electrode assembly 22 includes a positive electrode plate 1B, the positive electrode plate 1B includes a positive electrode current collector 10B and a positive electrode active material layer 11B coated on the surface of the positive electrode current collector 10B, and the positive electrode active material layer 11B includes a positive electrode active material.

The positive electrode active material has an inner core and a shell covering the inner core. The inner core includes at least one of ternary materials, $dLi_2MnO_3 \cdot (1-d)LiMO_2$ and $LiMPO_4$, $0 < d < 1$, M includes one or more selected from Fe, Ni, Co, and Mn, the shell contains crystalline inorganic substances. The full width at half maximum of the main peak of the crystalline inorganic substances measured using X-ray diffraction is 0-3°. The crystalline inorganic substances include one or more selected from metal oxides and inorganic salts. The crystalline material has a stable lattice structure and has a better interception effect on active metal ions such as Mn that are easily eluted.

The inventor of the present application found that in order to improve the performance of the battery cells, such as increasing capacity, improving rate performance, cycling performance, etc., the positive electrode active materials currently used for lithium ion secondary battery cells often incorporate doping elements in ternary positive electrode active materials, or $LiMPO_4$ that may be used in high-voltage systems, such as $LiMnPO_4$, $LiNiPO_4$, $LiCoPO_4$, or Li-rich manganese-based positive electrode active materials. The aforementioned doping elements can replace sites such as active transition metals in the aforementioned materials, thereby improving the battery cell performance of the materials. On the other hand, Mn element may be added to materials such as lithium iron phosphate, but the addition or doping of the aforementioned active transition metals and other elements can easily lead to the dissolution of active metals such as Mn ions of the material during the deep charge and discharge process. On the one hand, the dissolved active metal elements will further migrate to the electrolyte solution, causing a catalyst-like effect after the negative electrode is reduced, causing the SEI film (solid electrolyte interphase) on the negative electrode surface to dissolve. On the other hand, the dissolution of the aforementioned metal elements will also cause the loss of the capacity of the positive electrode active material, and the crystal lattice of the positive electrode active material will have defects after dissolution, leading to problems such as poor cycling performance. Therefore, it is necessary to make improvements based on the aforementioned positive electrode materials containing active metal elements to alleviate or even solve the above problems. The inventor found that the crystalline inorganic substance whose main peak measured by X-ray diffraction has the aforementioned full width at half maximum has good ability to intercept the dissolved active metal ions, and the crystalline inorganic substance and the aforementioned inner core material can be well bound and have stable binding force. As a result, it is not easy to peel off during use, and a coating layer with appropriate area and good uniformity can be achieved through a relatively simple method.

Specifically, taking lithium manganese phosphate positive electrode active material as an example, the inventors of the present application have found in practical work that manganese ion dissolution is relatively serious in the deep charge-discharge process of the existing lithium manganese phosphate positive electrode active material. Although there are attempts in the prior art to coat lithium manganese phosphate with lithium iron phosphate to reduce interfacial side reactions, this coating cannot prevent the dissolved manganese ions from further migration into the electrolyte solution. The dissolved manganese ion is reduced to metallic manganese after migration to the negative electrode. The metal manganese produced in this way is equivalent to a "catalyst", which can catalyze the decomposition of the SEI film (solid electrolyte interphase) on the surface of the negative electrode to produce by-products; part of the by-products is gas, thus causing the secondary battery cells to expand, affecting the safety performance of the secondary battery cell; in addition, another part of the by-product is deposited on the surface of the negative electrode, which will hinder the passage of lithium ions in and out of the negative electrode, causing the impedance of the secondary battery cell to increase, thereby affecting the dynamic performance of secondary battery cells. In addition, in order to replenish the lost SEI film, active lithium in the electrolyte solution and inside the battery cell are continuously consumed, irreversibly affecting the capacity retention rate of the secondary battery cell. A new positive electrode active material with a core-shell structure can be obtained by modifying lithium manganese phosphate and multi-layer coating of lithium manganese phosphate. The positive electrode active material attains significantly reduced manganese ion dissolution and reduced lattice change rate and is useful in a secondary battery cell to improve the cycling performance, rate performance, and safety performance of the battery cell and increase the capacity of the battery cell.

In some embodiments, the electrode assembly 22 includes a positive electrode plate 1B, the positive electrode plate 1B includes a positive electrode current collector 10B and a positive electrode active material layer 11B coated on the surface of the positive electrode current collector 10B, and the positive electrode active material layer 11B includes a positive electrode active material; the positive electrode active material has $LiMPO_4$, where M includes Mn and non-Mn elements, and the non-Mn elements meet at least one of the following conditions: the ion radius of the non-Mn elements is a, the ion radius of the manganese elements is b, and $|a-b|/b$ is not more than 10%; the valence variable voltage of the non-Mn element is U, $2V < U < 5.5V$; the chemical activity of the chemical bond formed by the non-Mn element and O is not less than that of P-O bond; the highest valence of the non-Mn element is not greater than 6.

As the positive electrode active material of lithium-ion secondary battery cells, compounds such as lithium manganese phosphate, lithium iron phosphate or lithium nickel phosphate that can be used in high-voltage systems in the future have low costs and good application prospects. However, taking lithium manganese phosphate as an example, its disadvantage compared with other positive electrode active materials is poor rate performance. Currently, this problem is usually solved through coating or doping. However, it is still hoped that the rate performance, cycling performance, high temperature stability, etc. of lithium manganese phosphate positive electrode active materials can be further improved.

The inventor of the present application has repeatedly studied the effects of doping various elements at the Li site, Mn site, P site and O site of lithium manganese phosphate, and found that the gram capacity, rate performance and cycling performance of the positive electrode active material can be improved by controlling the doping sites and specific elements, and doping content.

Specifically, selecting the appropriate Mn-site doping element can improve the lattice change rate of lithium manganese phosphate during the lithium deintercalation process of the material, improve the structural stability of the positive electrode material, greatly reduce the dissolution of manganese, and reduce the oxygen activity on the particle surface, thereby increasing the gram capacity of the material and reducing the interfacial side reactions between the material and the electrolyte solution during use, thus improving the material's cycling performance. More specifically, by selecting an element with an ionic radius similar to that of the Mn element as the Mn-site doping element, or selecting an element whose valence range is within the range of Mn for doping, the bond length between the doping element and O and the bond length of the Mn-O bond can be controlled, which is beneficial to stabilizing the lattice structure of the doped positive electrode material. In addition, a vacancy element that plays a role in supporting the crystal lattice can also be introduced into Mn, for example, the valence of this element is greater than or equal to the sum of the valences of Li and Mn, which is equivalent to introducing a vacancy site which cannot be combined with Li is into the active and easily dissolved Mn site, thereby supporting the crystal lattice.

For another example, selecting appropriate P-site doping elements can help change the difficulty of changing the Mn-O bond length, thereby improving electronic conductivity and lowering the lithium ion migration potential barrier, promoting lithium ion migration, and improving the rate performance of secondary battery cells. Specifically, the tetrahedral structure of the PO bond itself is relatively stable, making it difficult to change the Mn-O bond length, resulting in a high overall lithium ion migration potential barrier in the material. Appropriate P-site doping elements can improve the solidity of the PO bond tetrahedron, thereby promoting the improvement of the rate performance of the material. Specifically, elements whose chemical activity of the chemical bond formed with O is no less than that of the PO bond can be selected to be doped at the P site, thereby improving the ease with which the Mn-O bond length changes. In the present application," the chemical activity of the chemical bond formed with O is not less than the chemical activity of the P-O bond," without special indication, may be determine by means of a test method known to those skilled in the art for determining the activity of the chemical bond. For example, it can be determined by detecting the bond energy, or by referring to the electrochemical potential of the oxidation and reduction reagents used to break the chemical bond. Alternatively, it can select an element whose valence is not significantly higher than P, for example, an element lower than 6 for doping at the P site, thereby contributing to a reduction of the repulsive interaction between the Mn and P elements, and also improving the gram capacity, rate performance, etc. of the material.

Similarly, proper element doping at the Li site can also improve the material's lattice change rate and maintain the material's battery cell capacity.

O-site doping elements can help improve the interface side reactions between the material and the electrolyte solution, reduce the interface activity, and thus help improve the cycling performance of the positive electrode active material. In addition, doping at the O site can also improve the material's resistance to acid corrosion such as HF, which will help improve the cycling performance and life of the material.

In some embodiments of the present application, the inner core includes $LiMPO_4$, and M includes Mn and non-Mn elements, the non-Mn elements meet at least one of the following conditions: the ion radius of the non-Mn elements is a, the ion radius of the manganese elements is b, and |a-b|/b is not more than 10%; the valence variable voltage of the non-Mn element is U, 2V < U < 5.5V; the chemical activity of the chemical bond formed by the non-Mn element and O is not less than that of P-O bond; the highest valence of the non-Mn element is not greater than 6.

In some embodiments, the non-Mn elements doped at the sites described above may include one or two of a first doping element and a second doping element, wherein the first doping element is doped at manganese site and the second doping element is doped at phosphorus site. The first doping element satisfies at least one of the following conditions: the ion radius of the first doping element is a, the ion radius of the manganese element is b, and |a-b|/b is not more than 10%; the valence variable voltage of the first doping element is U, 2V < U < 5.5V. The second doping element satisfies at least one of the following conditions: the chemical activity of the chemical bond formed by the non-Mn element and O is not less than that of P-O bond; the highest valence of the non-Mn element is not greater than 6. In some embodiments, the positive electrode active material may also contain two first doping elements at the same time.

In some embodiments, the Mn site and P site in the above sites can be doped simultaneously. This not only can effectively reduce manganese dissolution, thereby reducing manganese ions migrating to the negative electrode, reducing electrolyte solution consumption due to SEI film decomposition, improving the cycling performance and safety performance of secondary battery cells, but also can promote Mn-O bond adjustment, lower the lithium ion migration potential barrier, promote lithium ion migration, and improve the rate performance of the secondary battery cell.

In other embodiments of the present application, significantly improved rate performance, improved cycling performance and/or high temperature stability can be obtained by simultaneously doping specific elements in specific amounts at the four positions mentioned above, thereby achieving improved lithium manganese phosphate positive electrode active material.

For example, the positive electrode active materials of the present application can be used in lithium-ion secondary battery cells.

The first doping element includes one or more elements selected from Zn, Al, Na, K, Mg, Mo, W, Ti, V, Zr, Fe, Ni, Co, Ga, Sn, Sb, Nb and Ge. The first doping element includes at least two selected from Fe, Ti, V, Ni, Co and Mg. The second doping element includes one or more elements selected from B (boron), S, Si and N.

The aforementioned dope elements should keep that system electrically neutral, and ensure as few defects and impurities in the positive electrode active material as possible. If there is an excess of transition metals (such as manganese) in the positive electrode active material, due to the relatively stable structure of the material system, the excessive transition metals are likely to be precipitated in the form of elemental substances, or form impurity phases inside the lattice. Remaining electrically neutral can minimize such impurity phases. In addition, ensuring the electrical neutrality of the system can also generate lithium vacancies in the material in some cases, so that the dynamic performance of the material become much better.

Taking the lithium manganese phosphate material as an example, the specific parameters of the positive electrode active material proposed in the present application and the principle by which the above beneficial effects can be obtained are described in detail below:

The inventors of the present application have found in practical work that manganese dissolution is relatively serious in the deep charge-discharge process of the existing lithium manganese phosphate positive electrode active material. Although there are attempts in the prior art to coat lithium manganese phosphate with lithium iron phosphate to reduce interfacial side reactions, this coating cannot prevent the dissolved manganese from further migration into the electrolyte solution. The dissolved manganese is reduced to metallic manganese after migration to the negative electrode. The metal manganese produced in this way is equivalent to a "catalyst", which can catalyze the decomposition of the SEI film (solid electrolyte interphase) on the surface of the negative electrode to produce by-products; part of the by-products is gas, thus causing the secondary battery cells to expand, affecting the safety performance of the secondary battery cell; in addition, another part of the by-product is deposited on the surface of the negative electrode, which will hinder the passage of lithium ions in and out of the negative electrode, causing the impedance of the secondary battery cell to increase, thereby affecting the dynamic performance of secondary battery cells. In addition, in order to replenish the lost SEI film, active lithium in the electrolyte solution and inside the battery cell are continuously consumed, irreversibly affecting the capacity retention rate of the secondary battery cell.

After extensive research, the inventors found that a new positive electrode active material can be obtained by modifying lithium manganese phosphate. The positive electrode active material attains significantly reduced manganese dissolution and reduced lattice change rate and is useful in a secondary battery cell to improve the cycling performance, rate performance, and safety performance of the battery cell and increase the capacity of the battery cell.

In some embodiments, the aforementioned positive electrode active material may have a compound with the chemical formula of $Li_{1+x}Mn_{1-y}A_yP_{1-z}R_zO_4$, where x is any value in the range of -0.100-0.100, y is any value in the range of 0.001-0.500, z is any value in the range of 0.001-0.100, A includes one or more elements selected from Zn, Al, Na, K, Mg, Mo, W, Ti, V, Zr, Fe, Ni, Co, Ga, Sn, Sb, Nb and Ge, and R includes one or more elements selected from B (boron), S, Si and N. Among them, the values of x, y and z satisfy such conditions that the whole compound remains electrically neutral.

In other embodiments, the aforementioned positive electrode active material may have a compound with a chemical formula of $Li_{1+x}C_mMn_{1-y}A_yP_{1-z}R_zO_{4-n}D_n$, wherein the C includes one or more elements selected from Zn, Al, Na, K, Mg, Nb, Mo and W, the A includes one or more elements selected from Zn, Al, Na, K, Mg, Mo, W, Ti, V, Zr, Fe, Ni, Mg, Co, Ga, Sn, Sb, Nb and Ge, the R includes one or more elements selected from B (boron), S, Si and N, the D includes one or more elements selected from S, F, Cl and Br, x is any value in the range of 0.100-0.100, y is any value in the range of 0.001-0.500, z is any value in the range of 0.001-0.100, n is any value in the range of 0.001-0.1, and m is any value in the range of 0.9-1.1. Similarly, the values of x, y, z and m described above satisfy such conditions that the whole compound remains electrically neutral.

Unless otherwise specified, in the chemical formula of the inner core, when a doping site has two or more elements, the definition for the numerical range of x, y, z or m is not only a definition for the stoichiometric number of each element at that site, but also a definition for the sum of the stoichiometric numbers of various elements at that site. For example, when there is a compound with a chemical formula $Li_{1+x}Mn_{1-y}A_yP_{1-z}R_zO_4$, when A is two or more elements A1, A2...An, the stoichiometric numbers y1, y2...yn of A1, A2...An must fall within the numerical range defined by the present application for y, and the sum of y1, y2...yn must also fall within this numerical range. Similarly, for the case where R is two or more elements, the limitation on the numerical range of the stoichiometric numbers of R in the present application also has the above meaning.

In an optional embodiment, when A is one, two, three or four elements selected from Zn, Al, Na, K, Mg, Mo, W, Ti, V, Zr, Fe, Ni, Co, Ga, Sn, Sb, Nb and Ge, $A_y$ is $G_{n1}D_{n2}E_{n3}K_{n4}$, where n1+n2+n3+n4=y, and n1, n2, n3, and n4 are all positive numbers and not zero at the same time, G, D, E, and K are independently one selected from Zn, Al, Na, K, Mg, Mo, W, Ti, V, Zr, Fe, Ni, Co, Ga, Sn, Sb, Nb and Ge, and optionally, at least one of G, D, E and K is Fe. Optionally, one of n1, n2, n3, and n4 is zero, and the rest are not zero; more optionally, two of n1, n2, n3, and n4 are zero, and the rest are not zero; and optionally, three of n1, n2, n3, and n4 are zero, and the rest are not zero. In $Li_{1+x}Mn_{1-y}A_yP_{1-z}R_zO_4$, it is advantageous to dope one, two, three or four of the aforementioned elements A at the site of manganese. Optionally, one, two or three of the aforementioned elements A are doped. In addition, it is advantageous to dope one or two of elements R at the site of phosphorus, which is beneficial to the uniform distribution of the doping elements.

Specifically, for example, the Mn site can have both Fe and V doping.

In some embodiments, in $Li_{1+x}Mn_{1-y}A_yP_{1-z}R_zO_4$, the ratio of y to 1-y is 1:10 to 1:1, and optionally 1:4 to 1:1. Here, y represents the sum of the stoichiometric numbers of element A doped at Mn site. When the above conditions are satisfied, the energy density and cycling performance of a secondary battery cell using the positive electrode active material can be further improved. In some embodiments, the ratio of z to 1-z is 1:9 to 1:999, and optionally 1:499 to 1:249. Here, z represents the sum of the stoichiometric numbers of element R doped at P site. When the above conditions are satisfied, the energy density and cycling performance of a secondary battery cell using the positive electrode active material can be further improved.

In other embodiments of the present application, the positive electrode active material may contain $Li_{1+x}C_mMn_{1-y}A_yP_{1-z}R_zO_{4-n}D_n$. The magnitude of x is affected by the magnitude of the valence of A and R and the magnitude of y and z, so as to ensure that the entire system remains electrically neutral. If the value of x is too small, the lithium content of the entire inner core system is reduced, affecting the gram capacity of the material. The value of y will limit the total amount of all doping elements. If y is too small, that is, the doping amount is too small, the doping elements are ineffective. If y exceeds 0.5, the content of Mn in the system will be reduced, affecting the voltage plateau of the material. The R element is doped at the P site. Since the P-O tetrahedron is relatively stable and an excessive z value will affect the stability of the material, the z value is limited to 0.001-0.100. More specifically, x is any value in the range of 0.100-0.100, y is any value in the range of 0.001-0.500, z is any value in the range of 0.001-0.100, n is any value in the range of 0.001 to 0.1, and m is any value in the range of 0.9 to 1.1. For example, the 1+x is selected from the range of 0.9 to 1.1, such as 0.97, 0.977, 0.984, 0.988, 0.99, 0.991, 0.992, 0.993, 0.994, 0.995, 0.996, 0.997, 0.998, 1.01, the x is selected from the range of 0.001 to 0.1, such as 0.001 and 0.005, the y is selected from the range of 0.001 to 0.5, such as 0.001, 0.005, 0.02, 0.05, 0.1, 0.15, 0.2, 0.25, 0.3, 0.34, 0.345, 0.349, 0.35, 0.4, the z is selected from the range of 0.001 to 0.1, such as 0.001, 0.005, 0.08, 0.1, the n is selected from the range of 0.001 to 0.1, such as 0.001, 0.005, 0.08, 0.1, and the positive electrode activity material is electrically neutral.

As mentioned above, the positive electrode active material of the present application is obtained by element doping in the compound $LiMnPO_4$ and the like. Without wishing to be limited by theory, it is now believed that the performance improvement of lithium manganese phosphate is related to the reduction of the lattice change rate of lithium manganese phosphate in the process of deintercalation of lithium and reduced surface activity. Reducing the lattice change rate can reduce the lattice constant difference between the two phases at the grain boundary, reduce the interface stress, and enhance the transport capability of $Li^+$ at the interface, thereby improving the rate performance of the positive electrode active material. High surface activity can easily lead to serious interface side reactions, aggravating gas production, electrolyte consumption and destroying the interface, thus affecting the cycling performance of battery cells. In the present application, the lattice change rate is reduced by Li and Mn site doping. Mn-site doping also effectively reduces surface activity, thereby inhibiting Mn dissolution and interface side reactions between the positive electrode active material and the electrolyte solution. P-site doping makes the Mn-O bond length change faster and reduces the material's small polaron migration potential barrier, thereby benefiting the electronic conductivity. O-site doping has a good effect on reducing interface side reactions. The doping of P-site and O-site also affects the Mn dissolution and kinetic properties of anti-site defects. Therefore, doping reduces the concentration of anti-site defects in the material, improves the dynamic properties and gram capacity of the material, and can also change the morphology of the particles, thereby increasing the compacted density. The applicant unexpectedly discovered that by simultaneously doping specific elements in specific amounts at the Li site, Mn site, P site and O site of the compound $LiMnPO_4$, significantly improved rate performance can be obtained while significantly reducing the dissolution of Mn and doping elements at Mn sites, significantly improved cycling performance and/or high temperature stability are obtained, and the gram capacity and compacted density of the material can also be increased.

By selecting the Li site doping elements within the above range, the lattice change rate during the delithiation process can be further reduced, thereby further improving the rate performance of the battery cell. By selecting the Mn doping element within the above range, the electronic conductivity can be further improved, and the lattice change rate can be further reduced, thereby improving the rate performance and gram capacity of the battery cell. By selecting the P-site doping element within the above range, the rate performance of the battery cell can be further improved. By selecting the O-site doping elements within the above range, the side reactions at the interface can be further reduced and the high-temperature performance of the battery cells can be improved.

In some embodiments, the x is selected from the range of 0.001 to 0.005; and/or the y is selected from the range of 0.01 to 0.5, optionally selected from the range of 0.25 to 0.5; and/or the z is selected from the range of 0.001 to 0.005; and/or, the n is selected from the range of 0.001 to 0.005. By selecting the y value within the above range, the gram capacity and rate performance of the material can be further improved. By selecting the x value within the above range, the dynamic performance of the material can be further improved. By selecting the z value within the above range, the rate performance of the secondary battery cell can be further improved. By selecting the n value within the above range, the high temperature performance of the secondary battery cell can be further improved.

In some embodiments, the positive electrode active material having 4 sites doped with non-Mn elements satisfies: (1-y): y is in the range of 1 to 4, optionally in the range of 1.5 to 3, and (1+x):m is in the range of 9 to 1100, optionally in the range of 190-998. Here, y represents the sum of the stoichiometric numbers of elements doped at Mn site. When the above conditions are satisfied, the energy density and cycling performance of the positive electrode active material can be further improved.

In some embodiments, the positive electrode active material may have at least one of $Li_{1+x}Mn_{1-y}A_yP_{1-z}R_zO_4$ and $Li_{1+x}C_mMn_{1-y}A_yP_{1-z}R_zO_{4-n}D_n$. The ratio of y to 1-y is 1:10 to 1:1, and optionally 1:4 to 1:1. The ratio of z to 1- z is 1:9 to 1:999, and optionally 1:499 to 1:249. C, R and D are each independently any element within the above respective ranges, and the A is at least two elements within its range; optionally, the C is any one element selected from Mg and Nb, and/or, the A is at least two elements selected from Fe, Ti, V, Co and Mg, optionally Fe and one or more elements selected from Ti, V, Co and Mg, and/or, the R is S, and/or, the D is F. The x is selected from the range of 0.001 to 0.005; and/or the y is selected from the range of 0.01 to 0.5, optionally selected from the range of 0.25 to 0.5; and/or the z is selected from the range of 0.001 to 0.005; and/or, the n is selected from the range of 0.001 to 0.005. The above parameters can be freely combined without special instructions, and their combinations will not be listed one by one here.

In some embodiments, the lattice change rate of the positive electrode active material is below 8%, and optionally, the lattice change rate is below 4%. By reducing the lattice change rate, Li ion transport can be made easier, that is, Li ions have a stronger migration ability in the material, which is beneficial to improving the rate performance of the secondary battery cell. The lattice change rate can be measured by methods known in the art, such as X-ray diffraction spectroscopy (XRD). The lithium deintercalation process of $LiMnPO_4$ is a two-phase reaction. The interface stress of the two phases is determined by the lattice change rate. The smaller the lattice change rate, the smaller the interface stress and the easier $Li^+$ transport. Therefore, reducing the lattice change rate of doped $LiMnPO_4$ facilitates the increase of the $Li^+$ transport capability, thereby improving the rate performance of the secondary battery cell.

In some embodiments, optionally, the button battery average discharge voltage of the positive electrode active material is 3.5V or more, and the discharge gram capacity is 140mAh/g or more; optionally, the average discharge voltage is 3.6V or more, and the discharge gram capacity is more than 145mAh /g or more.

Although the average discharge voltage of undoped $LiMnPO_4$ is 4.0V or more, its discharge gram capacity is low, usually less than 120mAh/g. Therefore, the energy density is low; adjusting the lattice change rate by doping can make its discharge gram capacity increase greatly, and the overall energy density is significantly increased while the average discharge voltage drops slightly.

In some embodiments, the Li/Mn antisite defect concentration of the positive electrode active material is 2% or less, and optionally, the Li/Mn antisite defect concentration is 0.5% or less. The Li/Mn antisite defect refers to the exchange of the positions of $Li^+$ and $Mn^{2+}$ in the lattice of LiMnPO4. The concentration of Li/Mn antisite defect refers to the percentage of $Li^+$ that exchanges with $Mn^{2+}$ relative to the total amount of $Li^+$ in the positive electrode active material. The $Mn^{2+}$ of antisite defects will hinder the transmission of $Li^+$. By reducing the concentration of antisite defects of Li/Mn, it helps to improve the gram capacity and rate performance of positive electrode active materials. Li/Mn antisite defect concentration can be measured by methods known in the art, such as XRD.

In some embodiments, the surface oxygen valence of the positive electrode active material is -1.82 or less, and optionally - 1.89 to -1.98. By reducing the surface oxygen valence, the interfacial side reaction between the positive electrode active material and the electrolyte solution can be reduced, thus improving the cycling performance and high temperature stability of secondary battery cells. The surface oxygen valence can be measured by methods known in the art, such as by electron energy loss spectroscopy (EELS).

In some embodiments, the compacted density of the positive electrode active material at 3T (tons) is 2.0g/cm3 or more, optionally 2.2g/cm3 or more. The higher the compacted density is, the greater the weight of the active material per unit volume will be. Therefore, increasing the compacted density is beneficial to the improvement of the volumetric energy density of the battery cell. The compacted density can be measured according to GB/T24533-2009.

In some embodiments, the positive electrode active material has a core-shell structure, the core-shell structure includes an inner core and a shell covering the inner core, and the inner core has the $LiMPO_4$. The positive electrode active material with a core-shell structure can further enhance the performance of the positive electrode material through a coating shell.

For example, in some embodiments of the present application, the surface of the inner core is coated with carbon. Thereby, the conductivity of the positive electrode active material can be improved. The carbon in the coating layer is a mixture of SP2 hybridized carbon and SP3 hybridized carbon. Optionally, the molar ratio of the SP2 hybridized carbon to SP3 hybridized carbon is any value in the range of 0.1-10, and optionally any value in the range of 2.0-3.0.

In some embodiments, the molar ratio of SP2 hybridized carbon to SP3 hybridized carbon may be about 0.1, about 0.2, about 03, about 0.4, about 0.5, about 0.6, about 0.7, about 0.8, about 0.9, about 1, about 2, about 3, about 4, about 5, about 6, about 7, about 8, about 9, or about 10, or within any range defined by any value above.

In the present application, "about" before a numerical value indicates a range, indicating a range of ±10% of the numerical value.

By selecting the state of carbon in the carbon coating layer, the overall electrical performance of the secondary battery cell can be improved. Specifically, by using a mixed form of SP2 hybridized carbon and SP3 hybridized carbon and limiting the ratio of SP2 hybridized carbon to SP3 hybridized carbon within a certain range, the following situation can be avoided: if the carbon in the coating layer is all amorphous SP3 hybridized carbon, the conductivity is poor; if they are all graphitized SP2 hybridized carbon, although the conductivity is good, there are few lithium ion paths, which is not conducive to the deintercalation of lithium. In addition, defining the molar ratio of SP2 hybridized carbon to SP3 hybridized carbon within the above range can not only achieve good electrical conductivity, but also ensure the channels of lithium ions, so it is beneficial to the realization of the function of the secondary battery cell and its cycling performance.

The mixing ratio of the SP2 hybridized and SP3 hybridized carbon in the coating layer can be controlled by sintering conditions such as sintering temperature and sintering time. For example, in the case of using sucrose as a carbon source to prepare the third coating layer, after sucrose is cracked at high temperature, it is deposited on the second coating layer at a high temperature, to form a coating layer of SP3 and SP2 hybridized carbon. The ratio of SP2 hybridized carbon and SP3 hybridized carbon can be adjusted by selecting high-temperature cracking conditions and sintering conditions.

The structure and characteristics of the carbon in the coating layer can be determined by Raman spectroscopy. The specific test method comprises: splitting the spectrum of the Raman test, to obtain Id/Ig (wherein Id is the peak intensity of SP3 hybridized carbon, and Ig is the peak intensity of SP2 hybridized carbon), thereby confirming the molar ratio of the two.

In some embodiments of the present application, the shell includes an inorganic coating layer and a carbon coating layer, the inorganic coating layer being disposed close to the inner core. Specifically, the inorganic coating layer contains at least one of phosphate and pyrophosphate. The positive electrode active material with a core-shell structure can further reduce manganese dissolution and reduce lattice change rate, and when used in a secondary battery, it can improve the cycling performance, rate performance, and safety performance of the battery cell and increase the capacity of the battery cell. By further coating with a crystalline phosphate and pyrophosphate coating layer with excellent lithium ion conductivity, the interfacial side reactions on the surface of the positive electrode active material can be effectively reduced, thereby improving the high-temperature cycling and storage performance of the secondary battery cell; by further coating the carbon layer, the safety performance and dynamic performance of the secondary battery cell can be further improved.

In the present application, the pyrophosphate may include $QP_2O_7$, specifically the crystalline pyrophosphate- $Li_aQP_2O_7$ and/or $Q_b(P_2O_7)_c$, where $0 < a < 2$, $1 \leq b < 4$, $1 \leq c < 6$, the values of a, b and c satisfy the following conditions: the crystalline pyrophosphate $Li_aQP_2O_7$ or $Q_b(P_2O_7)_c$ maintains electrically neutral, Q in the crystalline pyrophosphate $Li_aQP_2O_7$ and $Q_b(P_2O_7)_c$ is each independently selected from one or more elements of Fe, Ni, Mg, Co, Cu, Zn, Ti, Ag, Zr, Nb or Al.

The crystalline phosphate may include $XPO_4$, where the X is one or more elements selected from Li, Fe, Ni, Mg, Co, Cu, Zn, Ti, Ag, Zr, Nb or Al.

The crystallization conditions of crystalline pyrophosphate and crystalline phosphate are not particularly limited. In some embodiments of the present application, crystalline pyrophosphate and/or phosphate can be single crystal, polycrystalline or partially crystalline. The inventor found that crystalline phosphates and pyrophosphates have better surface selectivity and can better match the crystalline state of the inner core, thereby having better binding force and interface state, and are less likely to fall off during use. Also, the crystalline inorganic salt coating layer can better improve the ability of the positive electrode active material to conduct lithium ions, and can also better reduce interfacial side reactions on the surface of the active material.

Specifically, the interplanar spacing of the crystalline pyrophosphate is in the range of 0.293- 0.470nm, and the included angle between the crystal directions (111) is in the range of 18.00°-32.00°. The interplanar spacing of crystalline phosphate is in the range of 0.244-0.425nm, and the included angle between the crystal directions (111) is in the range of 20.00°-37.00°.

In the present application, crystalline means that the degree of crystallinity is 50% or higher, that is, 50%-100%. A crystallinity of less than 50% is called glassy state. The crystalline pyrophosphate and crystalline phosphate described herein have a crystallinity of 50% to 100%. Pyrophosphates and phosphates with a certain degree of crystallinity not only promote the full exertion of the ability of the pyrophosphate coating layer to hinder manganese dissolution and the excellent lithium ion-conducting ability of the phosphate coating layer to reduce the interfacial side reactions, but also allow for better lattice matching between the pyrophosphate coating layer and the phosphate coating layer, to enable tight bonding between the coating layers.

In the present application, the crystallinity of crystalline pyrophosphate and crystalline phosphate in the positive electrode active material can be tested by conventional technical means in the art, for example, by density method, infrared spectroscopy, differential scanning calorimetry, and nuclear magnetic resonance spectroscopy, or by, for example, X-ray diffraction method. A specific X-ray diffraction method for testing the crystallinity of the coating layer of crystalline pyrophosphate and crystalline phosphate in the positive electrode active material may include the following steps:
A certain amount of positive electrode active material powder is taken, and its total scattering intensity is measured by X ray. The total scattering intensity is the sum of the scattering intensity of the whole space material, which is only related to the intensity of primary rays, the chemical structure of the positive electrode active material powder, and the total number of electrons participating in diffraction, that is, the mass, but has nothing to do with the order of the sample; then the crystalline scattering and amorphous scattering are separated in the diffraction pattern. The crystallinity is the ratio of the scattering of the crystalline part to the total scattering intensity.

It should be noted that in the present application, the crystallinity of pyrophosphate and phosphate in the coating layer can be adjusted, for example, by adjusting the process conditions in the sintering process, such as sintering temperature, sintering time, and the like.

In the present application, since metal ions are difficult to migrate in pyrophosphate, pyrophosphate can be used as the first coating layer to effectively isolate the doped metal ions from the electrolyte solution. Since the structure of crystalline pyrophosphate is stable, the coating of crystalline pyrophosphate can effectively inhibit the dissolution of transition metals and improve the cycling performance.

The bond between the coating layer and the core is similar to a heterojunction, and the firmness of the bond depends on the degree of lattice matching. When the lattice mismatch is less than 5%, the lattice matching is better, and the two are easy to bond closely. The tight bonding can ensure that the coating layer will not fall off in the subsequent cycle process, which is beneficial to ensuring the long-term stability of the material. The degree of bonding between the coating layer and the core is mainly measured by calculating the mismatch degree of each lattice constant between the core and the coating layer. In the present application, after the inner core is doped with elements, especially doped with elements at Mn site and P site, compared with the case without element doping, the matching degree between the inner core and the coating layer is improved, and the inner core and the crystalline inorganic salt coating layer can be more closely bonded.

In the present application, there are no special restrictions on whether the phosphate and the pyrophosphate are located in the same coating layer, and which of the two is located closer to the inner core. Those skilled in the art can choose according to the actual situation. For example, the phosphate and the pyrophosphate can form an inorganic salt coating layer, and the outside of the inorganic salt coating layer can further have a carbon layer. Alternatively, the pyrophosphate and the pyrophosphate form separate coating layers, one of which is provided close to the inner core, the other covers the crystalline inorganic salt coating layer provided close to the inner core, and a carbon layer is provided on the outermost side. Further alternatively, the core-shell structure may only contain an inorganic salt coating layer composed of phosphate or pyrophosphate, with a carbon layer on the outside.

More specifically, the shell includes a first coating layer covering the inner core, and a second coating layer covering the first coating layer, wherein the first coating layer includes pyrophosphate $QP_2O_7$ and phosphate $XPO_4$, where the Q and X are each independently selected from one or more of Li, Fe, Ni, Mg, Co, Cu, Zn, Ti, Ag, Zr, Nb or Al; the second coating layer contains carbon. In this case, the structure of the positive electrode active material may be as shown in Fig. 166, which has an inner core 11, a first coating layer 12 and a second coating layer 13.

In some embodiments, the interplanar spacing of the phosphate in the first coating layer 12 is 0.345-0.358nm, and the included angle between the crystal directions (111) is 24.25°-26.45°; and the interplanar spacing of the pyrophosphate in the first coating layer 12 is 0.293-0.326nm, and the included angle between the crystal directions (111) is 26.41°-32.57°. When the interplanar spacing and the included angle between the crystal directions (111) of phosphate and pyrophosphate and in the first coating layer is within the above range, the impurity phase in the coating layer can be effectively avoided, thereby improving the gram capacity, cycling performance and rate performance of the material.

In some embodiments, optionally, the coating amount of the first coating layer is greater than 0wt% and less than or equal to 7wt%, optionally 4-5.6wt%, based on the weight of the inner core.

When the coating amount of the first coating layer is within the above range, manganese dissolution can be further suppressed, and the transport of lithium ions can be further promoted. Also, the following situations can be effectively avoided: if the coating amount of the first coating layer is too small, the inhibitory effect of pyrophosphate on manganese dissolution may be insufficient, and the improvement of lithium ion transport performance is also not significant; if the coating amount of the first coating layer is too large, it may cause the coating layer to be too thick, increase the impedance of the battery cell, and affect the dynamic performance of the battery cell.

In some embodiments, optionally, the weight ratio of pyrophosphate to phosphate in the first coating layer is 1:3 to 3:1, optionally 1:3 to 1:1.

The appropriate ratio of pyrophosphate to phosphate is conducive to giving full play to the synergistic effect of the two. It can also effectively avoid the following cases: too much pyrophosphate and too little pyrophosphate may result in an increase of the battery cell impedance, and if there are too much phosphate and too little pyrophosphate, the effect of inhibiting manganese dissolution is not significant.

In some embodiments, optionally, the pyrophosphate and phosphate have crystallinity of 10% to 100%, and optionally 50% to 100%, independently.

In the first coating layer of the lithium manganese phosphate positive electrode active material of the present application, pyrophosphate and phosphate with a certain degree of crystallinity are beneficial to maintaining the structural stability of the first coating layer and reducing lattice defects. On the one hand, this is conducive to giving full play to the role of pyrophosphate in hindering manganese dissolution. On the other hand, it also helps the phosphate to reduce the surface miscellaneous lithium content and reduce the surface oxygen valence, thereby reducing the interfacial side reactions between the positive electrode material and the electrolyte solution, reducing the consumption of the electrolyte solution, and improving the cycling performance and safety performance of battery cells.

In some embodiments, optionally, the coating amount of the second coating layer is greater than 0wt% and less than or equal to 6wt%, optionally 3-5wt%, based on the weight of the inner core.

On one hand, the carbon-containing layer as the second coating layer can play a "barrier" function to prevent the positive electrode active material from directly contacting with the electrolyte solution, thereby reducing the corrosion of the electrolyte solution to the active material, and improving the safety performance of the battery cell at high temperature. On the other hand, it has strong electrical conductivity, which can reduce the internal resistance of the battery cell, thereby improving the dynamic performance of the battery cell. However, since the carbon material has a low gram capacity, when the amount of the second coating layer is too large, the overall gram capacity of the positive electrode active material may be reduced. Therefore, when the coating amounts of the second coating layer is within the above ranges, the dynamic performance and safety performance of the battery cell can be further improved without compromising the gram capacity of the positive electrode activity material.

In other embodiments, the positive electrode active material includes a first coating layer covering the inner core, a second coating layer covering the first coating layer, and a third coating layer covering the second coating layer, wherein the first coating layer includes crystalline pyrophosphate $Li_aQP_2O_7$ and/or $Q_b(P_2O_7)_c$, where $0 \leq a \leq 2$, $1 \leq b \leq 4$, $1 \leq c \leq 6$, the values of a, b and c satisfy the following conditions: the crystalline pyrophosphate $Li_aQP_2O_7$ or $Q_b(P_2O_7)_c$ maintains electrically neutral, Q in the crystalline pyrophosphate $Li_aQP_2O_7$ and $Q_b(P_2O_7)_c$ is each independently selected from one or more elements of Fe, Ni, Mg, Co, Cu, Zn, Ti, Ag, Zr, Nb or Al; the second coating layer includes crystalline phosphate

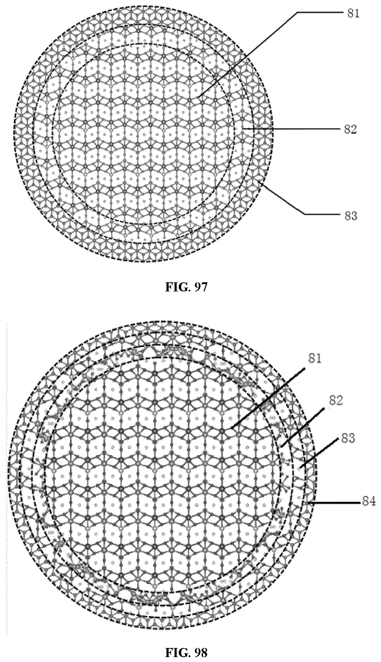

$XPO_4$, where the X is selected from one or more elements of Li, Fe, Ni, Mg, Co, Cu, Zn, Ti, Ag, Zr, Nb or Al; the third coating layer is carbon. Referring to Fig. 98, the structure of the positive electrode active material may be generally as shown in the figure, and may have an inner core 11, a first coating layer 12, a second coating layer 13 and a third coating layer 14. Fig. 98 is a schematic view of a desirable positive electrode active material with a three-layer coating structure. As shown in Fig. 98, the innermost circle schematically represents the inner core, followed by the first coating layer, the second coating layer, and the third coating layer from the inside to the outside. This figure shows an ideal state where each layer coats the interior completely. In practice, each coating layer may completely or partially coat the interior.

In the aforementioned embodiment, crystalline phosphate is chosen as the second coating layer. Because crystalline phosphate has higher lattice match (only 3% mismatch) with the first layer coating material crystalline pyrophosphate; and the stability of phosphate itself is better than that of pyrophosphate, and coating pyrophosphate therewith facilitate the improvement of the stability of the material. The crystalline phosphate is very stable in structure, and has excellent ability to conduct lithium ions. Therefore, the use of crystalline phosphate for coating can effectively reduce the interfacial side reactions on the surface of the positive electrode active material, thereby improving the high-temperature cycling performance and storage performance of the secondary battery cell. The lattice matching between the second coating layer and the first coating layer is similar to the aforementioned combination between the first coating layer and the core. When the lattice mismatch is less than 5%, the lattice matching is good, and the two are easily combined closely. The main reason for using carbon as the third coating layer is the good electronic conductivity of the carbon layer. Since the electrochemical reaction that occurs in secondary battery cells requires the participation of electrons, in order to increase the electron transmission between particles and the electron transmission at different positions on the particles, the positive electrode active material can be coated with carbon with excellent conductivity. Carbon coating can effectively improve the electrical conductivity performance and desolvation ability of the positive electrode active materials.

In some embodiments, the average particle size of the primary particles of the positive electrode active material with three coating layers is in the range of 50-500nm, and the volume median particle size Dv50 is in the range of 200-300nm. Since the particles will agglomerate, the practically measured secondary particle size after agglomeration may be 500-40000nm. The size of the positive electrode active material particles affects the processing of the material and the compacted density performance of the electrode plate. By selecting primary particles having an average particle size within the above range, the following situations can be avoided: if the average particle size of the primary particles of the positive electrode active material is too small, agglomeration of the particles and difficulty in dispersion may be caused, and more binder is needed, causing poor brittleness of the electrode plate; and if the average particle size of the primary particles of the positive electrode active material is too large, the gap between the particles is caused to be larger and the compacted density is reduced. Through the above solution, the lattice change rate of lithium manganese phosphate and the dissolution of Mn in the process of lithium deintercalation can be effectively suppressed, thereby improving the high-temperature cycling stability and high-temperature storage performance of the secondary battery cell.

In the aforementioned embodiment, the interplanar spacing of the crystalline pyrophosphate in the first coating layer is in the range of 0.293-0.470nm, and the included angle between the crystal directions (111) is in the range of 18.00°-32.00°; and the interplanar spacing of the crystalline phosphate in the secondary coating layer is in the range of 0.244-0.425nm, and the included angle between the crystal directions (111) is in the range of 20.00°-37.00°.

The first coating layer and the second coating layer in the positive electrode active material described in the present application are both formed of a crystalline substance. The crystalline pyrophosphate and crystalline phosphate in the coating layers can be characterized by conventional technical means in the art, or characterized by, for example, transmission electron microscopy (TEM). Under TEM, the inner core and coating layers can be distinguished by testing the interplanar spacing.

The specific test method of interplanar spacing and included angle of crystalline pyrophosphate and crystalline phosphate in the coating layer can include the following steps: A certain amount of the coated positive electrode active material sample powder is charged in a test tube, and a solvent such as alcohol is injected into the test tube, and then stirred fully to disperse the powder. Then an appropriate amount of the solution is taken by a clean disposable plastic pipette and dropped on a 300-mesh copper screen. At this time, some of the powder will remain on the copper screen. The copper screen with the sample is transferred to a TEM sample cavity and tested, to obtain an original TEM image which is saved. The original image obtained by the above TEM test is opened in the diffractometer software, and subjected to Fourier transform to obtain the diffraction pattern. The distance from the diffraction spot to the center position in the diffraction pattern is measured to obtain the interplanar spacing. The included angle is calculated according to the Bragg equation.

A difference exists between the interplanar spacing ranges of crystalline pyrophosphate and crystalline phosphate, which can be directly determined from the values of the interplanar spacing. Crystalline pyrophosphate and crystalline phosphate within the aforementioned ranges of interplanar spacing and included angle can more effectively inhibit the lattice change rate and Mn dissolution of lithium manganese phosphate during the process of lithium deintercalation, thereby improving the high-temperature cycling performance, cycling stability and high-temperature storage performance of the secondary battery cell.

In some embodiments, the coating amount of the first coating layer is greater than 0 and less than or equal to 6wt%, optionally greater than 0 and less than or equal to 5.5wt%, and more optionally greater than 0 and less than or equal to 2wt%, based on the weight of the inner core; and/or the coating amount of the second coating layer is greater than 0 and less than or equal to 6wt%, optionally greater than 0 and less than or equal to 5.5wt%, more optionally 2-4wt%, based on the weight of the inner core; and/or the coating amount of the third coating layer is greater than 0 and less than or equal to 6wt%, optionally greater than 0 and less than or equal to 5.5wt%, more optionally greater than 0 and less than or equal to 2wt%, based on the weight of the inner core. In the present application, the coating amount of each layer is not zero. In the positive electrode active material having a core-shell structure described in the present application, the coating amounts of the three coating layers are preferably within the above ranges, so that the inner core can be sufficiently coated, and the dynamic performance and safety performance of the secondary battery cell can be further improved without compromising the gram capacity of the positive electrode activity material.

For the first coating layer, if the coating amount is within the above range, the following situations can be avoided: if the coating amount is too small, the thickness of the coating layer is thin, so the migration of transition metals may be not effectively hindered; and if the amount is too large, the coating layer is too thick, so the migration of Li+ is affected, thereby affecting the rate performance of the material. For the second coating layer, by keeping the coating amount within the above range, the following situations can be avoided: too much coating amount may affect the overall platform voltage of the material; too little coating amount may not achieve sufficient coating effect. For the third coating layer, the carbon coating mainly serves to enhance the electron transport between particles. However, since the structure also contains a large amount of amorphous carbon, the density of carbon is low. Therefore, if the coating amount is too high, the compacted density of the electrode plate is affected.

In the aforementioned embodiments, the thickness of the first coating layer is 1-10nm; and/or the thickness of the second coating layer is 2-15nm; and/or the thickness of the third coating layer is 2-25nm.

In some embodiments, the thickness of the first coating layer may be about 2nm, about 3nm, about 4nm, about 5nm, about 6nm, about 7nm, about 8nm, about 9nm, or about 10nm, or within any range defined by any value above. In some embodiments, the thickness of the second coating layer may be about 2nm, about 3nm, about 4nm, about 5nm, about 6nm, about 7nm, about 8nm, about 9nm, about 10nm, about 11nm, about 12nm, about 13nm, about 14nm, about 15nm, or within any range defined by any value above. In some embodiments, the thickness of the third coating layer may be about 2 nm, about 3nm, about 4nm, about 5nm, about 6nm, about 7nm, about 8nm, about 9nm, about 10nm, about 11nm, about 12nm, about 13nm, about 14nm, about 15nm, about 16nm, about 17nm, about 18nm, about 19nm, about 20nm, about 21nm, about 22nm, about 23nm, about 24nm, about 25nm, or within any range defined by any value above.

When the thickness of the first coating layer is in the range of 1-10nm, the possible adverse effects on the dynamic performance of the material caused when the thickness is too large, and the inability to effectively hinder the migration of transition metal ions caused when the thickness is too small can be avoided.

When the thickness of the second coating layer is in the range of 2-15nm, the surface structure of the second coating layer is stable, and the side reaction with the electrolyte solution is less, so the interfacial side reactions can be effectively reduced, thereby improving the high-temperature performance of secondary battery cells.

When the thickness of the third coating layer is in the range of 2-25nm, the electrical conductivity performance of the material can be improved, and the compacted density performance of the battery cell electrode plate prepared with the positive electrode active material can be improved.

The thickness of the coating layer is mainly tested by FIB. The specific method may include the following steps: randomly selecting a single particle from the positive electrode active material powder to be tested, cutting a thin slice with a thickness of about 100nm from a middle position of or near the middle position of the selected particle, testing the slice by TEM, determining the thickness of the coating layer, and averaging the measurements of 3-5 positions.

In some embodiments, when the positive electrode active material has three coating layers, based on the weight of the positive electrode active material, the content of element manganese is in the range of 10 wt%-35 wt%, optionally in the range of 15 wt%-30 wt%, and more optionally in the range of 17 wt% to 20 wt%; the content of element phosphorus is in the range of 12 wt% to 25 wt%, and optionally in the range of 15 wt% to 20 wt%; and the weight ratio of element manganese to element phosphorus is in the range of 0.90-1.25, and optionally 0.95-1.20.

In the present application, in the case where manganese is contained only in the inner core of the positive electrode active material, the content of manganese may correspond to the content in the inner core. In the present application, when the content of the element manganese is defined in the above range, the deterioration of the structure stability, the decrease in density of the material, and other problems that may be caused if the content of element manganese is too large can be avoided to improve the cycling performance, storage performance, compacted density and other performances of the secondary battery cell; and the problem such as low voltage plateau that may be caused if the content of manganese is too small can be avoided, thereby improving the energy density of the secondary battery cell. In the present application, when the content of the element phosphorus is defined in the above range, the following situations can be effectively avoided: if the content of the element phosphorus is too large, a potential too strong covalent nature of P-O affects the electrical conduction of small polarons, thereby affecting the electrical conductivity of the material; and if the content of the element phosphorus is too small, the stability of the lattice structure of the core, the pyrophosphate in the first coating layer and/or the phosphate in the second coating layer may be caused to decrease, thereby affecting the overall stability of the material. The weight ratio of manganese to phosphorus has the following effects on the performance of the secondary battery cell: if the weight ratio is too large, it means that more manganese element exists, and the manganese dissolution increases, affecting the stability and gram capacity of the positive electrode active material, and thus affecting the cycling performance and storage performance of the secondary battery cell; and if the weight ratio is too small, it means that more phosphorus element exists, and impurity phases tend to be formed, which will reduce the discharge voltage plateau of the material, thereby reducing the energy density of the secondary battery cell. The measurement of elements manganese and phosphorus can be carried out by conventional technical means in the art. In particular, the contents of manganese and phosphorus are determined as follows. The material is dissolved in dilute hydrochloric acid (with a concentration of 10-30%), the contents of various elements in the solution are tested by ICP, and then the content of manganese is measured and calculated, to get its weight ratio.

A second aspect of the present application relates to a method of preparing the positive electrode active material of the first aspect of the present application. Specifically, the method includes an operation of forming a $LiMPO_4$ compound, wherein the $LiMPO_4$ compound can have all the characteristics and advantages of the aforementioned $LiMPO_4$ compound, which will not be described here again. In brief, the M includes Mn and non-Mn elements, the non-Mn elements meet at least one of the following conditions: the ion radius of the non-Mn elements is a, the ion radius of the manganese elements is b, and |a-b|/b is not more than 10%; the valence variable voltage of the non-Mn element is U, 2V < U < 5.5V; the chemical activity of the chemical bond formed by the non-Mn element and O is not less than that of P-O bond; the highest valence of the non-Mn element is not greater than 6.

In some embodiments, the non-Mn element includes first and second doping elements, and the method comprises: mixing a manganese source, a dopant of the manganese site element and an acid to obtain manganese salt particles with the first doping element; mixing the manganese salt particles with the first doping element, a lithium source, a phosphorus source and a dopant of the second doping element in a solvent to obtain a slurry, and sintering the slurry under the protection of an inert gas atmosphere to obtain the $LiMPO_4$ compound. The types of the first doping element and the second doping element have been described in detail before and will not be described again here. In some embodiments, the first doping element includes one or more elements selected from Zn, Al, Na, K, Mg, Mo, W, Ti, V, Zr, Fe, Ni, Co, Ga, Sn, Sb, Nb and Ge, and the second doping element includes one or more elements selected from B (boron), S, Si and N.

In some embodiments, the $LiMPO_4$ compound is formed according to the chemical formula $Li_{1+x}Mn_{1-y}A_yP_{1-z}R_zO_4$, and in other embodiments, the $LiMPO_4$ compound is formed according to the chemical formula $Li_{1+x}C_mMn_{1-y}A_yP_{1-z}R_zO_{4-n}D_n$. The elements at the substitution sites and their selection principles, beneficial effects, and atomic ratio ranges have been described in detail before and will not be repeated here. The source of element C is selected from at least one of the elementary substance, oxides, phosphates, oxalates, carbonates and sulfates of element C, and the source of element A is selected from at least one of the elementary substance, oxides, phosphates, oxalates, carbonates, sulfates, chlorides, nitrates, organic acid salts, hydroxides, and halides of element A, the source of element R is selected from at least one of the sulfates, borates, nitrates and silicates, organic acids, halides, organic acid salts, oxides, and hydroxides of element R, and the source of element D is selected from at least one of the elementary substance and ammonium salts of element D.

In some embodiments, the acid is selected from one or more of hydrochloric acid, sulfuric acid, nitric acid, phosphoric acid, organic acids such as oxalic acid, and the like, and can be oxalic acid, for example. In some embodiments, the acid is a dilute acid with a concentration of 60 wt% or less. In some embodiments, the manganese source can be a manganese-containing substance known in the art that can be used to prepare lithium manganese phosphate. For example, the manganese source can be selected from one of elemental manganese, manganese dioxide, manganese phosphate, manganese oxalate, and manganese carbonate, or a combination thereof. In some embodiments, the lithium source can be a lithium-containing substance known in the art that can be used to prepare lithium manganese phosphate. For example, the lithium source can be selected from one of lithium carbonate, lithium hydroxide, lithium phosphate, and lithium dihydrogen phosphate, or a combination thereof. In some embodiments, the phosphorus source can be a phosphorus-containing substance known in the art that can be used to prepare lithium manganese phosphate. For example, the phosphorus source can be selected from one of diammonium hydrogen phosphate, ammonium dihydrogen phosphate, ammonium phosphate, and phosphoric acid, or a combination thereof. The amounts of the doping elements at the individual sites depend on the target doping amounts, and the ratio of the amounts of the lithium source, the manganese source, and the phosphorus source conforms to the stoichiometric ratio.

In some embodiments, the obtained manganese salt particles with the first doping element satisfy at least one of the following conditions: at a temperature of 20-120°C, optionally 40-120°C, optionally 60-120°C, or more optionally 25-80°C, the manganese source, the manganese site element and the acid are mixed; and/or the mixing is carried out with stirring, the stirring being at 200-800 rpm, optionally at 400-700 rpm, more optionally 500-700rpm for 1-9h, optionally 3-7h, more optionally 2-6h.

In some embodiments, the positive electrode active material may have a first doping element and a second doping element. This method can be carried out by grinding and mixing the manganese salt particles with the first doping element, the lithium source, the phosphorus source and the dopant of the second doping element in a solvent for 8-15 h. For example, the manganese salt particles with the first doping element, the lithium source, the phosphorus source and the dopant of the second doping element are mixed in a solvent at a temperature of 20-120°C, optionally 40-120°C for 1-10h.

Specifically, this method can form a $LiMPO_4$ compound according to the chemical formula $Li_{1+x}C_mMn_{1-y}A_yP_{1-z}R_zO_{4-n}D_n$. More specifically, this method can be carried out by grinding and mixing the manganese salt particles with the first doping element, the lithium source, the phosphorus source and the dopant of the second doping element in a solvent for 8-15 h. For example, the manganese source, the source of element A and the acid can be dissolved in a solvent to form a suspension of a manganese salt doped with element A, and the suspension is filtered and oven dried to obtain a manganese salt doped with element A; the lithium source, the phosphorus source, the source of element C, the source of element R and the source of element D, the solvent and the manganese salt doped with element A are mixed with the solvent to obtain a slurry; the slurry is spray dried and granulated to obtain particles; and the particles are sintered to obtain the positive electrode active material. Sintering can be carried out at a temperature range of 600-900°C for 6-14 h.

By controlling the reaction temperature, stirring rate and mixing time during doping, the doping elements can be evenly distributed and the crystallinity of the material after sintering is higher, thereby improving the gram capacity and rate performance of the material.

In some specific embodiments, the method may include the following steps: (1) dissolving the manganese source, the source of element B and the acid in a solvent and stirring to generate a suspension of manganese salt doped with element B, and filtering the suspension and oven drying the filter cake to obtain the manganese salt doped with element B; (2) putting the lithium source, the phosphorus source, the source of element A, the source of element C and the source of element D, the solvent and the manganese salt doped with element B obtained from step (1) into the reaction vessel, grinding and mixing to obtain a slurry; (3) transferring the slurry obtained in step (2) to a spray drying device for spray drying and granulation to obtain particles; (4) sintering the particles obtained in step (3) to obtain the positive electrode active material.

In some embodiments, the solvents described in step (1) and step (2) can each independently be a solvent commonly used by those skilled in the art in the preparation of manganese salts and lithium manganese phosphates. For example, they can each be independently selected at least one of ethanol, water (such as deionized water), etc.

In some embodiments, the stirring of step (1) is carried out at a temperature in the range of 60-120°C. In some embodiments, the stirring of step (1) is performed at a stirring rate of 200-800rpm, or 300-800rpm, or 400-800rpm. In some embodiments, the stirring of step (1) is performed for 6-12 h. In some embodiments, the grinding and mixing of step (2) is performed for 8-15 h.

By controlling the reaction temperature, stirring rate and mixing time during doping, the doping elements can be evenly distributed and the crystallinity of the material after sintering is higher, thereby improving the gram capacity and rate performance of the material.

In some embodiments, the filter cake may be washed before oven drying the filter cake in step (1). In some embodiments, the oven drying in step (1) can be performed by methods and conditions known to those skilled in the art. For example, the oven drying temperature can be in the range of 120-300°C. Optionally, the filter cake can be ground into particles after oven drying, for example, until the median diameter Dv50 of the particles is in the range of 50-200nm. The median particle size Dv50 refers to a corresponding particle size when the cumulative volume distribution percentage of the positive electrode active material reaches 50%. In the present application, the median particle diameter Dv50 of the positive electrode active material can be measured using laser diffraction particle size analysis. For example, it is determined by using a laser particle size analyzer (such as Malvern Master Size 3000) with reference to the standard GB/T19077-2016.

In some embodiments, in step (2), a carbon source is also added to the reaction vessel for grinding and mixing. Thus, the method can obtain a positive electrode active material whose surface is coated with carbon. Optionally, the carbon source includes one of starch, sucrose, glucose, polyvinyl alcohol, polyethylene glycol, and citric acid, or a combination thereof. The amount of the carbon source relative to the amount of the lithium source is usually in the range of a molar ratio of 0.1%-5%. The grinding can be performed by suitable grinding methods known in the art, for example, by sand grinding.

The temperature and time of spray drying in step (3) can be conventional temperature and time used in spray drying in the art, for example, at 100-300°C for 1-6 h.

In some embodiments, the sintering is performed at a temperature in the range of 600-900°C for 6-14 h. By controlling the sintering temperature and time, the crystallinity of the material can be controlled, and the dissolution of Mn and Mn-site doping elements after cycling of the positive electrode active material can be reduced, thereby improving the high-temperature stability and cycling performance of the battery cell. In some embodiments, the sintering is performed under a protective atmosphere, which may be nitrogen, inert gas, hydrogen or a mixture thereof.

In other embodiments, the positive electrode active material may only have Mn and P-site doping elements. The step of providing a positive electrode active material may include: step (1): mixing and stirring a manganese source, a dopant of element A and an acid in a container to obtain manganese salt particles doped with element A; step (2) : mixing the manganese salt particles doped with element A, a lithium source, a phosphorus source and a dopant of element R in a solvent to obtain a slurry, and then sintering the slurry under the protection of an inert gas atmosphere to obtain the inner core doped with element A and element R. In some optional embodiments, after the manganese source, the dopant of element A and the acid are reacted in a solvent to obtain a suspension of a manganese salt doped with element A, the suspension is filtered, oven dried and sanded to obtain element A doped manganese salt particles with a particle size of 50-200nm. In some optional embodiments, the slurry in step (2) is dried to obtain a powder, and then the powder is sintered to obtain the positive electrode active material doped with element A and element R.

In some embodiments, the mixing in step (1) is carried out at a temperature of 20-120°C, and optionally 40-120°C; and/or the stirring in step (1) is carried out at 400-700rpm for 1-9h, optionally 3-7h. Optionally, the reaction temperature in step (1) can be about 30°C, about 50°C, about 60°C, about 70°C, about 80°C, about 90°C, about 100°C, about 110°C or about 120°C. In step (1), the stirring is continued for about 2 h, about 3 h, about 4 h, about 5 h, about 6 h, about 7 h, about 8 h or about 9 h. Optionally, the reaction temperature and stirring time in step (1) can be within any range defined by the aforementioned arbitrary values.

In some embodiments, the mixing in step (2) is carried out at a temperature of 20-120°C and optionally 40-120°C for 1-12 h. Optionally, the reaction temperature in step (2) can be about 30°C, about 50°C, about 60°C, about 70°C, about 80°C, about 90°C, about 100°C, about 110°C or about 120°C. In step (2), the mixing is continued for about 2 h, about 3 h, about 4 h, about 5 h, about 6 h, about 7 h, about 8 h, about 9 h, about 10 h, about 11 h or about 12 h. Optionally, the reaction temperature and mixing time in step (2) can be within any range defined by the aforementioned arbitrary values.

When the temperature and time during the preparation of the positive electrode active particles are within the aforementioned ranges, the prepared positive electrode active material has fewer lattice defects, which is beneficial to inhibiting the dissolution of manganese and reducing the side reactions at the interface between the positive electrode active material and the electrolyte solution, thereby improving the cycling performance and safety performance of the secondary battery cell.

In some embodiments, optionally, in the process of preparing the dilute acid manganese salt particles doped with element A and element R, the pH of the solution is controlled to 3.5-6, optionally the pH of the solution is controlled to 4-6, and more optionally, the pH of the solution is controlled to 4-5. It should be noted that in the present application, the pH of the obtained mixture can be adjusted by methods commonly used in the art, for example, by adding an acid or a base. In some embodiments, optionally, in step (2), the molar ratio of the manganese salt particles to the lithium source and the phosphorus source is 1:0.5-2.1:0.5-2.1, and more optionally, the molar ratio of the manganese salt particles doped with element A to the lithium source and the phosphorus source is about 1:1:1.

In some embodiments, optionally, the sintering in the process of preparing the lithium manganese phosphate doped with element A and element R comprises: sintering at 600-950° C for 4-10 h under an inert gas atmosphere or a mixed atmosphere of an inert gas and hydrogen. Optionally, the sintering may be sintering at about 650°C, about 700°C, about 750°C, about 800°C, about 850°C, or about 900°C for about 2 h, about 3 h, about 4 h, about 5 h, about 6 h, about 7 h, about 8 h, about 9 h or about 10 h. Optionally, the sintering temperature and sintering time can be within any range defined by any of the aforementioned values. In the process of preparing lithium manganese phosphate doped with elements A and R, when the sintering temperature is too low and the sintering time is too short, the crystallinity of the core of the material will be low, which will affect the overall performance. When the sintering temperature is too high, impurities are prone to appear in the inner core of the material, which affects the overall performance. When the sintering time is too long, the inner core particles of the material become larger, which affects the gram capacity, compacted density and rate performance. In some optional embodiments, optionally, the protective atmosphere is a mixed gas of 70-90 vol% nitrogen and 10-30 vol% hydrogen.

In some embodiments, the particles having the chemical composition described above can serve as the inner core, and the method further includes the step of forming a shell coating the inner core.

Specifically, the step of coating may include the step of forming a carbon coating layer. Specifically, during the step of forming particles with the second doping element, a carbon source may be added and subjected to grinding and mixing or other processes. Optionally, the carbon source includes one of starch, sucrose, glucose, polyvinyl alcohol, polyethylene glycol, and citric acid, or a combination thereof. The amount of the carbon source relative to the amount of the lithium source is usually in the range of a molar ratio of 0.1%-5%. The grinding can be performed by suitable grinding methods known in the art, for example, by sand grinding.

Alternatively, the method further includes the step of forming the aforementioned inorganic coating layer. The composition, number of layers, etc. of the inorganic coating layers have been described in detail before and will not be described again here.

For example, when the coating layer includes a first coating layer and a second coating layer covering the first coating layer, the first coating layer contains pyrophosphate $QP_2O_7$ and phosphate $XPO_4$, and the second coating layer contains carbon, the method includes: providing $QP_2O_7$ powder and an $XPO_4$ suspension containing a source of carbon, and adding the lithium manganese phosphate oxide and $QP_2O_7$ powder to the $XPO_4$ suspension containing carbon and mixing, and sintering to obtain the positive electrode active material.

The QP$_2$O$_7$ powder is a commercially available product, or optionally the providing the QP$_2$O$_7$ powder comprises: adding a source of element Q and a source of phosphorus to a solvent to obtain a mixture, adjusting the pH of the mixture to 4-6, stirring and fully reacting, then drying and sintering to obtain the powder, and the providing the QP$_2$O$_7$ powder meets at least one of the following conditions: the drying is drying at 100-300°C, optionally at 150-200°C for 4-8h; the sintering is sintering at 500-800°C, optionally at 650-800°C, in an inert gas atmosphere for 4-10h. For example, specifically, the sintering temperature to form the coating layer is 500-800°C, and the sintering time is 4-10h.

In some embodiments, optionally, the XPOa suspension comprising a source of carbon is commercially available, or optionally, is prepared by the following method: a source of lithium, a source of X, a source of phosphorus and a source of carbon are mixed evenly in a solvent, and then the reaction mixture is heated to 60-120°C and maintained for 2-8 h to obtain an XPO$_4$ suspension containing the source of carbon. Optionally, during the preparation of the XPOa suspension containing the source of carbon, the pH of the mixture is adjusted to 4-6.

In some embodiments, optionally, the median particle diameter Dv50 of the primary particles of the double-layer-coated lithium manganese phosphate positive electrode active material of the present application is 50-2000nm.

In other embodiments, the coating layer includes a first coating layer covering the LiMPO$_4$ compound, a second coating layer covering the first coating layer, and a third coating layer covering the second coating layer, wherein the first coating layer includes crystalline pyrophosphate Li$_a$QP$_2$O$_7$ and/or Q$_b$(P$_2$O$_7$)$_c$, where $0 \leq a \leq 2$, $1 \leq b \leq 4$, $1 \leq c \leq 6$, the values of a, b and c satisfy the following conditions: the crystalline pyrophosphate Li$_a$QP$_2$O$_7$ or Q$_b$(P$_2$O$_7$)$_c$ maintains electrically neutral, Q in the crystalline pyrophosphate Li$_a$QP$_2$O$_7$ and Q$_b$(P$_2$O$_7$)$_c$ is each independently selected from one or more elements of Fe, Ni, Mg, Co, Cu, Zn, Ti, Ag, Zr, Nb or Al; the second coating layer includes crystalline phosphate XPOa, where the X is selected from one or more elements of Li, Fe, Ni, Mg, Co, Cu, Zn, Ti, Ag, Zr, Nb or Al; the third coating layer is carbon.

Specifically, in the first coating step, the solution in which the source of element Q, the phosphorus source and the acid and optionally the lithium source are dissolved is controlled to have a pH of 3.5-6.5, then stirred and reacted for 1-5 h; and then the solution is heated to 50-120°C and maintained at this temperature for 2-10h, and/or, the sintering is carried out at 650-800°C for 2-6 h. Optionally, in the first coating step, the reaction proceeds sufficiently. Optionally, in the first coating step, the reaction is carried out for about 1.5 h, about 2 h, about 3 h, about 4 h, about 4.5 h or about 5 h. Optionally, in the first coating step, the reaction time of the reaction may be within any range defined any of the aforementioned values. Optionally, in the first coating step, the pH of the solution is controlled to 4-6. Optionally, in the first coating step, the solution is heated to about 55°C, about 60°C, about 70°C, about 80°C, about 90°C, about 100°C, about 110°C, or about 120°C, and maintained at this temperature for about 2 h, about 3 h, about 4 h, about 5 h, about 6 h, about 7 h, about 8 h, about 9 h, or about 10 h. Optionally, in the first coating step, the elevated temperature and holding time of the temperature can be within any range defined by any of the aforementioned values. Optionally, in the first coating step, the sintering may be sintering at about 650°C, about 700°C, about 750°C, or about 800°C for about 2 h, about 3 h, about 4 h, about 5 h or about 6 h. Optionally, the sintering temperature and sintering time can be within any range defined by any of the aforementioned values.

In the first coating step, by controlling the sintering temperature and time within the above ranges, the following situations can be avoided: when the sintering temperature in the first coating step is too low and the sintering time is too short, the crystallinity of the first coating layer is caused to be low and there are many amorphous substances, which will reduce the effect of inhibiting metal dissolution, thereby affecting the cycling performance and high-temperature storage performance of the secondary battery cell; and when the sintering temperature is too high, impurity phases are caused to appear in the first coating layer, which will also affect the effect of inhibiting metal dissolution, thereby affecting the cycling performance and high-temperature storage performance of the secondary battery cell; and if the sintering time is too long, the thickness of the first coating layer will increase, affecting the migration of Li+, and thus affecting the gram capacity and rate performance of the material.

In some embodiments, in the second coating step, the source of element X, the phosphorus source and the acid are dissolved in a solvent, stirred and reacted for 1-10h, and then the solution is heated to 60-150°C, and maintained at this temperature for 2-10h, and/or, sintered at 500-700°C for 6-10 h. Optionally, in the second coating step, the reaction proceeds sufficiently. Optionally, in the second coating step, the reaction is carried out for about 1.5 h, about 2 h, about 3 h, about 4 h, about 4.5 h, about 5 h, about 6 h, about 7 h, about 8 h, about 9 h or about 10 h. Optionally, in the second coating step, the reaction time of the reaction may be within any range defined any of the aforementioned values. Optionally, in the second coating step, the solution is heated to about 65°C, about 70°C, about 80°C, about 90°C, about 100°C, about 110°C, about 120°C, about 130°C, about 140°C, or about 150°C, and maintained at this temperature for about 2 h, about 3 h, about 4 h, about 5 h, about 6 h, about 7 h, about 8 h, about 9 h, or about 10 h. Optionally, in the second coating step, the elevated temperature and holding time of the temperature can be within any range defined by any of the aforementioned values.

In the step of providing the inner core material and the first coating step and the second coating step, before sintering, that is, in the preparation of the chemically reacted inner core material and in the preparation of the first coating layer suspension and the second coating layer suspension, by selecting the appropriate reaction temperature and reaction time as described above, the following situations can be avoided: when the reaction temperature is too low, the reaction fails or the reaction rate is slow; when the temperature is too high, the product is decomposed or forms a heterophase; when the reaction time is too long, the particle size of the product is larger, which may increase the time and difficulty of the subsequent process; and when the reaction time is too short, the reaction is incomplete, and few product is obtained.

Optionally, in the second coating step, the sintering may be sintering at about 550°C, about 600°C, or about 700°C for about 6 h, about 7 h, about 8 h, about 9 h or about 10 h. Optionally, the sintering temperature and sintering time can be within any range defined by any of the aforementioned values. In the second coating step, by controlling the sintering temperature and time within the above ranges, the following situations can be avoided: when the sintering temperature in the second coating step is too low and the sintering time is too short, the crystallinity of the second coating layer is caused to be low and there are many amorphous substances, which will reduce its performance to decrease the surface reactivity of the material, thereby affecting the cycling and high-temperature storage performance of the secondary battery cell; and when the sintering temperature is too high, impurity phases are caused to appear in the second coating layer, which will also affect its effect of reducing the surface reactivity of the material, thereby affecting the cycling performance and high-temperature storage performance of the secondary battery cell; and if the sintering time is too long, the thickness of the second coating layer will increase, affecting the voltage platform of the material, thus reducing the energy density of the material.

In some embodiments, the sintering in the third coating step is performed at 700-800°C for 6-10 h. Optionally, in the third coating step, the sintering may be sintering at about 700°C, about 750°C, or about 800°C for about 6 h, about 7 h, about 8 h, about 9 h or about 10 h. Optionally, the sintering temperature and sintering time can be within any range defined by any of the aforementioned values. In the third coating step, by controlling the sintering temperature and time within the above ranges, the following situations can be avoided: when the sintering temperature in the third coating step is too low, the third coating layer may be caused to have a low degree of graphitization, affecting the electrical conductivity, and thus affecting the gram capacity of the material; when the sintering temperature is too high, the third coating layer may be caused to have a too high degree of graphitization, affecting the transport of Li+ and thus affecting the gram capacity of the material; when the sintering time is too short, the coating layer is caused to be too thin, affecting the electrical conductivity, and thus affecting the gram capacity of the material; and when the sintering time is too long, the coating layer is caused to be too thick, affecting the compacted density of the material, etc.

In the first coating step, second coating step, and third coating step, the drying is performed at a drying temperature of 100°C to 200°C, optionally 110°C to 190°C, and more optionally 120°C to 180°C, even more optionally at 120°C to 170°C, and most optionally 120°C to 160°C, and the drying time is 3-9h, optionally 4-8h, more optionally 5-7h, and most optionally about 6h.

A third aspect of the present application provides a positive electrode plate, which includes a positive electrode current collector and a positive electrode film layer disposed on at least one surface of the positive electrode current collector. The positive electrode film layer comprises the positive electrode active material according to the first aspect of the present application or a positive electrode active material prepared by the method according to the second aspect of the present application. The content of the positive electrode active material in the positive electrode film layer is 10 wt% or more, based on the total weight of the positive electrode film layer.

In some embodiments, the content of the positive electrode active material in the positive electrode film layer is 95-99.5wt%, based on the total weight of the positive electrode film layer.

A fourth aspect of the present application provides a secondary battery cell, comprising a positive electrode active material according to the first aspect of the present application, or a positive electrode active material prepared by the method according to the second aspect of the present application, or a positive electrode plate according to the third aspect of the present invention.

In general, the secondary battery cell comprises a positive electrode plate, a negative electrode plate, an electrolyte, and a separator. During charging and discharging of the battery cell, active ions are intercalated and deintercalated back and forth between the positive electrode plate and the negative electrode plate. The electrolyte serves to conduct ions between the positive electrode plate and the negative electrode plate. The separator is arranged between the positive electrode plate and the negative electrode plate and mainly functions to prevent the positive and negative electrodes from short-circuiting while enabling ions to pass through.

The secondary battery cell, the battery cell module, the battery cell pack, and the electrical apparatus in the present application are described below with reference to the drawings as appropriate.

[Positive electrode plate]

The positive electrode plate comprises a positive electrode current collector and a positive electrode film layer arranged on at least one surface of the positive electrode current collector, and the positive electrode film layer comprises the positive electrode active material in the first aspect of the present application.

As an example, the positive electrode current collector has two surfaces opposite in its own thickness direction, and the positive electrode film layer is arranged on either one or both of the two opposite surfaces of the positive electrode current collector.

In some embodiments, the positive electrode current collector can be a metal foil or a composite current collector. For example, an aluminum foil can be used as the metal foil. The composite current collector may comprise a polymer material substrate layer and a metal layer formed on at least one surface of the polymer material substrate layer. The composite current collector may be formed by forming a metallic material (such as aluminum, aluminum alloy, nickel, nickel alloy, titanium, titanium alloy, silver, and silver alloy) on a polymer material substrate (such as a substrate of polypropylene (PP), polyethylene terephthalate (PET), polybutylene terephthalate (PBT), polystyrene (PS), or polyethylene (PE)).

In some embodiments, the positive electrode film layer further optionally comprises a binder. As an example, the binder may comprise at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments, the positive electrode film layer further optionally comprises a conductive agent. As an example, the conductive agent may comprise at least one of superconducting carbon, acetylene black, carbon black, Ketjen black, carbon dot, carbon nanotube, graphene, and carbon nanofiber.

In some embodiments, the positive electrode plate may be prepared by: dispersing the above components, such as the positive electrode active material, the conductive agent, the binder, and any other component, for preparing the positive electrode plate in a solvent (such as N-methyl pyrrolidone) to form a positive electrode slurry; and coating the positive electrode slurry on the positive electrode current collector, drying, and cold pressing, to provide the positive electrode plate.

[Negative electrode plate]

The negative electrode plate comprises a negative electrode current collector and a negative electrode film layer arranged on at least one surface of the negative electrode current collector, and the negative electrode film layer comprises a negative electrode active material.

As an example, the negative electrode current collector has two surfaces opposite in its own thickness direction, and the negative electrode film layer is arranged on either one or both of the two opposite surfaces of the negative electrode current collector.

In some embodiments, the negative electrode current collector may be a metal foil or a composite current collector. For example, a copper foil can be used as the metal foil. The composite current collector may include a polymer material substrate layer and a metal layer formed on at least one surface of the polymer material substrate. The composite current collector can be formed by forming a metallic material (copper, copper alloy, nickel, nickel alloy, titanium, titanium alloy, silver, and silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, a negative electrode active material for the battery cell well known in the art can be used as the negative electrode active material. As an example, the negative active material may include at least one of the following materials: artificial graphite, natural graphite, soft carbon, hard carbon, silicon-based material, tin-based material, and lithium titanate, etc. The silicon-based material may be selected from at least one of elemental silicon, silicon-oxygen complex, silicon-carbon complex, silicon-nitrogen complex, and silicon alloy. The tin-based material may be at least one selected from elemental tin, a tin-oxygen compound, and a tin alloy. However, the present application is not limited to these materials, and other conventional materials useful as negative electrode active materials for battery cells can also be used. These negative electrode active materials may be used alone or in a combination of two or more thereof.

In some embodiments, the negative electrode film layer further optionally comprises a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally comprises a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer further optionally comprises other adjuvants, for example, a thickener (such as sodium carboxymethyl cellulose (CMC-Na)).

In some embodiments, the negative electrode plate can be prepared by dispersing the components for preparing the negative electrode plate, for example, the negative electrode active material, the conductive agent, the binder and any other components in a solvent (for example, deionized water) to form a negative electrode slurry; and coating the negative electrode slurry on a negative electrode current collector, followed by oven drying, cold pressing and other procedures, to obtain the negative electrode plate.

[Electrolyte]

The electrolyte serves to conduct ions between the positive electrode plate and the negative electrode plate. The type of the electrolyte is not particularly limited in the present application, and can be selected according to requirements. For example, the electrolyte may be in a liquid, gel, or full solid state.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further optionally comprises an additive. For example, the additive may comprise a negative electrode film-forming additive and a positive electrode film-forming additive, and may further include an additive that can improve certain performances of the battery cell, such as an additive that improves the overcharge performance of the battery cell, or an additive that improves the high temperature or low-temperature performance of the battery cell.

[Separator]

In some embodiments, the secondary battery cell further comprises a separator. The type of the separator is not particularly limited in the present application, and any well-known separator having good chemical stability, mechanical stability, and a porous structure may be selected.

In some embodiments, the material of the separator can be selected from at least one of glass fiber, non-woven cloth, polyethylene, polypropylene, and polyvinylidene fluoride. The separator may be a single-layer film or a multi-layer composite film, and is not particularly limited. When the separator is a multilayer composite film, the material in each layer may be same or different, which is not particularly limited.

In some embodiments, the positive electrode plate, the negative electrode plate, and the separator may be made into an electrode assembly by a winding process or a stacking process.

In some embodiments, the secondary battery cell may comprise an outer package. The outer package may be used to encapsulate the above electrode assembly and the above electrolyte.

In some embodiments, the outer package of the secondary battery cell may be a hard shell, such as a hard plastic shell, an aluminum shell, and a steel shell. The outer package of the secondary battery cell may also be a soft pack, such as a bag-type soft pack. The material of the soft pack may be a plastic, and examples of the plastic may include polypropylene, polybutylene terephthalate, polybutylene succinate, and the like.

The shape of the secondary battery cell is not particularly limited in the present application, and may be a cylinder shape, a square shape, or any other shape.

In some embodiments, the battery cell box may comprise a case and a cover plate. The case may comprise a bottom plate and a side plate connected to the bottom plate, which enclose to form an accommodating cavity. The case has an opening in communication with the accommodating cavity, and the cover plate can cover the opening to close the accommodating cavity. The positive electrode plate, the negative electrode plate, and the separator may be formed into an electrode assembly by a winding process or a lamination process. The electrode assembly is encapsulated within the accommodating cavity. The electrolyte solution impregnates the electrode assembly. The number of electrode assemblies comprised in the secondary battery cell may be one or multiple, and may be selected by those skilled in the art according to specific actual requirements.

In some embodiments, the secondary battery cells may be assembled into a battery cell module, the number of secondary battery cells comprised in the battery cell module may be one or multiple, and the specific number may be selected by those skilled in the art according to the application and capacity of the battery cell module.

In the battery cells, multiple secondary battery cells can be sequentially arranged along the length direction of the battery cells. Of course, any other arrangement is also possible. The plurality of secondary battery cells may further be fixed by fasteners.

In some embodiments, the aforementioned battery cell modules may be assembled into a battery cell pack, the number of battery cell modules comprised in the battery cell pack may be one or multiple, and the specific number may be selected by those skilled in the art according to the application and capacity of the battery cell pack.

Embodiments of the present application will be described below. The examples described below are illustrative, are merely used to explain the present application, and should not be construed as limiting the present application. Where specific techniques or conditions are not specified in the examples, the techniques or conditions described in the literatures of the art or the product specifications are followed. Where manufacturers are not specified, the reagents or instruments used are conventional products and are commercially available.

I. Testing methods for properties of positive electrode active materials and battery cell performance

1. Measurement method for lattice change rate

In a constant temperature environment of 25°C, a positive electrode active material sample was placed in an XRD (model Bruker D8 Discover), and the sample was tested at 1°/min. The test data was analyzed. With reference to a standard PDF card, the lattice constants a0, b0, c0, and v0 at the time were calculated (a0, b0, and c0 represent the lengths in all aspects of the unit cell, and v0 represents the unit cell volume, which can be obtained directly from the XRD refined results).

The positive electrode active material sample was prepared into a button battery by using the method for preparing a button battery in the above embodiments. The button battery was charged at a small rate of 0.05C until the current was reduced to 0.01C. Then the positive electrode plate was taken out from the button battery and soaked in DMC for 8 h. Then it was dried, powder was scraped, and particles with a particle size less than 500nm were screened out. A sample was taken and calculated for its lattice constant v1 in the same way as the aforementioned test of fresh samples, and (v0-v1)/v0×100% is shown in the table as the lattice change rate before and after complete deintercalation of lithium.

2. Measurement method for Li/Mn antisite defect concentration

The Li/Mn antisite defect concentration was obtained by comparing the XRD results tested in the "Lattice Change Rate Measurement Method" with the PDF (Powder Diffraction File) card of a standard crystal. Specifically, the XRD results tested in the "Lattice Change Rate Measurement Method" were imported into the General Structural Analysis System (GSAS) software, and the refined results were automatically obtained, which included the occupancy of different atoms, and the Li/Mn antisite defect concentration was obtained by reading the refined results.

3. Surface oxygen valence measurement method

5g of the positive electrode active material sample was taken and a button battery was prepared according to the button battery preparation method described in the aforementioned embodiment. The button battery was charged with a small rate of 0.05C until the current was reduced to 0.01C. Then the positive electrode plate was taken out from the button battery and soaked in DMC for 8 h. Then it was dried, powder was scraped, and particles with a particle size less than 500nm were screened out. The obtained particles were measured with electron energy loss spectroscopy (EELS, the instrument model used was Tales F200S), and the energy loss near-edge structure (ELNES) was obtained, which reflects the density of states and energy level distribution of the element. According to the density of states and energy level distribution, the number of occupied electrons was calculated by integrating the valence band density data, thereby deducing the valence of the charged surface oxygen.

4. Measurement method for compacted density

5g of powder was taken and placed in a special compaction mold (American CARVER mold, model 13mm), and then the mold was placed on the compacted density instrument. A pressure of 3T was applied, the thickness of the powder under pressure (thickness after pressure relief) was read on the equipment, and the compacted density was calculated through $\rho=m/v$. The area value used is the standard small picture area of $1540.25mm^2$.

5. Measurement method for dissolution of Mn (and Fe doped at Mn site) after cycling

The full battery cells that were cycled at 45°C until their capacity decayed to 80% were discharged to a cut-off voltage of 2.0 V using a 0.1C rate. Then the battery cell was disassembled, the negative electrode plate was taken out, randomly 30 discs of unit area ($1540.25mm^2$) was taken from the negative electrode plate, and the inductively coupled plasma emission spectrum (ICP) was tested using Agilent ICP-OES730. The amounts of Fe (if the Mn site of the positive electrode active material is doped with Fe) and Mn were calculated based on the ICP results, and then the dissolution amount of Mn (and Fe doped at Mn site) after cycles was calculated. The test standard is based on EPA-6010D-2014.

6. Measurement method for initial gram capacity of button battery cell

At 2.5-4.3 V, the button battery cells were charged to 4.3V at 0.1C, and then charged at a constant voltage of 4.3V until the current was less than or equal to 0.05 mA, left to stand for 5min, and then discharged at 0.1 C to 2.0V. The discharge capacity at this time was the initial gram capacity, recorded as D0.

7. Measurement method for 3C charge constant current rate

In a constant-temperature environment of 25°C, the fresh full battery cells were allowed to stand for 5min, and discharged to 2.5V at 1/3C. The battery cell was allowed to stand for 5 min, charge to 4.3V at 1/3C, and then charged at a constant voltage of 4.3V until the current was less than or equal to 0.05 mA. After standing for 5 min, the charging capacity at this time was recorded as C0. The battery cell was discharged to 2.5V according to 1/3C, allowed to stand for 5 min, then charged to 4.3V at 3C, allowed to stand for 5 min, and the charging capacity at this time was recorded as C1. The 3C charge constant current rate is C1/C0×100%. The higher the 3C charge constant current rate, the better the rate performance of the battery cell.

8. Full battery cell cycling performance test at 45°C

In a constant-temperature environment of 45°C, at 2.5-4.3V, the full battery cell was charged to 4.3V at 1C, then charged at a constant voltage of 4.3V until the current was less than or equal to 0.05mA. After standing for 5 min, the battery cell was discharged to 2.5V at 1C, the charging capacity at this time was recorded as D0. The aforementioned charge and discharge cycle was repeated until the discharge capacity was reduced to 80% of D0. The number of cycles the battery cell had gone through at this time was recorded.

9. Full battery cell expansion test at 60°C

Full battery cells at 100% state of charge (SOC) were stored at 60°C. The open circuit voltage (OCV) and AC internal resistance (IMP) of the battery cells were measured before, after and during storage to monitor SOC, and the battery cell volume was measured. The full battery cells were taken out after every 48 h of storage, and the open circuit voltage (OCV) and internal resistance (IMP) were tested after standing for 1 h. After cooling to room temperature, the battery cell volume was measured using the water displacement method. The water displacement method involves first separately measuring the gravity $F_1$ of a battery cell using a balance that automatically performs unit conversion based on the dial data, then immersing the battery cell in deionized water (with density known to be 1g/cm$^3$), and measuring the buoyancy $F_2$ of the battery cell at this time; the buoyancy $F_{buoyancy}$ on the battery cell is $F_1$-$F_2$, and then according to Archimedes' principle $F_{buoyancy}= \rho \times g \times V_{water\ displaced}$, it is calculated to obtain the battery cell volume V=(F$_1$-F$_2$)/($\rho \times$ g).
Judging from the OCV and IMP test results, during this experiment until the end of storage, the battery cells of the embodiment always maintained an SOC of more than 99%.
After 30 days of storage, the battery cell volume was measured and the percentage increase in the battery cell volume after storage relative to the battery cell volume before storage was calculated.
In addition, the residual capacity of the battery was measured. At 2.5-4.3V, the full battery cell was charged to 4.3V at 1C, then charged at a constant voltage of 4.3V until the current was less than or equal to 0.05mA. After standing for 5 min, the charging capacity at this time was recorded as the residual capacity of the battery cell.

10. Measurement of manganese and phosphorus elements in positive electrode active materials

5g of the positive electrode active material prepared above was dissolved in 100ml of aqua regia (concentrated hydrochloric acid: concentrated nitric acid = 1:3) (concentrated hydrochloric acid concentration was about 37%, concentrated nitric acid concentration was about 65%), the content of each element in the solution was detected using ICP, and then the content of manganese element or phosphorus element was measured and converted (amount of manganese element or phosphorus element/amount of positive electrode active material * 100%) to obtain their weight percentages.

11. Interplanar spacing and included angle test

1 g of the positive electrode active material sample powder prepared above was taken and placed in a 50mL test tube, and 10 mL of alcohol (75% by mass) was injected into the test tube, and then stirred fully to disperse the powder for 30 min. Then an appropriate amount of the solution was taken by a clean disposable plastic pipette and dropped on a 300-mesh copper screen. At this time, some of the powder will remain on the copper screen. The copper screen with the sample was transferred to a TEM (Talos F200s G2) sample cavity and tested, to obtain an original TEM image, and the original image format (xx.dm3) was saved. The original image obtained by the above TEM test was opened in the DigitalMicrograph software, and subjected to Fourier transform (automatically completed by the software after clicking the operation) to obtain the diffraction pattern. The distance from the diffraction spot to the center position in the diffraction pattern was measured to obtain the interplanar spacing. The included angle was calculated according to the Bragg equation. By comparing the obtained interplanar spacing and corresponding angle data with their standard values, different substances in the coating layer can be identified.

12. Coating layer thickness test

The thickness test of the coating layer mainly involved using FIB to cut a slice with a thickness of about 100nm from the middle of a single particle of the positive electrode active material prepared above, and then performing a TEM test on the slice to obtain the original TEM test picture and save the original picture format (xx.dm3).

The original image obtained from the above TEM test was opened in the DigitalMicrograph software, the coating layer was identified according to the lattice spacing and angle information, and the thickness of the coating layer was measured.

Thicknesses at three locations were measured on the selected particles and averaged.

13. Determination of molar ratio of SP2 hybridized carbon to SP3 hybridized carbon in the third coating layer

This test was performed by Raman spectroscopy. The spectrum of the Raman test was split to obtain Id/Ig where Id is the peak intensity of SP3 hybridized carbon, and Ig is the peak intensity of SP2 hybridized carbon, thereby confirming the molar ratio of the two.

II. Preparation of positive electrode materials and secondary battery cells

The raw material sources involved in the embodiments of the present application are as follows:

| Name | Chemical formula | Manufacturer | Specification |
|---|---|---|---|
| Manganese carbonate | $MnCO_3$ | Shandong West Asia Chemical Industry Co, Ltd. | 1Kg |
| Lithium carbonate | $Li_2CO_3$ | Shandong West Asia Chemical Industry Co, Ltd. | 1Kg |
| Magnesium carbonate | $MgCO_3$ | Shandong West Asia Chemical Industry Co, Ltd. | 1Kg |
| Zinc carbonate | $ZnCO_3$ | Wuhan Xinru Chemical Co, Ltd. | 25Kg |
| Ferrous carbonate | $FeCO_3$ | Xi'an Lanzhiguang Fine Materials Co, Ltd. | 1Kg |
| Nickel sulfate | $NiCO_3$ | Shandong West Asia Chemical Industry Co, Ltd. | 1Kg |
| Titanium sulfate | $Ti(SO_4)_2$ | Shandong West Asia Chemical Industry Co, Ltd. | 1Kg |
| Cobalt sulfate | $CoSO_4$ | Xiamen Zhixin Chemical Co, Ltd. | 500g |
| Vanadium dichloride | $VCl_2$ | Shanghai Jinjinle Industrial Co, Ltd. | 1Kg |
| Oxalic acid dihydrate | $C_2H_2O_4 \cdot 2H_2O$ | Shanghai Jinjinle Industrial Co, Ltd. | 1Kg |
| Ammonium dihydrogen phosphate | $NH_4H_2PO_4$ | Shanghai Chengshao Biotechnology Co, Ltd. | 500g |
| Sucrose | $C_{12}H_{22}O_{11}$ | Shanghai Yuanye Biotechnology Co, Ltd. | 100g |
| Sulfuric acid | $H_2SO_4$ | Shenzhen Hisian Biotechnology Co, Ltd. | Mass fraction 60% |
| Nitric acid | $HNO_3$ | Anhui Lingtian Fine Chemical Co, Ltd. | Mass fraction 60% |

(continued)

| Name | Chemical formula | Manufacturer | Specification |
|------|------------------|--------------|---------------|
| Silicic acid | $H_2SiO_3$ | Shanghai Yuanye Biotechnology Co, Ltd. | 100g |
| Boric acid | $H_3BO_3$ | Changzhou Qidi Chemical Co, Ltd. | 1Kg |

Embodiment 1

1) Preparation of positive electrode active material

Preparation of doped manganese oxalate: 1.3mol of $MnSO_4 \cdot H_2O$, 0.7mol of $FeSO_4 \cdot H_2O$ were mixed thoroughly in the mixer for 6 h. The mixture was transferred to the reactor, and 10 L of deionized water and 2 mol of oxalic acid dihydrate (based on oxalic acid) were added. The reactor was heated to 80°C and stirred at 600 rpm for 6 h. The reaction was terminated (no bubbles were generated) to obtain an Fe-doped manganese oxalate suspension. Then the suspension was filtered, the filter cake was oven dried at 120°C, and then ground to obtain Fe doped manganese oxalate particles with a median particle size Dvso of about 100 nm.

Preparation of doped lithium manganese phosphate: 1 mol of the above manganese oxalate particles, 0.497 mol of lithium carbonate, 0.001 mol of $Mo(SO_4)_3$, an 85% phosphoric acid aqueous solution containing 0.999 mol of phosphoric acid, 0.001 mol of $H_4SiO_4$, 0.0005 mol of $NH_4HF_2$ and 0.005 mol of sucrose were taken and added to 20L of deionized water. The mixture was transferred to a sand mill and thoroughly ground and stirred for 10 h to obtain a slurry. The slurry was transferred to a spray drying device for spray drying and granulation, and dried at a set temperature of 250°C for 4 h to obtain particles. In a protective atmosphere of nitrogen (90 vol%) + hydrogen (10 vol%), the above powder was sintered at 700°C for 10 h to obtain carbon-coated $Li_{0.994}Mo_{0.001}Mn_{0.65}Fe_{0.35}P_{0.999}Si_{0.001}O_{3.999}F_{0.001}$. The element content of the positive electrode active material can be detected by inductively coupled plasma emission spectroscopy (ICP).

2) Preparation of button battery cell

The above positive electrode active material, polyvinylidene fluoride (PVDF), and acetylene black in a weight ratio of 90:5:5 were added to N-methyl pyrrolidone (NMP), and stirred in a drying shed to form a slurry. The above slurry was coated on an aluminum foil, dried and cold pressed to form a positive electrode plate. The coating amount was 0.2 $g/cm^2$ and the compacted density was 2.0 $g/cm^3$.

A lithium sheet was used as the negative electrode, and a solution of 1 mol/L $LiPF_6$ in ethylene carbonate (EC), diethyl carbonate (DEC) and dimethyl carbonate (DMC) in a volume ratio of 1:1:1 was used as the electrolyte solution. They were assembled, together with the above-prepared positive electrode plate, assembled into a button battery cell in a button battery casing (also referred to as "button-battery" below).

3) Preparation of full battery cells:

The aforementioned positive electrode active material, conductive agent acetylene black and binder polyvinylidene fluoride (PVDF) in a weight ratio of 92:2.5:5.5 were evenly mixed in the N-methyl pyrrolidone solvent system, then coated on an aluminum foil, oven dried and cold pressed to obtain the positive electrode plate. The coating amount was 0.4 $g/cm^2$ and the compacted density was 2.4 $g/cm^3$.

The negative electrode active material artificial graphite, hard carbon, the conductive agent acetylene black, the binder styrene butadiene rubber (SBR), and the thickener sodium carboxymethyl cellulose (CMC) in a weight ratio of 90:5:2:2:1 were well mixed in deionized water, and then coated on a copper foil, oven dried and cold pressed to obtain the negative electrode plate. The coating amount was 0.2 $g/cm^2$ and the compacted density was 1.7 $g/cm^3$.

With a polyethylene (PE) porous polymer film as the separator, the positive electrode plate, separator and negative electrode plate were stacked in sequence, so that the separator was located between the positive electrode plate and the negative electrode plate for separation, and a bare battery cell was obtained by winding. The bare battery cell was placed in an outer package, the same electrolyte solution as that used in the preparation of the button battery was injected, they were packaged to obtain a full battery cell (hereinafter also referred to as the "full battery").

Embodiment 2

This embodiment was the same as Embodiment 1 except that in "1) Preparation of positive electrode active material", the amount of high purity $Li_2CO_3$ was changed to 0.4885 mol, $Mo(SO_4)_3$ was replaced with $MgSO_4$, and the

amount of $FeSO_4 \cdot H_2O$ was changed to 0.68 mol, respectively, and in the preparation of doped manganese oxalate, 0.02 mol of $Ti(SO_4)_2$ was added, and $H_4SiO_4$ was replaced with $HNO_3$.

Embodiment 3

This embodiment was the same as Embodiment 1 except that in "1) Preparation of positive electrode active material", the amount of high purity $Li_2CO_3$ was changed to 0.496 mol, $Mo(SO_4)_3$ was replaced with $W(SO_4)_3$, and $H_4SiO_4$ was replaced with $H_2SO_4$.

Embodiment 4

This embodiment was the same as Embodiment 1 except that in "1) Preparation of positive electrode active material", the amount of high purity $Li_2CO_3$ was changed to 0.4985 mol, 0.001 mol of $Mo(SO_4)_3$ was replaced with 0.0005 mol of $Al_2(SO_4)_3$, and $NH_4HF_2$ was replaced with $NH_4HCl_2$.

Embodiment 5

This embodiment was the same as Embodiment 1 except that in "1) Preparation of positive electrode active material", 0.7 mol of $FeSO_4 \cdot H_2O$ was changed to 0.69 mol, and in the preparation of doped manganese oxalate, 0.01 mol of $VCl_2$ was added, the amount of $Li_2CO_3$ was changed to 0.4965 mol, 0.001 mol of $Mo(SO_4)_3$ was replaced with 0.0005 mol of $Nb_2(SO_4)_5$ and $H_4SiO_4$ was replaced with $H_2SO_4$.

Embodiment 6

This embodiment was the same as Embodiment 1 except that in "1) Preparation of positive electrode active material", the amount of $FeSO_4 \cdot H_2O$ was changed to 0.68 mol, and in the preparation of doped manganese oxalate, 0.01 mol of $VCl_2$ and 0.01 mol of $MgSO_4$ were added, the amount of $Li_2CO_3$ was changed to 0.4965 mol, 0.001 mol of $Mo(SO_4)_3$ was replaced with 0.0005 mol of $Nb_2(SO_4)_5$ and $H_4SiO_4$ was replaced with $H_2SO_4$.

Embodiment 7

This embodiment was the same as Embodiment 6 except that in "1) Preparation of positive electrode active material", $MgSO_4$ was replaced with $CoSO_4$.

Embodiment 8

This embodiment was the same as Embodiment 6 except that in "1) Preparation of positive electrode active material", $MgSO_4$ was replaced with $NiSO_4$.

Embodiment 9

This embodiment was the same as Embodiment 1 except that in "1) Preparation of positive electrode active material", the amount of $FeSO_4 \cdot H_2O$ was changed to 0.698 mol, and in the preparation of doped manganese oxalate, 0.002 mol of $Ti(SO_4)_2$ was added, the amount of $Li_2CO_3$ was changed to 0.4955 mol, 0.001 mol of $Mo(SO_4)_3$ was replaced with 0.0005 mol of $Nb_2(SO_4)_5$, $H_4SiO_4$ was replaced with $H_2SO_4$, and $NH_4HF_2$ was replaced with $NH_4HCl_2$.

Embodiment 10

This embodiment was the same as Embodiment 1 except that in "1) Preparation of positive electrode active material", the amount of $FeSO_4 \cdot H_2O$ was changed to 0.68 mol, and in the preparation of doped manganese oxalate, 0.01 mol of $VCl_2$ and 0.01 mol of $MgSO_4$ were added, the amount of $Li_2CO_3$ was changed to 0.4975 mol, 0.001 mol of $Mo(SO_4)_3$ was replaced with 0.0005 mol of $Nb_2(SO_4)_5$ and $NH_4HF_2$ was replaced with $NH_4HBr_2$.

Embodiment 11

This embodiment was the same as Embodiment 1 except that in "1) Preparation of positive electrode active material", the amount of $FeSO_4 \cdot H_2O$ was changed to 0.69 mol, and in the preparation of doped manganese oxalate, 0.01 mol of $VCl_2$ was added, the amount of $Li_2CO_3$ was changed to 0.499 mol, $Mo(SO_4)_3$ was replaced with $MgSO_4$ and

NH$_4$HF$_2$ was replaced with NH$_4$HBr$_2$.

Embodiment 12

This embodiment was the same as Embodiment 1 except that in "1) Preparation of positive electrode active material", the amount of MnSO$_4$ . H$_2$O was changed to 1.36 mol, the amount of FeSO$_4$ . H$_2$O was changed to 0.6 mol, and in the preparation of doped manganese oxalate, 0.04 mol of VCl$_2$ was added, the amount of Li$_2$CO$_3$ was changed to 0.4985 mol, Mo(SO$_4$)$_3$ was replaced with MgSO$_4$ and H$_4$SiO$_4$ was replaced with HNO$_3$.

Embodiment 13

This embodiment was the same as Embodiment 12 except that in "1) Preparation of positive electrode active material", the amount of MnSO$_4$ . H$_2$O was changed to 1.16 mol, and the amount of FeS04 . H$_2$O was changed to 0.8 mol.

Embodiment 14

This embodiment was the same as Embodiment 12 except that in "1) Preparation of positive electrode active material", the amount of MnSO$_4$ . H$_2$O was changed to 1.3 mol, and the amount of VCl$_2$ was changed to 0.1 mol.

Embodiment 15

This embodiment was the same as Embodiment 1 except that in "1) Preparation of positive electrode active material", the amount of MnSO$_4$ . H$_2$O was changed to 1.2 mol, and in the preparation of doped manganese oxalate, 0.1 mol of VCl$_2$ was added, the amount of Li$_2$CO$_3$ was changed to 0.494 mol, 0.001 mol of Mo(SO$_4$)$_3$ was replaced with 0.005 mol of MgSO$_4$ and H$_4$SiO$_4$ was replaced with H$_2$SO$_4$.

Embodiment 16

This embodiment was the same as Embodiment 1 except that in "1) Preparation of positive electrode active material", the amount of MnSO$_4$ . H$_2$O was changed to 1.2 mol, and in the preparation of doped manganese oxalate, 0.1 mol of VCl$_2$ was added, the amount of Li$_2$CO$_3$ was changed to 0.467 mol, 0.001 mol of Mo(SO$_4$)$_3$ was replaced with 0.005 mol of MgSO$_4$, 0.001 mol of H$_4$SiO$_4$ was replaced with 0.005 mol of H$_2$SO$_4$, and 1.175 mol of 85% phosphoric acid was replaced by 1.171 mol of 85% phosphoric acid.

Embodiment 17

This embodiment was the same as Embodiment 1 except that in "1) Preparation of positive electrode active material", the amount of MnSO$_4$ . H$_2$O was changed to 1.2 mol, and in the preparation of doped manganese oxalate, 0.1 mol of VCl$_2$ was added, the amount of Li$_2$CO$_3$ was changed to 0.492 mol, 0.001 mol of Mo(SO$_4$)$_3$ was replaced with 0.005 mol of MgSO$_4$, H$_4$SiO$_4$ was replaced with H$_2$SO$_4$, and 0.0005 mol of NH$_4$HF$_2$ was changed to 0.0025 mol.

Embodiment 18

This embodiment was the same as Embodiment 1 except that in "1) Preparation of positive electrode active material", the amount of FeSO$_4$ . H$_2$O was changed to 0.5 mol, and in the preparation of doped manganese oxalate, 0.1 mol of VCl$_2$ and 0.1 mol of CoSO$_4$ were added, the amount of Li$_2$CO$_3$ was changed to 0.492 mol, 0.001 mol of Mo(SO$_4$)$_3$ was replaced with 0.005 mol of MgSOa, H$_4$SiO$_4$ was replaced with H$_2$SO$_4$, and 0.0005 mol of NH$_4$HF$_2$ was changed to 0.0025 mol.

Embodiment 19

This embodiment was the same as Embodiment 18 except that in "1) Preparation of positive electrode active material", the mount of FeSO$_4$ . H$_2$O was changed to 0.4 mol, and 0.1 mol of CoSO$_4$ was changed to 0.2 mol.

Embodiment 20

This embodiment was the same as Embodiment 18 except that in "1) Preparation of positive electrode active material", the amount of MnSO$_4$ . H$_2$O was changed to 1.5 mol, the amount of FeSO$_4$ . H$_2$O was changed to 0.1 mol, and the

amount of $CoSO_4$ was changed to 0.3 mol.

Embodiment 21

This embodiment was the same as Embodiment 18 except that in "1) Preparation of positive electrode active material", 0.1 mol of $CoSO_4$ was replaced with 0.1 mol of $NiSO_4$.

Embodiment 22

This embodiment was the same as Embodiment 18 except that in "1) Preparation of positive electrode active material", the amount of $MnSO_4 . H_2O$ was changed to 1.5 mol, the amount of $FeSO_4 . H_2O$ was changed to 0.2 mol, and 0.1 mol of $CoSO_4$ was replaced with 0.2 mol of $NiSO_4$.

Embodiment 23

This embodiment was the same as Embodiment 18 except that in "1) Preparation of positive electrode active material", the amount of $MnSO_4 . H_2O$ was changed to 1.4 mol, the amount of $FeSO_4 . H_2O$ was changed to 0.3 mol, and the amount of $CoSO_4$ was changed to 0.2 mol.

Embodiment 24

This embodiment was the same as Embodiment 1 except that in "1) Preparation of positive electrode active material", 1.3 mol of $MnSO_4 . H_2O$ was changed to 1.2 mol, 0.7 mol of $FeSO_4 . H_2O$ was changed to 0.5 mol, and in the preparation of doped manganese oxalate, 0.1 mol of $VCl_2$ and 0.2 mol of $CoSO_4$ were added, the amount of $Li_2CO_3$ was changed to 0.497 mol, 0.001 mol of $Mo(SO_4)_3$ was replaced with 0.005 mol of $MgSO_4$, $H_4SiO_4$ was replaced with $H_2SO_4$, and 0.0005 mol of $NH_4HF_2$ was changed to 0.0025 mol.

Embodiment 25

This embodiment was the same as Embodiment 18 except that in "1) Preparation of positive electrode active material", the amount of $MnSO_4 . H_2O$ was changed to 1.0 mol, the amount of $FeSO_4 . H_2O$ was changed to 0.7 mol, and the amount of $CoSO_4$ was changed to 0.2 mol.

Embodiment 26

This embodiment was the same as Embodiment 1 except that in "1) Preparation of positive electrode active material", the amount of $MnSO_4 . H_2O$ was changed to 1.4 mol, the amount of $FeSO_4 . H_2O$ was changed to 0.3 mol, and in the preparation of doped manganese oxalate, 0.1 mol of $VCl_2$ and 0.2 mol of $CoSO_4$ were added, the amount of $Li_2CO_3$ was changed to 0.4825 mol, 0.001 mol of $Mo(SO_4)_3$ was replaced with 0.005 mol of $MgSO_4$, the amount of $H_4SiO_4$ was changed to 0.1 mol, the amount of phosphoric acid was changed to 0.9 mol, and the amount of $NH_4HF_2$ was changed to 0.04 mol.

Embodiment 27

This embodiment was the same as Embodiment 1 except that in "1) Preparation of positive electrode active material", the amount of $MnSO_4 . H_2O$ was changed to 1.4 mol, the amount of $FeSO_4 . H_2O$ was changed to 0.3 mol, and in the preparation of doped manganese oxalate, 0.1 mol of $VCl_2$ and 0.2 mol of $CoSO_4$ were added, the amount of $Li_2CO_3$ was changed to 0.485 mol, 0.001 mol of $Mo(SO_4)_3$ was replaced with 0.005 mol of $MgSO_4$, the amount of $H_4SiO_4$ was changed to 0.08 mol, the amount of phosphoric acid was changed to 0.92 mol, and the amount of $NH_4HF_2$ was changed to 0.05 mol.

Comparative Embodiment 1

Preparation of manganese oxalate: 1 mol of $MnSO_4 . H_2O$ was added to the reactor, and 10 L of deionized water and 1 mol of oxalic acid dihydrate (based on oxalic acid) were added. The reactor was heated to 80°C and stirred at 600 rpm for 6 h. The reaction was terminated (no bubbles were generated) to obtain a manganese oxalate suspension. Then the suspension was filtered, oven dried at 120°C, and then sanded to obtain manganese oxalate particles with a median particle size Dvso of 50-200nm.

Preparation of lithium manganese phosphate: 1 mol of the above manganese oxalate particles, 0.5 mol of lithium carbonate, an 85% phosphoric acid aqueous solution containing 1 mol of phosphoric acid, and 0.005 mol of sucrose were taken and added to 20L of deionized water. The mixture was transferred to a sand mill and thoroughly ground and stirred for 10 h to obtain a slurry. The slurry was transferred to a spray drying device for spray drying and granulation, and dried at a set temperature of 250°C for 4 h to obtain particles. In a protective atmosphere of nitrogen (90 vol%) + hydrogen (10 vol%), the above powder was sintered at 700°C for 10 h to obtain carbon-coated LiMnPOa.

Embodiment 55

This embodiment was the same as Comparative Embodiment 1 except that in Comparative Embodiment 1, 1 mol of $MnSO_4$ . H2O was replaced with 0.85 mol $MnSO_4$ . $H_2O$ and 0.15 mol of $FeSO_4$ . $H_2O$ which were added to the mixer and mixed thoroughly for 6 h before being added to the reactor.

Embodiment 56

This embodiment was the same as Embodiment 1 except that in "1) Preparation of positive electrode active material", the amount of $MnSO_4$ . $H_2O$ was changed to 1.9 mol, 0.7 mol of $FeSO_4$ . $H_2O$ was replaced with 0.1 mol of $ZnSO_4$, the amount of $Li_2CO_3$ was changed to 0.495 mol, 0.001 mol of $Mo(SO_4)_3$ was replaced with 0.005 mol of $MgSO_4$, the amount of phosphoric acid was changed to 1 mol, and $H_4SiO_4$ and $NH_4HF_2$ were not added.

Embodiment 57

This embodiment was the same as Embodiment 1 except that in "1) Preparation of positive electrode active material", the amount of $MnSO_4$ . $H_2O$ was changed to 1.2 mol, the amount of $FeSO_4$ . $H_2O$ was changed to 0.8 mol, the amount of $Li_2CO_3$ was changed to 0.45 mol, 0.001 mol of $Mo(SO_4)_3$ was replaced with 0.005 mol of $Nb_2(SO_4)_5$, 0.999 mol of phosphoric acid was changed to 1 mol, 0.0005 mol of $NH_4HF_2$ was changed to 0.025 mol and $H_4SiO_4$ was not added.

Embodiment 58

This embodiment was the same as Embodiment 1 except that in "1) Preparation of positive electrode active material", the amount of $MnSO_4$ . $H_2O$ was changed to 1.4 mol, the amount of $FeSO_4$ . $H_2O$ was changed to 0.6 mol, the amount of $Li_2CO_3$ was changed to 0.38 mol, and 0.001 mol of $Mo(SO_4)_3$ was replaced with 0.12 mol of $MgSO_4$.

Embodiment 59

This embodiment was the same as Embodiment 1 except that in "1) Preparation of positive electrode active material", the amount of $MnSO_4$ . $H_2O$ was changed to 0.8 mol, 0.7 mol of $FeSO_4$ . $H_2O$ was changed to 1.2 mol of $ZnSO_4$, the amount of $Li_2CO_3$ was changed to 0.499 mol, and 0.001 mol of $Mo(SO_4)_3$ was changed to 0.001 mol of $MgSO_4$.

Embodiment 60

This embodiment was the same as Embodiment 1 except that in "1) Preparation of positive electrode active material", the amount of $MnSO_4$ . $H_2O$ was changed to 1.4 mol, the amount of $FeSO_4$ . $H_2O$ was changed to 0.6 mol, the amount of $Li_2CO_3$ was changed to 0.534 mol, 0.001 mol of $Mo(SO_4)_3$ was replaced with 0.001 mol of $MgSO_4$, the amount of phosphoric acid was changed to 0.88 mol, the amount of $H_4SiO_4$ was changed to 0.12 mol, and the amount of $NH_4HF_2$ was changed to 0.025 mol.

Embodiment 61

This embodiment was the same as Embodiment 1 except that in "1) Preparation of positive electrode active material", the amount of $MnSO_4$ . $H_2O$ was changed to 1.2 mol, the amount of $FeSO_4$ . $H_2O$ was changed to 0.8 mol, the amount of $Li_2CO_3$ was changed to 0.474 mol, 0.001 mol of $Mo(SO_4)_3$ was replaced with 0.001 mol of $MgSO_4$, the amount of phosphoric acid was changed to 0.93 mol, the amount of $H_4SiO_4$ was changed to 0.07 mol, and the amount of $NH_4HF_2$ was changed to 0.06 mol.

Table 20 shows the composition of positive electrode active materials of Embodiments 1-11, 55-61 and Comparative Embodiment 1.

Table 21 shows the performance data of the positive electrode active materials or button batteries or full batteries of Embodiments 1-11, 55-61 and Comparative Embodiment 1 as measured according to the aforementioned performance test method. Table 22 shows the composition of positive electrode active material of Embodiments 12-27. Table 23 shows the performance data of the positive electrode active materials or button batteries or full batteries of Embodiments 12-27 as measured according to the aforementioned performance test method.

Table 20 The composition of positive electrode active materials of Embodiments 1-11, 55-61 and Comparative Embodiment 1

|  | Positive electrode active material |
|---|---|
| Comparative | $LiMnPO_4$ |
| Embodiment 1 |  |
| Embodiment 55 | $LiMn_{0.85}Fe_{0.15}PO_4$ |
| Embodiment 56 | $Li_{0.990}Mg_{0.005}Mn_{0.95}Zn_{0.05}PO_4$ |
| Embodiment 57 | $Li_{0.90}Nb_{0.01}Mn_{0.6}Fe_{0.4}PO_{3.95}F_{0.05}$ |
| Embodiment 58 | $Li_{0.76}Mg_{0.12}Mn_{0.7}Fe_{0.3}P_{0.999}Si_{0.001}O_{3.999}F_{0.001}$ |
| Embodiment 59 | $Li_{0.998}Mg_{0.001}Mn_{0.4}Zn_{0.6}P_{0.999}Si_{0.001}O_{3.999}F_{0.001}$ |
| Embodiment 60 | $Li_{1.068}Mg_{0.001}Mn_{0.7}Fe_{0.3}P_{0.88}Si_{0.12}O_{3.95}F_{0.05}$ |
| Embodiment 61 | $Li_{0.948}Mg_{0.001}Mn_{0.6}Fe_{0.4}P_{0.93}Si_{0.07}O_{3.88}F_{0.12}$ |
| Embodiment 1 | $Li_{0.994}Mo_{0.001}Mn_{0.65}Fe_{0.35}P_{0.999}Si_{0.001}O_{3.999}F_{0.001}$ |
| Embodiment 2 | $Li_{0.977}Mg_{0.001}Mn_{0.65}Fe_{0.34}Ti_{0.01}P_{0.999}N_{0.001}O_{3.999}F_{0.001}$ |
| Embodiment 3 | $Li_{0.992}W_{0.001}Mn_{0.65}Fe_{0.35}P_{0.999}S_{0.001}O_{3.999}F_{0.001}$ |
| Embodiment 4 | $Li_{0.997}Al_{0.001}Mn_{0.65}Fe_{0.35}P_{0.999}Si_{0.001}O_{3.999}Cl_{0.001}$ |
| Embodiment 5 | $Li_{0.993}Nb_{0.001}Mn_{0.65}Fe_{0.345}V_{0.005}P_{0.999}S_{0.001}O_{3.999}F_{0.001}$ |
| Embodiment 6 | $Li_{0.993}Nb_{0.001}Mn_{0.65}Fe_{0.34}V_{0.005}Mg_{0.005}P_{0.999}S_{0.001}O_{3.999}F_{0.001}$ |
| Embodiment 7 | $Li_{0.993}Nb_{0.001}Mn_{0.65}Fe_{0.34}V_{0.005}Co_{0.005}P_{0.999}S_{0.001}O_{3.999}F_{0.001}$ |
| Embodiment 8 | $Li_{0.993}Nb_{0.001}Mn_{0.65}Fe_{0.34}V_{0.005}Ni_{0.005}P_{0.999}S_{0.001}O_{3.999}F_{0.001}$ |
| Embodiment 9 | $Li_{0.991}Nb_{0.001}Mn_{0.65}Fe_{0.349}Ti_{0.001}P_{0.999}S_{0.001}O_{3.999}Cl_{0.001}$ |
| Embodiment 10 | $Li_{0.995}Nb_{0.001}Mn_{0.65}Fe_{0.34}V_{0.005}Mg_{0.005}P_{0.999}Si_{0.001}O_{3.999}Br_{0.001}$ |
| Embodiment 11 | $Li_{0.998}M_{g0.001}Mn_{0.65}Fe_{0.345}V_{0.005}P_{0.999}Si_{0.001}O_{3.999}Br_{0.001}$ |

EP 4 485 653 A1

Table 21 The performance data of the positive electrode active materials or button batteries or full batteries of Embodiments 1-11, 55-61 and Comparative Embodiment 1 as measured according to the aforementioned performance test method

| | Lattice change rate (%) | Li/Mn antisite defect concentration (%) | Surface oxygen valence | Compacted density (g/cm$^3$) | Dissolution of Mn and Fe after cycling (ppm) | Initial gram capacity of button battery (mAh/g) | 3C charge constant current rate: (%) | Number of cycles for 80% of capacity retention rate at 45°C | Battery cell expansion rate after storage at 60°C (%) |
|---|---|---|---|---|---|---|---|---|---|
| Comparative Embodiment 1 | 11.4 | 5.2 | -1.55 | 1.7 | 2060 | 125.6 | 50.1 | 121 | 48.6 |
| Embodiment 55 | 10.6 | 4.3 | -1.51 | 1.87 | 1510 | 126.4 | 50.4 | 129 | 37.3 |
| Embodiment 56 | 10.8 | 3.6 | -1.64 | 1.88 | 1028 | 134.7 | 51.7 | 134 | 31.9 |
| Embodiment 57 | 9.7 | 2.4 | -1.71 | 1.93 | 980 | 141.3 | 62.3 | 148 | 30.8 |
| Embodiment 58 | 5.6 | 1.8 | -1.81 | 1.98 | 873 | 110.8 | 50.2 | 387 | 21.4 |
| Embodiment 59 | 3.7 | 1.5 | -1.80 | 2.01 | 574 | 74.3 | 65.8 | 469 | 15.8 |
| Embodiment 60 | 7.8 | 1.5 | -1.75 | 2.05 | 447 | 139.4 | 64.3 | 396 | 18.3 |
| Embodiment 61 | 8.4 | 1.4 | -1.79 | 2.16 | 263 | 141.7 | 63.9 | 407 | 22.7 |
| Embodiment 1 | 6.3 | 1.2 | -1.82 | 2.21 | 192 | 156.2 | 68.1 | 552 | 8.4 |
| Embodiment 2 | 6.8 | 1.1 | -1.85 | 2.25 | 161 | 153.4 | 75.1 | 583 | 7.5 |
| Embodiment 3 | 6.4 | 0.9 | -1.86 | 2.31 | 144 | 154.6 | 76.7 | 646 | 8.6 |
| Embodiment 4 | 5.5 | 0.9 | -1.89 | 2.38 | 125 | 153.6 | 78.4 | 638 | 8.3 |
| Embodiment 5 | 5.3 | 0.7 | -1.98 | 2.45 | 102 | 153.8 | 84.5 | 769 | 7.8 |

(continued)

| | Lattice change rate (%) | Li/Mn antisite defect concentration (%) | Surface oxygen valence | Compacted density (g/cm³) | Dissolution of Mn and Fe after cycling (ppm) | Initial gram capacity of button battery (mAh/g) | 3C charge constant current rate: (%) | Number of cycles for 80% of capacity retention rate at 45°C | Battery cell expansion rate after storage at 60°C (%) |
|---|---|---|---|---|---|---|---|---|---|
| Embodiment 6 | 2.4 | 0.7 | -1.95 | 2.47 | 88 | 157.5 | 92.5 | 747 | 6.4 |
| Embodiment 7 | 2.2 | 0.6 | -1.96 | 2.49 | 85 | 158.5 | 94.8 | 858 | 6.3 |
| Embodiment 8 | 3.4 | 0.5 | -1.98 | 2.51 | 79 | 157.6 | 93.8 | 726 | 6.2 |
| Embodiment 9 | 3.8 | 0.5 | -1.96 | 2.45 | 86 | 146.8 | 90.3 | 686 | 6.8 |
| Embodiment 10 | 4.0 | 0.6 | -1.97 | 2.46 | 103 | 155.7 | 91.2 | 638 | 6.5 |
| Embodiment 11 | 3.6 | 0.7 | -1.95 | 2.46 | 112 | 155.8 | 92.6 | 587 | 6.4 |

Table 22 The composition of positive electrode active material of Embodiments 12-27

| | Positive electrode active material | (1-y):y | a:x |
|---|---|---|---|
| Embodiment 12 | $Li_{0.997}Mg_{0.001}Mn_{0.68}Fe_{0.3}V_{0.02}P_{0.999}N_{0.001}O_{3.999}F_{0.001}$ | 2.26 | 997 |
| Embodiment 13 | $Li_{0.997}Mg_{0.001}Mn_{0.58}Fe_{0.4}V_{0.02}P_{0.999}N_{0.001}O_{3.999}F_{0.001}$ | 1.45 | 997 |
| Embodiment 14 | $Li_{0.997}Mg_{0.001}Mn_{0.65}Fe_{0.3}V_{0.05}P_{0.999}N_{0.001}O_{3.999}F_{0.001}$ | 2.17 | 997 |
| Embodiment 15 | $L_{i0.988}Mg_{0.005}Mn_{0.6}Fe_{0.35}V_{0.05}P_{0.999}S_{0.001}O_{3.999}F_{0.001}$ | 1.71 | 197.6 |
| Embodiment 16 | $Li_{0.984}Mg_{0.005}Mn_{0.6}Fe_{0.3}5V_{0.05}P_{0.995}S_{0.005}O_{3.999}F_{0.001}$ | 1.71 | 196.8 |
| Embodiment 17 | $Li_{0.984}Mg_{0.005}Mn_{0.6}Fe_{0.35}V_{0.05}P_{0.999}S_{0.001}O_{3.995}F_{0.005}$ | 1.71 | 196.8 |
| Embodiment 18 | $Li_{0.984}Mg_{0.005}Mn_{0.65}Fe_{0.25}V_{0.05}Co_{0.05}P_{0.999}S_{0.001}O_{3.995}F_{0.005}$ | 2.60 | 196.8 |
| Embodiment 19 | $Li_{0.984}Mg_{0.005}Mn_{0.65}Fe_{0.20}V_{0.05}Co_{0.10}P_{0.999}S_{0.001}O_{3.995}F_{0.005}$ | 3.25 | 196.8 |
| Embodiment 20 | $Li_{0.984}Mg_{0.005}Mn_{0.75}Fe_{0.05}V_{0.05}Co_{0.15}SP_{0.999}S_{0.001}O_{3.995}F_{0.005}$ | 15.0 | 196.8 |
| Embodiment 21 | $Li_{0.984}Mg_{0.005}Mn_{0.65}Fe_{0.25}V_{0.05}Ni_{0.05}P_{0.999}S_{0.001}O_{3.995}F_{0.005}$ | 2.60 | 196.8 |
| Embodiment 22 | $Li_{0.984}Mg_{0.005}Mn_{0.75}Fe_{0.10}V_{0.05}Ni_{0.10}P_{0.999}S_{0.001}O_{3.995}F_{0.005}$ | 7.50 | 196.8 |
| Embodiment 23 | $Li_{0.984}Mg_{0.005}Mn_{0.7}Fe_{0.15}V_{0.05}Co_{0.10}P_{0.999}S_{0.001}O_{3.995}F_{0.005}$ | 4.67 | 196.8 |
| Embodiment 24 | $Li_{0.984}Mg_{0.005}Mn_{0.6}Fe_{0.25}V_{0.05}Co_{0.10}P_{0.999}S_{0.001}O_{3.995}F_{0.005}$ | 2.40 | 196.8 |
| Embodiment 25 | $Li_{0.984}Mg_{0.005}Mn_{0.5}Fe_{0.35}V_{0.05}Co_{0.10}P_{0.999}S_{0.001}O_{3.995}F_{0.005}$ | 1.43 | 196.8 |
| Embodiment 26 | $Li_{1.01}Mg_{0.005}Mn_{0.7}Fe_{0.15}V_{0.05}Co_{0.10}P_{0.9}Si_{0.1}O_{3.92}F_{0.08}$ | 4.67 | 202 |
| Embodiment 27 | $Li_{0.97}Mg_{0.005}Mn_{0.7}Fe_{0.15}V_{0.05}Co_{0.10}P_{0.92}Si_{0.08}O_{3.9}F_{0.1}$ | 4.67 | 194 |

Table 23 The performance data of the positive electrode active materials or button batteries or full batteries of Embodiments 12-27 as measured according to the aforementioned performance test method

| | Lattice change rate (%) | Li/Mn antisite defect concentration (%) | Surface oxygen valence | Compacted density (g/cm$^3$) | Dissolution of Mn and Fe after cycling (ppm) | Initial gram capacity of button battery (mAh/g) | 3C charge constant current rate (%) | Number of cycles for 80% of capacity retention rate at 45°C | Battery cell expansion rate after storage at 60°C (%) |
|---|---|---|---|---|---|---|---|---|---|
| Embodiment 12 | 7.4 | 0.5 | -1.96 | 2.45 | 92 | 153.3 | 97.2 | 948 | 6.7 |
| Embodiment 13 | 76 | 0.4 | -1.98 | 2.48 | 83 | 157.1 | 85.1 | 953 | 7.8 |
| Embodiment 14 | 7.8 | 0.6 | -1.95 | 2.47 | 87 | 155.4 | 85.2 | 1067 | 6.9 |
| Embodiment 15 | 6.4 | 0.5 | -1.97 | 2.49 | 86 | 156.4 | 82.1 | 938 | 7.5 |
| Embodiment 16 | 5.4 | 0.7 | -1.94 | 2.44 | 86 | 156.1 | 87.3 | 927 | 8.4 |
| Embodiment 17 | 4.2 | 0.6 | -1.98 | 2.42 | 88 | 156.5 | 92.1 | 919 | 7.5 |
| Embodiment 18 | 2.5 | 0.4 | -1.96 | 2.46 | 84 | 157.4 | 94.0 | 1057 | 6.4 |
| Embodiment 19 | 2.4 | 0.4 | -1.97 | 2.47 | 84 | 156.8 | 94.4 | 1064 | 6.7 |
| Embodiment 20 | 2.6 | 0.4 | -1.95 | 2.45 | 86 | 154.8 | 93.7 | 975 | 7.3 |
| Embodiment 21 | 3.3 | 0.5 | -1.93 | 2.46 | 82 | 155.7 | 91.5 | 989 | 6.3 |
| Embodiment 22 | 3.1 | 0.5 | -1.95 | 2.46 | 75 | 157.3 | 91.6 | 964 | 6.3 |
| Embodiment 23 | 2.8 | 0.6 | -1.96 | 2.44 | 67 | 151.8 | 84.4 | 864 | 5.9 |
| Embodiment 24 | 2.5 | 0.5 | -1.97 | 2.45 | 65 | 152.3 | 90.2 | 976 | 5.6 |
| Embodiment 25 | 2.2 | 0.4 | -1.98 | 2.46 | 58 | 153.3 | 92.2 | 986 | 5.2 |
| Embodiment 26 | 3.4 | 0.6 | -1.95 | 2.25 | 45 | 147.3 | 92.5 | 978 | 9.3 |
| Embodiment 27 | 2.7 | 0.5 | -1.98 | 2.28 | 42 | 145.8 | 91.8 | 937 | 10.5 |

Embodiments 28-41

The positive electrode active materials, button batteries and full batteries were prepared in the same manner as in Embodiment 1, but the stirring speed, temperature, grinding and stirring time in the sand mill, sintering temperature and sintering time when preparing doped manganese oxalate were changed. The details are shown in Table 24 below.
Also, the performance data of the positive electrode active materials or button batteries or full batteries of Embodiments 28-41 were measured according to the aforementioned performance test method, as shown in Table 25.

Table 24 Stirring speed, temperature, grinding and stirring time in the sand mill, sintering temperature and sintering time when preparing doped manganese oxalate in Embodiments 28-41

| | Stirring speed (rpm) | Stirring temperature (°C) | Grinding time (h) | Sintering temperature (°C) | Sintering time (h) |
|---|---|---|---|---|---|
| Embodiment 28 | 200 | 50 | 12 | 700 | 10 |
| Embodiment 29 | 300 | 50 | 12 | 700 | 10 |
| Embodiment 30 | 400 | 50 | 12 | 700 | 10 |
| Embodiment 31 | 500 | 50 | 12 | 700 | 10 |
| Embodiment 32 | 600 | 50 | 10 | 700 | 10 |
| Embodiment 33 | 700 | 50 | 11 | 700 | 10 |
| Embodiment 34 | 800 | 50 | 12 | 700 | 10 |
| Embodiment 35 | 600 | 60 | 12 | 700 | 10 |
| Embodiment 36 | 600 | 70 | 12 | 700 | 10 |
| Embodiment 37 | 600 | 80 | 12 | 700 | 10 |
| Embodiment 38 | 600 | 90 | 12 | 600 | 10 |
| Embodiment 39 | 600 | 100 | 12 | 800 | 10 |
| Embodiment 40 | 600 | 110 | 12 | 700 | 8 |
| Embodiment 41 | 600 | 120 | 12 | 700 | 12 |

Table 25 The performance data of the positive electrode active materials or button batteries or full batteries of Embodiments 28-41 as measured according to the aforementioned performance test method

| | Lattice change rate (%) | Li/Mn antisite defect concentration | Surface oxygen valence | Compacted density (g/cm$^3$) | Dissolution of Mn and Fe after cycling (ppm) | Initial gram capacity of button battery (mAh/g) | 3C charge constant current rate (%) | Number of cycles for 80% of capacity retention rate at 45°C | Battery cell expansion rate after storage at 60°C (%) |
|---|---|---|---|---|---|---|---|---|---|
| Embodiment 28 | 7.8 | 5.6 | -1.59 | 1.89 | 341 | 138.1 | 53.1 | 594 | 24.1 |
| Embodiment 29 | 7.4 | 4.8 | -1.62 | 1.94 | 279 | 140.3 | 55.6 | 628 | 22.4 |
| Embodiment 30 | 7.2 | 4.5 | -1.66 | 1.98 | 248 | 141.5 | 56.8 | 689 | 21.6 |
| Embodiment 31 | 7.1 | 4.1 | -1.68 | 2.01 | 216 | 142.3 | 57.5 | 721 | 18.7 |
| Embodiment 32 | 6.8 | 3.8 | -1.71 | 2.04 | 184 | 143.8 | 59.3 | 749 | 15.6 |
| Embodiment 33 | 6.7 | 3.4 | -1.75 | 2.06 | 176 | 144.2 | 61.4 | 756 | 11.3 |
| Embodiment 34 | 6.6 | 3.1 | -1.76 | 2.08 | 139 | 148.2 | 62.6 | 787 | 10.8 |
| Embodiment 35 | 6.4 | 2.7 | -1.76 | 2.13 | 126 | 149.8 | 63.8 | 816 | 9.6 |
| Embodiment 36 | 6.4 | 1.9 | -1.77 | 2.15 | 103 | 152.3 | 65.4 | 937 | 8.9 |
| Embodiment 37 | 6.4 | 1.4 | -1.84 | 2.27 | 89 | 157.2 | 69.1 | 982 | 8.2 |
| Embodiment 38 | 6.5 | 1.8 | -1.78 | 2.16 | 113 | 153.9 | 66.3 | 921 | 9.1 |
| Embodiment 39 | 6.8 | 2.7 | -1.76 | 2.12 | 134 | 152.1 | 64.5 | 998 | 9.8 |
| Embodiment 40 | 7.1 | 3.4 | -1.74 | 2.08 | 161 | 150.2 | 63.4 | 926 | 10.5 |
| Embodiment 41 | 7.8 | 4.5 | -1.70 | 2.03 | 189 | 148.1 | 61.3 | 837 | 11.8 |

EP 4 485 653 A1

Embodiments 42-54

The positive electrode active materials, button batteries and full batteries were prepared in the same manner as in Embodiment 1, but the lithium source, manganese source, phosphorus source and sources of Li site, Mn site, P site and O site doping elements were changed, as shown in the following table 26. All the prepared positive electrode active materials have the same composition as Embodiment 1, that is, $Li_{0.994}Mo_{0.001}Mn_{0.65}Fe_{0.35}P_{0.999}Si_{0.001}O_{3.999}F_{0.001}$.

Also, the performance data of the positive electrode active materials or button batteries or full batteries of Embodiments 42-54 were measured according to the aforementioned performance test method, as shown in Table 27.

Table 26 Lithium source, manganese source, phosphorus source and sources of doping elements C, A, R and D in Embodiments 42-54

|  | Lithium source | Manganese source | Phosphorus source | C source | A source | R source | D source |
|---|---|---|---|---|---|---|---|
| Embodiment 42 | LiOH | $MnCO_3$ | $NH_4H_2PO_4$ | $Mo(NO_3)_6$ | FeO | $H_4SiO_4$ | $NH_4F$ |
| Embodiment 43 | LiOH | MnO | $NH_4H_2PO_4$ | $Mo(NO_3)_6$ | FeO | $H_4SiO_4$ | $NH_4F$ |
| Embodiment 44 | LiOH | $Mn_3O_4$ | $NH_4H_2PO_4$ | $Mo(NO_3)_6$ | FeO | $H_4SiO_4$ | $NH_4F$ |
| Embodiment 45 | LiOH | $Mn(NO_3)_2$ | $NH_4H_2PO_4$ | $Mo(NO_3)_6$ | FeO | $H_4SiO_4$ | $NH_4F$ |
| Embodiment 46 | LiOH | MnO | $NH_4H_2PO_4$ | $Mo(NO_3)_6$ | FeCOs | $H_4SiO_4$ | $NH_4F$ |
| Embodiment 47 | LiOH | MnO | $NH_4H_2PO_4$ | $Mo(NO_3)_6$ | $Fe(NO_3)_2$ | $H_4SiO_4$ | $NH_4F$ |
| Embodiment 48 | LiOH | MnO | $NH_4H_2PO_4$ | $Mo(NO_3)_6$ | $Fe_3O_4$ | $H_4SiO_4$ | $NH_4F$ |
| Embodiment 49 | LiOH | MnO | $NH_4H_2PO_4$ | $Mo(NO_3)_6$ | $FeC_2O_4$ | $H_4SiO_4$ | $NH_4F$ |
| Embodiment 50 | LiOH | MnO | $NH_4H_2PO_4$ | $Mo(NO_3)_6$ | Fe | $H_4SiO_4$ | $NH_4F$ |
| Embodiment 51 | LiOH | MnO | $NH_4H_2PO_4$ | $Mo(PO_4)_2$ | FeO | $H_4SiO_4$ | $NH_4F$ |
| Embodiment 52 | LiOH | MnO | $NH_4H_2PO_4$ | $Mo(C_2O_4)_3$ | FeO | $H_4SiO_4$ | $NH_4F$ |
| Embodiment 53 | LiOH | MnO | $NH_4H_2PO_4$ | $MoO_3$ | FeO | $H_4SiO_4$ | $NH_4F$ |
| Embodiment 54 | LiOH | MnO | $NH_4H_2PO_4$ | Mo | FeO | $H_4SiO_4$ | $NH_4F$ |

Table 27 The performance data of the positive electrode active materials or button batteries or full batteries of Embodiments 42-54 as measured according to the aforementioned performance test method

| | Lattice change rate (%) | Li/Mn antisite defect concentration | Surface oxygen valence | compacted density (g/cm$^3$) | Dissolution of Mn and Fe, after cycling (ppm) | Initial gram capacity of button battery (mAh/g) | 3C charge constant current rate (%) | Number of cycles for 80% of capacity retention rate at 45°C | Battery cell expansion rate after storage at 60°C (%) |
|---|---|---|---|---|---|---|---|---|---|
| Embodiment 42 | 6.5 | 2.8 | -1.80 | 2.19 | 95 | 155.7 | 67.3 | 519 | 10.3 |
| Embodiment 43 | 6.7 | 2.6 | -1.81 | 2.18 | 88 | 156.1 | 67.6 | 525 | 9.8 |
| Embodiment 44 | 6.8 | 2.7 | -1.83 | 2.20 | 91 | 155.5 | 67.5 | 522 | 10.1 |
| Embodiment 45 | 6.7 | 2.6 | -1.82 | 2.17 | 85 | 155.9 | 67.4 | 517 | 9.5 |
| Embodiment 46 | 6.4 | 2.5 | -1.83 | 2.18 | 134 | 150.9 | 61.4 | 501 | 11.6 |
| Embodiment 47 | 6.1 | 2.1 | -1.81 | 2.21 | 114 | 152.8 | 63.7 | 518 | 10.8 |
| Embodiment 48 | 6.6 | 1.8 | -1.79 | 2.23 | 105 | 154.3 | 65.4 | 538 | 9.2 |
| Embodiment 49 | 6.4 | 1.4 | -1.85 | 2.22 | 95 | 156.6 | 68.4 | 572 | 8.7 |
| Embodiment 50 | 7.5 | 3.4 | -1.75 | 2.08 | 115 | 149.5 | 58.3 | 426 | 9.6 |
| Embodiment 51 | 6.5 | 1.5 | -1.83 | 2.21 | 95 | 155.8 | 67.5 | 531 | 8.8 |
| Embodiment 52 | 6.8 | 1.7 | -1.81 | 2.23 | 101 | 154.6 | 66.9 | 518 | 7.4 |
| Embodiment 53 | 6.6 | 1.6 | -1.82 | 2.24 | 118 | 155.3 | 67.2 | 508 | 7.9 |
| Embodiment 54 | 8.7 | 2.4 | -1.79 | 2.17 | 129 | 152.3 | 65.4 | 483 | 11.2 |

It can be seen from the above Tables 21, 23, 25, and 27 that all the positive electrode active materials in the embodiments of the present application achieve better effects than the comparative embodiment in one or even all of cycling performance, high temperature stability, gram capacity, and compacted density.

From the comparison between Embodiments 18-20 and 23-25, it can be seen that when other elements are the same, when $(1-y):y$ is in the range of 1 to 4, it can further improve the energy density and cycling performance of the secondary battery cell.

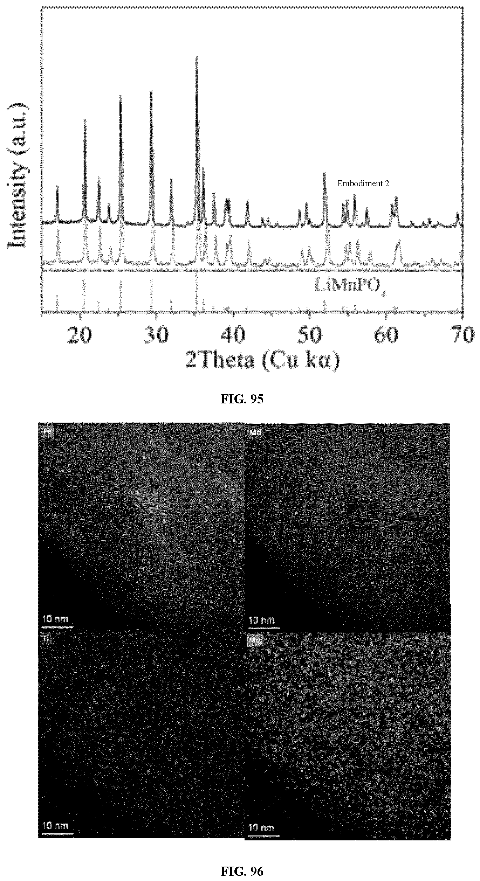

Fig. 95 shows the XRD patterns of undoped $LiMnPO_4$ and the positive electrode active material prepared in Embodiment 2. It can be seen from the figure that the positions of the main characteristic peaks in the XRD pattern of the positive active material of Embodiment 2 are consistent with those of undoped $LiMnPO_4$, indicating that no impurity phases are introduced in the doping process, and the improvement of performance is mainly attributed to elemental doping, instead of impurity phases.

Fig. 96 shows the EDS spectrum of the positive electrode active material prepared in Embodiment 2. The dots distributed in the figure are doping elements. It can be seen from the figure that the elements in the positive electrode active material of Embodiment 2 are uniformly doped.

The following provides embodiments and comparative embodiments of positive electrode active materials with a structure having an inner core of $Li_{1+x}Mn_{1-y}A_yP_{1-z}R_zO_4$ and three coating layers including a pyrophosphate layer, a phosphate layer and a carbon layer, and performance test analysis thereof:

Embodiment 62

Step 1: Preparation of positive electrode active material

Step S1: Preparation of Fe, Co, V and S co-doped manganese oxalate

689.6 g of manganese carbonate, 455.27 g of ferrous carbonate, 4.65 g of cobalt sulfate, and 4.87 g of vanadium dichloride were added to a mixer and mixed thoroughly for 6 h. Then, the obtained mixture was transferred into a reactor, 5 L of deionized water and 1260.6 g of oxalic acid dihydrate were added, heated to 80 °C, fully stirred at 500 rpm for 6 h, and mixed evenly until the reaction was terminated and no bubbles were generated, to obtain a Fe, Co, and V co-doped manganese oxalate suspension. Then the suspension was filtered, oven dried at 120°C, and then sanded to obtain manganese oxalate particles with a particle size of 100 nm.

Step S2: Preparation of inner core $Li_{0.997}Mn_{0.60}Fe_{0.393}V_{0.004}Co_{0.003}P_{0.997}S_{0.003}O_4$

1793.1 g of manganese oxalate prepared in (1), 368.3 g of lithium carbonate, 1146.6 g of ammonium dihydrogen phosphate and 4.9 g of dilute sulfuric acid were added to 20 L of deionized water, stirred well, and uniformly mixed and reacted at 80°C for 10 h, to obtain a slurry. The slurry was transferred to a spray drying device for spray drying and granulation, and dried at a temperature of 250° C. to obtain a powder. Under a protective atmosphere (90% nitrogen and 10% hydrogen), the powder was sintered in a roller kiln at 700°Cfor 4 h to obtain the inner core material.

Step S3: Preparation of first coating layer suspension

To prepare a $Li_2FeP_2O_7$ solution, 7.4g of lithium carbonate, 11.6g of ferrous carbonate, 23.0g of ammonium dihydrogen phosphate and 12.6g of oxalic acid dihydrate were dissolved in 500mL of deionized water, the pH was controlled to be 5, then the mixture was stirred and allowed to react at room temperature for 2 h to obtain the solution. Then the temperature of the solution was raised to 80°C and the solution was maintained at this temperature for 4 h to obtain a first coating layer suspension.

Step S4: Coating of the first coating layer

1571.9 g of the doped lithium manganese phosphate inner core material obtained in Step S2 was added to the first coating layer suspension obtained in Step S3 (the content of the coating substance was 15.7g), and fully stirred and mixed for 6 h. After mixing evenly, it was transferred to and dried in an oven at 120 °C for 6 h, and then sintered at 650°C for 6 h to obtain a material coated with pyrophosphate.

Step S5: Preparation of second coating layer suspension

3.7g of lithium carbonate, 11.6g of ferrous carbonate, 11.5g of ammonium dihydrogen phosphate and 12.6g of oxalic acid dihydrate were dissolved in 1500mL of deionized water, stirred and allowed to react for 6 h to obtain a solution.

Then the temperature of the solution was raised to 120°C and the solution was maintained at this temperature for 6 h to obtain a second coating layer suspension.

Step S6: Coating of the second coating layer

1586.8 g of the pyrophosphate-coated material obtained in Step S4 was added to the second coating layer suspension obtained in Step S5 (the content of the coating substance was 47. lg), fully stirred and mixed for 6 h. After mixing well, it was transferred to and dried in an oven at 120°C for 6 h, and then sintered at 700°C for 8 h to obtain a double-layer coated material.

Step S7: Preparation of third coating layer aqueous solution

37.3 g of sucrose was dissolved in 500 g of deionized water, and then stirred and fully dissolved to obtain an aqueous solution of sucrose.

Step S8: Coating of the third coating layer

1633.9 g of the double-layer coated material obtained in Step S6 was added to the sucrose solution obtained in Step S7, stirred and mixed together for 6 h. After mixing uniformly, it was transferred to and dried in an oven at 150°C for 6 h, and then sintered at 700°C for 10 h to obtain a three-layer coated material.

Step 2: Preparation of positive electrode plate

The prepared three-layer coated positive electrode active material, a conductive acetylene black and a binder polyvinylidene fluoride (PVDF) in a weight ratio of 97.0:1.2:1.8 were added to N-methyl pyrrolidone (NMP), and stirred and mixed evenly to obtain a positive electrode slurry. Then, the positive electrode slurry was evenly coated on an aluminum foil at $0.280g/1540.25mm^2$, and then subjected to oven drying, cold pressing and slitting to obtain a positive electrode plate.

Step 3: Preparation of negative electrode plate

The negative electrode active material artificial graphite, hard carbon a conductive agent acetylene black, a binder styrene butadiene rubber (SBR), and a thickener sodium carboxymethylcellulose (CMC) in a weight ratio of 90:5:2:2:1 were dissolved in a solvent deionized water, which was uniformly stirred and mixed to prepare a negative electrode slurry. The negative electrode slurry was uniformly coated on a negative electrode current collector copper foil at $0.117g/l 540.25mm^2$, then subjected to oven drying, cold pressing, and slitting, to provide the negative electrode plate.

Step 4: Preparation of electrolyte solution

In a glove box under an argon atmosphere ($H_2O$ < 0.1 ppm, $O_2$ < 0.1 ppm), the organic solvents ethylene carbonate (EC)/ethyl methyl carbonate (EMC) were mixed uniformly in a volume ratio of 3/7,12.5 wt % (based on the weight of ethylene carbonate/ethyl methyl carbonate) of $LiPF_6$ was dissolved in the organic solvent and stirred uniformly to obtain an electrolyte solution.

Step 5: Preparation of separator

A commercially available PP-PE copolymer microporous film with a thickness of 20 $\mu$m and an average pore size of 80 nm (from Zoco Electronic Technology Co, Ltd, model 20) was used.

Step 6: Preparation of full battery cells

The aforementioned positive electrode plate, separator and negative electrode plate were stacked in sequence, so that the separator was located between the positive electrode plate and the negative electrode plate for separation, and a bare battery cell was obtained by winding. The bare battery cell was placed in an outer package, the aforementioned electrolyte solution was injected, they were packaged to obtain a full battery cell (hereinafter also referred to as the "full battery").

[Preparation of button battery cells]

All parameters are the same as those of Embodiment 1 and will not be repeated here.

Embodiments 63-90, 91-105 and Comparative Embodiments 2, 3

The positive electrode active materials and battery cells in Embodiments 63 to 90, 91-105 and Comparative Embodiments 2 and 39 were prepared in a manner similar to that of Embodiment 62. The differences in the preparation of the positive electrode active materials are shown in Tables 28-33. In Comparative Embodiment 2, Embodiment 91, Embodiments 93-99 and Embodiment 101, the first coating layer was not present, so steps S3, S4 were omitted; and in the Comparative Embodiment 2 and Embodiments 91-100, the second coating layer was not preset, so steps S5-S6 were omitted. In all the examples and comparative embodiments of the present application, the first coating layer material and/or the second coating layer material used are crystalline, unless otherwise indicated.

Table 28: Number of raw materials for preparation of inner core

| No. | Inner core | Raw materials used in step S1 | Raw materials used in step S2 |
|---|---|---|---|
| Comparative Embodiment 2 and Comparative Embodiment 3 | $LiMnPO_4$ | Manganese carbonate, 1149.3 g; water, 5 L; oxalic acid dihydrate, 1260.6 g; | Manganese oxalate dihydrate obtained in step S1 (based on $C_2O_4Mn \cdot 2H_2O$), 1789.6 g; lithium carbonate, 369.4 g; ammonium dihydrogen phosphate, 1150.1 g; water, 20 L |
| Embodiment 91 | $LiMn_{0.60}Fe_{0.40}P O_4$ | Manganese carbonate, 689.6 g; ferrous carbonate, 463.4g; water, 5 L; oxalic acid dihydrate, 1260.6 g; | Ferromanganese oxalate dihydrate obtained in step S1 (based on $C_2O_4Mn_{0.60}Fe_{0.40} \cdot 2H_2O$), 1793.2g; lithium carbonate, 369.4 g; ammonium dihydrogen phosphate, 1150.1 g; water, 20 L |
| Embodiment 92 | $LiMn_{0.80}Fe_{0.20}P O_4$ | Manganese carbonate, 919.4 g; ferrous carbonate, 231.7 g; water, 5 L; oxalic acid dihydrate, 1260.6 g | Ferromanganese oxalate dihydrate obtained in step S1 (based on $C_2O_4Mn_{0.80}Fe_{0.20} \cdot 2H_2O$), 1791.4 g; lithium carbonate, 369.4 g; ammonium dihydrogen phosphate, 1150.1 g; water, 20 L |
| Embodiment 93 | $LiMn_{0.70}Fe_{0.295} V_{0.005}PO_4$ | Manganese carbonate, 804.5 g; ferrous carbonate, 341.8 g; vanadium dichloride, 6.1 g; water, 5 L; oxalic acid dihydrate, 1260.6 g; | Ferromanganese vanadium oxalate dihydrate obtained in step S1 (based on $C_2O_4Mn_{0.70}Fe_{0.295}V_{0.005} \cdot 2H_2O$), 1792.0 g; lithium carbonate, 369.4 g; ammonium dihydrogen phosphate, 1150.1 g; water, 20 L |
| Embodiment 94 and Embodiment 103 | $LiMn_{0.60}Fe_{0.395} Mg_{0.005}PO_4$ | Manganese carbonate, 689.6 g; ferrous carbonate, 457.6 g; magnesium carbonate, 4.2 g; water, 5 L; oxalic acid dihydrate, 1260.6 g; | Ferromanganese magnesium oxalate dihydrate obtained in step S1 (based on $C_2O_4Mn_{0.60}Fe_{0.395}Mg_{0.005} \cdot 2H_2O$), 1791.6 g; lithium carbonate, 369.4 g; ammonium dihydrogen phosphate, 1150.1 g; water, 20 L |

(continued)

| No. | Inner core | Raw materials used in step S1 | Raw materials used in step S2 |
|---|---|---|---|
| Embodiment 95 | $LiMn_{0.60}Fe_{0.35}Ni_{0.05}PO_4$ | Manganese carbonate, 689.6 g; ferrous carbonate, 405.4 g; nickel carbonate, 59.3 g; water, 5 L; oxalic acid dihydrate, 1260.6 g; | Ferromanganese nickel oxalate dihydrate obtained in step S1 (based on $C_2O_4Mn_{0.60}Fe_{0.35}Ni_{0.05} \cdot 2H_2O$), 1794.6g; lithium carbonate, 369.4 g; ammonium dihydrogen phosphate, 1150.1 g; water, 20 L |
| Embodiment 96 and Embodiment 98 | $LiMn_{0.60}Fe_{0.395}V_{0.002}Ni_{0.003}PO_4$ | Manganese carbonate, 689.6 g; ferrous carbonate, 457.6 g; vanadium dichloride, 2.4 g; nickel carbonate, 3.6 g; water, 5 L; oxalic acid dihydrate, 1260.6 g | Ferromanganese vanadium nickel oxalate dihydrate obtained in step S1 (based on $C_2O_4Mn_{0.60}Fe_{0.395}V_{0.002}Ni_{0.003} \cdot 2H_2O$), 1793.2g; lithium carbonate, 369.4 g; ammonium dihydrogen phosphate, 1150.1 g; water, 20 L |
| Embodiment 97 | $LiMn_{0.60}Fe_{0.395}V_{0.002}Mg_{0.003}PO_4$ | Manganese carbonate, 689.6g; ferrous carbonate, 457.6g; vanadium dichloride, 2.4g; magnesium carbonate, 2.53g; water, 5L; oxalic acid dihydrate, 1260.6g | Ferromanganese vanadium magnesium oxalate dihydrate obtained in step S1 (based on $C_2O_4Mn_{0.60}Fe_{0.395}V_{0.002}Mg_{0.003} \cdot 2H_2O$), 1792.1g; lithium carbonate, 369.4 g; ammonium dihydrogen phosphate, 1150.1 g; water, 20 L |
| Embodiments 99-101, Embodiments 104-105 and Embodiments 62-71 | $Li_{0.997}Mn_{0.60}Fe_{0.393}V_{0.004}Co_{0.003}P_{0.997}S_{0.003}O_4$ | Manganese carbonate, 689.6g; ferrous carbonate, 455.3g; cobalt sulfate, 4.7g; vanadium dichloride, 4.9g; water, 5L; oxalic acid dihydrate, 1260.6g; | Ferromanganese vanadium cobalt oxalate dihydrate obtained in step S1 (based on $C_2O_4Mn_{0.60}Fe_{0.393}V_{0.004}Co_{0.003} \cdot 2H_2O$), 1793.1g; lithium carbonate, 368.3g; ammonium dihydrogen phosphate, 1146.6g; dilute sulfuric acid, 4.9g; water, 20L |
| Embodiment 102 | $Li_{1.2}MnP_{0.8}Si_{0.2}O_4$ | Manganese carbonate, 1149.3 g; water, 5 L; oxalic acid dihydrate, 1260.6 g; | Manganese oxalate dihydrate obtained in step S1 (based on $C_2O_4Mn \cdot 2H_2O$), 1789.6g; lithium carbonate, 443.3g; ammonium dihydrogen phosphate, 920.1g; silicic acid, 156.2g; water, 20L |
| Embodiment 72 | $Li_{1.001}Mn_{0.60}Fe_{0.393}V_{0.004}Co_{0.003}P_{0.999}S_{0.001}O_4$ | Manganese carbonate, 689.6g; ferrous carbonate, 455.3g; cobalt sulfate, 4.7g; vanadium dichloride, 4.9g; water, 5L; oxalic acid dihydrate, 1260.6g; | Ferromanganese vanadium cobalt oxalate dihydrate obtained in step S1 (based on $C_2O_4Mn_{0.60}Fe_{0.393}V_{0.004}Co_{0.003} \cdot 2H_2O$), 1793.1g; lithium carbonate, 369.8g; ammonium dihydrogen phosphate, 1148.9g; silicic acid, 0.8g; water, 20L |

(continued)

| No. | Inner core | Raw materials used in step S1 | Raw materials used in step S2 |
|---|---|---|---|
| Embodiment 73 | $LiMn_{0.60}Fe_{0.393}V_{0.004}Co_{0.003}P_{0.998}N_{0.002}O_4$ | Manganese carbonate, 689.6g; ferrous carbonate, 455.3g; cobalt sulfate, 4.7g; vanadium dichloride, 4.9g; water, 5L; oxalic acid dihydrate, 1260.6g; | Ferromanganese vanadium cobalt oxalate dihydrate obtained in step S1 (based on $C_2O_4Mn_{0.60}Fe_{0.393}V_{0.004}Co_{0.003} \cdot 2H_2O$), 1793.1g; lithium carbonate, 369.4g; ammonium dihydrogen phosphate, 1147.8g; dilute nitric acid, 2.7g; water, 20L |
| Embodiment 74 | $Li_{0.995}Mn_{0.65}Fe_{0.341}V_{0.004}CO_{0.005}P_{0.995}S_{0.005}O_4$ | Manganese carbonate, 747. Ig; ferrous carbonate, 395.1g; cobalt sulfate, 7.8g; vanadium dichloride, 4.9g; water, 5L; oxalic acid dihydrate, 1260.6g; | Ferromanganese vanadium cobalt oxalate dihydrate obtained in step S1 (based on $C_2O_4Mn_{0.65}Fe_{0.341}V_{0.004}Co_{0.005} \cdot 2H_2O$), 1792.7g; lithium carbonate, 367.6g; ammonium dihydrogen phosphate, 1144.3g; dilute sulfuric acid, 8.2g; water, 20L |
| Embodiment 75 | $Li_{1.002}Mn_{0.70}Fe_{0.293}V_{0.004}Co_{0.003}P_{0.998}Si_{0.002}O_4$ | Manganese carbonate, 804.6g; ferrous carbonate, 339.5g; cobalt sulfate, 4.7g; vanadium dichloride, 4.9g; water, 5L; oxalic acid dihydrate, 1260.6g; | Ferromanganese vanadium cobalt oxalate dihydrate obtained in step S1 (based on $C_2O_4Mn_{0.70}Fe_{0.293}V_{0.004}Co_{0.003} \cdot 2H_2O$), 1792.2g; lithium carbonate, 370.2g; 1147.8; silicic acid, 1.6g; water, 20L |
| Embodiments 76, 78 | $LiMn_{0.60}Fe_{0.393}V_{0.004}Co_{0.003}P_{0.999}N_{0.001}O_4$ | Manganese carbonate, 689.6g; ferrous carbonate, 455.3g; cobalt sulfate, 4.7g; vanadium dichloride, 4.9g; water, 5L; oxalic acid dihydrate, 1260.6g; | Ferromanganese vanadium cobalt oxalate dihydrate obtained in step S1 (based on $C_2O_4Mn_{0.60}Fe_{0.393}V_{0.004}Co_{0.003} \cdot 2H_2O$), 1793.1g; lithium carbonate, 369.4g; ammonium dihydrogen phosphate, 1148.9g; dilute nitric acid, 1.4g; water, 20L |
| Embodiment 77 | $Li_{0.997}Mn_{0.60}Fe_{0.393}V_{0.004}Co_{0.003}P_{0.997}S_{0.003}O_4$ | Manganese carbonate, 689.6g; ferrous carbonate, 455.3g; cobalt sulfate, 4.7g; vanadium dichloride, 4.9g; water, 5L; oxalic acid dihydrate, 1260.6g; | Ferromanganese vanadium cobalt oxalate dihydrate obtained in step S1 (based on $C_2O_4Mn_{0.60}Fe_{0.393}V_{0.004}Co_{0.003} \cdot 2H_2O$), 1793.1g; lithium carbonate, 368.7g; ammonium dihydrogen phosphate, 1146.6g; dilute sulfuric acid, 4.9g; water, 20L |
| Embodiment 79 | $LiMn_{0.60}Fe_{0.393}V_{0.004}Mg_{0.03}P_{0.995}N_{0.005}O_4$ | Manganese carbonate, 689.6g; ferrous carbonate, 455.3g; magnesium carbonate, 2.5g; vanadium dichloride, 4.9g; water, 5L; oxalic acid dihydrate, 1260.6g; | Ferromanganese vanadium magnesium oxalate dihydrate obtained in step S1 (based on $C_2O_4Mn_{0.60}Fe_{0.393}V_{0.004}Mg_{0.003} \cdot 2H_2O$), 1791.1g; lithium carbonate, 369.4g; ammonium dihydrogen phosphate, 1144.3g; dilute nitric acid, 7.0g; water, 20L |

(continued)

| No. | Inner core | Raw materials used in step S1 | Raw materials used in step S2 |
|---|---|---|---|
| Embodiment 80 | $Li_{0.999}Mn_{0.60}Fe_{0.393}V_{0.004}Mg_{0.0\ 03}P_{0.999}S_{0.001}O_4$ | Manganese carbonate, 689.6g; ferrous carbonate, 455.3g; magnesium carbonate, 2.5g; vanadium dichloride, 4.9g; water, 5L; oxalic acid dihydrate, 1260.6g; | Ferromanganese vanadium magnesium oxalate dihydrate obtained in step S1 (based on $C_2O_4Mn_{0.60}Fe_{0.393}V_{0.004}Mg_{0.003} \cdot 2H_2O$), 1791.1g; lithium carbonate, 369.0g; ammonium dihydrogen phosphate, 1148.9g; dilute sulfuric acid, 1.6g; water, 20L |
| Embodiment 81 | $Li_{0.998}Mn_{0.60}Fe_{0.393}V_{0.004}Ni_{0.00\ 3}P_{0.998}S_{0.002}O_4$ | Manganese carbonate, 689.6g; ferrous carbonate, 455.3g; nickel carbonate, 3.6g; vanadium dichloride, 4.9g; water, 5L; oxalic acid dihydrate, 1260.6g; | Ferromanganese vanadium nickel oxalate dihydrate obtained in step S1 (based on $C_2O_4Mn_{0.60}Fe_{0.393}V_{0.004}Ni_{0.003} \cdot 2H_2O$), 1792.2g; lithium carbonate, 368.7g; ammonium dihydrogen phosphate, 1147.8g; dilute sulfuric acid, 3.2g; water, 20L |
| Embodiments 82-85 | $Li_{1.001}Mn_{0.60}Fe_{0.393}V_{0.004}Ni_{0.00\ 3}P_{0.999}S_{0.001}O_4$ | Manganese carbonate, 689.6g; ferrous carbonate, 455.3g; nickel carbonate, 3.6g; vanadium dichloride, 4.9g; water, 5L; oxalic acid dihydrate, 1260.6g; | Ferromanganese vanadium nickel oxalate dihydrate obtained in step S1 (based on $C_2O_4Mn_{0.60}Fe_{0.393}V_{0.004}Ni_{0.003} \cdot 2H_2O$), 1793.1g; lithium carbonate, 369.8g; ammonium dihydrogen phosphate, 1148.9g; silicic acid, 0.8g; water, 20L |
| Embodiment 86 | $Li_{1.001}Mn_{0.50}Fe_{0.493}V_{0.004}Ni_{0.00\ 3}P_{0.999}S_{0.001}O_4$ | Manganese carbonate, 574.7g; ferrous carbonate, 571.2g; nickel carbonate, 3.6g; vanadium dichloride, 4.9g; water, 5L; oxalic acid dihydrate, 1260.6g; | Ferromanganese vanadium nickel oxalate dihydrate obtained in step S1 (based on $C_2O_4Mn_{0.50}Fe_{0.493}V_{0.004}Ni_{0.003} \cdot 2H_2O$), 1794.0g; lithium carbonate, 369.8g; ammonium dihydrogen phosphate, 1148.9g; silicic acid, 0.8g; water, 20L |
| Embodiment 87 | $Li_{1.001}Mn_{0.999}Fe_{0.001}P_{0.999}Si_{0.00\ 1}O_4$ | Manganese carbonate, 1148.2g; ferrous carbonate, 1.2g; water, 5 L; oxalic acid dihydrate, 1260.6 g | Ferromanganese oxalate dihydrate obtained in step S1 (based on $C_2O_4Mn_{0.999}Fe_{0.001} \cdot 2H_2O$), 1789.6g; lithium carbonate, 369.8g; ammonium dihydrogen phosphate, 1148.9g; silicic acid, 0.8g; water, 20L |
| Embodiment 88 | $LiMn_{0.60}Fe_{0.393}V_{0.004}Ni_{0.003}P_{0.9}N_{0.100}O_4$ | Manganese carbonate, 689.6g; ferrous carbonate, 455.3g; nickel carbonate, 3.6g; vanadium dichloride, 4.9g; water, 5L; oxalic acid dihydrate, 1260.6g; | Ferromanganese vanadium nickel oxalate dihydrate obtained in step S1 (based on $C_2O_4Mn_{0.60}Fe_{0.393}V_{0.004}Ni_{0.003} \cdot 2H_2O$), 1793.1g; lithium carbonate, 369.4g; ammonium dihydrogen phosphate, 1035.1g; dilute nitric acid, 140.0g; water, 20L |

(continued)

| No. | Inner core | Raw materials used in step S1 | Raw materials used in step S2 |
|---|---|---|---|
| Embodiment 89 | $Li_{1.001}Mn_{0.40}Fe_{0.593}V_{0.004}Ni_{0.003}P_{0.999}S_{0.001}O_4$ | Manganese carbonate, 459.7g; ferrous carbonate, 686.9g; vanadium dichloride, 4.8g; nickel carbonate, 3.6g; water, 5 L; oxalic acid dihydrate, 1260.6 g | Ferromanganese vanadium nickel oxalate dihydrate obtained in step S1 (based on $C_2O_4Mn_{0.40}Fe_{0.593}V_{0.004}Ni_{0.003} \cdot 2H_2O$), 1794.9g; lithium carbonate, 369.8g; ammonium dihydrogen phosphate, 1148.9g; silicic acid, 0.8g; water, 20L |
| Embodiment 90 | $Li_{1.001}Mn_{0.40}Fe_{0.393}V_{0.204}Ni_{0.003}P_{0.999}S_{0.001}O_4$ | Manganese carbonate, 459.7g; ferrous carbonate, 455.2g; vanadium dichloride, 248.6g; nickel carbonate, 3.6g; water, 5 L; oxalic acid dihydrate, 1260.6 g | Ferromanganese vanadium nickel oxalate dihydrate obtained in step S1 (based on $C_2O_4Mn_{0.40}Fe_{0.393}V_{0.204}Ni_{0.003} \cdot 2H_2O$), 1785.1g; lithium carbonate, 369.8g; ammonium dihydrogen phosphate, 1148.9g; silicic acid, 0.8g; water, 20L |

Table 29: Preparation of first coating layer suspension (step S3)

| Embodiment No. | Coating material of first coating layer | Preparation of first coating layer suspension |
|---|---|---|
| Embodiments 92, 77 | Amorphous $Li_2Fe_2CO_7$ | 7.4g lithium carbonate; 11.6g ferrous carbonate; 23.0g ammonium dihydrogen phosphate; 12.6g oxalic acid dihydrate; pH controlled to 5 |
| Embodiment 100, Comparative Embodiment 3, Embodiments 103, 105, Embodiments 62-75, 80, 82-90 | Crystalline $Li_2FeP_2O_7$ | 7.4 g lithium carbonate; 11.6 g ferrous carbonate; 23.0 g ammonium dihydrogen phosphate; 12.6 g oxalic acid dihydrate; pH controlled to 5 |
| Embodiments 76, 77 | Crystalline $Al_4(P_2O_7)_3$ | 53.3g aluminum chloride; 34.5g ammonium dihydrogen phosphate; 18.9g oxalic acid dihydrate; pH controlled to 4 |
| Embodiments 78, 79 | Crystalline $Li_2NiP_2CO_7$ | 7.4 g lithium carbonate; 11.9 g nickel carbonate; 23.0 g ammonium dihydrogen phosphate; 12.6 g oxalic acid dihydrate; pH controlled to 5 |

Table 30: Coating of the first coating layer (step S4)

| No. | First coating layer coating material and its amount (based on inner core weight) | The amount of inner core added in step S4 | Step S4: Coating of the first coating layer | | | | |
|---|---|---|---|---|---|---|---|
| | | | Amount of corresponding coating material in the first coating layer suspension | Mixing time (h) | Oven drying temperature (°C) | Sintering temperature (°C) | Sintering time (h) |
| Embodiment 92 | 2% amorphous $Li_2FeP_2O_7$ | 1570.4g | 31.4g | 6 | 120 | 500 | 4 |
| Embodiment 100 | 1% crystalline $Li_2FeP_2O_7$ | 1571.1g | 15.7g | 6 | 120 | 650 | 6 |

(continued)

| No. | First coating layer coating material and its amount (based on inner core weight) | The amount of inner core added in step S4 | Step S4: Coating of the first coating layer | | | | |
|---|---|---|---|---|---|---|---|
| | | | Amount of corresponding coating material in the first coating layer suspension | Mixing time (h) | Oven drying temperature (°C) | Sintering temperature (°C) | Sintering time (h) |
| Comparative Embodiment 3 | 2% crystalline $Li_2FeP_2O_7$ | 1568.5g | 31.4g | 6 | 120 | 650 | 6 |
| Embodiment 102 | 2% crystalline $Li_2FeP_2O_7$ | 1562.8g | 31.2g | 6 | 120 | 650 | 6 |
| Embodiment 103 | 2% crystalline $Li_2FeP_2O_7$ | 1570.6g | 31.4g | 6 | 120 | 650 | 6 |
| Embodiment 104 | 2% amorphous $Li_2FeP_2O_7$ | 1571.1g | 31.4g | 6 | 120 | 500 | 4 |
| Embodiment 105 | 2% crystalline $Li_2FeP_2O_7$ | 1571.1g | 31.4g | 6 | 120 | 650 | 6 |
| Embodiments 62-65, 69-71 | 1% $Li_2FeP_2O_7$ | 1571.9g | 15.7g | 6 | 120 | 650 | 6 |
| Embodiment 66 | 2% $Li_2FeP_2O_7$ | 1571.9g | 31.4g | 6 | 120 | 650 | 6 |
| Embodiment 67 | 3% $Li_2FeP_2O_7$ | 1571.1g | 47.1g | 6 | 120 | 650 | 6 |
| Embodiment 68 | 5% $Li_2FeP_2O_7$ | 1571.9g | 78.6g | 6 | 120 | 650 | 6 |
| Embodiment 72 | 1% $Li_2FeP_2O_7$ | 1572.1g | 15.7g | 6 | 120 | 650 | 6 |
| Embodiment 73 | 1% $Li_2FeP_2O_7$ | 1571.7g | 15.7g | 6 | 120 | 650 | 6 |
| Embodiment 74 | 2% $Li_2FeP_2O_7$ | 1571.4g | 31.4g | 6 | 120 | 650 | 6 |
| Embodiment 75 | 2.5% $Li_2FeP_2O_7$ | 1571.9g | 39.3g | 6 | 120 | 650 | 6 |
| Embodiment 76 | 2% $Al_4(P_2O_7)_3$ | 1571.9g | 31.4g | 6 | 120 | 680 | 8 |
| Embodiment 77 | 3% $Al_4(P_2O_7)_3$ | 1571.9g | 47.2g | 6 | 120 | 680 | 8 |
| Embodiment 78 | 1.5% $Li_2NiP_2O_7$ | 1571.9g | 23.6g | 6 | 120 | 630 | 6 |
| Embodiment 79 | 1% $Li_2NiP_2O_7$ | 1570.1g | 15.7g | 6 | 120 | 630 | 6 |
| Embodiment 80 | 2% $Li_2FeP_2O_7$ | 1571.0g | 31.4g | 6 | 120 | 650 | 6 |
| Embodiment 81 | 1% $Li_2NiP_2O_7$ | 1571.9g | 15.7g | 6 | 120 | 630 | 6 |

(continued)

| No. | First coating layer coating material and its amount (based on inner core weight) | The amount of inner core added in step S4 | Step S4: Coating of the first coating layer | | | | | |
|---|---|---|---|---|---|---|---|---|
| | | | Amount of corresponding coating material in the first coating layer suspension | Mixing time (h) | Oven drying temperature (°C) | Sintering temperature (°C) | Sintering time (h) |
| Embodiments 82, 84, 85 | 2% $Li_2FeP_2O_7$ | 1572.1g | 31.4g | 6 | 120 | 650 | 6 |
| Embodiment 83 | 5.50% $Li_2Fe$-$P_2O_7$ | 1572.1g | 86.5g | 6 | 120 | 650 | 6 |
| Embodiment 86 | 1% $Li_2FeP_2O_7$ | 1573.0g | 15.7g | 6 | 120 | 650 | 6 |
| Embodiment 87 | 1% $Li_2FeP_2O_7$ | 1568.6g | 15.7g | 6 | 120 | 650 | 6 |
| Embodiment 88 | 1% $Li_2FeP_2O_7$ | 1569.2g | 15.7g | 6 | 120 | 650 | 6 |
| Embodiment 89 | 2% crystalline $Li_2FeP_2O_7$ | 1573.9g | 31.4g | 6 | 120 | 650 | 6 |
| Embodiment 90 | 2% crystalline $Li_2FeP_2O_7$ | 1564.1g | 31.2g | 6 | 120 | 650 | 6 |

Table 31: Preparation of second coating layer suspension (step S5)

| Embodiment No. | Second coating layer material | Step S5: Preparation of second coating layer suspension |
|---|---|---|
| Embodiment 101, Embodiments 62-65, 79-80, 86-88 | Crystalline $LiFePO_4$ | 3.7 g lithium carbonate; 11.6 g ferrous carbonate; 11.5 g ammonium dihydrogen phosphate; 12.6 g oxalic acid dihydrate |
| Comparative Embodiment 3, Embodiments 102-104, Embodiments 76, 78-81, 89, 90 | Crystalline $LiCoPO_4$ | 3.7 g lithium carbonate; 15.5 g cobalt sulfate; 11.5 g ammonium dihydrogen phosphate; 12.6 g oxalic acid dihydrate |
| Embodiment 105 | Amorphous $LiCoPO_4$ | 3.7 g lithium carbonate; 15.5 g cobalt sulfate; 11.5 g ammonium dihydrogen phosphate; 12.6 g oxalic acid dihydrate |
| Embodiment 104 | Crystalline $LiNiPO_4$ | 3.7 g lithium carbonate; 11.9 g nickel carbonate; 11.5 g ammonium dihydrogen phosphate; 12.6 g oxalic acid dihydrate |

Table 32: Coating of the second coating layer (Step S6)

| No. | Second coating layer material and its amount (based on inner core weight) | The amount of pyrophosphate-coated material added in Step S6 (the amount of the inner core added in Embodiment 101) (g) | Step S6: Coating of the first coating layer | | | | |
|---|---|---|---|---|---|---|---|
| | | | Amount of corresponding coating material in the second coating layer suspension (g) | Mixing time (h) | Oven drying temperature (°C) | Sintering temperature (°C) | Sintering time (h) |
| Embodiment 101 | 3% LiFePO$_4$ | 1571.1 | 47.1 | 6 | 120 | 700 | 8 |
| Comparative Embodiment 3 | 4%LiCoPO$_4$ | 1599.9 | 62.7 | 6 | 120 | 750 | 8 |
| Embodiment 102 | 4%LiCoPO$_4$ | 1594.0 | 62.5 | 6 | 120 | 750 | 8 |
| Embodiment 103 | 4%LiCoPO$_4$ | 1602.0 | 62.8 | 6 | 120 | 750 | 8 |
| Embodiment 104 | 4%LiCoPO$_4$ | 1602.5 | 62.8 | 6 | 120 | 750 | 8 |
| Embodiment 105 | 4% amorphous LiCoPO$_4$ | 1602.5 | 62.8 | 6 | 120 | 650 | 8 |
| Embodiments 62-65 | 3% LiFePO$_4$ | 1586.8 | 47.1 | 6 | 120 | 700 | 8 |
| Embodiment 66 | 3% LiFePO$_4$ | 1602.5 | 47.1 | 6 | 120 | 700 | 8 |
| Embodiment 67 | 3% LiFePO$_4$ | 1618.2 | 47.1 | 6 | 120 | 700 | 8 |
| Embodiment 68 | 3% LiFePO$_4$ | 1649.6 | 47.1 | 6 | 120 | 700 | 8 |
| Embodiment 69 | 1%LiFePO$_4$ | 1586.8 | 15.7 | 6 | 120 | 700 | 8 |
| Embodiment 70 | 4%LiFePO$_4$ | 1586.8 | 62.8 | 6 | 120 | 700 | 8 |
| Embodiment 71 | 5%LiFePO$_4$ | 1586.8 | 78.6 | 6 | 120 | 700 | 8 |
| Embodiment 72 | 2.50% LiFePO$_4$ | 1587.8 | 39.3 | 6 | 120 | 700 | 8 |
| Embodiment 73 | 3% LiFePO$_4$ | 1587.4 | 47.2 | 6 | 120 | 700 | 8 |
| Embodiment 74 | 2%LiFePO$_4$ | 1602.8 | 31.4 | 6 | 120 | 700 | 8 |
| Embodiment 75 | 3.50% LiFePO$_4$ | 1610.5 | 55.0 | 6 | 120 | 700 | 8 |
| Embodiment 76 | 2.5%LiCoPO$_4$ | 1603.3 | 39.3 | 6 | 120 | 750 | 8 |
| Embodiment 77 | 3%LiNiPO$_4$ | 1619.0 | 47.2 | 6 | 120 | 680 | 8 |

(continued)

| No. | Second coating layer material and its amount (based on inner core weight) | The amount of pyrophosphate-coated material added in Step S6 (the amount of the inner core added in Embodiment 101) (g) | Step S6: Coating of the first coating layer | | | | |
|---|---|---|---|---|---|---|---|
| | | | Amount of corresponding coating material in the second coating layer suspension (g) | Mixing time (h) | Oven drying temperature (°C) | Sintering temperature (°C) | Sintering time (h) |
| Embodiment 78 | 2.5%LiCoPO$_4$ | 1595.5 | 39.3 | 6 | 120 | 750 | 8 |
| Embodiment 79 | 3% LiFePO$_4$ | 1585.9 | 47.1 | 6 | 120 | 700 | 8 |
| Embodiment 80 | 4%LiFePO$_4$ | 1602.4 | 62.8 | 6 | 120 | 700 | 8 |
| Embodiment 81 | 3%LiCoPO$_4$ | 1587.7 | 47.2 | 6 | 120 | 750 | 8 |
| Embodiment 82 | 4%LiCoPO$_4$ | 1603.5 | 62.9 | 6 | 120 | 750 | 8 |
| Embodiment 83 | 4%LiCoPO$_4$ | 1658.6 | 62.9 | 6 | 120 | 750 | 8 |
| Embodiment 84 | 5.50% LiCo-PO$_4$ | 1603.5 | 86.5 | 6 | 120 | 750 | 8 |
| Embodiment 85 | 4%LiCoPO$_4$ | 1603.5 | 62.9 | 6 | 120 | 750 | 8 |
| Embodiment 86 | 3% LiFePO$_4$ | 1588.7 | 47.2 | 6 | 120 | 700 | 8 |
| Embodiment 87 | 3% LiFePO$_4$ | 1584.3 | 47.1 | 6 | 120 | 700 | 8 |
| Embodiment 88 | 3% LiFePO$_4$ | 1584.9 | 47.1 | 6 | 120 | 700 | 8 |
| Embodiment 89 | 4%LiCoPO$_4$ | 1605.4 | 63.0 | 6 | 120 | 750 | 8 |
| Embodiment 90 | 4%LiCoPO$_4$ | 1605.4 | 63.0 | 6 | 120 | 750 | 8 |

Table 33: Coating of the third coating layer (step S8)

| | Third coating layer | Molar ratio of SP2 to SP3 | The amount of the double-layer coated material added in Step S8 (for those without two coating layers, it is the amount of the inner core with the first coating layer or the amount of the inner core) (g) | Step S8: Coating of the third coating layer | | | | |
| --- | --- | --- | --- | --- | --- | --- | --- | --- |
| | | | | Amount of sucrose (g) | Mixing time (h) | Oven drying temperature (°C) | Sintering temperature (°C) | Sintering time (h) |
| Comparative Embodiment 2 | 1% carbon | 2.5 | 1568.5 | 37.3 | 6 | 150 | 650 | 8 |
| Embodiment 91 | 2% carbon | 2.8 | 1572.2 | 74.7 | 6 | 150 | 680 | 8 |
| Embodiment 92 | 2% carbon | 2.7 | 1601.8 | 74.6 | 6 | 150 | 680 | 7 |
| Embodiment 93 | 1% carbon | 2.4 | 1571.0 | 37.3 | 6 | 150 | 630 | 8 |
| Embodiment 94 | 1.5% carbon | 2.6 | 1570.6 | 56.0 | 6 | 150 | 650 | 7 |
| Embodiment 95 | 2.5% carbon | 2.8 | 1573.6 | 93.4 | 6 | 150 | 680 | 8 |
| Embodiment 96 | 1% carbon | 2.7 | 1572.2 | 37.3 | 6 | 150 | 680 | 7 |
| Embodiment 97 | 1.5% carbon | 2.9 | 1571.1 | 56.0 | 6 | 150 | 680 | 10 |
| Embodiment 98 | 1% carbon | 2.2 | 1572.2 | 37.3 | 6 | 150 | 600 | 8 |
| Embodiment 99 | 1% carbon | 2.4 | 1571.1 | 37.3 | 6 | 150 | 630 | 8 |
| Embodiment 100 | 1% carbon | 2.3 | 1586.8 | 37.3 | 6 | 150 | 620 | 8 |
| Embodiment 101 | 1% carbon | 2.1 | 1618.2 | 37.3 | 6 | 150 | 600 | 6 |

(continued)

| | Third coating layer | Molar ratio of SP2 to SP3 | The amount of the double-layer coated material added in Step S8 (for those without two coating layers, it is the amount of the inner core with the first coating layer or the amount of the inner core) (g) | Step S8: Coating of the third coating layer | | | | |
|---|---|---|---|---|---|---|---|---|
| | | | | Amount of sucrose (g) | Mixing time (h) | Oven drying temperature (°C) | Sintering temperature (°C) | Sintering time (h) |
| Comparative Embodiment 3 | 1% carbon | 2 | 1662.6 | 37.3 | 6 | 120 | 600 | 6 |
| Embodiment 102 | 1% carbon | 1.8 | 1656.5 | 37.1 | 6 | 120 | 600 | 6 |
| Embodiment 103 | 1% carbon | 1.7 | 1664.8 | 37.3 | 6 | 100 | 600 | 6 |
| Embodiment 104 | 1% carbon | 3.1 | 1665.4 | 37.3 | 6 | 150 | 700 | 10 |
| Embodiment 105 | 1% carbon | 3.5 | 1665.4 | 37.3 | 6 | 150 | 750 | 10 |
| Embodiment 62 | 1% carbon | 2.2 | 1633.9 | 37.3 | 6 | 150 | 700 | 10 |
| Embodiment 63 | 3% carbon | 2.3 | 1633.9 | 111.9 | 6 | 150 | 600 | 9 |
| Embodiment 64 | 4% carbon | 2.1 | 1633.9 | 149.2 | 6 | 150 | 600 | 6 |
| Embodiment 65 | 5% carbon | 2.4 | 1633.9 | 186.5 | 6 | 150 | 630 | 8 |
| Embodiment 66 | 1% carbon | 2.5 | 1649.6 | 37.3 | 6 | 150 | 650 | 8 |
| Embodiment 67 | 1% carbon | 2.5 | 1665.3 | 37.3 | 6 | 150 | 650 | 8 |
| Embodiment 68 | 1% carbon | 2.4 | 1696.7 | 37.3 | 6 | 150 | 630 | 8 |

(continued)

| | Third coating layer | Molar ratio of SP2 to SP3 | The amount of the double-layer coated material added in Step S8 (for those without two coating layers, it is the amount of the inner core with the first coating layer or the amount of the inner core) (g) | Step S8: Coating of the third coating layer | | | | |
|---|---|---|---|---|---|---|---|---|
| | | | | Amount of sucrose (g) | Mixing time (h) | Oven drying temperature (°C) | Sintering temperature (°C) | Sintering time (h) |
| Embodiment 69 | 1% carbon | 2.3 | 1602.5 | 37.3 | 6 | 150 | 600 | 9 |
| Embodiment 70 | 1% carbon | 2.2 | 1649.6 | 37.3 | 6 | 150 | 600 | 8 |
| Embodiment 71 | 1% carbon | 2.2 | 1665.3 | 37.3 | 6 | 150 | 600 | 9 |
| Embodiment 72 | 1.5% carbon | 2.3 | 1629.0 | 56.1 | 6 | 150 | 600 | 9 |
| Embodiment 73 | 2% carbon | 2.4 | 1634.6 | 74.7 | 6 | 150 | 630 | 8 |
| Embodiment 74 | 2% carbon | 2.5 | 1634.2 | 74.6 | 6 | 150 | 650 | 8 |
| Embodiment 75 | 2.5% carbon | 2.7 | 1665.5 | 93.3 | 6 | 150 | 680 | 7 |
| Embodiment 76 | 2% carbon | 2.8 | 1642.6 | 74.7 | 6 | 150 | 680 | 8 |
| Embodiment 77 | 1% carbon | 2.7 | 1666.2 | 37.3 | 6 | 150 | 680 | 7 |
| Embodiment 78 | 1.5% carbon | 2.3 | 1634.8 | 56.0 | 6 | 150 | 600 | 9 |
| Embodiment 79 | 1% carbon | 2.6 | 1633.0 | 37.3 | 6 | 150 | 650 | 7 |
| Embodiment 80 | 1.5% carbon | 2.4 | 1665.2 | 56.0 | 6 | 150 | 630 | 8 |
| Embodiment 81 | 1.5% carbon | 2.2 | 1634.8 | 56.0 | 6 | 150 | 600 | 9 |

(continued)

| | Third coating layer | Molar ratio of SP2 to SP3 | The amount of the double-layer coated material added in Step S8 (for those without two coating layers, it is the amount of the inner core with the first coating layer or the amount of the inner core) (g) | Step S8: Coating of the third coating layer | | | | |
|---|---|---|---|---|---|---|---|---|
| | | | | Amount of sucrose (g) | Mixing time (h) | Oven drying temperature (°C) | Sintering temperature (°C) | Sintering time (h) |
| Embodiment 82 | 1% carbon | 2.2 | 1666.4 | 37.3 | 6 | 150 | 600 | 9 |
| Embodiment 83 | 1% carbon | 2.3 | 1721.4 | 37.3 | 6 | 150 | 600 | 9 |
| Embodiment 84 | 1% carbon | 2.4 | 1690.0 | 37.3 | 6 | 150 | 630 | 8 |
| Embodiment 85 | 5.5% carbon | 2.6 | 1666.4 | 205.4 | 6 | 150 | 650 | 7 |
| Embodiment 86 | 1% carbon | 2.4 | 1635.9 | 37.4 | 6 | 150 | 630 | 8 |
| Embodiment 87 | 1% carbon | 2.3 | 1631.3 | 37.3 | 6 | 150 | 600 | 9 |
| Embodiment 88 | 1.5% carbon | 2.1 | 1631.9 | 55.9 | 6 | 150 | 600 | 6 |
| Embodiment 89 | 1% carbon | 0.07 | 1668.3 | 37.4 | 6 | 80 | 600 | 6 |
| Embodiment 90 | 1% carbon | 13 | 1668.3 | 37.4 | 6 | 150 | 850 | 10 |

Embodiments 89-116: Investigation of other coating layer materials

Embodiments 89-116 were performed in a manner similar to that in Embodiment 62, with the differences shown in Tables 34 and 35 below.

Table 34: Investigation of the first coating layer material

| No. | Coating material of first coating layer | Preparation of first coating layer suspension |
|---|---|---|
| Embodiment 89 | $Li_2MgP_2O_7$ | 7.4 g lithium carbonate; 8.4 g magnesium carbonate, 23.0 g ammonium dihydrogen phosphate, 12.6 g oxalic acid dihydrate |
| Embodiment 90 | $Li_2CoP_2O_7$ | 7.4 g lithium carbonate, 15.5 g cobalt sulfate; 23.0 g ammonium dihydrogen phosphate; 12.6 g oxalic acid dihydrate |
| Embodiment 106 | $Li_2CuP_2O_7$ | 7.4 g lithium carbonate, 16.0 g copper sulfate, 23.0 g ammonium dihydrogen phosphate, 12.6 g oxalic acid dihydrate |
| Embodiment 107 | $Li_2ZnP_2O_7$ | 7.4 g lithium carbonate, 12.5 g zinc carbonate, 23.0 g ammonium dihydrogen phosphate, 12.6 g oxalic acid dihydrate |
| Embodiment 108 | $TiP_2O_7$ | 24.0 g titanium sulfate, 23.0 g ammonium dihydrogen phosphate, 12.6 g oxalic acid dihydrate |
| Embodiment 109 | $Ag_4P_2O_7$ | 67.9 g silver nitrate, 23.0 g ammonium dihydrogen phosphate and 25.2 g oxalic acid dihydrate |
| Embodiment 110 | $ZrP_2O_7$ | 56.6 g zirconium sulfate, 23.0 g ammonium dihydrogen phosphate and 25.2 g oxalic acid dihydrate |

Table 35: Investigation of the second coating layer material

| No. | Second coating layer material | Preparation of second coating layer suspension |
|---|---|---|
| Embodiment 111 | $Cu_3(PO_4)_2$ | 48.0 g copper sulfate, 23.0 g ammonium dihydrogen phosphate, 37.8 g oxalic acid dihydrate |
| Embodiment 112 | $Zn_3(PO_4)_2$ | 37.6 g zinc carbonate, 23.0 g ammonium dihydrogen phosphate, 37.8 g oxalic acid dihydrate |
| Embodiment 113 | $Ti_3(PO_4)_4$ | 72.0 g titanium sulfate, 46.0 g ammonium dihydrogen phosphate, 75.6 g oxalic acid dihydrate |
| Embodiment 114 | $Ag_3PO_4$ | 50.9 g silver nitrate; 11.5 g ammonium dihydrogen phosphate, 18.9 g oxalic acid dihydrate |
| Embodiment 115 | $Zr_3(PO_4)_4$ | 85.0 g zirconium sulfate, 46.0 g ammonium dihydrogen phosphate, 37.8 g oxalic acid dihydrate |
| Embodiment 116 | $AlPO_4$ | 13.3 g aluminum chloride, 11.5 g ammonium dihydrogen phosphate, 18.9 g oxalic acid dihydrate |

For the performance test results of the aforementioned embodiments and comparative embodiments of positive electrode active materials with a structure having an inner core of $Li_{1+x}M_{1-y}A_yP_{1-z}R_zO_4$ and three coating layers including a pyrophosphate layer, a phosphate layer and a carbon layer, refer to the table below.

Table 36: Powder performance of positive electrode active materials in Embodiments 62-105 and Comparative Embodiments 2, 3 and battery cell performance of the prepared battery cells.

| Embodiment No. | Performance of positive electrode active material powder | | | | | | Battery cell performance | | |
|---|---|---|---|---|---|---|---|---|---|
| | Lattice change ate (%) | Li/Mn antisite defect concentration (%) | compacted density (g/cm$^3$) | Surface oxygen valence | 3C charge constant current rate (%) | Dissolution of Mn and Fe after cycling (ppm) | capacity of button mattery at p.IC (mAh/g) | Battery cell expansion rate after storage at 50°C for 30 d (%) | Number of cycles for 80% of capacity retention rate at 45°C |
| Comparative Embodiment 2 | 11.4 | 5.2 | 1.5 | -1.55 | 50.1 | 2060 | 125.6 | 48.6 | 185 |
| Embodiment 91 | 10.6 | 3.3 | 1.67 | -1.51 | 54.9 | 1810 | 126.4 | 47.3 | 243 |
| Embodiment 92 | 10.8 | 3.4 | 1.64 | -1.64 | 52.1 | 1728 | 144.7 | 11.9 | 378 |
| Embodiment 93 | 4.3 | 2.8 | 1.69 | -1.82 | 56.3 | 1096 | 151.2 | 8.4 | 551 |
| Embodiment 94 | 2.8 | 2.5 | 1.65 | -1.85 | 58.2 | 31 | 148.4 | 7.5 | 668 |
| Embodiment 95 | 3.4 | 2.4 | 1.61 | -1.86 | 58.4 | 64 | 149.6 | 8.6 | 673 |
| Embodiment 96 | 1.5 | 2.4 | 1.73 | -1.83 | 59.2 | 85 | 148.6 | 8.3 | 669 |
| Embodiment 97 | 2.3 | 2.4 | 1.68 | -1.89 | 59.3 | 30 | 152.3 | 7.3 | 653 |
| Embodiment 98 | 2.3 | 2.4 | 1.75 | -1.89 | 59.8 | 30 | 152.3 | 7.3 | 672 |
| Embodiment 99 | 2.3 | 2.2 | 1.81 | -1.9 | 64.1 | 28 | 154.2 | 7.2 | 685 |
| Embodiment 100 | 2.3 | 2.2 | 1.92 | -1.92 | 65.4 | 12 | 154.3 | 5.4 | 985 |
| Embodiment 101 | 2.3 | 2.1 | 1.95 | -1.95 | 65.5 | 18 | 154.6 | 4.2 | 795 |

(continued)

| Embodiment No. | Performance of positive electrode active material powder | | | | | | Battery cell performance | | |
| --- | --- | --- | --- | --- | --- | --- | --- | --- | --- |
| | Lattice change ate (%) | Li/Mn antisite defect concentration (%) | compacted density (g/cm³) | Surface oxygen valence | 3C charge constant current rate (%) | Dissolution of Mn and Fe after cycling (ppm) | capacity of button mattery at p.IC (mAh/g) | Battery cell expansion rate after storage at 50°C for 30 d (%) | Number of cycles for 80% of capacity retention rate at 45°C |
| Comparative Embodiment 3 | 11.4 | 5.2 | 1.63 | -1.96 | 52.4 | 56 | 130.2 | 5.4 | 562 |
| Embodiment 102 | 8.1 | 3.8 | 1.76 | -1.96 | 58.3 | 41 | 135.1 | 5.1 | 631 |
| Embodiment 103 | 2 | 1.8 | 2.13 | -1.96 | 61.3 | 8 | 154.3 | 3.7 | 1126 |
| Embodiment 104 | 2 | 1.9 | 1.95 | -1.96 | 60.5 | 18 | 152.7 | 1.5 | 1019 |
| Embodiment 105 | 2 | 1.9 | 1.9 | -1.89 | 60.4 | 24 | 152.4 | 5.1 | 897 |
| Embodiment 62 | 2.5 | 1.8 | 2.35 | -1.93 | 70.3 | 7 | 157.2 | 4.2 | 1128 |
| Embodiment 63 | 2.5 | 1.8 | 2.24 | -1.94 | 70.2 | -5 | 156.3 | 3.7 | 1253 |
| Embodiment 64 | 2.5 | 1.8 | 2.22 | -1.94 | 70.1 | 5 | 155.4 | 3.4 | 1374 |
| Embodiment 65 | 2.5 | 1.8 | 2.21 | -1.95 | 70.2 | 3 | 153.7 | 2.9 | 1406 |
| Embodiment 66 | 2.5 | 1.8 | 2.33 | -1.93 | 70.1 | 5 | 156.7 | 3.1 | 1501 |
| Embodiment 67 | 2.5 | 1.8 | 2.31 | -1.93 | 69.7 | 4 | 156.2 | 2.8 | 1576 |
| Embodiment 68 | 2.5 | 1.8 | 2.28 | -1.93 | 68.4 | 3 | 155.8 | 2.5 | 1647 |
| Embodiment 69 | 2.5 | 1.8 | 2.29 | -1.93 | 69.1 | 9 | 156.4 | 3.4 | 1058 |

| Embodiment No. | Performance of positive electrode active material powder | | | | | | Battery cell performance | | |
|---|---|---|---|---|---|---|---|---|---|
| | Lattice change ate (%) | Li/Mn antisite defect concentration (%) | compacted density (g/cm$^3$) | Surface oxygen valence | 3C charge constant current rate (%) | Dissolution of Mn and Fe after cycling (ppm) | capacity of button mattery at p.IC (mAh/g) | Battery cell expansion rate after storage at 50°C for 30 d (%) | Number of cycles for 80% of capacity retention rate at 45°C |
| Embodiment 70 | 2.5 | 1.8 | 2.46 | -1.98 | 73.4 | 6 | 157.6 | 2.9 | 1286 |
| Embodiment 71 | 2.5 | 1.8 | 2.49 | -1.98 | 75.4 | 5 | 157.8 | 2.5 | 1486 |
| Embodiment 72 | 2.6 | 1.9 | 2.38 | -1.97 | 72.4 | 6 | 157.3 | 3.5 | 1026 |
| Embodiment 73 | 2.4 | 1.8 | 2.41 | -1.97 | 74.5 | 4 | 156.3 | 2.5 | 1136 |
| Embodiment 74 | 2.7 | 1.9 | 2.42 | -1.97 | 75.3 | 5 | 156.6 | 3.5 | 1207 |
| Embodiment 75 | 2.8 | 1.9 | 2.45 | -1.97 | 76.5 | 3 | 153.8 | 3.7 | 1308 |
| Embodiment 76 | 2.2 | 1.9 | 2.46 | -1.97 | 74.3 | 3 | 153.8 | 3.7 | 1109 |
| Embodiment 77 | 2.1 | 1.9 | 2.47 | -1.98 | 73.1 | 5 | 154.2 | 3.8 | 1132 |
| Embodiment 78 | 2.5 | 1.7 | 2.41 | -1.98 | 75.3 | 4 | 155.4 | 4.5 | 1258 |
| Embodiment 79 | 2.3 | 1.6 | 2.42 | -1.97 | 76.1 | 4 | 154.3 | 4.7 | 1378 |
| Embodiment 80 | 2.2 | 1.7 | 2.43 | -1.97 | 76.8 | 4 | 154.3 | 4.7 | 1328 |
| Embodiment 81 | 2.6 | 1.8 | 2.42 | -1.94 | 75.4 | 4 | 153.9 | 3.3 | 1458 |
| Embodiment 82 | 2.4 | 1.7 | 2.41 | -1.97 | 76.1 | 4 | 154.5 | 3.5 | 1327 |

| Embodiment No. | Performance of positive electrode active material powder | | | | | | Battery cell performance | | |
|---|---|---|---|---|---|---|---|---|---|
| | Lattice change ate (%) | Li/Mn antisite defect concentration (%) | compacted density (g/cm$^3$) | Surface oxygen valence | 3C charge constant current rate (%) | Dissolution of Mn and Fe after cycling (ppm) | capacity of button mattery at p.IC (mAh/g) | Battery cell expansion rate after storage at 50°C for 30 d (%) | Number of cycles for 80% of capacity retention rate at 45°C |
| Embodiment 83 | 2.4 | 1.8 | 2.32 | -1.95 | 72.1 | 2 | 152.1 | 2.7 | 1556 |
| Embodiment 84 | 2.3 | 1.7 | 2.46 | -1.96 | 76.4 | 3 | 151.4 | 2.4 | 1645 |
| Embodiment 85 | 2.2 | 1.8 | 2.47 | -1.95 | 76.3 | 3 | 152.1 | 2.5 | 1548 |
| Embodiment 86 | 2.1 | 1.7 | 2.49 | -1.98 | 78.4 | 3 | 158.6 | 2.9 | 1538 |
| Embodiment 87 | 3.6 | 2.5 | 2.21 | -1.97 | 56.4 | 8 | 152.3 | 4.8 | 1017 |
| Embodiment 88 | 2.8 | 2.1 | 2.24 | -1.98 | 74.3 | 6 | 155.4 | 3.8 | 1126 |
| Embodiment 89 | 2.5 | 1.9 | 1.95 | -1.94 | 54.7 | 9 | 154.9 | 6.4 | 986 |
| Embodiment 90 | 2.4 | 1.8 | 1.98 | -1.95 | 68.4 | 7 | 155.6 | 4.5 | 1047 |

EP 4 485 653 A1

It can be seen from Table 36 that compared with the comparative embodiments, a smaller lattice change rate, a smaller Li/Mn antisite defect concentration, a larger compacted density, and a surface oxygen valence closer to -2, less Mn and Fe dissolution after cycling, and better battery cell performance, such as better high-temperature storage performance and high-temperature cycling performance are achieved in the examples.

Table 37: Thickness of the layers of positive electrode active materials, and weight ratio of element manganese to element phosphorus

| No. | Inner core | First coating layer | Second coating layer | Third coating layer | First coating layer thickness (nm) | Second coating layer thickness (nm) | Third coating layer thickness (nm) | Content of element Mn (wt%) | Weight ratio of Mn element to P element |
|---|---|---|---|---|---|---|---|---|---|
| Embodiment 92 | $LiMn_{0.80}Fe_{0.20}PO_4$ | 2% amorphous $Li_2FeP_2O_7$ | - | 2% carbon | 4 | - | 10 | 26.1 | 1.383 |
| Embodiment 93 | $LiMn_{0.70}Fe_{0.295}V_{0.005}PO_4$ | - | - | 1% carbon | - | - | 5 | 24.3 | 1.241 |
| Embodiment 101 | $Li_{0.999}Mn_{0.60}Fe_{0.393}V_{0.004}Co_{0.003}P_{0.999}S_{0.001}O_4$ | - | 3% crystalline $LiFePO_4$ | 1% carbon | - | 7.5 | 5 | 19.6 | 1.034 |
| Embodiment 62 | $Li_{0.997}Mn_{0.60}Fe_{0.393}V_{0.004}Co_{0.003}P_{0.997}S_{0.003}O_4$ | 1% $Li_2FeP_2O_7$ | 3% $LiFePO_4$ | 1% carbon | 2 | 7.5 | 5 | 19.0 | 1.023 |
| Embodiment 63 | $Li_{0.997}Mn_{0.60}Fe_{0.393}V_{0.004}Co_{0.003}P_{0.997}S_{0.003}O_4$ | 1% $Li_2FeP_2O_7$ | 3% $LiFePO_4$ | 3% carbon | 2 | 7.5 | 15 | 18.3 | 1.023 |
| Embodiment 64 | $Li_{0.997}Mn_{0.60}Fe_{0.393}V_{0.004}Co_{0.003}P_{0.997}S_{0.003}O_4$ | 1% $Li_2FeP_2O_7$ | 3% $LiFePO_4$ | 4% carbon | 2 | 7.5 | 20 | 18.0 | 1.023 |
| Embodiment 65 | $Li_{0.997}Mn_{0.60}Fe_{0.393}V_{0.004}Co_{0.003}P_{0.997}S_{0.003}O_4$ | 1% $Li_2FeP_2O_7$ | 3% $LiFePO_4$ | 5% carbon | 2 | 7.5 | 25 | 17.9 | 1.023 |
| Embodiment 66 | $Li_{0.997}Mn_{0.60}Fe_{0.393}V_{0.004}Co_{0.003}P_{0.997}S_{0.003}O_4$ | 2% $Li_2FeP_2O_7$ | 3% $LiFePO_4$ | 1% carbon | 4 | 7.5 | 5 | 18.7 | 1.011 |

| No. | Inner core | First coating layer | Second coating layer | Third coating layer | First coating layer thickness (nm) | Second coating layer thickness (nm) | Third coating layer thickness (nm) | Content of element Mn (wt%) | Weight ratio of Mn element to P element |
|---|---|---|---|---|---|---|---|---|---|
| Embodiment 67 | $Li_{0.997}Mn_{0.60}Fe_{0.393}V_{0.004}Co_{0.003}P_{0.997}S_{0.003}O_4$ | $3\%Li_2FeP_2O_7$ | $3\% LiFePO_4$ | 1% carbon | 6 | 7.5 | 5 | 18.3 | 0.999 |
| Embodiment 68 | $Li_{0.997}Mn_{0.60}Fe_{0.393}V_{0.004}Co_{0.003}P_{0.997}S_{0.003}O_4$ | $5\%Li_2FeP_2O_7$ | $3\% LiFePO_4$ | 1% carbon | 10 | 7.5 | 5 | 17.6 | 0.975 |
| Embodiment 69 | $Li_{0.997}Mn_{0.60}Fe_{0.393}V_{0.004}Co_{0.003}P_{0.997}S_{0.003}O_4$ | $1\% Li_2Fe-P_2O_7$ | $1\%LiFePO_4$ | 1% carbon | 2 | 2.5 | 5 | 19.8 | 1.043 |
| Embodiment 70 | $Li_{0.997}Mn_{0.60}Fe_{0.393}V_{0.004}Co_{0.003}P_{0.997}S_{0.003}O_4$ | $1\% Li_2Fe-P_2O_7$ | $4\%LiFePO_4$ | 1% carbon | 2 | 10 | 5 | 18.7 | 1.014 |
| Embodiment 71 | $Li_{0.997}Mn_{0.60}Fe_{0.393}V_{0.004}Co_{0.003}P_{0.997}S_{0.003}O_4$ | $1\% Li_2Fe-P_2O_7$ | $5\%LiFePO_4$ | 1% carbon | 2 | 12.5 | 5 | 18.4 | 1.004 |
| Embodiment 72 | $Li_{1.001}Mn_{0.60}Fe_{0.393}V_{0.004}Co_{0.003}P_{0.999}Si_{0.001}O_4$ | $1\% Li_2Fe-P_2O_7$ | $2.50\% LiFe-PO_4$ | 1.5% carbon | 2 | 6.3 | 7.5 | 19.0 | 1.026 |
| Embodiment 74 | $Li_{0.995}Mn_{0.65}Fe_{0.341}V_{0.004}Co_{0.005}P_{0.995}S_{0.005}O_4$ | $2\% Li_2Fe-P_2O_7$ | $2\% LiFePO_4$ | 2% carbon | 4 | 5 | 10 | 18.7 | 1.108 |

| No. | Inner core | First coating layer | Second coating layer | Third coating layer | First coating layer thickness (nm) | Second coating layer thickness (nm) | Third coating layer thickness (nm) | Content of element Mn (wt%) | Weight ratio of Mn element to P element |
|---|---|---|---|---|---|---|---|---|---|
| Embodiment 75 | $Li_{1.002}Mn_{0.70}Fe_{0.293}V_{0.004}Co_{0.003}P_{0.998}Si_{0.002}O_4$ | 2.5% $Li_2Fe-P_2O_7$ | 3.50% LiFe-$PO_4$ | 2.5% carbon | 5 | 8.8 | 12.5 | 17.8 | 1.166 |

It can be seen from Table 37 that by doping at the positions of manganese and phosphorus and three-layer coating of lithium manganese iron phosphate (containing 35% of manganese and about 20% of phosphorus), the content of element manganese in the positive electrode active material and the weight ratio of elements manganese and phosphorus in the positive electrode active material are obviously reduced. In addition, by comparing Embodiments 62-75 with Embodiment 92, Embodiment 93, and Embodiment 101, it can be seen from table 38 that the reduction in the ratio of elements manganese and phosphorus in the positive electrode active material will lead to a decrease in the dissolution of manganese and iron and an improvement in the battery cell performance of the prepared secondary battery cell.

Table 38: Powder performance of positive electrode active materials and battery cell performance of the prepared battery cells

| Embodiment No. | Performance of positive electrode active material powder | | | | | | Battery cell performance | | |
|---|---|---|---|---|---|---|---|---|---|
| | Lattice change rate (%) | Li/Mn antisite defect concentration (%) | Compacted density (g/cm$^3$) | Surface oxygen valence | 3C charge constant current rate (%) | Dissolution of Mn and Fe after cycling (ppm) | Capacity of button battery at 0.1C | Battery cell expansion rate after storage at -50°C for 30 d (%) | Number of cycles for 80% of capacity retention rate at 45°C |
| Embodiment 62 | 2.5 | 1.8 | 2.35 | -1.93 | 70.3 | 7 | 157.2 | 4.2 | 1128 |
| Embodiment 89 | 2.4 | 1.9 | 2.36 | -1.97 | 68.7 | 15 | 156.2 | 4.8 | 1018 |
| Embodiment 90 | 2.5 | 1.7 | 2.36 | -1.96 | 70.1 | 12 | 155.6 | 4.6 | 1087 |
| Embodiment 106 | 2.5 | 1.7 | 2.38 | -1.97 | 69.1 | 14 | 155.9 | 4.3 | 1054 |
| Embodiment 107 | 2.6 | 1.8 | 2.39 | -1.98 | -59.4 | 23 | 156.2 | 5.3 | 997 |
| Embodiment 108 | 2.6 | 1.9 | 2.34 | -1.96 | 71.3 | 16 | 156.4 | 4.6 | 1004 |
| Embodiment 109 | 2.4 | 1.7 | 2.36 | -1.94 | 70.9 | 11 | 157.5 | 5.1 | 1102 |
| Embodiment 110 | 2.5 | 1.9 | 2.33 | -1.92 | 71.6 | 14 | 155.8 | 5.4 | 1024 |
| Embodiment 111 | 2.5 | 1.7 | 2.34 | -1.92 | -58.4 | 18 | 156.1 | 4.9 | 1054 |
| Embodiment 112 | 2.4 | 1.9 | 2.33 | -1.95 | 67.5 | 27 | 154.7 | 5.9 | 954 |
| Embodiment 113 | 2.2 | 1.8 | 2.36 | -1.94 | -59.4 | 24 | 156.4 | 5.7 | 1017 |
| Embodiment 114 | 2.4 | 1.9 | 2.37 | -1.91 | 71.6 | 31 | 155.8 | 5.3 | 991 |
| Embodiment 115 | 2.6 | 1.9 | 2.38 | -1.94 | 70.8 | 27 | 154.8 | 5.1 | 975 |
| Embodiment 116 | 2.4 | 1.9 | 2.36 | -1.92 | 71.5 | 15 | 156.8 | 4.2 | 1154 |

As can be seen from Table 38, by using a first coating layer and a second coating layer containing other elements within the scope of the present application, a positive electrode active material with good performance is also obtained and good battery cell performance is achieved.

Table 39: Interplanar spacing and included angle of the first coating layer material and the second coating layer material

| No. | Interplanar spacing of the first coating layer material | Included angle between crystal directions (111) of the first coating layer material | Interplanar spacing of the second coating layer material | Included angle between crystal directions (111) of the second coating layer material |
|---|---|---|---|---|
| Embodiment 62 | 0.303 | 29.496 | 0.348 | 25.562 |
| Embodiment 117 | 0.451 | 19.668 | 0.348 | 25.562 |
| Embodiment 118 | 0.297 | 30.846 | 0.348 | 25.562 |
| Embodiment 119 | 0.457 | 19.456 | 0.348 | 25.562 |
| Embodiment 120 | 0.437 | 20.257 | 0.348 | 25.562 |
| Embodiment 121 | 0.462 | 19.211 | 0.348 | 25.562 |
| Embodiment 122 | 0.450 | 19.735 | 0.348 | 25.562 |
| Embodiment 123 | 0.372 | 23.893 | 0.348 | 25.562 |
| Embodiment 124 | 0.303 | 29.496 | 0.374 | 23.789 |
| Embodiment 125 | 0.303 | 29.496 | 0.360 | 24.710 |
| Embodiment 126 | 0.303 | 29.496 | 0.350 | 25.428 |
| Embodiment 127 | 0.303 | 29.496 | 0.425 | 20.885 |
| Embodiment 128 | 0.303 | 29.496 | 0.356 | 24.993 |
| Embodiment 129 | 0.303 | 29.496 | 0.244 | 36.808 |

It can be seen from Table 39 that the interplanar spacing and angle of the first coating layer and the second coating layer of the present application are both within the ranges described in the present application.

III. Investigation of influence of sintering method for the coating layer on the performance of the positive electrode active materials and the performance of the secondary battery cells

The battery cells in the embodiments and comparative embodiments in the table below were prepared similarly to that in Embodiment 62, except that the process parameters in a table below were used. The results are shown in Table 40 below.

Table 40: The effect of sintering temperature and sintering time on secondary battery cells in steps S4, S6 and S8

| No. | Sintering temperature in S4 (°C) | Sintering time in S4 (h) | Sintering temperature in S6 (°C) | Sintering time in S6 (h) | Sintering temperature in S8 (°C) | Sintering time in S8 (h) | Lattice change rate (%) | Li/Mn antisite defect concentration | Compacted density | 3C charge constant current rate (%) | Dissolution of Mn and Fe after cycling (ppm) | Surface oxygen valence | Capacity of button battery at 0.1C (mAh/g) | Battery cell expansion rate after storage at 60°C for 30-1 (%) | Number of cycles for 80% of capacity retention rate at 45°C |
|---|---|---|---|---|---|---|---|---|---|---|---|---|---|---|---|
| Embodiment 62 | 650 | 6 | 700 | 8 | 700 | 10 | 2.5 | 1.8 | 2.35 | 70.3 | 7 | -1.93 | 157.2 | 4.2 | 1128 |
| Embodiment II-1 | 750 | 4 | 600 | 7 | 700 | 6 | 3.0 | 2.4 | 2.24 | 64.2 | 12 | -1.95 | 154.2 | 6.4 | 894 |
| Embodiment II-2 | 800 | 4 | 600 | 7 | 700 | 6 | 3.1 | 2.4 | 2.21 | 67.3 | 12 | -1.95 | 153.2 | 6.2 | 904 |
| Embodiment II-3 | 700 | 2 | 600 | 7 | 700 | 6 | 2.9 | 2.3 | 2.20 | 62.3 | 15 | -1.96 | 151.1 | 5.8 | 846 |
| Embodiment II-4 | 700 | 3 | 600 | 7 | 700 | 6 | 2.7 | 2.1 | 2.23 | 54.3 | 14 | -1.96 | 152.8 | 5.4 | 908 |
| Embodiment II-5 | 700 | 4 | 500 | -5 | 700 | 6 | 2.5 | 1.8 | 2.31 | 62.4 | 28 | -1.95 | 153.1 | 4.7 | 798 |
| Embodiment II-6 | 700 | 4 | 700 | -5 | 700 | 6 | 2.5 | 1.8 | 2.34 | 63.5 | 14 | -1.96 | 154.3 | 5.1 | 867 |
| Embodiment II-7 | 700 | 4 | 600 | 8 | 700 | 6 | 2.5 | 1.8 | 2.31 | 67.3 | 11 | -1.95 | 156.8 | 4.7 | 959 |
| Embodiment II-8 | 700 | 4 | 600 | 10 | 700 | 6 | 2.5 | 1.8 | 2.34 | 68.5 | 10 | -1.96 | 156.2 | 4.5 | 1045 |
| Embodiment II-9 | 700 | 4 | 600 | 7 | 750 | 6 | 2.5 | 1.8 | 2.35 | 70.3 | 7 | -1.93 | 157.2 | 4.2 | 1128 |
| Embodiment II-10 | 700 | 4 | 600 | 7 | 800 | 6 | 2.5 | 1.8 | 2.35 | 70.1 | 7 | -1.93 | 156.3 | 4.4 | 1097 |

(continued)

| No. | Sintering temperature in S4 (°C) | Sintering time in S4 (h) | Sintering temperature in S6 (°C) | Sintering time in S6 (h) | Sintering temperature in S8 (°C) | Sintering time in S8 (h) | Lattice change rate (%) | Li/Mn antisite defect concentration | Compacted density | 3C charge constant current rate (%) | Dissolution of Mn and Fe after cycling (ppm) | Surface oxygen valence | Capacity of button battery at 0.1C (mAh/g) | Battery cell expansion rate after storage at 60°C for 30 -1 (%) | Number of cycles for 80% of capacity retention rate at 45°C |
|---|---|---|---|---|---|---|---|---|---|---|---|---|---|---|---|
| Embodiment II-11 | 700 | 4 | 600 | 7 | 700 | 8 | 2.5 | 1.8 | 2.35 | 68.4 | 8 | -1.91 | 155.4 | 4.7 | 964 |
| Embodiment II-12 | 700 | 4 | 600 | 7 | 700 | 10 | 2.5 | 1.8 | 2.35 | 66.7 | 10 | -1.95 | 154.7 | 5 | 897 |
| Comparative Embodiment II-1 | 600 | 3 | 600 | 8 | 750 | 8 | 4.8 | 5.3 | 2.28 | 54.1 | 86 | -1.90 | 140.7 | 10.6 | 615 |
| Comparative Embodiment II-2 | 850 | 3 | 600 | 8 | 750 | 8 | 5.3 | 4.7 | 2.38 | 57.2 | 84 | -1.91 | 145.3 | 9.0 | 684 |
| Comparative Embodiment II-3 | 750 | 1.5 | 600 | 8 | 750 | 8 | 4.7 | 4.5 | 2.25 | 53.1 | 87 | -1.91 | 141.9 | 8.8 | 691 |
| Comparative Embodiment II-4 | 750 | 4.5 | 600 | 8 | 750 | 8 | 4.1 | 4.0 | 2.31 | 58.1 | 79 | -1.92 | 140.1 | 8.1 | 711 |
| Comparative Embodiment II-5 | 750 | 3 | 450 | 8 | 750 | 8 | 4.8 | 4.6 | 2.28 | 52.1 | 78 | -1.90 | 141.2 | 8.7 | 601 |

(continued)

| No. | Sintering temperature in S4 (°C) | Sintering time in S4 (h) | Sintering temperature in S6 (°C) | Sintering time in S6 (h) | Sintering temperature in S8 (°C) | Sintering time in S8 (h) | Lattice change rate (%) | Li/Mn antisite defect concentration | Compacted density | 3C charge constant current rate (%) | Dissolution of Mn and Fe after cycling (ppm) | Surface oxygen valence | Capacity of button battery at 0.1C (mAh/g) | Battery cell expansion rate after storage at 60°C for 30-1 (%) | Number of cycles for 80% of capacity retention rate at 45°C |
|---|---|---|---|---|---|---|---|---|---|---|---|---|---|---|---|
| Comparative Embodiment II-6 | 750 | 3 | 750 | 8 | 750 | 8 | 3.9 | 4.8 | 2.35 | 49.7 | 78 | -1.95 | 142.4 | 8.8 | 604 |
| Comparative Embodiment II-7 | 750 | 3 | 600 | 5.5 | 750 | 8 | 4.4 | 4.2 | 2.24 | 45.4 | 81 | -1.93 | 142.9 | 8.8 | 614 |
| Comparative Embodiment II-8 | 750 | 3 | 600 | 10.5 | 750 | 8 | 4.1 | 3.9 | 2.34 | 49.1 | 79 | -1.92 | 141.1 | 7.9 | 684 |
| Comparative Embodiment II-9 | 750 | 3 | 600 | 8 | 650 | 8 | 5.2 | 4.1 | 2.31 | 48.4 | 81 | -1.93 | 141.8 | 10.2 | 567 |
| Comparative Embodiment II-10 | 750 | 3 | 600 | 8 | 850 | 8 | 50 | 4.0 | 2.34 | 49.1 | 78 | -1.95 | 141.2 | 8.7 | 678 |
| Comparative Embodiment II-11 | 750 | 3 | 600 | 8 | 750 | 5.5 | 4.3 | 4.2 | 2.27 | 47.8 | 84 | -1.91 | 142.9 | 9.4 | 521 |

(continued)

| No. | Sintering temperature in S4 (°C) | Sintering time in S4 (h) | Sintering temperature in S6 (°C) | Sintering time in S6 (h) | Sintering temperature in S8 (°C) | Sintering time in S8 (h) | Lattice change rate (%) | Li/Mn antisite defect concentration | Compacted density | 3C charge constant current rate (%) | Dissolution of Mn and Fe after cycling (ppm) | Surface oxygen valence | Capacity of button battery at 0.1C (mAh/g) | Battery cell expansion rate after storage at 60°C for 30-1 (%) | Number of cycles for 80% of capacity retention rate at 45°C |
|---|---|---|---|---|---|---|---|---|---|---|---|---|---|---|---|
| Comparative Embodiment II-12 | 750 | 3 | 600 | 8 | 750 | 10.5 | 50 | 4.9 | 2.35 | 49.8 | 78 | -1.94 | 141.7 | 9.5 | 655 |

IV. Investigation of the influence of reaction temperature and reaction time in inner core preparation on the performance of positive electrode active materials and performance of battery cells

The positive electrode active materials and battery cells of Embodiments III-1 to III-17 in the following table are prepared in a manner similar to Embodiment 62, and the differences in the preparation of the positive electrode active materials are shown by the process parameters in the following table. The results are also shown in the table below.

Table 41: Influence of reaction temperature and reaction time in inner core preparation on the performance of positive electrode active materials and performance of secondary battery cells

| No. | Step S1 | | Step S2 | | Latt | Li/Mn | Compa | 3C | Dissol | Surf | Capa | Batter | Num |
| | Reaction temperature (°C) | Reaction time (h) | Reaction temperature (°C) | Reaction time (h) | ice change rate (%) | antisite defect concentration (%) | cted density (g/cm$^3$ ) | charge constant current rate (%) | ution of Mn and Fe after cycling (ppm) | ace oxygen valence | city of button battery at 0.1C (mAh /g) | y cell expansion rate after storage at 60°C for 30 d (%) | ber of cycles for 80% of capacity retention rate at 45°C |
|---|---|---|---|---|---|---|---|---|---|---|---|---|---|
| Embodiment62 | 80 | 6 | 80 | 10 | 2.5 | 1.8 | 2.35 | 70.3 | 7 | -1.93 | 157.2- | 4.2 | 1128 |
| Embodiment III-1 | 70 | 6 | 80 | 10 | 2.8 | 3.4 | 2.30 | 60.1 | 34 | -1.93 | 155.4 | 5.8 | 876 |
| Embodiment III-2 | 60 | 6 | 80 | 10 | 3.1 | 3.1 | 2.33 | 64.2 | 18 | -1.92 | 156.2 | 5.1 | 997 |
| Embodiment III-4 | 100 | 6 | 80 | 10 | 2.3 | 2.4 | 2.37 | 71.3 | 7 | -1.94 | 156.8- | 4.1 | 1137 |
| Embodiment III-5 | 120 | 6 | 80 | 10 | 2.1 | 2.2 | 2.38 | 72.1 | 5 | -1.92 | 155.4 | 4.0 | 1158 |
| Embodiment III-6 | 80 | 2 | 80 | 10 | 2.8 | 3.2 | 2.27 | 68.4 | 24 | -1.90 | 154.9 | 5.1 | 895 |
| Embodiment III-7 | 80 | 3 | 80 | 10 | 2.6 | 2.7 | 2.29 | 69.7 | 17 | -1.92 | 156.1- | 4.7 | 967 |
| Embodiment III-8 | 80 | 5 | 80 | 10 | 2.4 | 1.9 | 2.34 | 70.6 | 8 | -1.94 | 156.8- | 4.3 | 1137 |
| Embodiment III-9 | 8 | 7 | 80 | 10 | 2.5 | 1.8 | 2.35 | 68.3 | 11 | -1.94 | 156.4. | 4.8 | 987 |
| Embodiment III-10 | 80 | 9 | 80 | 10 | 2.6 | 1.8 | 2.36 | 67.2 | 15 | -1.93 | 155.9 | 5.2 | 921 |
| Embodiment III-11 | 80 | 6 | 40 | 10 | 3.2 | 3.4 | 2.28 | 67.8 | 35 | -1.94 | 156.8 | 5.4 | 894 |

(continued)

| No. | Step S1 | | Step S2 | | Latt ice change rate (%) | Li/Mn antisite defect concentration (%) | Compa cted density (g/cm³) | 3C charge const ant curre nt rate (%) | Dissol ution of Mn and Fe after cycling (ppm) | Surf ace oxyg en vale nce | Capa city of butto n batter y at 0.1C (mAh /g) | Batter y cell expan sion rate after storag e at 60°C for 30 d (%) | Num ber of cycle s for 80% of capac ity retent ion rate at 45°C |
|---|---|---|---|---|---|---|---|---|---|---|---|---|---|
| | Reaction temperature (°C) | Reaction time (h) | Reaction temperature (°C) | Reaction time (h) | | | | | | | | | |
| Embodimen t III-12 | 80 | 6 | 60 | 10 | 2.8 | 2.9 | 2.31 | 68.7 | 18 | -1.95 | 157.0- | 4.9 | 927 |
| Embodimen t III-13 | 80 | 6 | 80 | 10 | 2.5 | 2.7 | 2.35 | 70.3 | 7 | -1.93 | 157.2- | 4.2 | 1128 |
| Embodimen t III-14 | 80 | 6 | 100 | 10 | 2.7 | 2.8 | 2.33 | 69.4 | 15 | -1.93 | 156.7- | 4.6 | 957 |
| Embodimen t III-15 | 80 | 6 | 120 | 10 | 2.8 | 3.1 | 2.32 | 68.1 | 24 | -1.94 | 156.2. | 4.8 | 914 |
| Embodimen t III-16 | 80 | 6 | 90 | 1 | 3.7 | 3.8 | 2.26 | 67.9 | 38 | -1.93 | 155.8 | 5.2 | 885 |
| Embodimen t III-17 | 80 | 6 | 90 | 3 | 3.4 | 3.4 | 2.31 | 68.2 | 32 | - 1.94 | 156.1- | 4.8 | 915 |
| Embodimen t III-18 | 80 | 6 | 90 | 5 | 3.1 | 3.1 | 2.33 | 69.1 | 27 | -1.92 | 156.4 | 4.6 | 934 |
| Embodimen t III-19 | 80 | 6 | 90 | 7 | 2.8 | 2.9 | 2.34 | 69.4 | 15 | -1.93 | 156.8 | 4.5 | 971 |
| Embodimen t III-20 | 80 | 6 | 90 | 9 | 2.5 | 2.7 | 2.35 | 70.3 | 7 | -1.93 | 157.2- | 4.2 | 1128 |

147

EP 4 485 653 A1

As can be seen from Table 41, when the reaction temperature in Step S1 is in the range of 60-120°C and the reaction time is 2-9 h, and the reaction temperature in Step S2 is in the range of 40-120°C and the reaction time is 1-10 h, the performance (lattice change rate, Li/Mn antisite defect concentration, surface oxygen valence, and compacted density) of the positive electrode active material powder and the performance (electric capacity, high-temperature cycling performance, high-temperature storage performance) of the prepared battery cells are all excellent.

The preparation and performance testing of the positive electrode active materials whose coating layer includes a first coating layer (pyrophosphate and phosphate) and a second coating layer of carbon are described in detail below:

Embodiment 1-1

[Preparation of double-layer coated lithium manganese phosphate positive electrode active material]

(1) Preparation of co-doped lithium manganese phosphate inner core

Preparation of Fe, Co and V co-doped manganese oxalate: 689.5g of manganese carbonate (based on $MnCO_3$, the same below), 455.2g of ferrous carbonate (based on $FeCO_3$, the same below), 4.6g of cobalt sulfate (based on $CoSO_4$, the same below) and 4.9g of vanadium dichloride (based on $VCl_2$, the same below) were thoroughly mixed in a mixer for 6 h. The mixture was transferred to the reactor and 5 liters of deionized water and 1260.6g of oxalic acid dihydrate (based on $C_2H_2O_4 \cdot 2H_2O$, the same below) were added. The reactor was heated to 80°C and stirred at 600 rpm for 6 h until the reaction was terminated (no bubbles were generated) to obtain an Fe, Co, V and S co-doped manganese oxalate suspension. Then the suspension was filtered, the filter cake was oven dried at 120°C, and then ground to obtain Fe, Co and V co-doped manganese oxalate particles with a median particle size Dv50 of 100 nm.

Preparation of Fe, Co, V and S co-doped lithium manganese phosphate: the manganese oxalate dihydrate particles obtained in the previous step (1793.4g), 369.0g of lithium carbonate (based on $Li_2CO_3$, the same below), 1.6g of dilute sulfuric acid with a concentration of 60% (based on 60% $H_2SO_4$, the same below) and 1148.9g of ammonium dihydrogen phosphate (based on $NH_4H_2PO_4$, the same below) were added to 20 liters of deionized water, and the mixture was stirred for 10 h to mix evenly and obtain a slurry. The slurry was transferred to a spray drying device for spray drying and granulation, and dried at a set temperature of 250°C for 4 h to obtain a powder. In a protective atmosphere of nitrogen (90 vol%) + hydrogen (10 vol%), the above powder was sintered at 700°C for 4 h to obtain 1572.1g of lithium manganese phosphate co-doped with Fe, Co, V and S.

(2) Preparation of lithium iron pyrophosphate and lithium iron phosphate

Preparation of lithium iron pyrophosphate powder: 4.77g of lithium carbonate, 7.47g of ferrous carbonate, 14.84g of ammonium dihydrogen phosphate and 1.3g of oxalic acid dihydrate were dissolved in 50ml of deionized water. The pH of the mixture was 5, and the reaction mixture was stirred for 2 h to fully react. The reacted solution was then heated to 80°C and maintained at this temperature for 4 h to obtain a suspension containing $Li_2FeP_2O_7$. The suspension was filtered, washed with deionized water, and dried at 120°C for 4 h to obtain a powder. The powder was sintered at 650°C in a nitrogen atmosphere for 8 h, and then naturally cooled to room temperature and then ground to obtain $Li_2FeP_2O_7$ powder.

Preparation of lithium iron phosphate suspension: 11.1g of lithium carbonate, 34.8g of ferrous carbonate, 34.5g of ammonium dihydrogen phosphate, 1.3g of oxalic acid dihydrate and 74.6g of sucrose (based on $C_{12}H_{22}O_{11}$, the same below) were dissolved in 150 ml of deionized water to obtain a mixture, and then stirred for 6 h to allow the above mixture to fully react. The reacted solution was then heated to 120°C and maintained at this temperature for 6 h to obtain a suspension containing LiFeP04.

(3) Coating

1572.1g of the above Fe, Co, V and S co-doped lithium manganese phosphate and 15.72g of the above lithium iron pyrophosphate ($Li_2FeP_2O_7$) powder were added to the lithium iron phosphate ($LiFePO_4$) suspension prepared in the previous step.

The mixture was stirred and mixed evenly, then transferred to a vacuum oven to dry at 150°C for 6 h. The resulting product was then dispersed by a sand mill. After dispersion, the obtained product was sintered at 700°C for 6 h in a nitrogen atmosphere to obtain the target product of double-layer coated lithium manganese phosphate.

[Preparation of positive electrode plate]

The prepared double-layer coated lithium manganese phosphate positive electrode active material, a conductive acetylene black and a binder polyvinylidene fluoride (PVDF) in a weight ratio of 92:2.5:5.5 were added to N-methyl pyrrolidone (NMP), and stirred and mixed evenly to obtain a positive electrode slurry. Then, the positive electrode slurry was evenly coated on an aluminum foil at $0.280g/1540.25mm^2$, and then subjected to oven drying, cold pressing and slitting to obtain a positive electrode plate.

[Preparation of negative electrode plate]

The negative electrode active material artificial graphite, hard carbon a conductive agent acetylene black, a binder styrene butadiene rubber (SBR), and a thickener sodium carboxymethylcellulose (CMC-NA) in a weight ratio of 90:5:2:2:1 were dissolved in a solvent deionized water, which was uniformly stirred and mixed to prepare a negative electrode slurry. The negative electrode slurry was uniformly coated on a negative electrode current collector copper foil at $0.117g/1540.25mm^2$, then subjected to oven drying, cold pressing, and slitting, to provide the negative electrode plate.

[Preparation of electrolyte solution]

In a glove box under an argon atmosphere ($H_2O < 0.1$ ppm, $O_2 < 0.1$ ppm), ethylene carbonate (EC)/ethyl methyl carbonate (EMC) as the organic solvent were mixed uniformly in a volume ratio of 3/7, 12.5 wt % (based on the weight of the organic solvent) of $LiPF_6$ was dissolved in the organic solvent and stirred uniformly to obtain an electrolyte solution.

[Separator]

A commercially available PP-PE copolymer microporous film with a thickness of 20 $\mu$m and an average pore size of 80 nm (from Zoco Electronic Technology Co, Ltd, model 20) was used.

[Preparation of full battery cells]

The aforementioned positive electrode plate, separator and negative electrode plate were stacked in sequence, so that the separator was located between the positive electrode plate and the negative electrode plate for separation, and a bare battery cell was obtained by winding. The bare battery cell was placed in an outer package, the aforementioned electrolyte solution was injected, they were packaged to obtain a full battery cell (hereinafter also referred to as the "full battery").

[Preparation of button battery cells]

All parameters are the same as those of Embodiment 1 and will not be repeated here.

Embodiments 1-2 to 1-6

The preparation conditions of the lithium manganese phosphate inner core in Embodiments 1-2 to 1-6 were the same as those of Embodiment 1-1 except that in the preparation process of the co-doped lithium manganese phosphate inner core, vanadium dichloride and cobalt sulfate were not used, 463.4g of ferrous carbonate, 1.6g of 60% dilute sulfuric acid, 1148.9g of ammonium dihydrogen phosphate and 369.0g of lithium carbonate were used.
In addition, in the preparation process of lithium iron pyrophosphate and lithium iron phosphate and the process of applying the first coating layer and the second coating layer, except that the raw materials used were adjusted according to the ratio of the coating amounts shown in Table 20 to the corresponding coating amounts in Embodiment 1-1 so that the amounts of $Li_2FeP_2O_7$/$LiFePO_4$ in Embodiments 1-2 to 1-6 were 12.6g/37.7g, 15.7g/47.1g, and 18.8. g/56.5g, 22.0/66.0g and 25.1g/75.4g respectively, and the amount of sucrose used in Embodiments 1-2 to 1-6 was 37.3g, the other conditions were the same as those of Embodiment 1-1.

Embodiments 1-7 to 1-10

The conditions of Embodiments 1-7 to 1-10 were the same as those of Embodiment 1-3 except that the amounts of sucrose were 74.6g, 149.1g, 186.4g and 223.7g respectively so that the corresponding coating amounts of the carbon layer as the second coating layer were 31.4g, 62.9g, 78.6g and 94.3g respectively.

Embodiments 1-11 to 1-14

The conditions of Embodiments 1-11 to 1-14 were the same as those of Embodiment 1-7 except that in the preparation process of lithium iron pyrophosphate and lithium iron phosphate, the amounts of various raw materials were adjusted accordingly according to the coating amounts shown in Table 20 so that the amounts of $Li_2FeP_2O_7$/$LiFePO_4$ were 23.6g/39.3g, 31.4g/31.4g, 39.3g/23.6g and 47.2g/15.7g respectively.

Embodiment 1-15

The conditions of Embodiment 1-15 were the same as those of Embodiment 1-14 except that 492.80g of $ZnCO_3$ was used instead of ferrous carbonate in the preparation process of the co-doped lithium manganese phosphate inner core.

Embodiments 1-16 to 1-18

The conditions of Embodiments 1-17 to 1-19 were the same as those of Embodiment 1-7 except that 466.4g of $NiCO_3$, 5.0g of zinc carbonate and 7.2g of titanium sulfate instead of ferrous carbonate were used in the preparation process of the co-doped lithium manganese phosphate inner core in Embodiment 1-16, 455.2g of ferrous carbonate and 8.5g of vanadium dichloride were used in the preparation process of the co-doped lithium manganese phosphate inner core in Embodiment 1-17, and 455.2g of ferrous carbonate, 4.9g of vanadium dichloride and 2.5g of magnesium carbonate were used in the preparation process of the co-doped lithium manganese phosphate inner core in Embodiment 1-18.

Embodiments 1-19 to 1-20

The conditions of Embodiments 1-19 to 1-20 were the same as those of Embodiment 1-18 except that 369.4g of lithium carbonate was used and 1.05g of 60% dilute nitric acid was used instead of dilute sulfuric acid in the preparation process of the co-doped lithium manganese phosphate inner core in Embodiment 1-19, and 369.7g of lithium carbonate was used and 0.78g of silicic acid was used instead of dilute sulfuric acid in the preparation process of the co-doped lithium manganese phosphate inner core in Embodiment 1-20.

Embodiments 1-21 to 1-22

The conditions of Embodiments 1-21 to 1-22 were the same as those of Embodiment 1-20 except that in Embodiment 1-21, 632.0g of manganese carbonate, 463.30g of ferrous carbonate, 30.5g of vanadium dichloride, 21.0g of magnesium carbonate and 0.78g of silicic acid were used in the preparation process of the co-doped lithium manganese phosphate inner core; and in Embodiment 1-22, 746.9g of manganese carbonate, 289.6g of ferrous carbonate, 60.9g of vanadium dichloride, 42.1g of magnesium carbonate and 0.78g of silicic acid were used in the preparation process of the co-doped lithium manganese phosphate inner core.

Embodiments 1-23 to 1-24

The conditions of Embodiments 1-23 to 1-24 were the same as those of Embodiment 1-22 except that in Embodiment 1-23, in the preparation process of the co-doped lithium manganese phosphate inner core, 804.6g of manganese carbonate, 231.7g of ferrous carbonate, 1156.2g of ammonium dihydrogen phosphate, 1.2g of boric acid (mass fraction 99.5%) and 370.8 g of lithium carbonate were used; and in Embodiment 1-24, 862. Ig of manganese carbonate, 173.8g of ferrous carbonate, 1155.1g of ammonium dihydrogen phosphate, 1.86g of boric acid (mass fraction 99.5%) and 371.6 g of lithium carbonate were used in the preparation process of the co-doped lithium manganese phosphate inner core.

Embodiment 1-25

The conditions of Embodiment 1-25 were the same as those of Embodiment 1-20 except that in Embodiment 1-25, 370.1g of lithium carbonate, 1.56g of silicic acid and 1147.7g of ammonium dihydrogen phosphate were used in the preparation process of the co-doped lithium manganese phosphate inner core.

Embodiment 1-26

The conditions of Embodiment 1-26 were the same as those of Embodiment 1-20 except that in Embodiment 1-26, 368.3g of lithium carbonate, 4.9g of dilute sulfuric acid with a mass fraction of 60%, 919.6g of manganese carbonate, 224.8g of ferrous carbonate, 3.7g of vanadium dichloride, 2.5g of magnesium carbonate and 1146.8g of ammonium dihydrogen phosphate were used in the preparation process of the co-doped lithium manganese phosphate inner core.

Embodiment 1-27

The conditions of Embodiment 1-27 were the same as those of Embodiment 1-20 except that in Embodiment 1-27, 367.9g of lithium carbonate, 6.5g of 60% dilute sulfuric acid and 1145.4g of ammonium dihydrogen phosphate were used in the preparation process of the co-doped lithium manganese phosphate inner core.

Embodiments 1-28 to 1-33

The conditions of Embodiments 1-28 to 1-33 were the same as those of Embodiment 1-20, except that in Embodiments 1-28 to 1-33, in the preparation process of the co-doped lithium manganese phosphate inner core, 1034.5g of manganese carbonate, 108.9g of ferrous carbonate, 3.7g of vanadium dichloride and 2.5g of magnesium carbonate were used, the amount of lithium carbonate was: 367.6g, 367.2g, 366.8g, 366.4g, 366.0g and 332.4g respectively, the amount of ammonium dihydrogen phosphate was: 1144.5g, 1143.4g, 1142.2g, 1141.1g, 1139.9g and 1138.8g respectively, the amount of 60% dilute sulfuric acid was: 8.2g, 9.8g, 11.4g, 13.1g, 14.7g and 16.3g respectively.

Embodiments 2-1 to 2-4

Embodiment 2-1

Except that in the preparation process of lithium iron pyrophosphate ($Li_2FeP_2O_7$), the sintering temperature was 550°C and the sintering time was 1h in the powder sintering step to control the crystallinity of $Li_2FeP_2O_7$ to 30%, and in the preparation process of lithium iron phosphate ($LiFePO_4$), the sintering temperature was 650°C and the sintering time was 2h in the coating and sintering step to control the crystallinity of $LiFePO_4$ to 30% in the coating sintering step, other conditions were the same as those of Embodiment 1-1.

Embodiment 2-2

Except that in the preparation process of lithium iron pyrophosphate ($Li_2FeP_2O_7$), the sintering temperature was 550°C and the sintering time was 2h in the powder sintering step to control the crystallinity of $Li_2FeP_2O_7$ to 50%, and in the preparation process of lithium iron phosphate ($LiFePO_4$), the sintering temperature was 650°C and the sintering time was 3h in the coating and sintering step to control the crystallinity of $LiFePO_4$ to 50% in the coating sintering step, other conditions were the same as those of Embodiment 1-1.

Embodiment 2-3

Except that in the preparation process of lithium iron pyrophosphate ($Li_2FeP_2O_7$), the sintering temperature was 600°C and the sintering time was 3h in the powder sintering step to control the crystallinity of $Li_2FeP_2O_7$ to 70%, and in the preparation process of lithium iron phosphate (LiFePOa), the sintering temperature was 650°C and the sintering time was 4h in the coating and sintering step to control the crystallinity of $LiFePO_4$ to 70% in the coating sintering step, other conditions were the same as those of Embodiment 1-1.

Embodiment 2-4

Except that in the preparation process of lithium iron pyrophosphate ($Li_2FeP_2O_7$), the sintering temperature was 650°C and the sintering time was 4h in the powder sintering step to control the crystallinity of $Li_2FeP_2O_7$ to 100%, and in the preparation process of lithium iron phosphate (LiFePOa), the sintering temperature was 700°C and the sintering time was 6h in the coating and sintering step to control the crystallinity of $LiFePO_4$ to 100% in the coating sintering step, other conditions were the same as those of Embodiment 1-1.

Embodiments 3-1 to 3-12

Except that in the process of preparing Fe, Co and V co-doped manganese oxalate particles, the heating temperature/stirring time in the reactor of Embodiment 3-1 were 60°C/120 min respectively; the heating temperature/stirring time in the reactor of Embodiment 3-2 were 70°C/120 min respectively; the heating temperature/stirring time in the reactor of Embodiment 3-3 were 80°C/120 min respectively; the heating temperature/stirring time in the reactor of Embodiment 3-4 were respectively 90°C/120 min; the heating temperature/stirring time in the reactor of Embodiment 3-5 were 100°C/120 min respectively; the heating temperature/stirring time in the reactor of Embodiment 3-6 were 110°C/120 min respectively; the heating temperature/stirring time in the reactor of Embodiment 3-7 were 120°C/120 min respectively;

the heating temperature/stirring time in the reactor of Embodiment 3-8 were 130°C/120 min respectively; the heating temperature/stirring time in the reactor of Embodiment 3-9 were 100°C/60 min respectively; the heating temperature/-stirring time in the reactor of Embodiment 3-10 were 100°C/90 min respectively; the heating temperature/stirring time in the reactor of Embodiment 3-11 were 100°C/150 min respectively; the heating temperature/stirring time in the reactor of Embodiment 3-12 were 100°C/180 min respectively, other conditions of Embodiments 3-1 to 3-12 were the same as those of Embodiment 1- 1.

Embodiments 4-1 to 4-7

Embodiments 4-1 to 4-4: Except that in the preparation process of lithium iron pyrophosphate ($Li_2FeP_2O_7$), the drying temperature/drying time in the drying step were 100°C/4h, 150°C/6h, 200°C/6h and 200°C/6h respectively; in the preparation process of lithium iron pyrophosphate ($Li_2FeP_2O_7$), the sintering temperature and sintering time in the sintering step were 700°C/6h, 700°C/6h, 700°C/6h and 600°C/6h respectively, other conditions were the same as those of Embodiment 1-7.

Embodiments 4-5 to 4-7: Except that the drying temperature/drying time in the drying step during the coating process were 150°C/6h, 150°C/6h and 150°C/6h respectively; in the sintering step during the coating process, the sintering temperature and sintering time were 600°C/4h, 600°C/6h and 800°C/8h respectively, other conditions were the same as those of Embodiment 1-12.

Comparative Embodiment 1-1

Preparation of manganese oxalate: 1149.3g manganese carbonate was added to the reactor, and 5 liters of deionized water and 1260.6g of oxalic acid dihydrate (based on $C_2H_2U_4 \cdot 2H_2O$, the same below). The reactor was heated to 80°C and the reaction mixture was stirred at 600 rpm for 6 h until the reaction was terminated (no bubbles were generated) to obtain a manganese oxalate suspension, then the suspension was filtered, the filter cake was oven-dried at 120°C, and then ground to obtain manganese oxalate dihydrate particles with a median particle size Dv50 of 100 nm.

Preparation of carbon-coated lithium manganese phosphate: 1789.6g of the manganese oxalate dihydrate particles obtained above, 369.4g of lithium carbonate (based on $Li_2CO_3$, the same below), 1150.1g of ammonium dihydrogen phosphate (based on $NH_4H_2PO_4$, the same below) and 31g of sucrose (based on $C_{12}H_{22}O_{11}$, the same below) were taken and added to 20 liters of deionized water, and the mixture was stirred for 10 h to mix evenly to obtain a slurry. The slurry was transferred to a spray drying device for spray drying and granulation, and dried at a set temperature of 250°C for 4 h to obtain a powder. In a protective atmosphere of nitrogen (90 vol%) + hydrogen (10 vol%), the above powder was sintered at 700°C for 4 h to obtain carbon-coated lithium manganese phosphate.

Embodiment 1-34

Except for using 689.5g of manganese carbonate and adding additional 463.3g of ferrous carbonate, other conditions were the same as those of Comparative Embodiment 1-1.

Embodiment 1-35

Other conditions were the same as those of Comparative Embodiment 1-1 except that 1148.9g of ammonium dihydrogen phosphate and 369.0g of lithium carbonate were used, and additional 1.6g of 60% dilute sulfuric acid was added.

Embodiment 1-36

Other conditions were the same as those of Comparative Embodiment 1-1 except that 689.5g of manganese carbonate, 1148.9g of ammonium dihydrogen phosphate and 369.0g of lithium carbonate were used, and additional 463.3g of ferrous carbonate and 1.6g of 60% dilute sulfuric acid were added.

Embodiment 1-37

The following additional steps were added: Preparation of lithium iron pyrophosphate powder: 9.52g of lithium carbonate, 29.9g of ferrous carbonate, 29.6g of ammonium dihydrogen phosphate and 32.5g of oxalic acid dihydrate were dissolved in 50ml of deionized water. The pH of the mixture was 5, and the reaction mixture was stirred for 2 h to fully react. The reacted solution was then heated to 80°C and maintained at this temperature for 4 h to obtain a suspension containing $Li_2FeP_2O_7$. The suspension was filtered, washed with deionized water, and dried at 120°C for 4 h to obtain a powder. The powder was sintered at 500°C in a nitrogen atmosphere for 4 h, and was naturally cooled to room temperature before grinding. The crystallinity of $Li_2FeP_2O_7$ was controlled to 5%. When preparing carbon-coated materials, the amount of $Li_2FeP_2O_7$ was 62.8 g. Except the above, other conditions were the same as those of Embodiment 1-36.

Embodiment 1-38

The following additional steps were added: Preparation of lithium iron phosphate suspension: 14.7g of lithium carbonate, 46.1g of ferrous carbonate, 45.8g of ammonium dihydrogen phosphate and 50.2g of oxalic acid dihydrate were dissolved in 500ml of deionized water, and then stirred for 6 h to make the mixture to react fully. The reacted solution was then heated to 120°C and maintained at this temperature for 6 h to obtain a suspension containing $LiFePO_4$. The sintering temperature was 600°C and the sintering time was 4h in the coating and sintering step during the preparation of lithium iron phosphate (LiFePOa) to control the crystallinity of $LiFePO_4$ to 8%, and when preparing carbon-coated materials, the amount of $LiFePO_4$ was 62.8g. Except the above, other conditions were the same as those of Embodiment 1-36.

Embodiment 1-39

Preparation of lithium iron pyrophosphate powder: 2.38g of lithium carbonate, 7.5g of ferrous carbonate, 7.4g of ammonium dihydrogen phosphate and 8.1g of oxalic acid dihydrate were dissolved in 50ml of deionized water. The pH of the mixture was 5, and the reaction mixture was stirred for 2 h to fully react. The reacted solution was then heated to 80°C and maintained at this temperature for 4 h to obtain a suspension containing $Li_2FeP_2O_7$. The suspension was filtered, washed with deionized water, and dried at 120°C for 4 h to obtain a powder. The powder was sintered at 500°C in a nitrogen atmosphere for 4 h, and then naturally cooled to room temperature and then ground to control the crystallinity of $Li_2FeP_2O_7$ to 5%.

Preparation of lithium iron phosphate suspension: 11.1g of lithium carbonate, 34.7g of ferrous carbonate, 34.4g of ammonium dihydrogen phosphate, 37.7g of oxalic acid dihydrate and 37.3g of sucrose (based on $C_{12}H_{22}O_{11}$, the same below) were dissolved in 1500 ml of deionized water and then stirred for 6 h to allow the mixture to fully react. The reacted solution was then heated to 120°C and maintained at this temperature for 6 h to obtain a suspension containing $LiFePO_4$.

15.7g of the obtained lithium iron pyrophosphate powder was added to the aforementioned lithium iron phosphate (LiFePOa) and sucrose suspension. During the preparation process, the sintering temperature was 600°C and the sintering time was 4h in the coating and sintering step to control the crystallinity of $LiFePO_4$ to 8%. Except the above, other conditions of Comparative Embodiment 7 were the same as those of Comparative Embodiment 4, and a positive electrode active material coated with amorphous lithium iron pyrophosphate, amorphous lithium iron phosphate, and carbon was obtained.

Embodiments (1-40) - (1-43)

Except that in the preparation process of lithium iron pyrophosphate ($Li_2FeP_2O_7$), the drying temperature/drying time in the drying step were 80°C/3h, 80°C/3h and 80°C/3h in Embodiments 1-40 to 1-42 respectively; in the preparation process of lithium iron pyrophosphate ($Li_2FeP_2O_7$), the sintering temperature and sintering time in the sintering step were 400°C/3h, 400°C/3h, 350°C/2h in Embodiments 1-40 to 1-42 respectively; the drying temperature/drying time in the drying step during the preparation of lithium iron phosphate ($LiFePO_4$) in Embodiment 1-43 were 80°C/3h; and in Embodiment 1-40 to 1-42, the dosages of $Li_2FeP_2O_7$/$LiFePO_4$ were 47.2g/15.7g, 15.7g/47.2g, 62.8g/0g, and 0g/62.8g respectively, other conditions were the same as those of Embodiment 1-7.

[Preparation of positive electrode plates], [Preparation of negative electrode plates], [Preparation of electrolyte solution], [Separator] and [Preparation of battery cells] in the above embodiments and comparative embodiments were all the same as those of Embodiment 1-1.

Table 42: Performance test results of Embodiments 1-1 to 1-33 and Comparative Embodiment 1-7

| Embodiment No. | Inner core | First coating layer | Second coating layer | Lattice change rate (%) | Li/Mn antisite defect concentration /% | Dissolution of Fe and Mn after cycling (ppm) | Surface oxygen valence | Gram capacity of button battery at 0.1C (mAh/g) | Average discharge, voltage of button battery (V) | Battery cell expansion rate after storage at 60°C for 30 d (%) | Number of cycles corresponding to 80% of capacity retention rate at 45°C |
|---|---|---|---|---|---|---|---|---|---|---|---|
| Embodiment 1-1 | $Li_{0.999}Mn_{0.60}Fe_{0.393}V_{0.004}C0_{0.003}P_{0.999}S_{0.001}O_4$ | 1% $Li_2Fe-P_2O_7$/ 3% $LiFePO_4$ | 2% carbon | 2.4 | 0.4 | 8 | -1.98 | 158.2 | 3.78 | 1.9 | 1328 |
| Embodiment 1-2 | $Li_{0.999}Mn_{0.60}Fe_{0.40}P_{0.999}S_{0.001}O_4$ | 0.8% $Li_2Fe-P_2O_7$/ 2.4% $LiFePO_4$ | 1% carbon | 6.6 | 1.2 | 63 | -1.97 | 148.9 | 3.75 | 6.4 | 804 |
| Embodiment 1-3 | $Li_{0.999}Mn_{0.60}Fe_{0.40}P_{0.999}S_{0.001}O_4$ | 1% $Li_2Fe-P_2O_7$/ 3% $LiFePO_4$ | 1% carbon | 6.5 | 1.1 | 48 | -1.97 | 148.5 | 3.74 | 5.3 | 918 |
| Embodiment 1-4 | $Li_{0.999}Mn_{0.60}Fe_{0.40}P_{0.999}S_{0.001}O_4$ | 1.2% $Li_2Fe-P_2O_7$/ 3.6% $LiFePO_4$ | 1% carbon | 6.5 | 0.8 | 32 | -1.97 | 147.3 | 3.73 | 4.8 | 968 |
| Embodiment 1-5 | $Li_{0.999}Mn_{0.60}Fe_{0.40}P_{0.999}S_{0.001}O_4$ | 1.4% $Li_2Fe-P_2O_7$/ 4.2% $LiFePO_4$ | 1% carbon | 6.5 | 0.7 | 20 | -1.98 | 146.8 | 3.73 | 3.6 | 1064 |
| Embodiment 1-6 | $Li_{0.999}Mn_{0.60}Fe_{0.40}P_{0.999}S_{0.001}O_4$ | 1.6% $Li_2Fe-P_2O_7$/ 4.8% $LiFePO_4$ | 1% carbon | 6.6 | 0.6 | 15 | -1.98 | 145.9 | 3.72 | 2.8 | 1189 |
| Embodiment 1-7 | $Li_{0.999}Mn_{0.60}Fe_{0.40}P_{0.999}S_{0.001}O_4$ | 1% $Li_2Fe-P_2O_7$/ 3% $LiFePO_4$ | 2% carbon | 6.5 | 1.0 | 42 | -1.97 | 147.5 | 3.73 | 4.8 | 968 |
| Embodiment 1-8 | $Li_{0.999}Mn_{0.60}Fe_{0.40}P_{0.999}S_{0.001}O_4$ | 1% $Li_2Fe-P_2O_7$/ 3% $LiFePO_4$ | - 4% carbon | 6.5 | 1.0 | 38 | -1.97 | 146.4 | 3.73 | 4.3 | 1012 |

(continued)

| Embodiment No. | Inner core | First coating layer | Second coating layer | Lattice change rate (%) | Li/Mn antisite defect concentration /% | Dissolution of Fe and Mn after cycling (ppm) | Surface oxygen valence | Gram capacity of button battery at 0.1C (mAh/g) | Average discharge voltage of button battery (V) | Battery cell expansion rate after storage at 60°C for 30 d (%) | Number of cycles corresponding to 80% of capacity retention rate at 45°C |
|---|---|---|---|---|---|---|---|---|---|---|---|
| Embodiment 1-9 | $Li_{0.999}Mn_{0.60}Fe_{0.40}P_{0.999}S_{0.001}O_4$ | 1% $Li_2FeP_2O_7$/3% $LiFePO_4$ | 5% carbon | 6.4 | 1.1 | 29 | -1.98 | 144.3 | 3.73 | 3.7 | 1108 |
| Embodiment 1-10 | $Li_{0.999}Mn_{0.60}Fe_{0.40}P_{0.999}S_{0.001}O_4$ | 1% $Li_2FeP_2O_7$/3% $LiFePO_4$ | 6% carbon | 1 6.4 | 1.1 | 18 | -1.98 | 142.1 | 3.73 | 2.8 | 1219 |
| Embodiment 1-11 | $Li_{0.999}Mn_{0.60}Fe_{0.40}P_{0.999}S_{0.001}O_4$ | 1.5% $Li_2FeP_2O_7$/2.5% $LiFePO_4$ | 2% carbon | 6.5 | 1.1 | 34 | -1.97 | 147.8 | 3.74 | 5.2 | 927 |
| Embodiment 1-12 | $Li_{0.999}Mn_{0.60}Fe_{0.40}P_{0.999}S_{0.001}O_4$ | 2% $Li_2FeP_2O_7$/2% $LiFePO_4$ | 2% carbon | 6.6 | 1.0 | 22 | -1.96 | 147.6 | 3.74 | 6.1 | 897 |
| Embodiment 1-13 | $Li_{0.999}Mn_{0.60}Fe_{0.40}P_{0.999}S_{0.001}O_4$ | 2.5% $Li_2FeP_2O_7$/1.5% $LiFePO_4$ | 2% carbon | 6.7 | 1.2 | 18 | -1.96 | 147.2 | 3.74 | 6.9 | 816 |
| Embodiment 1-14 | $Li_{0.999}Mn_{0.60}Fe_{0.40}P_{0.999}S_{0.001}O_4$ | 3% $Li_2FeP_2O_7$/1% $LiFePO_4$ | 2% carbon | 6.7 | 1.1 | 9 | -1.97 | 147.0 | 3.75 | 7.5 | 764 |
| Embodiment 1-15 | $Li_{0.999}Mn_{0.60}Zn_{0.40}P_{0.999}S_{0.001}O_4$ | 3% $Li_2FeP_2O_7$/1% $LiFePO_4$ | 2% carbon | 7.5 | 2.5 | 18 | -1.97 | 138.7 | 3.86 | 8.4 | 857 |
| Embodiment 1-16 | $Li_{0.993}Mn_{0.6}Ni_{0.393}Zn_{0.004}Ti_{0.003}P_{0.999}S_{0.001}O_4$ | 1% $Li_2FeP_2O_7$/3% $LiFePO_4$ | 2% carbon | 5.4 | 0.8 | 14 | -1.97 | 139.4 | 3.86 | 4.5 | 974 |

(continued)

| Embodiment No. | Inner core | First coating layer | Second coating layer | Lattice change rate (%) | Li/Mn antisite defect concentration /% | Dissolution of Fe and Mn after cycling (ppm) | Surface oxygen valence | Gram capacity of button battery at 0.1C (mAh/g) | Average discharge voltage of button battery (V) | Battery cell expansion rate after storage at 60°C for 30 d (%) | Number of cycles corresponding to 80% of capacity retention rate at 45°C |
|---|---|---|---|---|---|---|---|---|---|---|---|
| Embodiment 1-17 | $Li_{0.999}Mn_{0.60}Fe_{0.393}V_{0.007}P_{0.999}S_{0.001}O_4$ | 1% $Li_2Fe$-$P_2O_7$/ 3% $LiFePO_4$ | 2% carbon | 4.2 | 0.6 | 13 | -1.97 | 153.2 | 3.78 | 3.2 | 1241 |
| Embodiment 1-18 | $Li_{0.999}Mn_{0.60}Fe_{0.393}V_{0.004}Mg_{0.003}P_{0.999}S_{0.001}O_4$ | 1% $Li_2Fe$-$P_2O_7$/ 3% $LiFePO_4$ | 2% carbon | 2.6 | 0.5 | 10 | -1.97 | 155.6 | 3.80 | 2.7 | 1245 |
| Embodiment 1-19 | $LiMn_{0.60}Fe_{0.393}V_{0.004}Mg_{0.003}P_{0.999}N_{0.001}O_a$ | 1% $Li_2Fe$-$P_2O_7$/ 3% $LiFePO_4$ | 2% carbon | 2.3 | 0.5 | 9 | -1.98 | 157.6 | 3.80 | 2.1 | 1349 |
| Embodiment 1-20 | $Li_{1.001}Mn_{0.60}Fe_{0.393}V_{0.004}Mg_{0.003}P_{0.999}Si_{0.001}O_4$ | 1% $Li_2Fe$-$P_2O_7$/ 3% $LiFePO_4$ | 2% carbon | 2.4 | 0.7 | 11 | -1.98 | 157.4 | 3.80 | 2.4 | 1368 |
| Embodiment 1-21 | $Li_{1.001}Mn_{0.55}Fe_{0.40}V_{0.025}Mg_{0.025}P_{0.999}Si_{0.001}O_4$ | 1% $Li_2Fe$-$P_2O_7$/ 3% $LiFePO_4$ | 2% carbon | 2.2 | 0.5 | 8 | -1.98 | 158.4 | 3.72 | 2.0 | 1459 |
| Embodiment 1-22 | $Li_{1.001}Mn_{0.65}Fe_{0.25}V_{0.05}Mg_{0.05}P_{0.999}Si_{0.001}O_4$ | 1% $Li_2Fe$-$P_2O_7$/ 3% $LiFePO_4$ | 2% carbon | 2.5 | 0.8 | 12 | -1.98 | 156.9 | 3.83 | 2.8 | 1283 |

(continued)

| Embodiment No. | Inner core | First coating layer | Second coating layer | Lattice change rate (%) | Li/Mn antisite defect concentration /% | Dissolution of Fe and Mn after cycling (ppm) | Surface oxygen valence | Gram capacity of button battery at 0.1C (mAh/g) | Average discharge, voltage of button battery (V) | Battery cell expansion rate after storage at 60°C for 30 d (%) | Number of cycles corresponding to 80% of capacity retention rate at 45°C |
|---|---|---|---|---|---|---|---|---|---|---|---|
| Embodiment 1-23 | $Li_{1.004}Mn_{0.7}Fe_{0.z}V_{o.os}Mg_{o.o5}P_{0.99s}B_{0.002}O_a$ | 1% $Li_2Fe$ $P_2O_7$/ 3% $LiFePO_4$ | 2% car-bon | 2.6 | 0.8 | 11 | -1.98 | 157.1 | 3.83 | 2.5 | 1268 |
| Embodiment 1-24 | $Li_{1.000}Mn_{0.75}Fe_{0.15}V_{0.05}Mg_{3.05}P_{0.997}B_{0.003}O_4$ | 1% $Li_2Fe$ $P_2O_7$/ 3% $LiFePO_4$ | 2% car-bon | 2.6 | 0.8 | 10 | -1.98 | 157.4 | 3.83 | 2.6 | 1329 |
| Embodiment 1-25 | $Li_{1.002}Mn_{0.60}Fe_{0.393}V_{0.004}Mg_{0.003}P_{0.998}Si_{0.002}O_4$ | 1% $Li_2Fe$ $P_2O_7$/ 3% $LiFePO_4$ | 2% car-bon | 2.3 | 0.7 | 10 | -1.98 | 157.3 | 3.78 | 2.4 | 1369 |
| Embodiment 1-26 | $Li_{0.997}Mn_{0.80}Fe_{0.194}V_{0.003}Mg_{0.003}P_{0.997}S_{0.003}O_4$ | 1% $Li_2Fe$ $P_2O_7$/ 3% $LiFePO_4$ | 2% car-bon | 2.8 | 0.9 | 12 | -1.98 | 156.1 | 3.85 | 2.9 | 1128 |
| Embodiment 1-27 | $Li_{0.996}Mn_{0.60}Fe_{0.393}V_{0.004}Mg_{0.003}P_{0.996}S_{0.004}O_4$ | 1% $Li_2Fe$ $P_2O_7$/ 3% $LiFePO_4$ | 2% car-bon | 2.2 | 0.6 | 11 | -1.98 | 157.5 | 3.78 | 2.4 | 1394 |
| Embodiment 1-28 | $Li_{0.995}Mn_{0.9}Fe_{0.094}V_{0.003}Mg_{0.003}P_{0.995}S_{0.005}O_4$ | 1% $Li_2Fe$ $P_2O_7$/ 3% $LiFePO_4$ | 2% car-bon | 3.2 | 1.1 | 13 | -1.96 | 156.8 | 3.89 | 3.2 | 1089 |

| Embodiment No. | Inner core | First coating layer | Second coating layer | Lattice change rate (%) | Li/Mn antisite defect concentration /% | Dissolution of Fe and Mn after cycling (ppm) | Surface oxygen valence | Gram capacity of button battery at 0.1C (mAh/g) | Average discharge, voltage of button battery (V) | Battery cell expansion rate after storage at 60°C for 30 d (%) | Number of cycles corresponding to 80% of capacity retention rate at 45°C |
|---|---|---|---|---|---|---|---|---|---|---|---|
| Embodiment 1-29 | $Li_{0.994}Mn_{0.90}Fe_{0.094}V_{0.003}Mg_{0.003}P_{0.994}S_{0.006}O_4$ | 1% $Li_2Fe-P_2O_7$/ 3% $LiFePO_4$ | 2% carbon | 3.0 | 1.2 | 14 | -1.95 | 156.1 | 3.89 | 3.2 | 1038 |
| Embodiment 1-30 | $Li_{0.993}Mn_{0.90}Fe_{0.094}V_{0.003}Mg_{0.003}P_{0.993}S_{0.007}O_4$ | 1% $Li_2Fe-P_2O_7$/ 3% $LiFePO_4$ | 2% carbon | 2.8 | 1.4 | 16 | -1.95 | 155.8 | 3.89 | 3.1 | 948 |
| Embodiment 1-31 | $Li_{0.992}Mn_{0.90}Fe_{0.094}V_{0.003}Mg_{0.003}P_{0.992}S_{0.008}O_4$ | 1% $Li_2Fe-P_2O_7$/ 3% $LiFePO_4$ | 2% carbon | 2.6 | 1.4 | 17 | -1.94 | 155.4 | 3.89 | 3.0 | 917 |
| Embodiment 1-32 | $Li_{0.991}Mn_{0.90}Fe_{0.094}V_{0.003}Mg_{0.003}P_{0.991}S_{0.009}O_4$ | 1% $Li_2Fe-P_2O_7$/ 3% $LiFePO_4$ | 2% carbon | 2.4 | 1.2 | 18 | -1.94 | 154.8 | 3.89 | 2.8 | 897 |
| Embodiment 1-33 | $Li_{0.9}Mn_{0.90}Fe_{0.094}V_{0.003}Mg_{0.003}P_{0.9}S_{0.1}O_4$ | 1% $Li_2Fe-P_2O_7$/ 3% $LiFePO_4$ | 2% carbon | 2.1 | 0.9 | 20 | -1.94 | 154.5 | 3.89 | 2.7 | 879 |
| Comparative Embodiment 1-1 | $LiMnPO_4$ | - | - 1% carbon | 11.4 | 3.2 | 2060 | -1.55 | 125.6 | 4.02 | 48.6 | 185 |
| Embodiment 1-34 | $LiMn_{0.60}Fe_{0.40}PO_4$ | - | - 1% carbon | 8.7 | 2.8 | 1597 | -1.76 | 134.8 | 3.76 | 42.5 | 358 |
| Embodiment 1-35 | $Li_{0.999}MnP_{0.999}S_{0.001}O_4$ | - | - 1% carbon | 9.8 | 2.5 | 1895 | -1.66 | 128.6 | 4.05 | 45.5 | 267 |

| Embodiment No. | Inner core | First coating layer | Second coating layer | Lattice change rate (%) | Li/Mn antisite defect concentration /% | Dissolution of Fe and Mn after cycling (ppm) | Surface oxygen valence | Gram capacity of button battery at 0.1C (mAh/g) | Average discharge, voltage of button battery (V) | Battery cell expansion rate after storage at 60°C for 30 d (%) | Number of cycles corresponding to 80% of capacity retention rate at 45°C |
|---|---|---|---|---|---|---|---|---|---|---|---|
| Embodiment 1-36 | $Li_{0.999}Mn_{0.60}Fe_{0.40}P_{0.999}S_{0.001}O_4$ | - | - 1% carbon | 6.7 | 1.8 | 1279 | -1.83 | 140.5 | 3.78 | 38.5 | 417 |
| Embodiment 1-37 | $Li_{0.999}Mn_{0.60}Fe_{0.40}P_{0.999}S_{0.001}O_4$ | 4% amorphous $Li_2FeP_2O_7$ | 1% carbon | 6.5 | 1.8 | 208 | -1.90 | 140.3 | 3.73 | 12.5 | 519 |
| Embodiment 1-38 | $Li_{0.999}Mn_{0.60}Fe_{0.40}P_{0.999}S_{0.001}O_4$ | 4% amorphous $LiFePO_4$ | 1% carbon | 6.6 | 1.8 | 318 | -1.91 | 140.2 | 3.74 | 11.5 | 528 |
| Embodiment 1-39 | $Li_{0.999}Mn_{0.60}Fe_{0.40}P_{0.999}S_{0.001}O_4$ | 1% amorphous $Li_2FeP_2O_7$ +3% amorphous $LiFePO_4$ | 1% carbon | 6.6 | 1.8 | 174 | -1.90 | 140.1 | 3.75 | 8.6 | 682 |
| | Notes: 1) In Embodiments 1-1 to 1-33, $Li_2FeP_2O_7$ and $LiFePO_4$ both had crystallinity of 100%; 2) in the embodiments, the crystallinity of $Li_2FeP_2O_7$ was 5%, and the crystallinity of LiFeP04 was 8%. | | | | | | | | | | |

159

EP 4 485 653 A1

Based on the above embodiments and comparative embodiments, it can be seen that the existence of the first coating layer is conducive to reducing the Li/Mn anti-site defect concentration of the obtained material and the dissolution of Fe and Mn after cycling, increasing the button battery gram capacity of the battery cell, and improving the safety performance and cycling performance of the battery cell. When other elements are doped at the Mn site and phosphorus site respectively, the lattice change rate, anti-site defect concentration and Fe and Mn dissolution of the resulting material can be significantly reduced, the gram capacity of the battery cell can be increased, and the safety performance and cycling performance of the battery cell can be improved.

Based on Embodiments 1-1 to 1-6, it can be seen that as the amount of the first coating layer increases from 3.2% to 6.4%, the Li/Mn anti-site defect concentration of the obtained material gradually decreases, and the dissolution amounts of Fe and Mn gradually decrease after cycling. The safety performance of the corresponding battery cells and the cycling performance at 45°C are also improved, but the discharge capacity per gram is slightly reduced. Optionally, when the total amount of the first coating layer is 4-5.6wt%, the corresponding battery cell has the best overall performance.

According to Embodiment 1-3 and Embodiments 1-7 to 1-10, it can be seen that as the amount of the second coating layer increases from 1% to 6%, the Li/Mn anti-site defect concentration of the resulting material gradually decreases, the dissolution of Fe and Mn gradually decreases after cycling, the safety performance and the cycling performance at 45°C of the corresponding battery cell are also improved, but the button battery gram capacity is slightly reduced. Optionally, when the total amount of the second coating layer is 3-5wt%, the corresponding battery cell has the best overall performance.

Based on Embodiments 1-11 to 1-15 and Embodiments 1-37 and 1-38, it can be seen that when $Li_2FeP_2O_7$ and $LiFePO_4$ coexist in the first coating layer, especially when the weight ratio of $Li_2FeP_2O_7$ to $LiFePO_4$ is 1:3 to 3:1, and especially 1:3 to 1:1, the improvement in battery cell performance is more obvious.

Table 43 Performance test results of Embodiments 2-1 to 2-4

| Embodiment No. | First coating layer | Pyrophosphate and phosphate crystallinity[1] | Lattice change rate (%) | Li/Mn antisite defect concentration/ % | Dissolution of Fe and Mn after cycling (ppm) | Surface oxygen valence | Capacity of button battery at 0.1C (mAh/g) | Average discharge voltage of button battery (V) | Battery cell expansion rate after storage at 60°C for 30 d (%) | Cycling capacity retention rate at 45°C |
|---|---|---|---|---|---|---|---|---|---|---|
| Embodiment 2-1 | 1% $Li_2Fe$-$P_2O_7$/3 % $LiFePO_4$ | 30% | 6.3 | 1.9 | 147 | -1.88 | 145.2 | 3.72 | 5.6 | 698 |
| Embodiment 2-2 | 1% $Li_2Fe$-$P_2O_7$/3 % $LiFePO_4$ | 50% | 4.7 | 1.2 | 97 | -1.89 | 149.2 | 3.74 | 4.7 | 869 |
| Embodiment 2-3 | 1% $Li_2Fe$-$P_2O_7$/3 % $LiFePO_4$ | 70% | 3.5 | 0.8 | 29 | -1.91 | 151.3 | 3.75 | 3.8 | 1027 |
| Embodiment 2-4 | 1% $Li_2Fe$-$P_2O_7$/3 % $LiFePO_4$ | 100% | 2.4 | 0.4 | 8 | -1.98 | 158.2 | 3.79 | 1.9 | 1328 |
| | [1]: refers the crystallinity of $Li_2FeP_2O_7$ and $LiFePO_4$ being 30%, 50%, 70% and 100% respectively. | | | | | | | | | |

It can be seen from Table 43 that as the crystallinity of pyrophosphate and phosphate in the first coating layer gradually increases, the lattice change rate, Li/Mn anti-site defect concentration and Fe and Mn dissolution of the corresponding material gradually decrease, the button battery capacity of the battery cells gradually increases, and the safety performance and cycling performance also gradually improve.

Table 44 Performance test results of Embodiments 3-1 to 3-12

| Embodiment No. | Types and amounts of doping elements | Reaction temperature/°C | Stirring time/min | Lattice change rate (%) | Li/Mn antisite defect concentration /% | Dissolution of Fe and Mn after cycling (ppm) | Surface oxygen valence | Capacity of button battery at 0.1C (mAh/g) | Average discharge voltage of button battery (V) | Battery cell expansion rate after storage at 60°C for 30 d (%) | Number of cycles for 80% of capacity retention rate at 45°C |
|---|---|---|---|---|---|---|---|---|---|---|---|
| Embodiment 3-1 | $Li_{0.999}Mn_{0.60}Fe_{0.393}V_{0.004}Co_{0.003}P_{0.999}S_{0.001}O_4$ | 60 | 120 | 5.6 | 2.4 | 49 | -1.98 | 155.2 | 3.67 | 5.6 | 1102 |
| Embodiment 3-2 | $Li_{0.999}Mn_{0.60}Fe_{0.393}V_{0.004}Co_{0.003}P_{0.999}S_{0.001}O_4$ | 70 | 120 | 4.8 | 1.9 | 37 | -1.98 | 155.7 | 3.69 | 4.7 | 1203 |
| Embodiment 3-3 | $Li_{0.999}Mn_{0.60}Fe_{0.393}V_{0.004}C_{00.003}P_{0.999}S_{0.001}O_4$ | 80 | 120 | 3.7 | 1.3 | 28 | -1.98 | 156.4 | 3.72 | 3.8 | 1275 |
| Embodiment 3-4 | $Li_{0.999}Mn_{0.60}Fe_{0.393}V_{0.004}C_{00.003}P_{0.999}S_{0.001}O_4$ | 90 | 120 | 2.9 | 1.1 | 17 | -1.98 | 157.8 | 3.75 | 3.1 | 1305 |
| Embodiment 3-5 | $Li_{0.999}Mn_{0.60}Fe_{0.393}V_{0.004}Co_{0.003}P_{0.999}S_{0.001}O_4$ | 100 | 120 | 2.5 | 0.5 | 9 | -1.98 | 158.5 | 3.78 | 2.4 | 1327 |
| Embodiment 3-6 | $Li_{0.999}Mn_{0.60}Fe_{0.393}V_{0.004}C_{00.003}P_{0.999}S_{0.001}O_4$ | 110 | 120 | 2.8 | 1.2 | 19 | -1.98 | 156.7 | 3.73 | 3.6 | 1257 |
| Embodiment 3-7 | $Li_{0.999}Mn_{0.60}Fe_{0.393}V_{0.004}C_{00.003}P_{0.999}S_{0.001}O_4$ | 120 | 120 | 3.7 | 2.1 | 38 | -1.98 | 154.8 | 3.69 | 4.8 | 1179 |

| Embodiment No. | Types and amounts of doping elements | Reaction temperature/°C | Stirring time/min | Lattice change rate (%) | Li/Mn antisite defect concentration /% | Dissolution of Fe and Mn after cycling (ppm) | Surface oxygen valence | Capacity of button battery at 0.1C (mAh/g) | Average discharge voltage of button battery (V) | Battery cell expansion rate after storage at 60°C for 30 d (%) | Number of cycles for 80% of capacity retention rate at 45°C |
|---|---|---|---|---|---|---|---|---|---|---|---|
| Embodiment 3-8 | $Li_{0.999}Mn_{0.60}Fe_{0.393}V_{0.004}C_{00.003}P_{0.999}S_{0.001}O_4$ | 130 | 120 | 4.5 | 3.4 | 46 | -1.98 | 153.7 | 3.64 | 6.3 | 986 |
| Embodiment 3-9 | $Li_{0.999}Mn_{0.60}Fe_{0.393}V_{0.004}C_{00.003}P_{0.999}S_{0.001}O_4$ | 100 | 60 | 4.9 | 3.1 | 38 | -1.98 | 155.4 | 3.76 | 4.9 | 1021 |
| Embodiment 3-10 | $Li_{0.999}Mn_{0.60}Fe_{0.393}V_{0.004}C_{00.003}P_{0.999}S_{0.001}O_4$ | 100 | 90 | 4.1 | 2.5 | 27 | -1.98 | 156.3 | 3.77 | 4.2 | 1097 |
| Embodiment 3-11 | $Li_{0.999}Mn_{0.60}Fe_{0.393}V_{0.004}C_{00.003}P_{0.999}S_{0.001}O_4$ | 100 | 150 | 3.5 | 1.1 | 15 | -1.98 | 157.8 | 3.79 | 3.1 | 1184 |
| Embodiment 3-12 | $Li_{0.999}Mn_{0.60}Fe_{0.393}V_{0.004}C_{00.003}P_{0.999}S_{0.001}O_4$ | 100 | 180 | 2.5 | 0.5 | 11 | -1.98 | 158.1 | 3.79 | 2.4 | 1297 |
| Note | 1. The temperature and stirring time in the reactor are parameters during the preparation of doped manganese oxalate (i.e., step (1)). | | | | | | | | | | |

It can be seen from Table 44 that by adjusting the reaction temperature and reaction time in the reactor during the preparation of manganese oxalate particles, various properties of the positive electrode material described in the present application can be further improved. For example, as the reaction temperature gradually increases from 60°C to 130°C, the lattice change rate and Li/Mn anti-site defect concentration first decrease and then increase, and the corresponding metal dissolution and safety performance after cycles also show similar rules, while the button battery capacity and cycling performance first increase and then decrease as the temperature increases. By controlling the reaction temperature unchanged and adjusting the reaction time, a similar pattern can also be presented.

Table 45 Performance test results of Embodiments 4-1 to 4-7 and Embodiments 1-40 to 1-43

| Embodiment No. | Li$_2$FeP$_2$O$_7$: LiFePO$_4$ (weight ratio) | Drying temperature (°C) | Drying time (h) | Sintering temperature (°C) | Sintering time (h) | Lattice spacing of the first coating layer pyrophosphate (nm) | Included angle of the first coating layer pyrophosphate (°) | Lattice spacing of the first coating layer phosphate (nm) | Included angle of the first coating layer phosphate (°) | Lattice change rate (%) | Li/Mn antisite defect concentration/% | Surface oxygen valence | Capacity of button battery at 0.1C (mAh/g) | Average discharge voltage of button battery (V) | Battery cell expansion rate after storage at 60°C for 30 d (%) | Number of cycles for 80% of capacity retention rate at 45°C |
|---|---|---|---|---|---|---|---|---|---|---|---|---|---|---|---|---|
| Embodiment 4-1 | 1:3 | 100 | 4 | 700 | 6 | 0.303 | 29.496 | 0.348 | 25.562 | 2.9 | 0.6 | -1.97 | 155.4 | 3.71 | 3.4 | 1183 |
| Embodiment 4-2 | 1:3 | 150 | 6 | 700 | 6 | 0.303 | 29.496 | 0.348 | 25.562 | 2.6 | 0.6 | -1.98 | 157.8 | 3.78 | 2.4 | 1347 |
| Embodiment 4-3 | 1:3 | 200 | 6 | 700 | 6 | 0.303 | 29.496 | 0.348 | 25.562 | 2.7 | 0.6 | -1.98 | 156.5 | 3.73 | 3.1 | 1277 |
| Embodiment 4-4 | 1:3 | 200 | 6 | 600 | 6 | 0.303 | 29.496 | 0.348 | 25.562 | 2.9 | 1.1 | -1.95 | 153.8 | 3.69 | 3.9 | 984 |
| Embodiment 4-5 | 1:1 | 150 | 6 | 600 | 4 | 0.303 | 29.496 | 0.348 | 25.562 | 2.8 | 1.2 | -1.94 | 155.5 | 3.71 | 3.5 | 895 |
| Embodiment 4-6 | 1:1 | 150 | 6 | 600 | 6 | 0.303 | 29.496 | 0.348 | 25.562 | 2.6 | 0.8 | -1.95 | 156.3 | 3.72 | 3.1 | 963 |
| Embodiment 4-7 | 1:1 | 150 | 6 | 800 | 8 | 0.303 | 29.496 | 0.348 | 25.562 | 2.5 | 0.4 | -1.97 | 156.9 | 3.74 | 2.7 | 1043 |
| Embodiment 1-40 | 1:3 | 80 | 3 | 400 | 3 | - | - | - | - | 3.9 | 1.8 | -1.91 | 148.0 | 3.67 | 9.4 | 779 |

(continued)

| Embodiment No. | $Li_2FeP_2O_7$:$LiFePO_4$ (weight ratio) | Drying temperature (°C) | Drying time (h) | Sintering temperature (°C) | Sintering time (h) | Lattice spacing of the first coating layer pyrophosphate (nm) | Included angle of the first coating layer pyrophosphate (°) | Lattice spacing of the first coating layer phosphate (nm) | Included angle of the first coating layer phosphate (°) | Lattice change rate (%) | Li/Mn antisite defect concentration/% | Surface oxygen valence | Capacity of button battery at 0.1C (mAh/g) | Average discharge voltage of button battery (V) | Battery cell expansion rate after storage at 60°C for 30 d (%) | Number of cycles for 80% of capacity retention rate at 45°C |
|---|---|---|---|---|---|---|---|---|---|---|---|---|---|---|---|---|
| Embodiment 1-41 | 1:1 | 80 | 3 | 400 | 3 | - | - | - | - | 3.6 | 1.6 | -1.93 | 149.4 | 3.70 | 6.8 | 683 |
| Embodiment 1-42 | $Li_2FeP_2O_7$ alone | 80 | 3 | 350 | 2 | - | - | - | - | 3.7 | 1.7 | -1.86 | 147.5 | 3.68 | 11.5 | 385 |
| Embodiment 1-43 | $LiFePO_4$ alone | 80 | 3 | - | - | - | - | - | - | 3.4 | 1.4 | -1.93 | 150.3 | 3.72 | 4.7 | 526 |

As can be seen from Table 45, when preparing lithium iron pyrophosphate by the method of the present application, by adjusting the drying temperature/time and sintering temperature/time during the preparation process, the properties of the obtained material can be improved, thereby improving the performance of the battery cell. It can be seen from Embodiments 1-40 to 1-43 that when the drying temperature during the preparation of lithium iron pyrophosphate is lower than 100°C or the temperature of the sintering step is lower than 400°C, the desired $Li_2FeP_2O_7$ of the present application will not be obtained, thereby failing to improve the performance of the material and the performance of battery cells containing the resulting material.

It should be noted that, without conflict, embodiments in the present application and features in the embodiments may be combined together.

The above descriptions are only used to illustrate the technical solutions of the present application, and are not intended to limit the present application. For those skilled in the art, the present application may have various modifications and changes. Any modification, equivalent replacement, improvement, etc. made within the spirit and principle of the present application shall fall within the scope of protection of the present application.

**Claims**

1.  A battery, comprising:

    a box, wherein an accommodating cavity is provided within the box, and the accommodating cavity comprises a top wall and a bottom wall which are oppositely arranged in a vertical direction;
    a battery cell, wherein the battery cell is provided within the accommodating cavity, and comprises an electrode assembly and an electrode terminal, wherein the electrode assembly is electrically connected to the electrode terminal, the battery cell is fixed within the accommodating cavity, and the electrode terminal is arranged towards the bottom wall of the accommodating cavity.

2.  The battery according to claim 1, wherein the battery cell has a first wall and a second wall which are connected, wherein the first wall is the wall with the largest area in the battery cell, and the second wall and the first wall are arranged to intersect.

3.  The battery according to claim 2, wherein the electrode terminal is provided on the first wall.

4.  The battery according to claim 3, wherein there are a plurality of battery cells which are arranged in a first direction, and in the first direction, each of the battery cells is provided with a first surface arranged opposite to the first wall, and the first surface is provided with an avoidance groove, wherein the avoidance groove of one of two adjacent battery cells is configured to accommodate the electrode terminal of the other battery cell, and the first direction is perpendicular to the first wall.

5.  The battery according to claim 2, wherein the electrode terminal is provided on the second wall.

6.  The battery according to claim 5, wherein the battery cell comprises two first walls which are oppositely arranged and two second walls which are oppositely arranged, and at least two electrode terminals are provided; and the at least two electrode terminals are provided on the same second wall; or each of the second walls is provided with at least one of the electrode terminals.

7.  The battery according to claim 2, wherein the first wall is formed in a cylindrical shape.

8.  The battery according to claim 7, wherein two axial ends of the first wall are both provided with the second wall, and at least one of the second walls is provided with the electrode terminal.

9.  The battery according to claim 8, wherein one of the second walls is provided with an electrode terminal that is exposed, the electrode assembly comprises a positive electrode plate and a negative electrode plate, one of the positive electrode plate and the negative electrode plate is electrically connected to the electrode terminal, and the other of the positive electrode plate and the negative electrode plate is electrically connected to the first wall or the other second wall.

10. The battery according to claim 1, wherein at least one of the battery cells is a pouch battery cell.

11. The battery according to any one of claims 1-10, wherein the battery cell further comprises a pressure relief mechanism, and the pressure relief mechanism and the electrode terminal are provided on the same wall of the battery cell.

12. The battery according to any one of claims 1-10, wherein the battery cell further comprises a pressure relief mechanism, and the pressure relief mechanism and the electrode terminal are respectively provided on two walls of the battery cell.

13. The battery according to any one of claims 1-12, wherein the box comprises a main body and a bottom cover provided at the bottom of the main body, and the bottom cover and the main body are sealingly connected to each other and together form the accommodating cavity which is closed.

14. The battery according to claim 13, wherein the wall of the bottom cover facing the battery cell constitutes the bottom wall of the accommodating cavity.

15. The battery according to claim 13 or 14, wherein the bottom cover is detachably connected to the bottom of the main body.

16. The battery according to any one of claims 13-15, wherein the bottom cover has a feature surface facing the accommodating cavity, and the feature surface is configured as a plane.

17. The battery according to any one of claims 1-16, wherein a carrying member is provided at the top of the box, and the battery cell is provided on the surface of the carrying member.

18. The battery according to claim 17, wherein the wall of the carrying member facing the battery cell constitutes the top wall of the accommodating cavity.

19. The battery according to claim 17 or 18, wherein the minimum thickness H of the carrying member and the weight M1 of the battery satisfy: $0.0002mm/kg < H/M1 \leq 0.2mm/kg$.

20. The battery according to any one of claims 17-19, wherein the carrying member is configured to define the accommodating cavity, and the battery cell is suspended from the carrying member.

21. The battery according to claim 20, wherein the battery cell is bonded to the carrying member.

22. The battery according to any one of claims 17-21, wherein the outer surface of the battery cell facing the carrying member is a first outer surface, and the electrode terminal is arranged on the outer surface of the battery cell other than the first outer surface.

23. The battery according to claim 22, wherein the battery cell has a second outer surface provided opposite to the first outer surface, and the electrode terminal is arranged on the second outer surface.

24. The battery according to any one of claims 17-23, wherein there are a plurality of battery cells which are arranged in a second direction perpendicular to the vertical direction; and
the carrying member is connected to the top walls of the plurality of battery cells, the battery cells are located below the carrying member, and the relationship between the size N of the carrying member in the vertical direction and the weight M2 of the battery cell satisfies: $0.04mm/kg \leq N/M2 \leq 100mm/kg$.

25. The battery according to claim 24, wherein a hollow cavity is provided inside the carrying member.

26. The battery according to claim 24, wherein the hollow cavity is configured to accommodate a heat exchange medium to adjust the temperature of the battery cell.

27. The battery according to any one of claims 17-26, wherein in the vertical direction, the surface of the carrying member away from the battery cell is provided with a reinforcing rib.

28. The battery according to any one of claims 17-27, wherein the carrying member has a carrying surface facing the accommodating cavity, and the carrying surface is configured as a plane.

29. The battery according to claim 28, wherein the carrying member has a carrying portion and a connecting portion, the connecting portion encloses and is connected to the edge of the carrying portion, the carrying portion is configured to define the accommodating cavity, and the connecting portion is connected to the portion of the box other than the carrying member; and

wherein the inner surface of the carrying portion facing the accommodating cavity is configured to form the carrying surface.

30. The battery according to claim 29, wherein the carrying portion protrudes relative to the connecting portion in a direction facing away from the accommodating cavity.

31. The battery according to any one of claims 17-30, wherein the box comprises a bottom cover and a frame, the frame encloses to form an enclosed space configured to be open at two ends in the vertical direction, the bottom cover and the carrying member respectively cover the two ends of the enclosed space that are opposite to each other in the vertical direction, and the bottom cover, the frame and the carrying member together enclose to form the accommodating cavity.

32. The battery according to any one of claims 1-31, wherein the battery cell is placed upside down within the box with an end cover facing the bottom wall, the end cover is provided with a pressure relief mechanism and the electrode terminal, and the pressure relief mechanism and the electrode terminal are both arranged to face the bottom wall.

33. The battery according to any one of claims 1-32, further comprising a connecting plate and a connector, wherein the connecting plate is arranged to protrude in a horizontal direction on one side of the box, the connecting plate and the bottom wall form an accommodating portion in the vertical direction, the connector is provided within the accommodating portion and is connected to the connecting plate, and the connector is electrically connected to the battery cell.

34. The battery according to any one of claims 1-33, wherein the battery further comprises a protective assembly arranged between the battery cell and the bottom wall to support and carry the battery cell.

35. The battery according to claim 34, further comprising a bus component configured to be electrically connected to the electrode terminals of at least two battery cells, wherein the protective assembly is arranged between the bottom wall and the bus component, and the protective assembly is configured to insulate the battery cells from the bottom wall.

36. The battery according to claim 34 or 35, wherein the protective assembly comprises a protective strip abutting against the battery cell.

37. The battery according to claim 36, wherein the protective strip is fixedly connected to the battery cell and/or the box.

38. The battery according to claim 37, wherein the protective strip is bonded to the battery cell and/or the box.

39. The battery according to any one of claims 36-38, wherein there are a plurality of protective strips which are arranged spaced apart from each other in the second direction and extend in the first direction, and the first direction, the second direction and the vertical direction are perpendicular to one another.

40. The battery according to any one of claims 36-39, wherein the protective assembly further comprises a main plate, the protective strip is connected to the main plate, and the main plate is located between the protective strip and the bottom wall.

41. The battery according to claim 40, wherein the main plate abuts against the bottom wall.

42. The battery according to claim 41, wherein the main plate is fixedly connected to the bottom wall.

43. The battery according to any one of claims 40-42, wherein the main plate is integrally formed with or detachably connected to the protective strip.

44. The battery according to any one of claims 36-43, wherein the end cover of the battery cell comprises a functional region and shoulders, the functional region is provided with the electrode terminal, the shoulders are located on two sides of the functional region in the second direction, the battery cell abuts against the protective strip by means of the shoulders, and the second direction is perpendicular to the vertical direction.

45. The battery according to any one of claims 36-44, wherein in the vertical direction, the thickness of the protective strip is greater than the extension height of the part of the electrode terminal that is exposed to the battery cell.

46. The battery according to any one of claims 36-45, wherein the protective strip abuts against the electrode terminal, or the protective strip is arranged spaced apart from the electrode terminal.

47. The battery according to any one of claims 39-46, wherein an orthographic projection of the electrode terminal on the bottom wall is located between orthographic projections of adjacent protective strips on the bottom wall.

48. The battery according to any one of claims 39-47, wherein the electrode terminals of two adjacent battery cells are electrically connected through a bus component, and in the second direction, the extension length of one of two adjacent protective strips is less than that of the other to form an avoidance notch, and the avoidance notch is configured to avoid the bus component.

49. The battery according to any one of claims 39-48, wherein the battery cell further comprises a pressure relief mechanism arranged on the same side as the electrode terminal, and an orthographic projection of the pressure relief mechanism on the bottom wall is located between orthographic projections of adjacent protective strips on the bottom wall.

50. The battery according to any one of claims 32-49, wherein there is a first distance H1 between the end cover of the battery cell and the bottom wall in the vertical direction, and the first distance H1 satisfies 2mm < H1 < 30mm.

51. The battery according to claim 50, wherein a ratio H1/M2 of the first distance H1 to the weight M2 of a single battery cell satisfies 0.2mm/Kg < H1/M2 < 50mm/Kg.

52. The battery according to any one of claims 1-51, wherein the battery cell further comprises a battery casing, the electrode assembly is accommodated within the battery casing, the battery casing is provided with a pressure relief mechanism, and the pressure relief mechanism is integrally formed with the battery casing.

53. The battery according to claim 52, wherein the battery casing comprises a non-weak region and a weak region which are integrally formed, the battery casing is provided with a grooved portion, the non-weak region is formed around the grooved portion, the weak region is formed at the bottom of the grooved portion, the weak region is configured to be damaged when an internal pressure of the battery cell is released, and the pressure relief mechanism comprises the weak region.

54. The battery according to claim 53, wherein the average grain size of the weak region is defined as $S_1$, and the average grain size of the non-weak region is defined as $S_2$, satisfying: $0.05 \leq S_1/S_2 \leq 0.9$.

55. The battery according to claim 54, wherein the minimum thickness of the weak region is defined as $A_1$ and satisfies: $1 \leq A_1/S_1 \leq 100$.

56. The battery according to any one of claims 53-55, wherein the minimum thickness of the weak region is defined as $A_1$, and the hardness of the weak region is defined as $B_1$, satisfying: $SHBW/mm \leq B_1/A_1 \leq 10000\ HBW/mm$.

57. The battery according to any one of claims 53-56, wherein the hardness of the weak region is defined as $B_1$, and the hardness of the non-weak region is defined as $B_2$, satisfying: $1 < B_1/B_2 \leq 5$.

58. The battery according to any one of claims 53-57, wherein the minimum thickness of the weak region is defined as $A_1$, and the minimum thickness of the non-weak region is defined as $A_2$, satisfying: $0.05 \leq A_1/A_2 \leq 0.95$.

59. The battery according to any one of claims 1-58, wherein the electrode assembly comprises a positive electrode plate and a negative electrode plate, the positive electrode plate and/or the negative electrode plate comprises a current collector and an active material layer, the current collector comprises a supporting layer and a conductive layer, the supporting layer is configured to carry the conductive layer, and the conductive layer is configured to carry the active material layer.

**60.** The battery according to claim 59, wherein the conductive layer is arranged on at least one side of the supporting layer in the thickness direction of the supporting layer.

**61.** The battery according to claim 59 or 60, wherein the room temperature film resistance Rs of the conductive layer satisfies: $0.016\Omega/\square \leq R_S \leq 420\Omega/\square$.

**62.** The battery according to any one of claims 59-61, wherein the conductive layer is made of at least one material selected from aluminum, copper, titanium, silver, a nickel-copper alloy, and an aluminum-zirconium alloy.

**63.** The battery according to any one of claims 59-62, wherein the material of the supporting layer comprises one or more of a polymer material and a polymer-based composite material.

**64.** The battery according to any one of claims 59-63, wherein the thickness d1 of the supporting layer and the light transmittance k of the supporting layer satisfy:

when $12\mu m \leq d1 \leq 30\mu m$, $30\% \leq k \leq 80\%$; or
when $8\mu m \leq d1 < 12\mu m$, $40\% \leq k \leq 90\%$; or
when $1\mu m \leq d1 < 8\mu m$, $50\% \leq k \leq 98\%$.

**65.** The battery according to any one of claims 1-64, wherein the electrode assembly comprises a positive electrode plate, the positive electrode plate comprises a positive electrode current collector and a positive electrode active material layer coated on a surface of the positive electrode current collector, the positive electrode active material layer comprises a positive electrode active material, and the positive electrode active material has an inner core and a shell coating the inner core, wherein the inner core comprises at least one of a ternary material, $dLi_2MnO_3\cdot(1-d)LiMO_2$ and $LiMPO_4$, where $0 < d < 1$, and the M comprises one or more selected from Fe, Ni, Co, and Mn; and
the shell contains a crystalline inorganic substance, the full width at half maximum of a main peak measured by X-ray diffraction of the crystalline inorganic substance is 0-3°, and the crystalline inorganic substance comprises one or more selected from a metal oxide and an inorganic salt.

**66.** The battery according to claim 65, wherein the shell comprises at least one of the metal oxide and the inorganic salt, and carbon.

**67.** The battery according to any one of claims 1-66, wherein the electrode assembly comprises a positive electrode plate, the positive electrode plate comprises a positive electrode current collector and a positive electrode active material layer coated on a surface of the positive electrode current collector, the positive electrode active material layer comprises a positive electrode active material, and the positive electrode active material has $LiMPO_4$, where the M comprises Mn, and a non-Mn element, and the non-Mn element satisfies at least one of the following conditions:

an ionic radius of the non-Mn element is defined as a, an ionic radius of the manganese element is defined as b, and |a-b|/b is not greater than 10%;
a valence change voltage of the non-Mn element is defined as U, where 2V < U < 5.5V;
the chemical activity of a chemical bond formed by the non-Mn element and O is not less than the chemical activity of a P-O bond; and
the highest valence of the non-Mn element is not greater than 6.

**68.** The battery according to claim 67, wherein the non-Mn element comprises one or both of a first doping element and a second doping element, the first doping element is doped at manganese site, and the second doping element is doped at phosphorus site.

**69.** The battery according to claim 68, wherein the first doping element satisfies at least one of the following conditions:

an ionic radius of the first doping element is defined as a, an ionic radius of the manganese element is defined as b, and |a-b|/b is not greater than 10%; and
a valence change voltage of the first doping element is defined as U, where 2V < U < 5.5V.

**70.** The battery according to claim 68, wherein the second doping element satisfies at least one of the following conditions:

the chemical activity of a chemical bond formed by the second doping element and O is not less than the chemical activity of a P-O bond; and

the highest valence of the second doping element is not greater than 6.

71. The battery according to any one of claims 67-70, wherein the positive electrode active material further has a coating layer.

72. The battery according to claim 71, wherein the coating layer comprises carbon.

73. The battery according to claim 72, wherein the carbon in the coating layer is a mixture of SP2-form carbon and SP3-form carbon.

74. The battery according to claim 73, wherein a molar ratio of the SP2-form carbon to the SP3-form carbon is any value in a range of 0.1-10.

75. An electrical apparatus, comprising the battery according to any one of claims 1-74, the battery being configured to supply electric energy.

1000

FIG. 1

100

FIG. 2

100

102

10

20 20

101

10a

30

**FIG. 3**

20    214

214b

214a

212

21

213

23    23

221a    222a

22

211

z
x
y    o

**FIG. 4**

**FIG. 5**

**FIG. 6**

**FIG. 7**

**FIG. 8**

(a)                                    (b)

**FIG. 9**

**FIG. 10**

**FIG. 11**

**FIG. 12**

**FIG. 13**

**FIG. 14**

**FIG. 15**

**FIG. 16**

**FIG. 17**

**FIG. 18**

**FIG. 19**

**FIG. 20**

FIG. 21

FIG. 22

FIG. 23

**FIG. 24**

**FIG. 25**

**FIG. 26**

**FIG. 27**

**FIG. 28**

**FIG. 29**

**FIG. 30**

**FIG. 31**

**FIG. 32**

504

11a

N3

503

N

505

Z

O

y X

**FIG. 33**

11a

51

52

N4

N

Z

O

y X

**FIG. 34**

**FIG. 35**

**FIG. 36**

**FIG. 37**

**FIG. 38**

**FIG. 39**

**FIG. 40**

**FIG. 41**

**FIG. 42**

**FIG. 43**

**FIG. 44**

**FIG. 45**

（a）　　　　　　　　　　　　　（b）

**FIG. 46**

EP 4 485 653 A1

**FIG. 47**

**FIG. 48**

C-C

51    52    534    54

53    55    Z

57    E

**FIG. 49**

L    534    53    54

54    55

S1    S7    52

**FIG. 50**

L    534    53    531    54

B    Z

55    55

57    52

**FIG. 51**

L    534    53    531    54

B    Z

55    55

57    52

**FIG. 52**

FIG. 53

FIG. 54

FIG. 55

FIG. 56

**FIG. 57**

G-G

**FIG. 58**

**FIG. 59**

K-K

**FIG. 60**

**FIG. 61**

**FIG. 62**

**FIG. 63**

**FIG. 64**

**FIG. 65**

**FIG. 66**

**FIG. 67**

**FIG. 68**

**FIG. 69**

**FIG. 70**

**FIG. 71**

**FIG. 72**

**FIG. 73**

**FIG. 74**

**FIG. 75**

5

511

51

T T

533 533 532 56 534

53

**FIG. 76**

T-T

532 5331

533

533 53

532

54

T

51 57 52 56 55

Z

B

A

**FIG. 77**

5

511 5321 56 51

5223 5322 534

**FIG. 78**

**FIG. 79**

**FIG. 80**

**FIG. 81**

12

121 (121a)

121 (121a)

52

53

121 (121b)

**FIG. 82**

10

11

52

12

21

**FIG. 83**

101

102

22A
(10B)

**FIG. 84**

101

102

22A
(10B)

**FIG. 85**

201

22A
(20B)

202

**FIG. 86**

201

22A
(20B)

202

**FIG. 87**

101

11B

102

**FIG. 88**

101

11B

102

**FIG. 89**

201

21B

202

**FIG. 90**

201

21B

202

**FIG. 91**

FIG. 92

FIG. 93

FIG. 94

**FIG. 95**

**FIG. 96**

**FIG. 97**

**FIG. 98**

**INTERNATIONAL SEARCH REPORT**

| International application No. |
|---|
| **PCT/CN2023/070129** |

**A. CLASSIFICATION OF SUBJECT MATTER**

H01M50/244(2021.01)i;H01M50/342(2021.01)n; H01M50/249(2021.01)n;H01M50/242(2021.01)n;
H01M50/209(2021.01)n;H01M50/258(2021.01)n

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT, ENTXTC, VEN, WPABSC: 电池, 电芯, 端子, 电极, 倒置, 朝下, 底, 底壁, 底部, 底侧, 避让, 槽, 防护, 汇流, 集流, 集电, 防爆阀, 泄压阀, 承载, 连接, battery, core, electrode, terminal, invert, reversing, down, bottom, base, avoid, protect+, tank, trough, collect+, explosion proof, relief, blow off, valve, connect+

**C. DOCUMENTS CONSIDERED TO BE RELEVANT**

| Category* | Citation of document, with indication, where appropriate, of the relevant passages | Relevant to claim No. |
|---|---|---|
| X | CN 215008401 U (ENVISION POWER TECHNOLOGY JIANGSU CO., LTD. et al.) 03 December 2021 (2021-12-03) description, paragraphs [0005]-[0047], and figures 1-5 | 1-26, 28, 31-33, 43-49, 51-75 |
| Y | CN 215008401 U (ENVISION POWER TECHNOLOGY JIANGSU CO., LTD. et al.) 03 December 2021 (2021-12-03) description, paragraphs [0005]-[0047], and figures 1-5 | 27, 29-30, 34-42, 50 |
| Y | CN 107757327 A (BENTELER AUTOMOBILTECHNIK GMBH) 06 March 2018 (2018-03-06) description, paragraphs [0013]-[0067], and figures 1-15 | 27,50 |
| Y | CN 205645921 U (BYD CO., LTD.) 12 October 2016 (2016-10-12) description, paragraphs [0043]-[0081], and figures 1-9 | 29-30 |
| Y | CN 212136479 U (TIANNENG BATTERY GROUP CO., LTD.) 11 December 2020 (2020-12-11) paragraphs [0008]-[0028], and figures 1-5 | 34-42 |

☑ Further documents are listed in the continuation of Box C. ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **07 March 2023** | **13 March 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT

International application No.

**PCT/CN2023/070129**

### C. DOCUMENTS CONSIDERED TO BE RELEVANT

| Category* | Citation of document, with indication, where appropriate, of the relevant passages | Relevant to claim No. |
|---|---|---|
| X | CN 207753067 U (HUNAN QINGSHENG NEW ENERGY TECHNOLOGY CO., LTD.) 21 August 2018 (2018-08-21)<br>paragraphs [0004]-[0019], and figures 1-3 | 1-10, 13-24, 31, 59-75 |
| X | CN 211743203 U (BYD CO., LTD.) 23 October 2020 (2020-10-23)<br>paragraphs [0005]-[0027], and figures 1-3 | 1-10, 16-24, 31, 59-75 |
| A | DE 202021105082 U1 (KIRCHHOFF AUTOMOTIVE D GMBH) 15 December 2021 (2021-12-15)<br>entire document | 1-75 |

**INTERNATIONAL SEARCH REPORT**
Information on patent family members

International application No.

**PCT/CN2023/070129**

| Patent document cited in search report | | | Publication date (day/month/year) | Patent family member(s) | | | Publication date (day/month/year) |
|---|---|---|---|---|---|---|---|
| CN | 215008401 | U | 03 December 2021 | None | | | |
| CN | 107757327 | A | 06 March 2018 | DE | 102016115647 | B3 | 14 December 2017 |
| | | | | CN | 107757327 | B | 06 March 2018 |
| CN | 205645921 | U | 12 October 2016 | None | | | |
| CN | 212136479 | U | 11 December 2020 | None | | | |
| CN | 207753067 | U | 21 August 2018 | None | | | |
| CN | 211743203 | U | 23 October 2020 | None | | | |
| DE | 202021105082 | U1 | 15 December 2021 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022098355 W
- CN 2022077998 W
- CN 2022098380 W
- CN 2022098343 W
- CN 2022098348 W
- CN 2022098373 W
- CN 2022098370 W
- CN 2022077993 W
- CN 2022101440 W
- CN 2022101406 W
- CN 2022101414 W
- CN 2022101517 W
- CN 2022101393 W